Europäisches Patentamt

European Patent Office

Office européen des brevets

(19)

(11) **EP 1 164 748 A1**

(12) **EUROPEAN PATENT APPLICATION**
published in accordance with Art. 158(3) EPC

(43) Date of publication:
**19.12.2001 Bulletin 2001/51**

(21) Application number: **01946999.8**

(22) Date of filing: **26.01.2001**

(51) Int Cl.⁷: **H04L 9/32**, H04L 9/08,
G09C 1/00, G06F 12/14,
G06F 9/06

(86) International application number:
**PCT/JP01/00526**

(87) International publication number:
**WO 01/56224 (02.08.2001 Gazette 2001/31)**

(84) Designated Contracting States:
**AT BE CH CY DE DK ES FI FR GB GR IE IT LI LU MC NL PT SE TR**

(30) Priority: **26.01.2000 JP 2000016501
26.01.2000 JP 2000016545**

(71) Applicants:
• **Sony Corporation
Tokyo 141-0001 (JP)**
• **Sony Computer Entertainment Inc.
Tokyo 107-0052 (JP)**

(72) Inventors:
• **ISHIBASHI, Yoshihito Sony Corporation
Tokyo 141-0001 (JP)**

• **ASANO, Tomoyuki Sony Corporation
Tokyo 141-0001 (JP)**
• **AKISHITA, Toru Sony Corporation
Tokyo 141-0001 (JP)**
• **SHIRAI, Taizo Sony Corporation
Tokyo 141-0001 (JP)**
• **YOSHIMORI, Masaharu
Sony Comp. Entertainment Inc.
Tokyo 107-0052 (JP)**

(74) Representative: **Turner, James Arthur
D. Young & Co., 21 New Fetter Lane
London EC4A 1DA (GB)**

(54) **STORAGE DEVICE AUTHENTICATION SYSTEM**

(57)    A data processing system, recording device, data processing method and program providing medium execute authentication processing and content storing processing between two apparatuses that execute data transfer taking into consideration utilization restraint of contents. A plurality of key blocks are formed which stores key data for authentication processing in a recording device, and key data of the plurality of key blocks is made data that is different for each block. Key block designation information is set in a recorder/reproducer, which is configured for executing authentication processing with the recording device by designating a key block. The recorder/reproducer can set a key block for each product, model or the like, and can easily set utilization restraint of contents in the reproducer. In addition, since a storing key stored in each key block is different, data stored in a storage section of the recording device in a different key block cannot be utilized in a recorder/reproducer in which other key block is set,

and circulation of key data or the like can be prevented. Furthermore, an encryption processing controlling section of a recording device executes control for executing commands that is required for authentication processing, encryption processing of stored data and the like in accordance with a setting sequence defined in advance. The controlling section monitors a command number transmitted from a recorder/reproducer to the recording device, and receives and executes only a command number that complies with the sequence defined in advance. Since a command sequence is set to execute an authentication processing command prior to an encryption processing command, only the recorder/reproducer that has completed the authentication processing can execute storing in the recording device and reproduction processing of contents, and contents utilization by an illegal instrument that has not completed the authentication processing can be eliminated.

START AUTHENTICATION PROCESS

INSERT RECORDING DEVICE INTO
RECORDING AND REPRODUCING DEVICE — S41

TRANSMIT INITIALIZATION COMMAND
TO RECORDING DEVICE — S42

TRANSMIT INITIALIZATION COMMAND
TO CRYPTOGRAPHY PROCESS SECTION — S43

SPECIFY KEY BLOCKS IN
RECORDING DEVICE — S44

READ CONTENT ID $ID_{MEM}$ FROM
RECORDING DEVICE — S45

GENERATE AUTHENTICATION KEY $K_{AKE}$ — S46

EXECUTE MUTUAL AUTHENTICATION
PROCESS AND GENERATE SESSION KEY $K_{ses}$ — S47

HAS MUTUAL AUTHENTICATION
SUCCEEDED OR FAILED? — S48

AUTHENTICATION HAS SUCCEEDED — S49    AUTHENTICATION HAS FAILED — S50

RETURN

MUTUAL AUTHENTICATION BETWEEN RECORDING AND REPRODUCING DEVICE AND
RECORDING DEVICE

FIG. 20

2

## Description

Technical Field

The present invention relates to a data processing system, a recording device and a data processing method, as well as a program providing medium, and more particularly, to a data processing system, a recording device and a data processing method for enabling authentication processing between two apparatuses that execute data transfer taking into account utilization restraint of contents. Furthermore, the present invention relates to a data processing system, a recording device and a data processing method for realizing a configuration for having mutual authentication processing to be executed as necessary requirements between two apparatuses executing data transfer, and enabling utilization of contents on condition that the authentication processing is established.

The present invention relates a configuration and method for reproducing various contents such as sounds, images, games, or programs which are available through recording media such as DVDs or CDs or wire or radio communication means such as CATV, the Internet, or satellite communication, in a recording and reproducing device owned by a user and storing the contents in an exclusive recording device, for example, a memory card, a hard disk, or a CD-R, realizing a configuration for imposing use limitations desired by a content distributor when a content stored in the recording device is used, and providing security such that the distributed content will not be illegally used by a third person other than regular users.

Background Art

Various data such as game programs, sound data, image data, or documenting programs (these are hereafter referred to as "contents") are now distributed via a network such as the Internet or via distributable storage media such as DVDs or CDs. These distributed contents can be stored in a recording device such as a memory card or a hard disk which is attached to a recording and reproducing apparatus such as a Personal Computer (PC) or a game apparatus that is owned by a user so that once stored, the contents can be reproduced from the storage media.

Main components of a memory card used in a conventional information apparatus such as a video game apparatus or a PC include a connection means for controlling operations, a connector for connection to a slot connected to the connection means and formed in the information apparatus, a non-volatile memory connected to the control means for storing data, and others. The non-volatile memory provided in the memory card comprises an EEPROM, a flash memory, or the like.

Various contents such as data or programs that are stored in the memory card are invoked from the non-volatile memory in response to a user's command from an information apparatus main body such as a game apparatus or a PC which is used as a reproduction apparatus or to a user's command provided via a connected input means, and are reproduced from the information apparatus main body or from a display, speakers, or the like which are connected thereto.

Many software contents such as game programs, music data, or image data generally have their distribution rights held by their creators or sellers. Thus, in distributing these contents, a configuration is generally used which places specified limitations on the usage; that is, the use of software is permitted only for regular users so as to prevent unauthorized copying or the like; that is, security is taken into consideration.

One method for realizing limitations on the use by a user is a process for encrypting a distributed content. This process comprises a means for distributing various contents such as sound data, image data, or game programs which are encrypted, for example, via the Internet and decrypting a distributed encrypted content only for people confirmed to be regular users, the means corresponding to a configuration for imparting a decryption key.

Encrypted data can be returned to available decrypted data (plain text) obtained by a decryption process based on a predetermined procedure. Such a data encrypting and decrypting method that uses an encryption key for an information encrypting process while using a decryption key for such a decryption process is conventionally known.

There are various types of aspects of data encrypting and decrypting methods using an encryption key and a decryption key; an example is what is called a common key cryptosystem. The common key cryptosystem uses a common encryption key used for a data encrypting process and a common decryption key used for a data decrypting process and imparts these common keys used for the encryption and decryption processes, to regular users while excluding data accesses by illegal users that have no key. A representative example of this cryptosystem is the DES (Data Encryption Standard).

The encryption and decryption keys used for the encryption and decryption processes are obtained, for example, by applying a one-way function such as a hash function based on a password or the like. The one-way function makes it difficult to determine its input from its output. For example, a password decided by a user is used as an input to apply a one-way function so as to generate an encryption and a decryption keys based on an output from the function. Determining from the thus obtained encryption and decryption keys, the password, which is the original data for the keys, is substantially impossible.

In addition, a method called a "public key cryptosystem" uses different algorithms for a process based on an encryption key used for encryption and for a process based on a decryption key used for decryption. The public key cryptosystem uses a public key available to unspecified users so that an encrypted document for a particular individual is decrypted using a public key issued by this particular user. The document encrypted with the public key can only be decrypted with a secret key corresponding to the public key used for the decryption process. Since the secret key is owned by the individual that has issued the public key, the document encrypted with the public key can be decrypted only by individuals having the secret key. A representative public key cryptosystem is the RSA (Rivest-Shamir-Adleman) encryption.

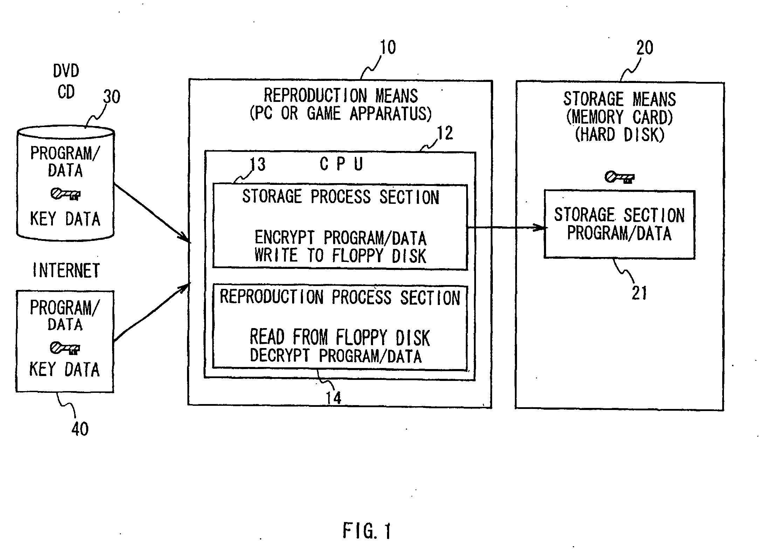

The use of such a cryptosystem enables encrypted contents to be decrypted only for regular users. A conventional content distributing configuration employing such a cryptosystem will be described in brief with reference to Fig. 1.

Fig. 1 shows an example of a configuration in which a reproduction means 10 such as a PC (Personal Computer) or a game apparatus reproduces a program, sound or video data, or the like (content) obtained from a data providing means such as a DVD, a CD 30, or the Internet 40 and wherein data obtained from the DVD, CD 30, Internet 40, or the like are stored in a storage means 20 such as a floppy disk, a memory card, a hard disk, or the like.

The content such as a program or sound or video data are provided to a user having the reproduction means 10. A regular user obtains an encryption data as well as key data that are their encryption and decryption keys.

The reproduction means 10 has a CPU 12 to reproduce input data by means of a reproduction process section 14. The reproduction process section 14 decrypts encrypted data to reproduce a provided program and the content such as sound or image data.

The regular user saves the content such as the program and data to a storage means 20 in order to use the provided program again. The reproduction means 10 has a saving process section 13 for executing this content saving process. The saving process section 13 encrypts and saves the data in order to prevent the data stored in the storage means 20 from being illegally used.

A content encrypting key is used to encrypt the content. The saving process section 13 uses the content encrypting key to encrypt the content and then stores the encrypted content in a storage section 21 of the storage means 20 such as a FD (Floppy Disk), a memory card, or a hard disk.

To obtain and reproduce the stored content from the storage means 20, the user obtains encrypted data from the storage means 20 and causes the reproduction process section 14 of the reproduction means 10 to execute the decryption process using a content decrypting key, that is, the decryption key in order to obtain and reproduce decrypted data from the encrypted data.

According to the conventional example of configuration shown in Fig. 1, the stored content is encrypted in the storage means 20 such as a floppy disk or memory card and thus cannot be read externally. When, however, this floppy disk is to be reproduced by means of a reproduction means of another information apparatus such as PC or game apparatus, the reproduction is impossible unless the reproduction means has the same content key, that is, the same decryption key for decrypting the encrypted content. Accordingly, to implement a form available to a plurality of information apparatuses, a common decryption key must be provided to users.

The use of a common content encrypting key, however, means that there will be a higher possibility of disorderly distributing the encryption process key to users not having a regular license. Consequently, the illegal use of the content by users not having the regular license cannot be prevented, and it will be difficult to exclude the illegal use in PCs, game apparatuses, or the like which do not have the regular license.

Furthermore, in an environment using a common key as described above, it is possible to easily copy, for example, a content created on a certain PC and saved to a storage means such as a memory card or floppy disk, to another floppy disk. Consequently, a use form using the copied floppy disk instead of the original content data will be possible, so that a large number of copied content data available to information apparatuses such as game apparatuses or PCs may be created or tampered.

There is authentication processing as a method of limiting utilization of content data to authorized users, and it has been general to perform authentication processing to be conventionally executed between two apparatuses using a common key as a key used for mutual authentication, i.e., an authentication key. Therefore, when an authentication key is to be changed, for example, for each delivery destination of products (for each country) or for each product, it is necessary to change key data required for authentication processing in the recorder/reproducer side and the recording device side at both the apparatuses.

Therefore, for example, there occurs a situation in which key data required for authentication processing stored in a recorder/reproducer put on a market anew does not correspond to key data required for authentication processing stored in a recording device put on the market before, and a new recorder/reproducer cannot access a recording device of the old version. Conversely, a similar situation occurs in the relationship between a recording device of the new version and a recorder/reproducer of the old version.

Description of the Invention

The present invention is to solve such problems in the related art, and in the constitution in the present invention, key blocks as a plurality of different key sets are stored in a recording device in advance. In a recorder/reproducer, a key block to be applied to authentication processing, i.e., a designated key block is set for each delivery destination of products (for each country), or for each product, model, version, or application, and authentication processing and storing processing of contents are made possible between two apparatuses executing data transfer taking into consideration utilization restraint of contents.

Further, a clear configuration has not been realized concerning how to associate authentication processing and utilization processing of contents, that is, how to execute procedures of the authentication processing as procedures close to and inseparable from decoding processing or storing processing of contents. Concerning the authentication processing, although user authentication and the like using a password is possible, a configuration has not been realized in which illegal utilization of contents is eliminated by associating authentication processing with respect to equipment such as a recorder/reproducer or a recording device and contents utilization processing.

Therefore, for example, if the authentication processing is executed by password input or the like in different recorder/reproducers, contents are utilized in a plurality of different instruments, thus, in order to prevent such diversion of contents, processing for associating authentication processing with respect to an instrument itself and contents utilization processing is required.

The present invention solves such problems, and provides a data processing system, a recording device and a data processing method for preventing contents utilization such as reading out contents for which authentication of an instrument is not executed from an external apparatus by regulating to execute authentication processing in a recording device, encryption processing of stored data and the like in accordance with a predetermined sequence in a configuration of the present invention.

A first aspect of the present invention is a data processing system comprising a recorder/reproducer and a recording device for executing transmission of encryption data to each other, characterized in that: the recording device has a data storing section for storing content data that is transferable between the recorder/reproducer and the recording device, and at the same time, has a plurality of key blocks storing key data applicable at least to authentication processing between the recorder/reproducer and the recording device, and the key data stored in the plurality of key blocks has a configuration in which different key data is stored for each block; the recorder/reproducer has a configuration for, in the authentication processing between the recorder/reproducer and the recording device, designating one key block out of the plurality of key blocks held by the recording device, and executing the authentication processing with the recording device based on the key data stored in the designated key block.

In addition, in one embodiment of the data processing system of the present invention, the data processing system is characterized in that an authentication key that is applicable at least to the authentication processing is included in each of the plurality of key blocks of the recording device, and the authentication key of each key block is configured as key data different from each other.

In addition, in one embodiment of the data processing system of the present invention, the data processing system is characterized by having a configuration in which the recorder/reproducer holds setting information in which a key block to be applied to the authentication processing as a designated key block in a memory in the recorder/reproducer, and the recorder/reproducer designates one key block out of the plurality of key blocks held by the recording device based on the setting information held in the memory in the recorder/reproducer when the authentication processing between the recorder/reproducer and the recording device is performed, and executes the authentication processing.

In addition, in one embodiment of the data processing system of the present invention, the data processing system is characterized by having a configuration in which the designated key block setting information of the recorder/reproducer is set to be different for each predetermined product unit such as a model of the recorder/reproducer, a version or a delivery destination.

In addition, in one embodiment of the data processing system of the present invention, the data processing system is characterized in that the recorder/reproducer has a configuration in which authentication processing key data required for the authentication processing with the recording device is stored in the memory in the recorder/reproducer, and authentication of the authentication processing key data stored in the memory in the recorder/reproducer is only established in the authentication processing using a key data in a block stored in a part of the plurality of key blocks in the recording device, and is not established in the authentication processing using a key data in other key blocks.

In addition, in one embodiment of the data processing system of the present invention, the data processing system is characterized in that the recorder/reproducer stores a master key Mkake for recording device authentication key in the memory of the recorder/reproducer, and an authentication key Kake that is generated based on the master key Mkake for recording device authentication key is an authentication key whose authentication is only established in the authentication processing using key data in a designated key block set in the recorder/reproducer, and is not established in the authentication processing using key data in other key blocks.

In addition, in one embodiment of the data processing system of the present invention, the data processing system is characterized in that the recording device has a configuration in which a recording device identification information IDmem in the memory in the recording device and, at the same time, an authentication key Kake that is different for each key block is stored in each of the plurality of key blocks, and the recorder/reproducer has a configuration for generating the authentication key Kake by encryption processing of the recording device identification information IDmem based on the master key Mkake for recording device authentication stored in the memory of the recorder/reproducer, and performing the authentication processing with the designated key block of the recording device using the generated authentication key Kake.

In addition, in one embodiment of the data processing system of the present invention, the data processing system is characterized in that each key block of the recording device includes recording device identifier information that is peculiar information of the recording device, an authentication key and a random number generation key to be used in the authentication processing with the recorder/reproducer, and a storing key to be used in encryption processing of storage data in the data storage section.

In addition, in one embodiment of the data processing system of the present invention, the data processing system is characterized in that the storing key stored in each of the plurality of key blocks of the recording device is key data that is different for each key block and, at the same time, is a key to be used in encryption processing with respect to stored data of the data storage section, and the recording device has a configuration for executing key exchange processing of the storing key in the recording device, and outputting encryption data by a key different from the storing key to outside the recording device if utilization request of data that is encrypted by the storing key received from outside the recording device.

In addition, in one embodiment of the data processing system of the present invention, the data processing system is characterized in that the recording device has an encryption processing section, and the encryption processing section has a configuration for selecting one key block of the plurality of key blocks of the recording device in accordance with the key block designation information received from the recorder/reproducer, and executing the authentication processing with the recorder/reproducer using the key data in the selected key block.

In addition, in one embodiment of the data processing system of the present invention, the data processing system is characterized in that the encryption processing section of the recording device has a configuration for executing the encryption processing executed in the data storing processing in the data storing section storing content data transferable between the recorder/reproducer and the recording device and in the data transfer processing from the data storing section, using the key data in one key block that is selected in accordance with the key block designation information received from the recorder/reproducer.

In addition, in one embodiment of the data processing system of the present invention, the data processing system is characterized in that there are a plurality of designatable key blocks in the recording device in the recorder/reproducer, and at least one key block in the plurality of designatable key blocks is configured as a commonly designatable key block that is also designatable in other recorder/reproducers.

In addition, a second aspect of the present invention is a recording device having a data storage section for storing content data transferable with an external apparatus, characterized by having a plurality of key blocks storing key data applicable at least to authentication processing between the recording device and the external device, and key data stored the plurality of key blocks has a configuration for storing different key data for each block.

In addition, in one embodiment of the recording device of the present invention, the recording device is characterized in that each of the plurality of key blocks of the recording device includes an authentication key applicable at least to the authentication processing, and an authentication key for each key block is configured as key data that is different from each other.

In addition, in one embodiment of the recording device of the present invention, the recording device is characterized in that the recording device has a configuration in which a memory in the recording device has recording device identification information IDmem and, at the same time, a different authentication key Kake for each key block is stored in each of the plurality of key blocks.

In addition, in one embodiment of the recording device of the present invention, the recording device is characterized in that each key block of said recording device includes recording device identifier information that is peculiar information of the recording device, an authentication key and a random number generation key to be used in the authentication processing with said external apparatus, and a storing key to be used in encryption processing of storage data in said data storage section.

In addition, in one embodiment of the recording device of the present invention, the recording device is characterized in that the storing key stored in each of the plurality of key blocks of the recording device is key data that is different for each key block and, at the same time, is a key to be used in encryption processing with respect to stored data of the data storage section, and the recording device has a configuration for executing key exchange processing of the storing key in the recording device, and outputting encryption data by a key different from the storing key to outside the recording device if utilization request of data that is encrypted by the storing key received from outside the recording device.

In addition, in one embodiment of the recording device of the present invention, the recording device is characterized in that the recording device has an encryption processing section, and the encryption processing section has a configuration for selecting one key block of the plurality of key blocks of the recording device in accordance with the key block designation information received from the external apparatus, and executing the authentication processing with the recorder/reproducer using the key data in the selected key block.

In addition, in one embodiment of the recording device of the present invention, the recording device is characterized in that the encryption processing section of the recording device has a configuration for executing the encryption processing executed in the data storing processing in the data storing section storing content data transferable between the external apparatus and the recording device and in the data transfer processing from the data storing section, using the key data in one key block that is selected in accordance with the key block designation information received from the external apparatus.

In addition, a third aspect of the present invention is a data processing method in a data processing system comprising a recorder/reproducer and a recording device for executing transmission of encryption data to each other which is characterized in that a recorder/reproducer designates one key block out of a plurality of key blocks held by the recording device, and executes authentication processing with the recording device based on key data stored in the designated key block.

In addition, in one embodiment of the data processing method of the present invention, the data processing method is characterized in that an authentication key that is applicable at least to the authentication processing is included in each of the plurality of key blocks of the recording device, and the authentication key of each key block is configured as key data different from each other.

In addition, in one embodiment of the data processing method of the present invention, the data processing method is characterized in that the recorder/reproducer designates one key block out of the plurality of key blocks held by the recording device based on the setting information held in the memory in the recorder/reproducer when the authentication processing between the recorder/reproducer and the recording device is performed, and executes the authentication processing.

In addition, in one embodiment of the data processing method of the present invention, the data processing method is characterized in that the recorder/reproducer stores a master key Mkake for recording device authentication key in the memory of the recorder/reproducer, generates an authentication key Kake based on the master key Mkake for recording device authentication key, and executes authentication processing using key data in the designated key block of the plurality of key blocks held by the recording device using the generated authentication key Kake.

In addition, in one embodiment of the data processing method of the present invention, the data processing method is characterized in that the recording device has a configuration in which a recording device identification information IDmem in the memory in the recording device and, at the same time, an authentication key Kake that is different for each key block is stored in each of the plurality of key blocks, and the recorder/reproducer generates the authentication key Kake by executing encryption processing of the recording device identification information IDmem based on the master key Mkake for recording device authentication stored in the memory of the recorder/reproducer, and performing the authentication processing with the designated key block of the recording device using the generated authentication key Kake.

In addition, in one embodiment of the data processing method of the present invention, the data processing method is characterized in that the recording device selects one key block of the plurality of key blocks of the recording device in accordance with the key block designation information received from the recorder/reproducer, and executes the authentication processing with the recorder/reproducer using the key data in the selected key block.

In addition, in one embodiment of the data processing method of the present invention, the data processing method is characterized in that the recording device executes the encryption processing executed in the data storing processing in the data storing section storing content data transferable between the recorder/reproducer and the recording device and in the data transfer processing from the data storing section, using the key data in one key block that is selected in accordance with the key block designation information received from the recorder/reproducer.

In addition, in one embodiment of the data processing method of the present invention,' the data processing method is characterized in that each of the plurality of key blocks of the recording device includes a storing key used in encryption processing of stored data of the data storage section in the recording device, and the recording device executes key exchange processing of the storing key in the recording device, and outputting encryption data by a key different from the storing key to outside the recording device if utilization request of data that is encrypted by the storing key received from outside the recording device.

In addition, a fourth aspect of the present invention is a program providing medium for providing a computer program that causes a computer system to execute a data processing method in a data processing system comprising a recorder/reproducer and a recording device for executing transmission of encryption data to each other, characterized in that the computer program includes a step in which the recorder/reproducer designates one key block out of a plurality of key blocks held by the recording device, and executes authentication processing with the recording device based on key data stored in the designated key block.

A fifth aspect of the present invention is a data processing system comprising a first apparatus and a second apparatus for executing transmission of encryption data to each other, which is characterized in that: the second apparatus has an encryption processing section for executing encryption processing for transmission data with the first apparatus; the encryption processing section has a control section for receiving a command identifier transferred from the first apparatus in accordance with a setting sequence defined in advance, taking out a command corresponding to the received command identifier from a register, and having the command executed; and the control section has a configuration for, if the command identifier transferred from the first apparatus is a command identifier different from the setting sequence, canceling processing of command corresponding to the command identifier.

In addition, in one embodiment of the data processing system of the present invention, the data processing system, characterized by having a configuration in which: the setting sequence relating to the command identifier received from the first apparatus held by the control section is a command number setting sequence in which numbers are sequentially incremented; and the control section stores a received value of the command number received from the first apparatus in a memory, determines coincidence of a new command number received from the first apparatus with the setting sequence based on the received command number stored in the memory and, if it is determined that the new received command number is different from the setting sequence, executes resetting of the command number stored in the memory without performing command processing corresponding to the new received command number.

In addition, in one embodiment of the data processing system of the present invention, the data processing system is characterized in that: the second apparatus has a command register storing a command in accordance with the setting sequence; an authentication processing command sequence for executing authentication processing between the first apparatus and the second apparatus, and an encryption processing command sequence for executing encryption processing relating to transferred data between the first apparatus and the second apparatus; and a sequence is set such that a command identifier corresponding to the authentication processing command sequence is executed in a step before a command sequence corresponding to the encryption processing command sequence.

In addition, in one embodiment of the data processing system of the present invention, the data processing system is characterized in that the encryption processing command sequence includes at least one of a command sequence including encryption key exchange processing for encryption data that is transferred from the first apparatus to the second apparatus and stored in storing means in the second apparatus, or a command sequence including an encryption key exchange processing for encryption data that is stored in the storing means in the second apparatus and transferred from the second apparatus to the first apparatus.

In addition, in one embodiment of the data processing system of the present invention, the data processing system is characterized in that the control section set an authentication flag indicating that authentication is done if authentication is established by the authentication processing of the first apparatus and the second apparatus, and executes command management control that enables execution of the encryption processing command sequence during the authentication flag is set, and the control section resets the authentication flag in executing the authentication processing command sequence anew.

In addition, in one embodiment of the data processing system of the present invention, the data processing system is characterized in that the data processing system has a configuration in which the control section manages an order of command execution based on the setting sequence and the command identifier in the encryption key exchange processing, and the control section does not accept command processing that is different from the setting sequence from an external apparatus including the first apparatus during a series of command execution relating to the key exchange processing.

In addition, in one embodiment of the data processing system of the present invention, the data processing system is characterized in that: the second apparatus is a storage device having a data storage section for storing encryption data; the first apparatus is a recorder/reproducer for performing storing processing of data in the storage device, and taking out data stored in the storage device to reproduce and execute the data; and the recorder/reproducer has an encryption processing section for executing encryption processing of transferred data with the recording device.

In addition, in one embodiment of the data processing system of the present invention, the data processing system is characterized by having a configuration in which: the recording device has a key block storing an authentication key applied to authentication processing between the recorder/reproducer and the recording device and a storing key as an encryption key of data stored in a data storage section in the recording device; and the control section in an encryption processing section of the recording device receives a command identifier from the recorder/reproducer and executes authentication processing using the authentication key stored in the key block in accordance with the setting sequence, and executes encryption processing of data accompanying key exchange processing using the storing key after completing the authentication processing.

In addition, in one embodiment of the data processing system of the present invention, the data processing system is characterized by having a configuration in which: the key block is composed of a plurality of key blocks storing an authentication key and a storing key that are different each other; and the recorder/reproducer notifies the recording device of one key block used in authentication processing and encryption processing of data as a designated key block out of the plurality of key blocks, and the recording device executes authentication processing using the authentication key stored in the designated key block and encryption processing of data using the storing key.

In addition, a sixth aspect of the present invention is a recording device having a data storage section for storing content data that is transferable with an external apparatus, which is characterized in that:

the recording device has an encryption processing section for executing encryption processing for transmission data with an external apparatus; the encryption processing section has a control section for receiving a command identifier transferred from the external apparatus in accordance with a setting sequence defined in advance, taking out a command corresponding to the received command identifier from a register, and having the command executed; and the control section has a configuration for, if the command identifier transferred from the external apparatus is a command identifier different from the setting sequence, canceling processing of command corresponding to the command identifier.

In addition, in one embodiment of the recording device of the present invention, the recording device is characterized in that the control section has a command number setting sequence in which numbers are sequentially incremented as the setting sequence, and the control section has a configuration for storing a received value of the command number received from the external apparatus in a memory, determines coincidence of a new command number received from the external apparatus with the setting sequence based on the received command number stored in the memory, and if it is determined that the new received command number is different from the setting sequence, executes resetting of the command number stored in the memory without performing command processing corresponding to the new received command number.

In addition, in one embodiment of the recording device of the present invention, the recording device is characterized in that: the recording device has a command register storing a command in accordance with the setting sequence; an authentication processing command sequence for executing authentication processing between the external apparatus and the recording device, and an encryption processing command sequence for executing encryption processing relating to transferred data between the external apparatus and the recording device; and a sequence is set such that a command identifier corresponding to the authentication processing command sequence is executed in a step before a command identifier corresponding to the encryption processing command sequence.

In addition, in one embodiment of the recording device of the present invention, the recording device is characterized in that the encryption processing command sequence includes at least one of a command sequence including encryption key exchange processing for encryption data that is transferred from the external apparatus to the recording device and stored in storing means in the recording device, or a command sequence including an encryption key exchange processing for encryption data that is stored in the storing means in the recording device and transferred from the storing device to the external apparatus.

In addition, in one embodiment of the recording device of the present invention, the recording device is characterized in that the control section set an authentication flag indicating that authentication is done if authentication is established by the authentication processing of the external apparatus and the recording device, and executes command management control that enables execution of the encryption processing command sequence during the authentication flag is set, and the control section resets the authentication flag in executing the authentication processing command sequence anew.

In addition, in one embodiment of the recording device of the present invention, the recording device is characterized in that the data processing system has a configuration in which the control section manages an order of command execution based on the setting sequence and the command identifier in the encryption key exchange processing, and the control section does not accept command processing that is different from the setting sequence from an external apparatus including the external apparatus during a series of command execution relating to the key exchange processing.

In addition, in one embodiment of the recording device of the present invention, the recording device is characterized by having a configuration in which: the recording device has a key block storing an authentication key applied to authentication processing between the external apparatus and the recording device and a storing key as an encryption key of data stored in a data storage section in the recording device; and the control section in an encryption processing section of the recording device receives a command identifier from the external apparatus and executes authentication processing using the authentication key stored in the key block in accordance with the setting sequence, and executes encryption processing of data accompanying key exchange processing using the storing key after completing the authentication processing.

In addition, in one embodiment of the recording device of the present invention, the recording device is characterized in which: the key block is composed of a plurality of key blocks storing an authentication key and a storing key that are different each other; and the external apparatus notifies the recording device of one key block used in authentication processing and encryption processing of data as a designated key block out of the plurality of key blocks, and the recording device executes authentication processing using the authentication key stored in the designated key block and encryption processing of data using the storing key.

A seventh aspect of the present invention is a data processing method in a data processing system comprising a first apparatus and a second apparatus for executing transmission of encryption data to each other, which is characterized in that the second apparatus executes command processing controlling steps for receiving a command identifier transferred from the first apparatus in accordance with a setting sequence defined in advance, taking out a command corresponding to the received command identifier from a register, and having the command executed, and in the command processing control, if the command identifier transferred from the first apparatus is a command identifier different from the setting sequence, processing of command corresponding to the command identifier is cancelled.

In addition, in one embodiment of the data processing method of the present invention, the data processing method is characterized in that: in the command processing controlling step, the setting sequence relating to the command identifier received from the first apparatus is a command number setting sequence in which numbers are sequentially incremented; and the command processing controlling steps comprises: a step of storing a receiving value of a received command number from the first apparatus in a memory; and a determining step for determining coincidence of a new command number received from the first apparatus with the setting sequence based on the received command number stored in the memory and, if it is determined that the new received command number is different from the setting sequence in the determining step, executing resetting of the command number stored in the memory without performing command processing corresponding to the new received command number.

In addition, in one embodiment of the data processing method of the present invention, the data processing method is characterized in that: in the data processing method, the command processing controlling step is a step for executing an authentication processing command sequence for executing authentication processing between the first apparatus and the second apparatus, and an encryption processing command sequence for executing encryption processing relating to transferred data between the first apparatus and the second apparatus, and the setting sequence is a sequence for executing the authentication processing command sequence prior to the encryption processing command sequence.

In addition, in one embodiment of the data processing method of the present invention, the data processing method is. characterized in that the encryption processing command sequence includes at least one of a command sequence including encryption key exchange processing for encryption data that is transferred from the first apparatus to the second apparatus and stored in storing means in the second apparatus, or a command sequence including an encryption key exchange processing for encryption data that is stored in the storing means in the second apparatus and transferred from the second apparatus to the first apparatus.

In addition, in one embodiment of the data processing method of the present invention, the data processing method is characterized by comprising, in the data processing method, an authentication flag setting step of setting an authentication flag indicating that authentication is done if authentication is established by the authentication processing of the first apparatus and the second apparatus, and characterized in that the command processing controlling step executes command management control that enables execution of the encryption processing command sequence during the authentication flag is set.

In addition, in one embodiment of the data processing method of the present invention, the data processing method is characterized by comprising the step of resetting, in said data processing method, the authentication flag in executing the authentication processing command sequence anew.

In addition, in one embodiment of the data processing method of the present invention, the data processing method is characterized by comprising, in the command processing controlling step in the data processing method, managing an order of command execution based on the setting sequence and the command identifier during execution of a series of commands relating to the key exchange processing, and not accepting command processing that is different from the setting sequence from an external apparatus including the first apparatus.

An eighth aspect of the present invention is a program providing medium for providing a computer program for causing a computer system to execute data processing in a data processing system that comprises a first apparatus and a second apparatus for executing transmission of encryption data to each other, characterized by comprising: a command processing controlling step of receiving a command identifier transferred from the first apparatus to the second apparatus in accordance with a setting sequence defined in advance, taking out a command corresponding to the received command identifier from a register, and having the command executed; and a step of canceling processing of command corresponding to the command identifier if the command identifier transferred from the first apparatus is a command identifier different from the setting sequence in the command processing controlling step.

The program providing medium in accordance with the present invention is, for example, a medium for providing a computer program in a computer readable form to a general purpose computer system that can execute various program codes. A form of the medium is a storage medium such as a CD, an FD or an MO, or a transmission medium such as a network, and is not specifically limited.

Such a program providing medium defines a structural or functional cooperative relationship between a computer program and a providing medium for realizing a predetermined function of the computer program on a computer system. In other words, a cooperative operation is shown on the computer system by installing the computer program in the computer system via the providing medium, and operational effects similar to other aspects of the present invention can be obtained.

Other objects, features, and advantages of this present invention can be seen from the detailed explanation based on the embodiment and attached drawings of the present invention described later.

As above, according to the data processing system, the recording device and the data processing method of the present invention, since a plurality of key blocks are formed which stores key data applicable to authentication processing of the recording device, the key data stored in the plurality of key blocks are made key data different for each block, and authentication processing between the recorder/reproducer and the recording device is formed to be executed by designating a specific key block, content utilization restraint can be easily set for each product, model, version and application by setting a key block to be applied to authentication processing for each delivery destination of products (for each country).

Moreover, according to the data processing system, the recording device and the data processing method of the present invention, since the storing key stored in each key block is formed by a different key, content data, key data or the like stored in the storage section of different key blocks cannot be applied decoding processing using the recorder/reproducer on which other key blocks are set, illegal circulation of content data or key data can be prevented.

Furthermore, the data processing system, the recording device and the data processing method of the present invention are configured such that various kinds of processing such as authentication processing in the recording device and encryption processing of stored data are executed in accordance with a setting sequence in which the order of executing commands is defined in advance. That is, since the data processing system, the recording device and the data processing method of the present invention are configured such that a command number is transmitted from the recorder/reproducer to the recording device and the controlling section of the recording device receives only a command number that. complies with the sequence defined in advance, and at the same time, the authentication processing of the setting sequence is executed prior to the encryption processing command, only the recorder/reproducer that has completed the authentication processing can store contents in the recording device and execute reproduction processing, hence contents utilization by an illegal instrument that has not completed the authentication processing can be eliminated.

Moreover, according to the data processing system, the recording device and the data processing method of the present invention, since the authentication flag indicating that the authentication processing has been completed is set, and an instrument in which the authentication flag is set is made to be capable of executing storing processing of encryption data and reproduction processing, in the case in which the storing processing and the reproduction processing are repeatedly executed, if the authentication flag is set, authentication processing does not need to be repeatedly executed and efficient data processing becomes possible.

Brief Description of the Drawings

Fig. 1 is a view showing the configuration of a conventional data processing system.
Fig. 2 is a view showing the configuration of a data processing apparatus to which the present invention is applied.
Fig. 3 is a view showing the configuration of a data processing apparatus to which the present invention is applied.
Fig. 4 is a view showing a data format of content data on a medium or a communication path.
Fig. 5 is a view showing a usage policy contained in a header of content data.
Fig. 6 is a view showing block information contained in a header of content data.
Fig. 7 is a view showing an electronic signature generating method using the DES.
Fig. 8 is a view showing an electronic signature generating method using the Triple DES.
Fig. 9 is a view useful in explaining the aspect of the Triple DES.
Fig. 10 is a view showing an electronic signature generating method partly using the Triple DES.
Fig. 11 is a view showing a process flow of electronic signature generation.
Fig. 12 is a view showing a process flow of electronic signature generation.
Fig. 13 is a view useful in explaining a mutual authentication process sequence using a symmetrical cryptography technique.

Fig. 14 is a view useful in explaining a public key certificate.

Fig. 15 is a view useful in explaining a mutual authentication process sequence using an asymmetrical cryptography technique.

Fig. 16 is a view showing a process flow of an encryption process using elliptic curve cryptography.

Fig. 17 is a view showing a process flow of a decryption process using elliptic curve cryptography.

Fig. 18 is a view showing how data are held on a recording and reproducing device.

Fig. 19 is a view showing how data are held on a recording device.

Fig. 20 is a view showing a process flow of mutual authentication between the recording and reproducing device and the recording device.

Fig. 21 is a view showing the relationship between a master key of the recording and reproducing device and a corresponding master key of the recording device.

Fig. 22 is a view showing a process flow of a content download process.

Fig. 23 is a view useful in explaining a method for generating an integrity check value A: ICVa.

Fig. 24 is a view useful in explaining a method for generating an integrity check value B: ICVb.

Fig. 25 is a view useful in explaining a method for generating a total integrity check value and an integrity check value unique to the recording and reproducing device.

Fig. 26 is a view showing a format of content data stored in the recording device (localization field = 0).

Fig. 27 is a view showing a format of content data stored in the recording device (localization field = 1).

Fig. 28 is a view showing a process flow of a content reproduction process.

Fig. 29 is a view useful in explaining a method by which the recording device executes commands.

Fig. 30 is a view useful in explaining a method by which the recording device executes commands in a content storage process.

Fig. 31 is a view useful in explaining a method by which the recording device executes commands in a content reproduction process.

Fig. 32 is a view useful in explaining the configuration of a content data format type 0.

Fig. 33 is a view useful in explaining the configuration of a content data format type 1.

Fig. 34 is a view useful in explaining the configuration of a content data format type 2.

Fig. 35 is a view useful in explaining the configuration of a content data format type 3.

Fig. 36 is a view useful in explaining a method for generating a content integrity check value IDVi for the format type 0.

Fig. 37 is a view useful in explaining a method for generating a content integrity check value IDVi for the format type 1.

Fig. 38 is a view useful in explaining a total integrity check value and an integrity check value unique to the recording and reproducing device for the format types 2 and 3.

Fig. 39 is a view showing a process for downloading a content of the format type 0 or 1.

Fig. 40 is a view showing a process for downloading a content of the format type 2.

Fig. 41 is a view showing a process for downloading a content of the format type 3.

Fig. 42 is a view showing a process for reproducing a content of the format type 0.

Fig. 43 is a view showing a process for reproducing a content of the format type 1.

Fig. 44 is a view showing a process for reproducing a content of the format type 2.

Fig. 45 is a view showing a process for reproducing a content of the format type 3.

Fig. 46 is a view (1) useful in explaining a method by which a content generator and a content verifier generate integrity check values and execute verification using them.

Fig. 47 is a view (2) useful in explaining a method by which the content generator and the content verifier generate integrity check values and execute verification using them.

Fig. 48 is a view (3) useful in explaining a method by which the content generator and the content verifier generate integrity check values and execute verification using them.

Fig. 49 is a view useful in explaining a method for individually generating various keys using master keys.

Fig. 50 is a view (example 1) showing an example of a process executed by a content provider and a user in conjunction with the method for individually generating various keys using master keys.

Fig. 51 is a view (example 2) showing an example of a process executed by the content provider and the user in conjunction with the method for individually generating various keys using master keys.

Fig. 52 is a view useful in explaining a configuration for executing localization using different master keys.

Fig. 53 is a view (example 3) showing an example of a process executed by the content provider and the user in conjunction with the method for individually generating various keys using master keys.

Fig. 54 is a view (example 4) showing an example of a process executed by the content provider and the user in conjunction with the method for individually generating various keys using master keys.

Fig. 55 is a view (example 5) showing an example of a process executed by the content provider and the user in conjunction with the method for individually generating various keys using master keys.

Fig. 56 is a view showing a flow of a process for storing a cryptography key with the Triple DES applied thereto, using the Single DES algorithm.

Fig. 57 is a view showing a content reproduction process flow (example 1) based on priority.

Fig. 58 is a view showing a content reproduction process flow (example 2) based on priority.

Fig. 59 is a view showing a content reproduction process flow (example 3) based on priority.

Fig. 60 is a view useful in explaining a configuration for executing a process for decrypting (decompressing) compressed data during the content reproduction process.

Fig. 61 is a view showing an example of the configuration of a content (example 1).

Fig. 62 is a view showing a reproduction process flow in the example 1 of the configuration of the content.

Fig. 63 is a view showing an example of the configuration of a content (example 2).

Fig. 64 is a view showing a reproduction process flow in the example 2 of the configuration of the content.

Fig. 65 is a view showing an example of the configuration of a content (example 3).

Fig. 66 is a view showing a reproduction process flow in the example 3 of the configuration of the content.

Fig. 67 is a view showing an example of the configuration of a content (example 4).

Fig. 68 is a view showing a reproduction process flow in the example 4 of the configuration of the content.

Fig. 69 is a view useful in explaining a process for generating and storing save data.

Fig. 70 is a view showing a process flow for an example (example 1) of the process for storing save data.

Fig. 71 is a view showing the configuration of a data managing file (example 1) used during a process for storing and reproducing save data.

Fig. 72 is a view showing a process flow for an example (example 1) of the process for reproducing save data.

Fig. 73 is a view showing a process flow for an example (example 2) of the process for storing save data.

Fig. 74 is a view showing a process flow for an example (example 2) of the process for reproducing save data.

Fig. 75 is a view showing a process flow for an example (example 3) of the process for storing save data.

Fig. 76 is a view showing the configuration of a data managing file (example 2) used during the process for storing and reproducing save data.

Fig. 77 is a view showing a process flow for an example (example 3) of the process for reproducing save data.

Fig. 78 is a view showing a process flow for an example (example 4) of the process for storing save data.

Fig. 79 is a view showing a process flow for an example (example 4) of the process for reproducing save data.

Fig. 80 is a view showing a process flow for an example (example 5) of the process for storing save data.

Fig. 81 is a view showing the configuration of a data managing file (example 3) used during the process for storing and reproducing save data.

Fig. 82 is views showing a process flow for an example (example 5) of the process for reproducing save data.

Fig. 83 is a view showing a process flow for an example (example 6) of the process for storing save data.

Fig. 84 is a view showing the configuration of a data managing file (example 4) used during the process for storing and reproducing save data.

Fig. 85 is a view showing a process flow for an example (example 6) of the process for reproducing save data.

Fig. 86 is a view useful in explaining a configuration for excluding invalid content users (revocation).

Fig. 87 is a view showing a flow of a process (example 1) for excluding invalid content users (revocation).

Fig. 88 is a view showing a flow of a process (example 2) for excluding invalid content users (revocation).

Fig. 89 is views useful in explaining the configuration of the security chip (example 1).

Fig. 90 is a view showing a process flow for a method'for manufacturing a security chip.

Fig. 91 is a view useful in explaining the configuration of the security chip (example 2).

Fig. 92 is a view showing a flow of a process for writing data in the security chip (example 2).

Fig. 93 is a view showing a flow of a process for checking written data in the security chip (example 2).

Best Mode for Carrying Out the Invention

Preferred embodiments of this invention will be described. The procedure of the explanation follows the following items.

(1) Configuration of Data Processing Apparatus
(2) Contents data format
(3) Outline of Cryptography Processes Applicable to Present Data Processing Apparatus
(4) Configuration of Data Stored in Recording and Reproducing Device
(5) Configuration of Data Stored in Recording Device

(6) Mutual Authentication Process between recording and reproducing device and recording device

(6-1) Outline of Mutual Authentication Process
(6-2) Switching Key Block during Mutual Authentication

(7) Process for Downloading from Recording and Reproducing Device to Recording Device
(8) Process Executed by Recording and Reproducing Device to Reproduce Information Stored in Recording Device
(9) Key Exchanging Process after Mutual Authentication
(10) Plural Content Data Formats and Download and Reproduction Processes Corresponding to Each Format
(11) Process Executed by Content Provider to Generate Integrity Check Value (ICV)
(12) Configuration for Generating Cryptography Process Keys Based on Master Keys
(13) Control of Cryptography Intensity in Cryptography Process
(14) Program Activation Process Based on Activation Priority in Usage Policy in Content Data
(15) Content Configuring and Reproducing (Decompressing) Process
(16) Generation of Save Data and Storage and Reproduction of the Same in and from Recording Device
(17) Configuration for Excluding (Revoking) Illegal Apparatuses
(18) Method for Configuring and Manufacturing Secure Chip

(1) Configuration of Data Processing Apparatus

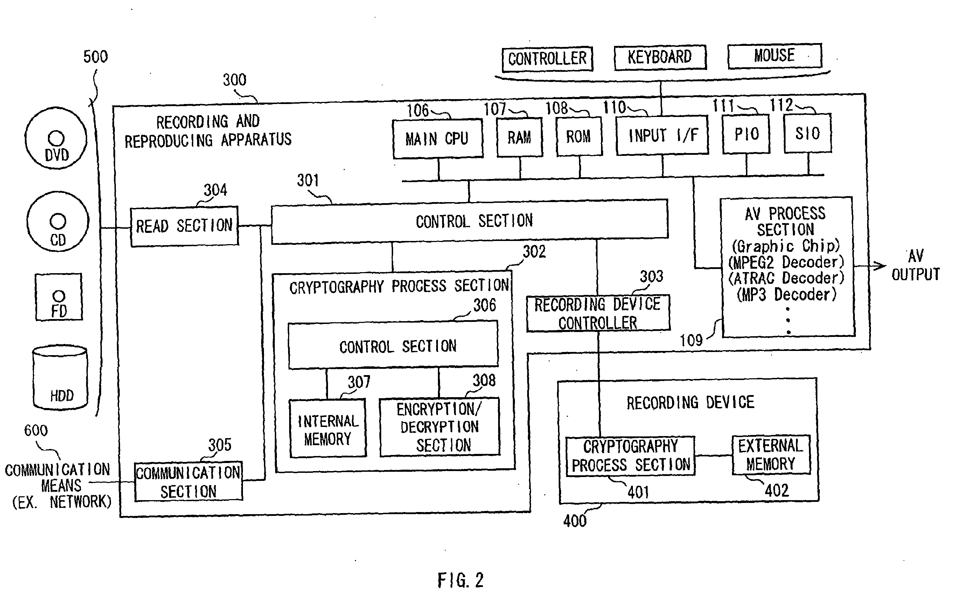

Fig. 2 shows a block diagram showing the general configuration of one embodiment of a data processing apparatus according to the present invention. Main components of the data processing apparatus are a recording and reproducing device 300 and a recording device 400.

The recording and reproducing device 300 comprises, for example, a personal computer (PC), a game apparatus, or the like. The recording and reproducing device 300 has a control section 301 for carrying out unifying control including the control of communication between the recording and reproducing device 300 and the recording device 400 during a cryptography process in the recording and reproducing device 300, a recording and reproducing device cryptography process section 302 responsible for the whole cryptography process, a recording device controller 303 for executing an authentication process with the recording device 400 connected to the recording and reproducing device to read and write data, a read section 304 for at least reading data from a medium 500 such as a DVD, and a communication section 305 for transmitting and receiving data to and from the exterior, as shown in Fig. 2.

The recording and reproducing device 300 downloads and reproduces content data to and from the recording device 400 controlled by the control section 301. The recording device 400 is a storage medium that can preferably be installed in and removed from the recording and reproducing device 300, for example, a memory card, and has an external memory 402 comprising a non-volatile memory such as an EEPROM or a flash memory, a hard disk, or a RAM with batteries.

The recording and reproducing device 300 has a read section 304 as an interface to which content data stored in the storage medium shown at the left end of Fig. 2, that is, a DVD, a CD, an FD, or an HDD can be input, and a communication section 305 as an interface to which content data distributed from a network such as the Internet can be input, in order to receive an input of a content from the exterior.

The recording and reproducing device 300 has a cryptography process section 302 to execute an authentication process, an encryption and a decryption processes, a data verification process, and other processes in downloading content data externally input via the read section 304 or the communication section 305, to the recording device 400 or reproducing and executing content data from the recording device 400. The cryptography process section 302 comprises a control section 306 for controlling the entire cryptography process section 302, an internal memory 307 holding information such as keys for the cryptography process and which has been processed so as to prevent data from being externally read out therefrom easily, and an encryption/decryption section 308 for executing the encryption and decryption processes, generating and verifying authentication data, generating random numbers, etc.

The control section 301 transmits an initialization command to the recording device 400 via the recording device controller 303 when, for example, the recording device 400 is installed in the recording and reproducing device 300, or execute a mediation process for various processes such as a mutual authentication between the encryption/decryption section 308 of the recording and reproducing device cryptography process section 302 and the encryption/decryption section 406 of the recording device cryptography process section 401, a integrity check value collating process, and encryption and decryption processes. Each of these processes will be described in detail in the latter part.

The cryptography process section 302 executes the authentication process, the encryption and decryption processes, the data verifying process, and other processes, as previously described, and has the cryptography process control section 306, the internal memory 307, and the encryption/decryption section 308.

The cryptography process control section 306 executes control of the whole cryptography process such as the authentication process and the encryption/decryption processes executed by the recording and reproducing device 300, for example, processes of setting an authentication completion flag when the authentication process executed between the recording and reproducing device 300 and the recording device 400 has completed, commanding the execution of various processes executed in the encryption/decryption section 308 of the recording and reproducing section cryptography process section 302, for example, a download process and a process for generating integrity check values for reproduced content data, and commanding the execution of a process for generating various key data.

The internal memory 307 stores key data, identification data, and other data required for various processes such as the mutual authentication process, the integrity check value collating process, and the encryption and decryption processes which are executed in the recording and reproducing device 300, as described later in detail.

The encryption/decryption section 308 uses key data and the like stored in the internal memory 307 to execute the authentication process, the encryption and decryption processes, the generation and verification of predetermined integrity check values or electronic signatures, the verification of data, the generation of random numbers, etc. in downloading externally input content data to the recording device 400 or reproducing and executing content data stored in the recording device 400.

In this case, the internal memory 307 of the recording and reproducing device cryptography process section 302 holds important information such as cryptography keys and must thus be configured so as not to have its data externally read out easily. Thus, the cryptography process section is configured as a tamper resistant memory characterized to restrain external invalid reads in that it comprises a semiconductor chip that essentially rejects external accesses and has a multilayer structure, an internal memory sandwiched between dummy layers of aluminum or the like or arranged in the lowest layer, and a narrow range of operating voltages and/or frequencies. This configuration will be described later in detail.

In addition to these cryptography process functions, the recording and reproducing device 300 comprises a main Central Processing Unit (CPU) 106, a Random Access Memory (RAM) 107, a Read Only Memory (ROM) 108, an AV process section 109, an input interface 110, a PIO (Parallel I/O) interface 111, and a SIO (Serial I/O interface) 112.

The main Central Processing Unit (CPU) 106, the RAM (Random Access Memory) 107, and the ROM (Read Only Memory) 108 are a component functioning as a control system for the main body of the recording and reproducing device 300, and principally functions as a reproduction process section for reproducing data decrypted by the recording and reproducing device cryptography process section 302. For example, the main Central Processing Unit (CPU) 106 executes control for the reproduction and execution of contents, such as output of content data read out from the recording device and then decrypted, to the AV process section 109 under the control of the control section 301.

The RAM 107 is used as a main storage memory for various processes executed by the CPU 106 and as a working area for these processes. The ROM 108 stores a basic program for starting up an OS or the like activated by the CPU 106, and other data.

The AV process section 109 has a data compression and decompression process mechanism, specifically, an MPEG2 decoder, an ATRAC decoder, an MP3 decoder, or the like, to execute processes for data outputs to a data output apparatus such as a display or speakers (not shown) attached or connected to the recording and reproducing device main body.

The input interface 110 outputs input data from various connected input means such as a controller, a keyboard, and a mouse, to the main CPU 106. The main CPU 106 executes a process in accordance with a command issued by a user via the controller, based on a game program being executed or the like.

The PIO (Parallel I/O interface) 111 and the SIO (Serial I/O interface) 112 are used as storage devices for a memory card or a game cartridge and as a connection interface to a portable electronic device or the like.

The main CPU 106 also executes control in storing as saved data, setting data or the like for a game being executed or the like. During this process, stored data are transferred to the control section 301, which causes the cryptography process section 302 to execute a cryptography process for the saved data as required and then stores the encrypted data in the recording device 400. These cryptography processes will be described later in detail.

The recording device 400 is a storage medium that can preferably be installed in and removed from the recording and reproducing device 300, and comprises, for example, a memory card. The recording device 400 has the cryptography process section 401 and the external memory 402.

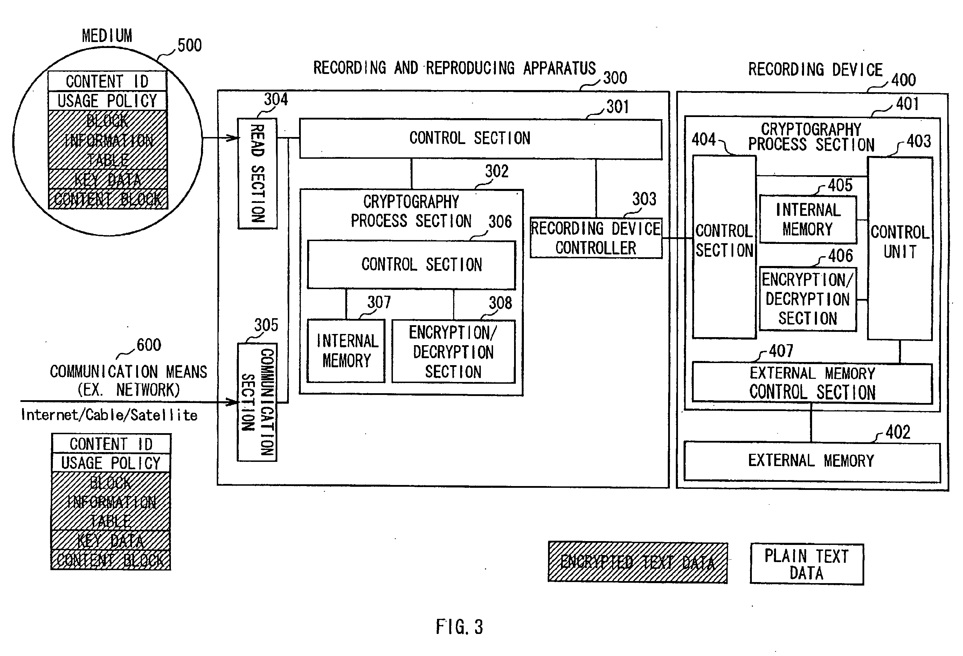

The recording device cryptography process section 401 executes the mutual authentication process, encryption and decryption processes, data verification process, and other processes between the recording and reproducing device 300 and the recording device 400 in downloading content data from the recording and reproducing device 300 or reproducing content data from the recording device 400 to the recording and reproducing device 300, and has a control section, an internal memory, an encryption/decryption section, and others similarly to the cryptography process section of the recording and reproducing device 300. The details will be shown in Fig. 3. The external memory 402 comprises a non-volatile memory comprising a flash memory such as an EEPROM, a hard disk, or a RAM with batteries, or the like, to store encrypted content data or the like.

Fig. 3 is a view schematically showing the configuration of data input from a medium 500 and a communication means 600 that are data providing means from which the data processing apparatus according to the present invention receives data, and focusing on the configurations of the recording and reproducing device 300 receiving an input of a content from the content providing means 500 or 600 and of arrangements for the cryptography process in the recording device 400.

The medium 500 is, for example, an optical disk medium, a magnetic disk medium, a magnetic tape medium, a semiconductor medium, or the like. The communication means 600 is capable of data communication such as Internet, cable, or satellite communication.

In Fig. 3, the recording and reproducing device 300 verifies data input by the medium 500 or the communication means 600, that is, a content meeting a predetermined format as shown in Fig. 3, and stored the verified content in the recording device 400.

As shown in the sections of the medium 500 and communication means 600 in Fig. 3, the content data has the following components:

Content ID: content ID as an identifier for content data.

Usage policy: a usage policy containing constituent information of content data, for example, the sizes of a header section and a content section constituting the content data, a format version, a content type indicating whether the content is a program or data, a localization field indicating whether the content can be used only in an apparatus that has downloaded the content or also in other apparatuses.

Block information table: block information table comprising the number of content blocks, a block size, an encryption flag indicating the presence of encryption, and others.

Key data: key data comprising an encryption key for encrypting the above described block information table, a content key for encrypting a content block, or the like.

Content bloc: content block comprising program data, music or image data, or other data to be actually reproduced.

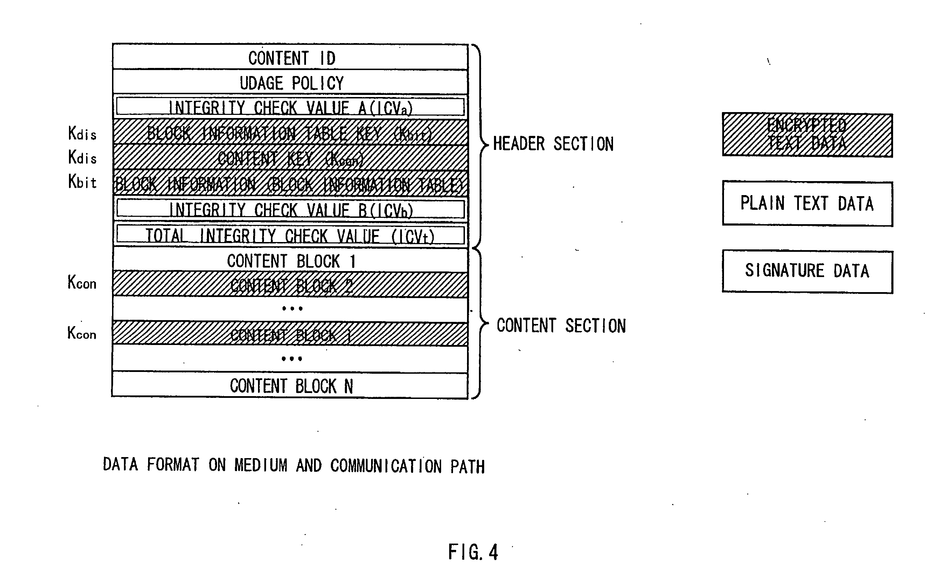

The content data will be explained later in further detail with reference to Fig. 4 and subsequent figures.

The content data are encrypted by the content key (hereafter referred to as the "Knon") and then provided to the recording and reproducing device 300 from the medium 500 or the communication means 600. The content can be stored in the external memory of the recording device 400 via the recording and reproducing device 300.

For example, the recording device 400 uses a key (hereafter referred to as a "storage key" (Kstr)) unique thereto stored in the internal memory 405 thereof to encrypt the content contained in the content data, the block information table contained in the content data as header information, information on various keys such as the content key Kcon before storing these data in the external memory 402. To download the content data from the recording and reproducing device 300 to the recording device 400 or allow the recording and reproducing device 300 to reproduce the content data stored in the recording device 400, predetermined procedures such as a mutual authentication process between the apparatuses and content data encrypting and decrypting processes are required. These processes will be explained later in detail.

The recording device 400 has the cryptography process section 401 and the external memory 402, and the cryptography process section 401 has a control section 403, a communication section 404, the internal memory 405, an encryption/decryption section 406, and an external memory control section 407.

The recording device 400 is responsible for the whole cryptography process, controls the external memory 402, and comprises the recording device cryptography process section 401 for interpreting a command from the recording and reproducing device 300 and executing a process, and the external memory 402 holding contents or the like.

The recording device cryptography process section 401 has the control section 403 for controlling the entire recording device cryptography process section 401, the communication section 404 for transmitting and receiving data to and from the recording and reproducing device 300, the internal memory 405 holding information such as keys for the cryptography process and which has been processed so as to prevent data from being externally read out therefrom easily, the encryption/decryption section 406 for executing the encryption and decryption processes, generating and verifying authentication data, generating random numbers, etc, and the external memory control section 407 for reading and writing data from and to the external memory 402.

The control section 403 executes control of the whole cryptography process such as the authentication process and the encryption/decryption processes executed by the recording device 400, for example, processes of setting an authentication completion flag when the authentication process executed between the recording and reproducing device 300 and the recording device 400 has completed, commanding the execution of various processes executed in the encryption/decryption section 406 of the cryptography process section 401, for example, a download process and a process for generating integrity check values for reproduced content data, and commanding the execution of a process for generating various key data.

The internal memory 405 comprises a memory having a plurality of blocks to store a plurality of sets of key data, identification data, or other data which are required for various processes such as the mutual authentication process, integrity check value collating process, and encryption and decryption process which are executed by the recording device 400, as described later in detail.

The internal memory 405 of the recording device cryptography process section 401, like the internal memory 307 of the recording and reproducing device cryptography process section 302 previously described, holds important information such as cryptography keys and must thus be configured so as not to have its data externally read out easily. Thus, the cryptography process section 401 of the recording and reproducing device 400 is characterized to restrain external invalid reads in that it comprises a semiconductor chip that essentially rejects external accesses and has a multilayer structure, an internal memory sandwiched between dummy layers of aluminum or the like or arranged in the lowest layer, and a narrow range of operating voltages and/or frequencies. In this regard, the recording and reproducing device cryptography process section 302 may be software configured so as to prevent secret information for keys from leaking easily to the exterior.

The encryption/decryption section 406 uses key data or the like stored in the internal memory 405 to execute the data verifying process, the encryption and decryption processes, the generation and verification of predetermined integrity check values or electronic signatures, the generation of random numbers, etc. in downloading content data from the recording and reproducing device 300, reproducing content data stored in the external memory 402 of the recording device 400, or executing mutual authentication between the recording and reproducing device 300 and the recording device 400.

The communication section 404 is connected to the recording device controlled 303 of the recording and reproducing device 300 to download or reproduce content data or communicate transfer data between the recording and reproducing device 300 and the recording device 400 during the mutual authentication process according to the control of the control section 301 of the recording and reproducing device 300, or the control of the control section 403 of the recording device 400.

(2) Content Data Format

Next, by using Fig. 4 to Fig. 6, the data format of data stored in the medium 500 of the system according to the present invention or communicated on the data communication means 600 will be explained.

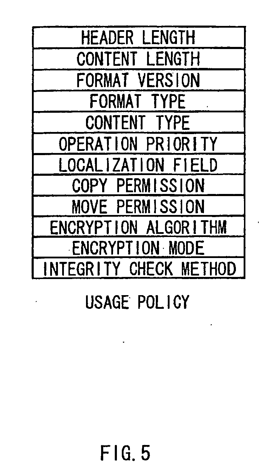

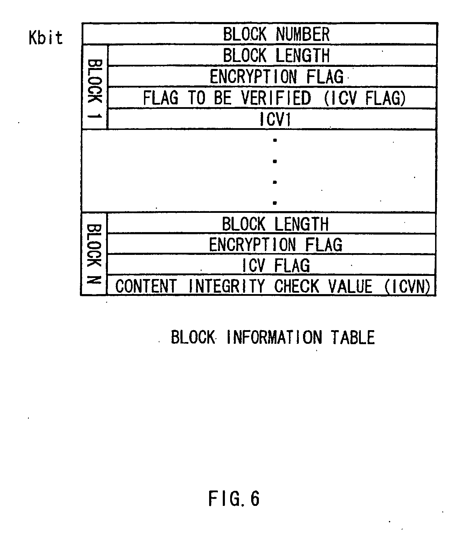

The configuration shown in Fig. 4 shows the format of the entire content data, the configuration shown in Fig. 5 shows details of the "usage policy" partly constituting the header section of the content data, and the configuration shown in Fig. 6 shows details of the "block information table" partly constituting the header section of the content.

A representative example of the data format applied to the system according to the present invention will be explained, but different types of data formats such as formats corresponding to game programs and formats suitable for real-time processing of music data or the like can be used for the present system. The aspects of these formats will be described later in further detail, in "(10) Plural Content Data Formats and Download and Reproduction Processes Corresponding to Each Format".

In the data format shown in Fig. 4, items shown in gray indicate encrypted data, items enclosed by double frames indicate tamper check data, and the other items shown in white indicate plain text data that are not encrypted. Encryption keys of the encryption section are shown on the left of the frames. In the example shown in Fig. 4, some of the blocks (content block data) of the content section contain encrypted data, while the others contain non-encrypted data. This form varies depending on the content data, and all the content block data contained in the data may be encrypted.

As shown in Fig. 4, the data format is divided into the header section and the content section, and the header section comprises a content ID, a usage policy, an integrity check value A (hereafter referred to as "ICVa"), a block information table key (hereafter referred to as "Kbit"), a content key Kcon, a block information table (hereafter referred to as "BIT"), an integrity check value B (ICVb), and a total integrity check value (ICVt), and the content section comprises a plurality of content blocks (for example, encrypted and non-encrypted contents).

In this case, the individual information indicates a content ID for identifying a content. The usage policy comprises a header length indicating the size of the header section, a content length indicating the size of the content section, a format version indicating version information for the format, a format type indicating the type of the format, a content type indicating the type of the content, that is, whether it is a program or data, an operation priority indicating a priority for activation if the content type is a program, a localization field indicating whether the content downloaded in accordance with this format can be used only in an apparatus that has downloaded the content or also in other similar apparatuses, a copy permission indicating whether the content downloaded in accordance with this format can be copied from the apparatus that has downloaded the content to another similar apparatus, a move permission indicating whether the content downloaded in accordance with this format can be moved from the apparatus that has downloaded the content to another similar apparatus, an encryption algorithm indicating an algorithm used to encrypt content blocks in the content section, an encryption mode indicating a method for operating the algorithm used to encrypt the content in the content section, and an integrity check method indicating a method for generating integrity check values, as shown in detail in Fig. 5.

The above described data items recorded in the usage policy are only exemplary and various usage policy information can be recorded depending on the aspect of corresponding content data. The identifier as described later in detail in, for example, "(17) Configuration for Excluding (Revoking) Illegal Apparatuses". It is also possible to make a configuration so as to exclude the use of content caused by the illegal apparatus by recording the content of an illegal recording and reproducing apparatus as data and by checking the time of starting the use.

The integrity check value A ICVa is used to verify that the content ID or the usage policy has not been tampered. It functions as a check value for partial data instead of the entire content data, that is, as a partial integrity check value. The data block information table key Kbit is used to encrypt a block information table, and the content key Kcon is used to encrypt content blocks. The block information table key Kbit and the content key Kcon are encrypted with a distribution key (hereafter referred to as "Kdis") on the medium 500 and the communication means 600.

Fig. 6 shows the block information table in detail. The block information table in Fig. 6 comprises data all encrypted with the block information table key Kbit as seen in Fig. 4. The block information table comprises a block number indicating the number of content blocks and information on N content blocks, as shown in Fig. 6. The content block information table comprises a block length, an encryption flag indicating whether or not the block ash been encrypted, an ICV flag indicating whether or not integrity check values must be calculated, and a content integrity check value (ICVi).

The content integrity check value is used to verify that each content block has not been tampered. A specific example of a method for generating a content integrity check value will be explained later in "(10) Plural Content Data Formats and Download and Reproduction Processes Corresponding to Each Format". The block information table key Kbit used to encrypt the block information table is further encrypted with the distribution key Kdis.

The data format in Fig. 4 will be continuously described. The integrity check value B ICVb is used to verify that the block information table key Kbit, the content key Kcon, and the block information table have not been tampered. It functions as a check value for partial data instead of the entire content data, that is, as a partial integrity check value. The total integrity check value ICVt is used to verify the integrity check values ICVa and ICVb, integrity check values ICVi for each content block (if this has been set), partial integrity check values thereof, or all the data to be checked have not been tampered.

In Fig. 6, the block length, the encryption flag, and the ICV flag can be arbitrarily set, but certain rules may be established. For example, encrypted- and plaintext areas may be repeated over a fixed length, all the content data may be encrypted, or the block information table BIT may be compressed. Additionally, to allow different content keys Kcon to be used for different content blocks, the content key Kcon may be contained in the content block instead of the header section. Examples of the content data format will be described in further detail in "(10) Plural Content Data Formats and Download and Reproduction Processes Corresponding to Each Format".

(3) Outline of Cryptography Processes Applicable to Present Data Processing Apparatus

Next, the aspects of various cryptography processes applicable to the data processing apparatus according to the present invention will be explained. The description of the cryptography processes shown in "(3) Outline of Cryptography Processes Applicable to Present Data Processing Apparatus" correspond to an outline of the aspect of a cryptography process on which are based various processes executed by the present data processing apparatus which will be specifically described later, for example, "a. authentication process between recording and reproducing device and recording device", "b. download process for device for loading contents", and "c. process for reproducing content stored in recording device". Specific processes executed by the recording and reproducing device 300 and the recording device 400 will be each described in detail in the item (4) and subsequent items.

An outline of the cryptography process applicable to the data processing apparatus will be described in the following order:

(3-1) Message Authentication Based on Common Key Cryptosystem
(3-2) Electronic Signature Based on Public Key Cryptosystem
(3-3) Verification of Electronic Signature Based on Public Key Cryptosystem
(3-4) Mutual Authentication Based on Common Key Cryptosystem
(3-5) Public Key Certificate
(3-6) Mutual Authentication Based on Public Key Cryptosystem
(3-7) Encryption Process Using Ecliptic Curve Cryptography
(3-8) Decryption Process Using Ecliptic Curve Cryptography
(3-9) Random Number Generating Process

(3-1) Message Authentication Based on Common Key Cryptosystem

First, a process for generating tamper detecting data using a common key cryptography method will be explained. The tamper detecting data are added to data to be detected for tamper in order to check for tamper and authenticate a creator.

For example, the integrity check values A and B and total integrity check value in the data structure described in Fig. 4 which are enclosed by double frames, the content check value stored in each block in the block information table shown in Fig. 6, and the like are generated as the tamper detecting data.

Here, the use of the DES, which is a common key cryptosystem, will be explained as an example of a method for generating and processing electronic signature data. In addition to the DES, the present invention may use, for example, the FEAL (Fast Encipherment Algorithm) or the AES (Advance Encryption Standard) (U. S. next-term standard cryptography) as a similar process based on a common key cryptosystem.

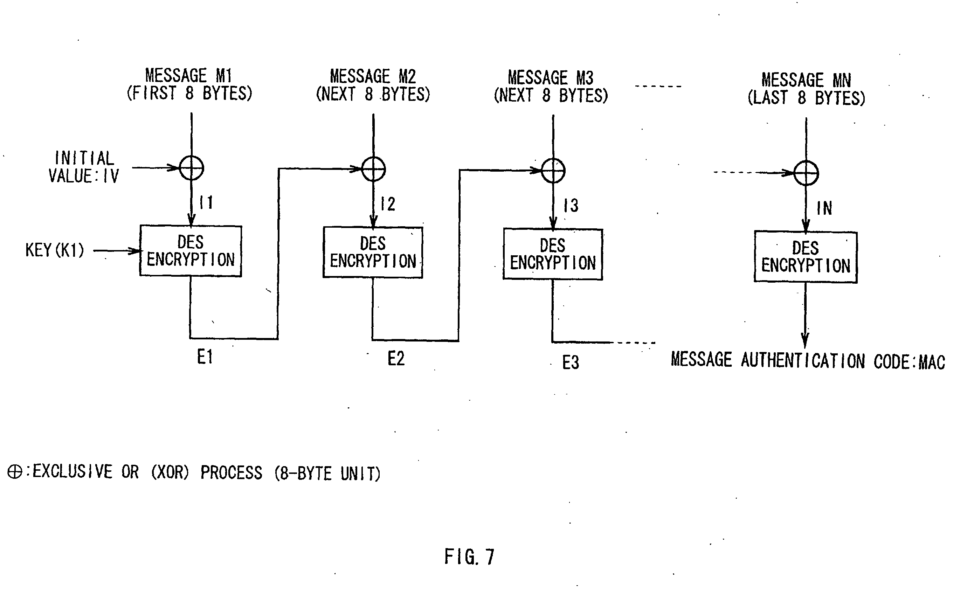

A method for generating an electronic signature using a general DES will be explained with reference to Fig. 7. First, before generating an electronic signature, a message to which the electronic signature is to be added is divided into sets of 8 bytes (the pieces of the divided message are hereafter referred to as "M1, M2, ... , MN"). An initial value (hereafter referred to as "IV") and the M1 are exclusive-ORed (the result is referred to as "I1"). Next, the I1 is input to a DES encrypting section, which encrypts it using a key (hereafter referred to as "K1") (the output is referred to as "E1"). Subsequently, the E1 and the M2 are exclusive-ORed, and the output I2 is input to the DES encrypting section, which encrypts it using the key K1 (the output is referred to as "E2"). This process is repeated to encrypt all the messages obtained by means of the division. The final output EN is an electronic signature. This value is generally called a "MAC (Message Authentication Code)" used to check a message for tamper. In addition, such a system for chaining encrypted texts is called a "CBC (Cipher Block Chaining) mode".

The MAC value output in the example of generation shown in Fig. 7 can be used as the integrity check value A or B or total integrity check value in the data structure shown in Fig. 4 which is enclosed by double frames and the content check value ICV1 to ICVN stored in each block in the block information table shown in Fig. 6. In verifying the MAC value, a verifier generates it using a method similar to that used to originally generate it, and the verification is determined to be successful if the same value is obtained.

Moreover, in the example shown in Fig. 7, the initial value IV is exclusive-ORed with the first 8-byte message M1, but the initial value IV may be zero and not exclusive-ORed.

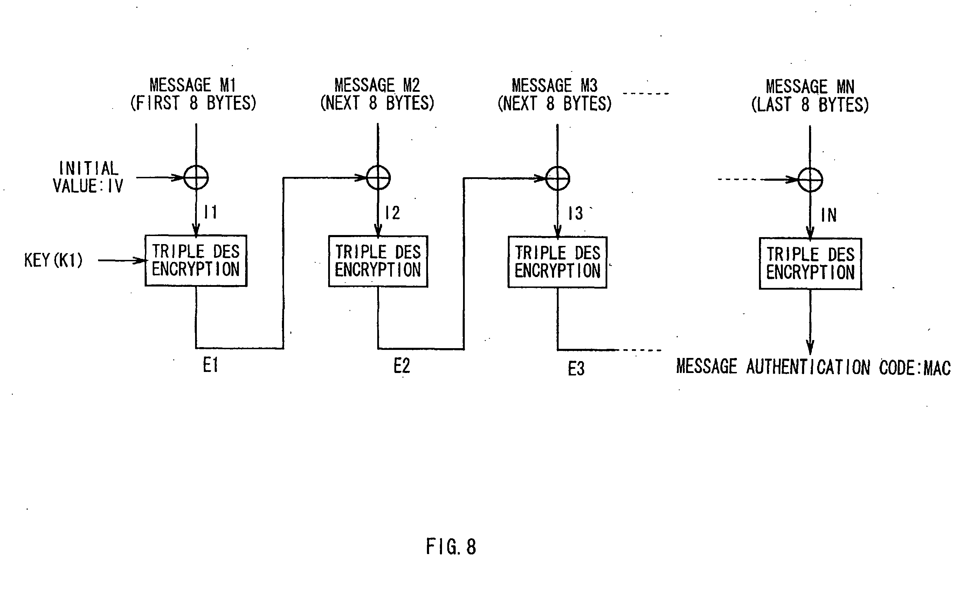

Fig. 8 shows the configuration of a method for generating the MAC value which has improved security compared to the MAC value generating method shown in Fig. 7. Fig. 8 shows an example where instead of the Single DES in Fig. 7, the Triple DES is used to generate the MAC value.

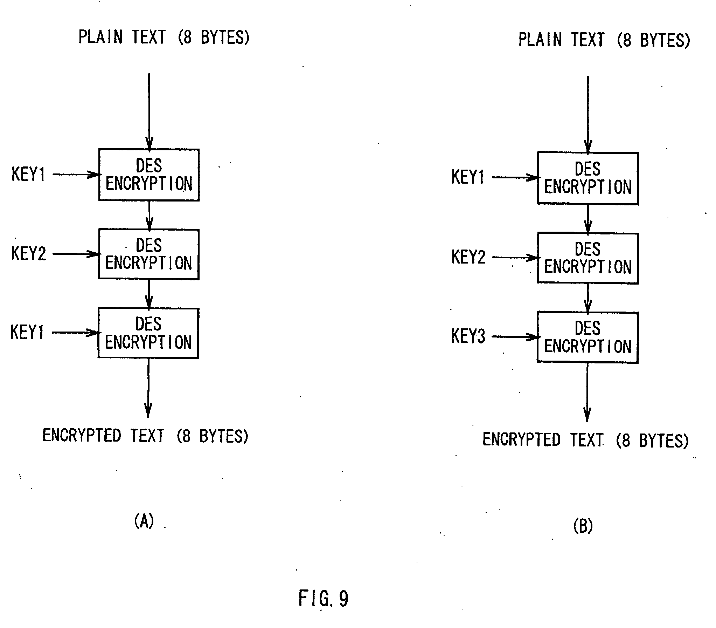

Fig. 9 shows an example of a detailed configuration of each of the Triple DES component shown in Fig. 8. There are two different aspects'of the configuration of the Triple DES as shown in Fig. 9. Fig. 9(a) shows an example using two cryptography keys where processing is carried out in the order of an encryption process with a key 1, a decryption process with a key 2, and an encryption process with the key 1. The two types of keys are used in the order of K1, K2, and K1. Fig. 9 (b) shows an example using three cryptography keys where processing is carried out in the order of an encryption process with the key 1, an encryption process with the key 2, and an encryption process with a key 3. The three types of keys are used in the order of K1, K2, and K3. The plurality of processes are thus continuously executed to improve security intensity compared to the Single DES. The Tripled DES configuration, however, has the disadvantage of requiring an amount of processing time three times as large as that for the Single DES.

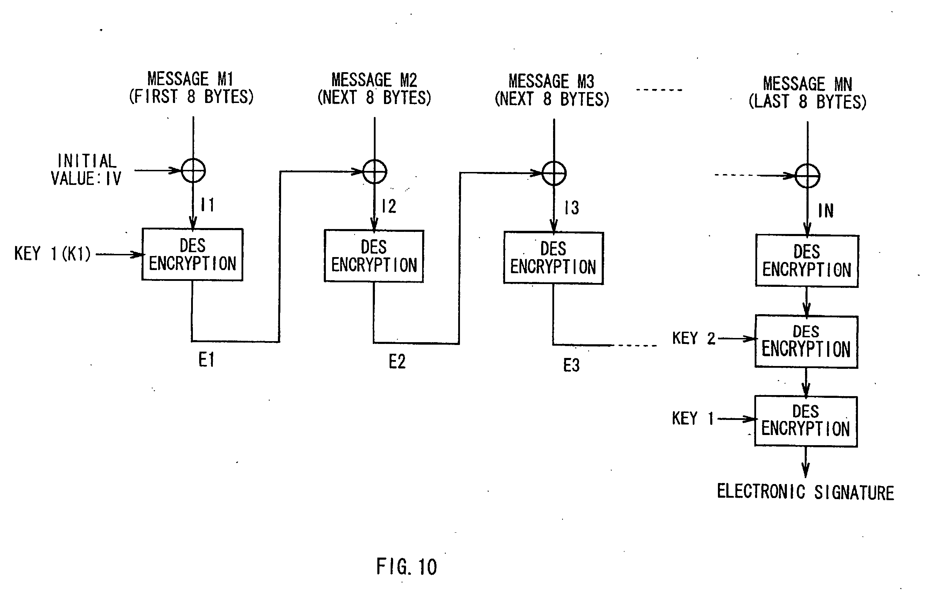

Fig. 10 shows an example of a MAC value generating configuration obtained by improving the Triple DES configuration described in Figs. 8 and 9. In Fig. 10, the encryption process for each of the messages from beginning to end of a message string to which a signature is to be added is based on the Single DES, while only the encryption process for the last message is based on the Triple DES configuration shown in Fig. 9 (a).

The configuration shown in Fig. 10 reduces the time required to generate the MAC value for the message down to a value almost equal to the time required for the MAC value generating process based on the Single DES, with security improved compared to the MAC value based on the Single DES. Moreover, the Triple DES configuration for the last message may be as shown in Fig. 9(b).

(3-2) Electronic Signature Based on Public Key Cryptosystem

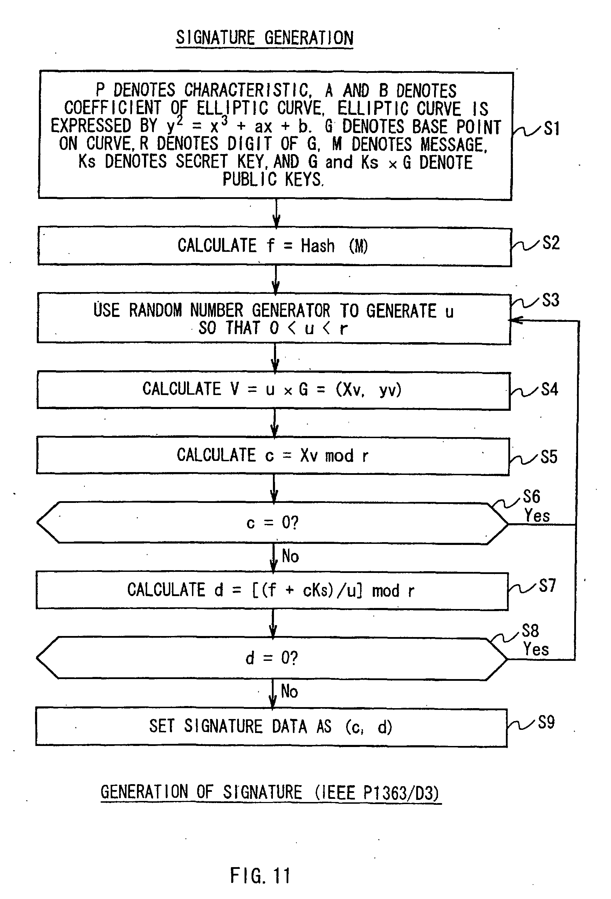

The method for generating electronic signature data if the common key encryption system is used as the encryption system has been described, but a method for generating electronic signature data if a common key cryptosystem is used as the encryption system will be described with reference to Fig. 11. The process shown in Fig. 11 corresponds to a process flow of generation of electronic signature data using the Elliptic Curve Digital Signature Algorithm (EC-DSA), IEEE P1363/D3. An example using the Elliptic Curve Cryptography (hereafter referred as "ECC") as public key cryptography will be explained. In addition to the elliptic curve cryptography, the data processing apparatus according to the present invention may use, for example, the RSA (Rivest, Shamir, Adleman; ANSI X9.31) cryptography, which is a similar public cryptosystem.

Each step in Fig. 11 will be described. At step S1, the following definitions are set: reference symbol p denotes a characteristic, a and b denote coefficients of an elliptic curve (elliptic curve: $y^2 = x^3 + ax + b$), G denotes a base point on the elliptic curve, r denotes the digit of the G, and Ks denotes a secret key ($0 < Ks < r$). At step S2, a hash value for the message M is calculated to obtain f = Hash(M).

Then, a method for determining a hash value using a hash function will be explained. The hash function receives a message as an input, compresses it into data of a predetermined bit length, and outputs the compressed data as a hash value. The hash value is characterized in that it is difficult to predict an input from a hash value (output), in that when one bit of data input to the hash function changes, many bits of the hash value change, and in that it is difficult to find different input data with the same hash value. The hash function may be MD4, MD5, or SHA-1, or DES-CBC similar to that described in Fig. 7 or other figures. In this case, the MAC (corresponding to the integrity check value ICV), which is the final output value, is the hash value.

Subsequently, at step S3, a random number u ($0 < u < r$) is generated, and at step S4, the base point is multiplied by u to obtain coordinates V (Xv, Yv). An addition and a multiplication by two on the elliptic curve are defined as follows:

$$\text{If } P=(Xa, Ya), Q=(Xb, Yb), R=(Xc, YC)=P+Q.$$

When

$$P \neq Q \text{ (addition)},$$

$$Xc=\lambda^2-Xa-Xb$$

$$Yc=\lambda x(Xa-Xc)-Ya$$

$$\lambda=(Yb-Ya)/(Xb-Xa)$$

When

$$P=Q \text{ (multiplication by two)},$$

$$Xc=\lambda^2-2Xa$$

$$Yc=\lambda x(Xa-Xc)-Ya$$

$$\lambda=(3(Xa)^2+a)/(2Ya) \qquad (1)$$

These are used to multiply the point G by u (although the calculation speed is low, the most easy-to-understand calculation method is shown below. G, 2xG, 4xG, ... is calculated, the u is binary-expanded, and corresponding $2^l \times G$ (value obtained by multiplying G by 2 i times) is added to bits of 1 (i denotes a bit position as counted from an LSB).

At step S5, c=Xvmod r is calculated, and at step S6, is determined whether the result is zero. If the result is not zero, then at step S7, d=[(f+cKs)/u]mod r is calculated, and at step S8, it is determined whether d is zero. If the d is not zero, then at step S9, the c and d are output as electronic signature data. When r is assumed to denote the length of 160 bits, the electronic signature data have a length of 320 bits.

If the c is 0 at step S6, the process returns to step S3 to regenerate a new random number. Similarly, if the d is 0 at step S8, the process also returns to step S3 to regenerate a new random number.

(3-3) Verification of Electronic Signature Based on Public Kay Cryptosystem

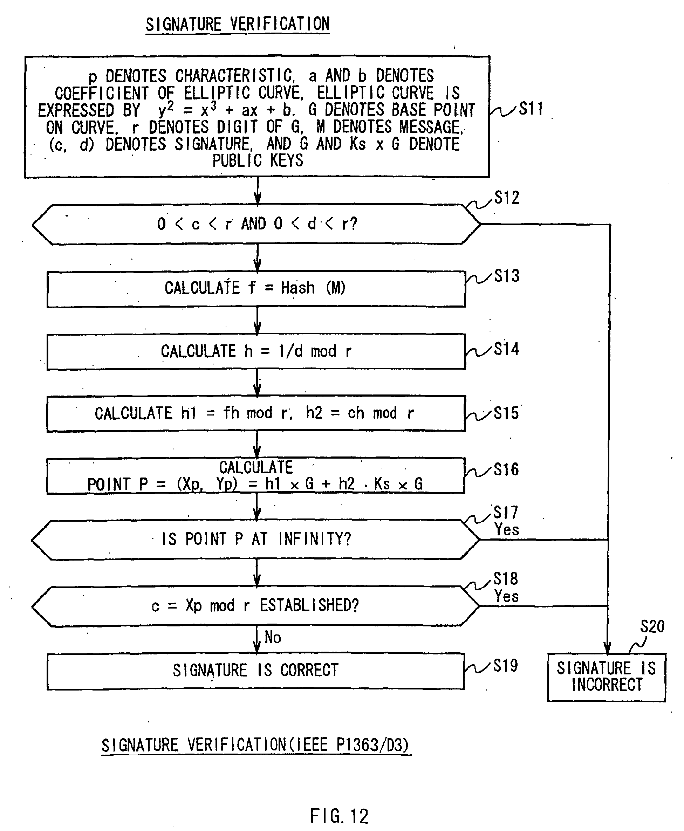

Next, a method for verifying an electronic signature using the public key cryptosystem will be described with reference to Fig. 12. At step S11, the following definitions are set: reference symbol M denotes a message, reference symbol p denotes a characteristic, reference symbols a and b denote elliptic curve coefficients (elliptic curve: $y^2 = x^3 + ax + b$), reference symbol G denotes a base point on the elliptic curve, reference symbol r denotes the digit of G, and reference symbols G and Ks x G denote public keys ($0 < Ks < r$). At step S12, it is verified that the electronic signature data c and d meet $0 < c < r$ and $0 < d < r$. If the data meet these conditions, then at step S13, a hash value for the message M is calculated to obtain f = Hash (M). Next, at step S14, h = 1/d mod r is calculated, and at step S15, h1 = fh mod r and h2 = ch mod r are calculated.

At step S16, the already calculated h1 and h2 are used to calculate P = (Xp, Yp) = h1 $\times$ G + h2 Ks $\times$ G. An electronic-signature verifier knows the public keys G and Ks $\times$ G and can thus calculate a scalar multiplication of a point on the elliptic curve similarly as step S4 in Fig. 11. Then, at step S17, it is determined whether the P is a point at infinity, and if not, the process proceeds to step S18 (the determination of whether the P is a point at infinity can actually be made at step S16. That is, when P = (X, Y) and Q = (X, -Y) are added together, the $\lambda$ cannot be calculated, indicating that P + Q is a point at infinity). At step S18, Xp mod r is calculated and compared with the electronic signature data c. Finally, if these values are equal, the process proceeds to step S19 to determine that the electronic signature is correct.

If it is determined that the electronic signature is correct, the data have not been tampered and^that a person holding the secret key corresponding to the public keys has generated the electronic signature.

If the signature data c or d do not meet 0 < c < r or 0 < d < r at step S12, the process proceeds to step S20. Additionally, if the P is a point at infinity at step S17, the process also proceeds to step S20. Further, if the value of Xp mod r does not equal the signature data c at step S18, the process proceeds to step S20.

If it is determined at step S20 that the signature to be incorrect, this indicates that the received data have been tampered or have not been generated by the person holding the secret key corresponding to the public keys.

(3-4) Mutual Authentication Based on Common Key Cryptosystem

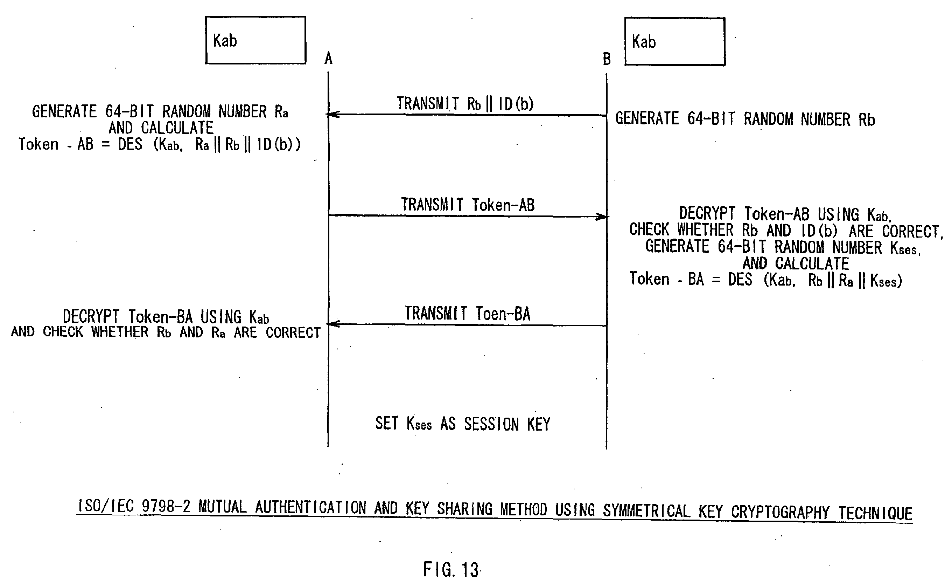

Next, a mutual authentication method using a common key cryptosystem will be explained with reference to Fig. 13. In this figure, the common key cryptosystem is the DES, but any common key cryptosystem similar to that previously described may be used. In Fig. 13, B first generates a 64-bit random number Rb and transmits the Rb and its own ID ID(b) to A. On receiving the data, the A generates a new 64-bit random number Ra, encrypts the data in the DES CBC mode in the order of the Ra, Rb, and ID(b) using a key Kab, and returns them to the B. According to the DES CBC mode process configuration shown in Fig. 7, the Ra, Rb, and ID(b) correspond:to M1, M2, and M3, and outputs E1, E2, and E3 are encrypted texts when an initial value: IV = 0.

On receiving the data, the B decrypts the received data with 'the key Kab. To decrypt the received data, the encrypted test E1 is first decrypted with the key Kab to obtain the random number Ra. Then, the encrypted test E2 is decrypted with the key Kab, and the result and the E1 are exclusive-ORed to obtain the Rb. Finally, the encrypted test E3 is decrypted with the key Kab, and the result and the E2 are exclusive-ORed to obtain the ID(b). Of the Ra, Rb, and ID(b) thus obtained, the Rb and ID(b) are checked for equality to those transmitted by the B. If they are successfully verified, the B authenticates the A.

Then, the B generates a session key (hereafter referred to as "Kses") used after the authentication (this is generated using a random number). The Rb, Ra, and Kses are encrypted in the DES CBC mode in this order using the key Kab and then returned to the A.

On receiving the data, the A decrypts the received data with the key Kab. The method for decrypting the received data is similar to that executed by the B, so detailed description thereof is omitted. Of the Rb, Ra, and Kses thus obtained, the Rb and Ra are checked for equality to those transmitted by the A. If they are successfully verified, the A authenticates the B. After the A and B have authenticated each other, the session key Kses is used as a common key for secret communication after the authentication.

If illegality or inequality is found during the verification of the received data, the mutual authentication is considered to have failed and the process is aborted.

(3-5) Public Key Certificate

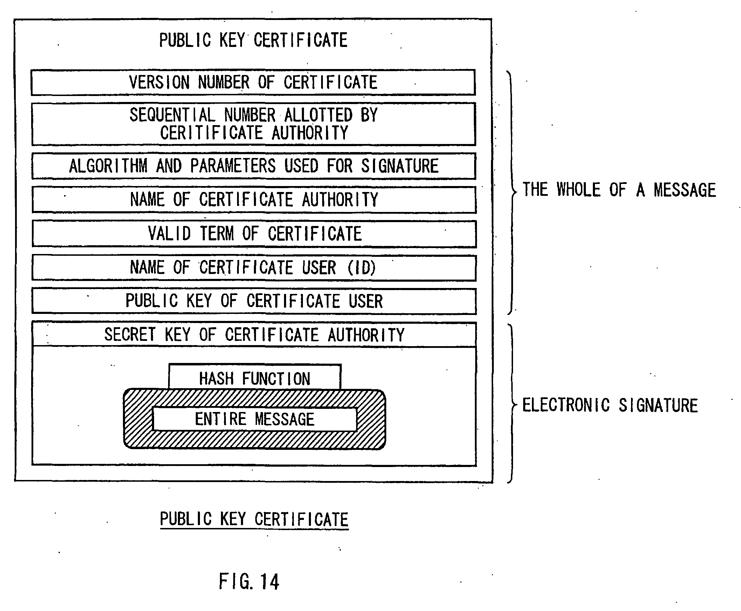

Next, the public key certificate will be explained with reference to Fig. 14. The public key certificate is issued by a Certificate Authority (CA) for the public key cryptosystem. When a user submits his or her own ID, a public key, and others to the certificate authority, it adds information such as its own ID and valid term to the data submitted by the user and further adds its signature thereto to generate a public key certificate.

The public key certificate shown in Fig. 14 contains the version number of the certificate, the sequential number of the certificate allotted to the certificate user by the certificate authority, an algorithm and parameters used for the electronic signature, the name of the certificate authority, the valid term of the certificate, the name (user ID) of the certificate user, and the public key and electronic signature of the certificate user.

The electronic signature is data generated by applying the hash function to the entirety of the version number of the certificate, the sequential number of the certificate allotted to the certificate user by the certificate authority, the algorithm and parameter used for the electronic signature, the name of the certificate authority, the valid term of the certificate, the name of the certificate user, and the public key of the certificate user, to generate a hash value, and then using the secret key of the certificate authority for this value. For example, the process flow described in Fig. 11 is applied to the generation of the electronic signature.

The certificate authority issues the public key certificate shown in Fig. 14, updates a public key certificate for which the valid term has expired, and creates, manages, and distributes an illegal user list to exclude users who has committed an injustice (this is called "revocation"). It also generates public and secret keys as required.

On the other hand, to use this public key certificate, the user uses the public key of the certificate authority held by itself to verify the electronic signature on the public key certificate, and after the electronic signature has been successfully verified, it takes the public key out from the public key certificate and uses it. Thus, all users who use the public key certificate must hold a common public key of the certificate authority. The method for verifying the electronic authority has been described in Fig. 12, so detailed description thereof is omitted.

(3-6) Mutual Authentication Based on Public Key Cryptosystem

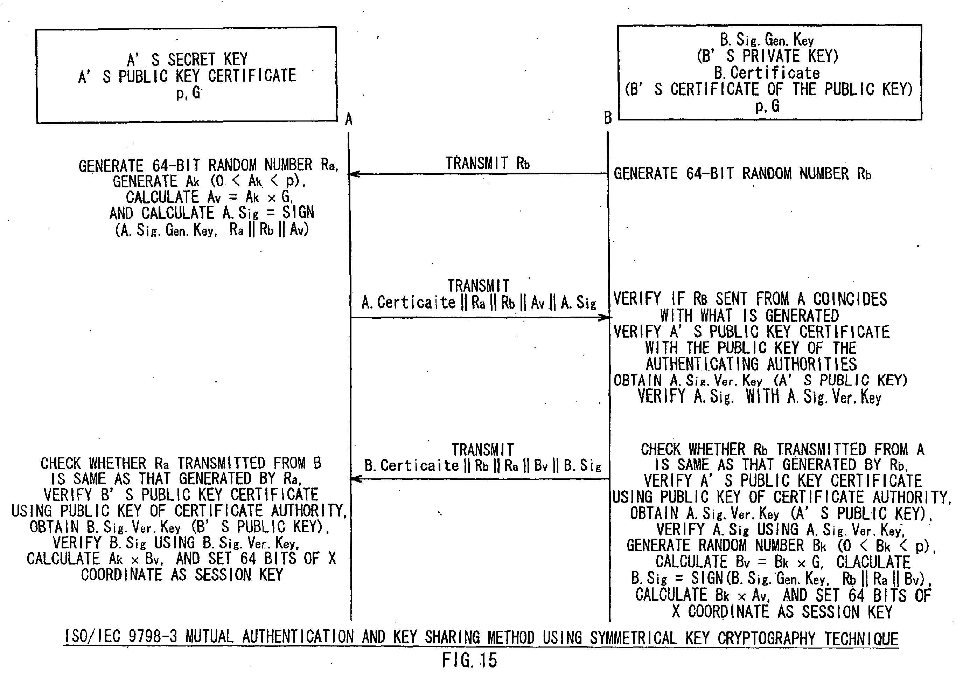

Next, a method for mutual authentication using a 160-bit elliptic curve cryptography, which is a public key cryptography, will be described with reference to Fig. 15. In this figure, the public key cryptosystem is the ECC, but any similar public key cryptosystem may be used as previously described. In addition, the key size is not limited to 160 bits. In Fig. 15, the B first generates and transmits the 64-bit random number Rb to the A. On receiving the data, the A generates a new 64-bit random number Ra and a random number Ak smaller than the characteristic p. It then multiplies a base point G by Ak to determine a point Av = Ak $\times$ G, generates an electronic signature A. Sig for the Ra, Rb, and Av (X and Y coordinates), and returns these data to the B together with the A's public key certificate. In this case, since the Ra and Rb each contain 64 bits and the X and Y coordinates of the Av each contain 160 bits, the electronic signature is for the total of 448 bits. The method for generating the electronic signature has been described in Fig. 11, so detailed description thereof is omitted. The public key certificate has also been explained in Fig. 14, so detailed description thereof is omitted.

On receiving the A's public key certificate, Ra, Rb, Av, and electronic signature A. Sig, the B verifies that the Rb transmitted by the A matches that generated by the B. If they are determined to match, the B verifies the electronic signature in the A's public key certificate using the public key of the certificate authority, and takes out the A's public key. The verification of the public key certificate has been explained with reference to Fig. 14, so detailed description thereof is omitted. The B then uses the A's public key obtained to verify the electronic signature A. Sig. The method for verifying the electronic signature has been explained in Fig. 12, so detailed description thereof is omitted. Once the electronic signature has been successfully verified, the B authenticates the A.

Next, the B generates a new random number Bk smaller than the characteristic p. It then multiplies the base point G by Bk to determine a point Bv = Bk $\times$ G, generates an electronic signature B. Sig for the Rb, Ra, and Bv (X and Y coordinates), and returns these data to the A together with the B's public key certificate.

On receiving the B's public key certificate, Rb, Ra, Av, and electronic signature B. Sig, the A verifies that the Ra transmitted by the B matches that generated by the A. If they are determined to match, the A verifies the electronic signature in the B's public key certificate using the public key of the certificate authority, and takes out the B's public key. The A then uses the B's public key obtained to verify the electronic signature B. Sig. Once the electronic signature has been successfully verified, the A authenticates the B.

If both the A and B have successfully authenticated each other, the B calculates Bk $\times$ Av (since the Bk is a random number but the Av is a point on the elliptic curve, the point on the elliptic curve must be subjected to scalar multiplication), and the A calculates Ak $\times$ Bv so that lower 64 bits of each of the X coordinates of these points are used as the session key for subsequent communication (if the common key cryptography uses a 64-bit key length). Of course, the session key may be generated from the Y coordinates, or the lower 64 bits may not be used. In secret communication after the mutual authentication, not only transmitted data are encrypted with the session key but an electronic signature may be added thereto.

If illegality or inequality is found during the verification of the electronic signature or received data, the mutual authentication is considered to have failed and the process is aborted.

(3-7) Encryption Process Using Elliptic Curve Cryptography

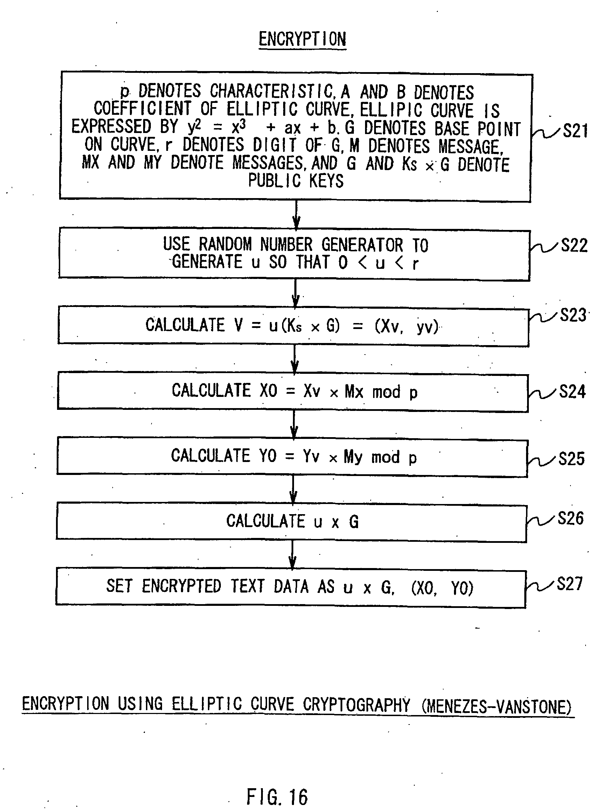

Next, encryption using elliptic curve cryptography will be explained with reference to Fig. 16. At step S21, the following definitions are set: reference symbols Mx and My denote messages, reference symbol p denotes a characteristic, reference symbols a and b denote elliptic curve coefficients (elliptic curve: $y^2 = x^3 + ax + b$), reference symbol G denotes a base point on the elliptic curve, reference symbol r denotes the digit of G, and reference symbols G and Ks $\times$ G denote public keys (0 < Ks <r). At step S22, the random number u is generated so that 0 < u < r. At step S23, coordinates V are calculated by multiplying the public key Ks $\times$ G by the u. The scalar multiplication on the elliptic curve has been explained at step S4 in Fig. 11, and description thereof is thus omitted. At step S24, the X coordinate of the V is multiplied by the Mx and then divided by the p to determine a remainder X0. At step S25, the Y coordinate of the V is multiplied by the My and then divided by the p to determine a remainder Y0. If the length of the message is smaller than the number of the bits, the My comprises a random number, and the decryption section discards it. At step S26, u $\times$ G is calculated and at step S27, an encrypted text u $\times$ G, (X0, Y0) is obtained.

(3-8) Decryption Process Using Elliptic Curve Cryptography

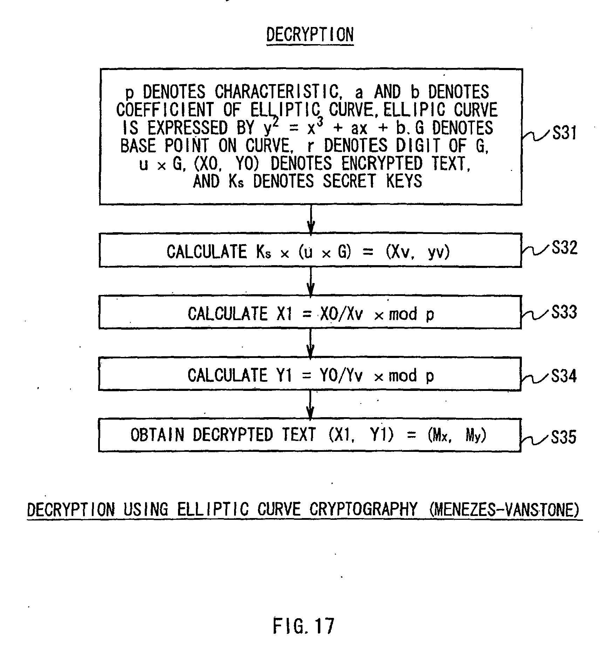

Next, decryption using the elliptic curve cryptograhy will be described with reference to Fig. 17. At step S31, the following definitions are set: reference symbols u $\times$ G and (X0, Y0) denote encrypted text data, reference symbol p denotes a characteristic, reference symbols a and b denote elliptic curve coefficients (elliptic curve: $y^2 = x^3 + ax + b$), reference symbol G denotes a base point on the elliptic curve, reference symbol r denotes the digit of G, and reference symbol Ks denotes a secret key (0 < Ks <r). At step S32, the encrypted data u × G are multiplied by a value corresponding to the secret key Ks to determine coordinates V (Xv, Yv). At step S33, the X coordinate of (X0, Y0) is taken out from the encrypted data and X1 = X0 / Xv mod p is calculated. At step S34, the Y coordinate is taken out and Y1 = Y0 / Yv mod p is calculated. At step S35, X1 is determined to be Mx and Y1 is determined to be My to obtain a message. At this point, if the My is not used for the message, Y1 is discarded.

In this manner, when the secret key is Ks, the public key is G, and Ks × G is calculated, the key used for encryption and the key used for decryption may be different.

Another known example of the public key cryptography is the RSA, but detailed description thereof is omitted (details thereof are described in PKCS #1 Version 2).

(3-9) Random Number Generating Process

Next, a method for generating a random number will be explained. Known random-number generating methods include an intrinsic random-number generating method that amplifies thermal noise to generate a random number from the resulting A/D output and a pseudo random-number generating method that combines together a plurality of linear circuits such as M sequences. A method is also known which uses common key cryptography such as the DES. In this example, the pseudo random-number generating method using the DES will be described (ANSI X9.17 base).

First, the value of 64 bits (for a smaller number of bits, higher bits are set to 0) obtained from data such as time is defined as D, key information used for the Triple-DES is defined as Kr, and a seed for generating a random number is defined as S. Then, the random number R is calculated as follows:

$$I=\text{Triple-DES (Kr, D)} \qquad (2\text{-}1)$$

$$I=\text{Triple-DES (Kr, } S^{\phi}I) \qquad (2\text{-}2)$$

$$I=\text{Triple-DES(Kr, } R^{\phi}I) \qquad (2\text{-}3)$$

In this case, Triple-DES() is a function that uses a first argument as cryptography key information and that encrypts the value of a second argument based on the Triple-DES. The operation $\phi$ is an exclusive OR executed every 64 bits. The last value S is updated as a new seed.

If random numbers are continuously generated, Equations (2-2) and (2-3) are repeated.

The aspects of various cryptography processes applicable to the data processing apparatus according to the present invention have been described. Next, specific processes executed in the present data processing apparatus will be described in detail.

(4) Configuration of Data Stored in Recording and Reproducing Device

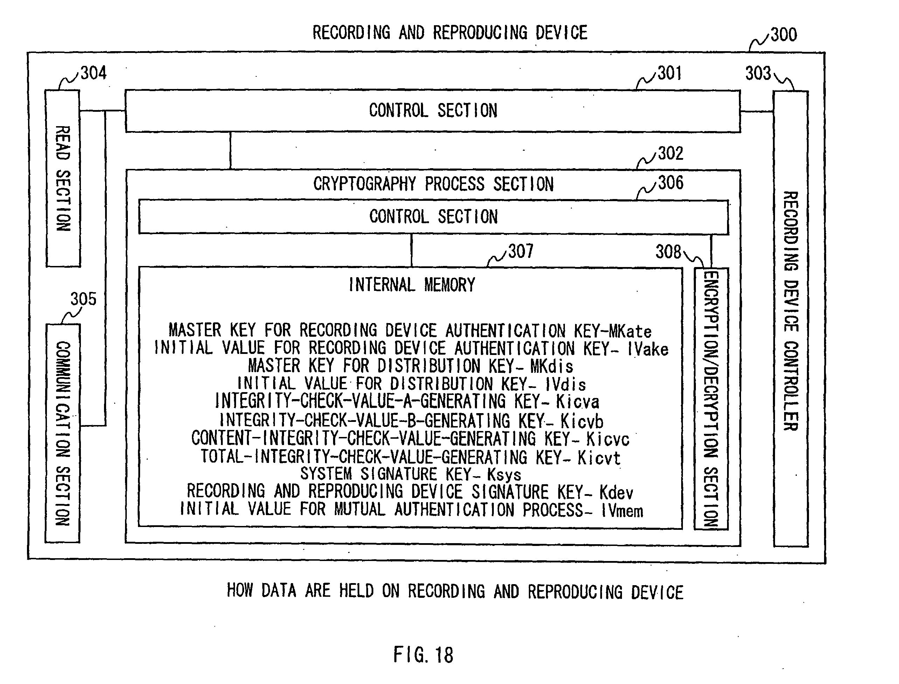

Fig. 18 is a view useful in explaining the contents of data held in the internal memory 307 configured in the recording and reproducing device cryptography process section 302 of the recording and reproducing device 300 shown in Fig. 3.

As shown in Fig. 18, the internal memory 307 stores the following keys and data:

MKake: recording device authenticating master key for generating an authentication and key exchange key (hereafter referred to as "Kake") required for a mutual authentication process executed between the recording and reproducing device 300 and recording device 400 (see Fig. 3).

IVake: initial value for the recording device authenticating key.

MKdis: master key for a distribution key for generating a distribution key Kdis.

IVdis: distribution-key-generating initial value.

Kicva: integrity-check-value-A-generating key for generating the integrity check value ICVa.

Kicvb: integrity-check-value-B-generating key for generating the integrity check value ICVb.

Kicvc: content-integrity-check-value-generating key for generating the integrity check value ICVi (i=1 to N) for each content block.

Kicvt: total-integrity check value-generating key for generating the total integrity check value ICVt.

Ksys: system signature key used to add a common signature or ICV to a distribution system.

Kdev: recording and reproducing device signature key that varies depending on recording and reproducing device and that is used by the recording and reproducing device to add a signature or ICV.

IVmem: initial value that is used for a cryptography process for mutual authentication, or the like. This is shared by the recording device.

These keys and data are stored in the internal memory 307 configured in the recording and reproducing device cryptography process section 302.

(5) Configuration of Data Stored in Recording Device

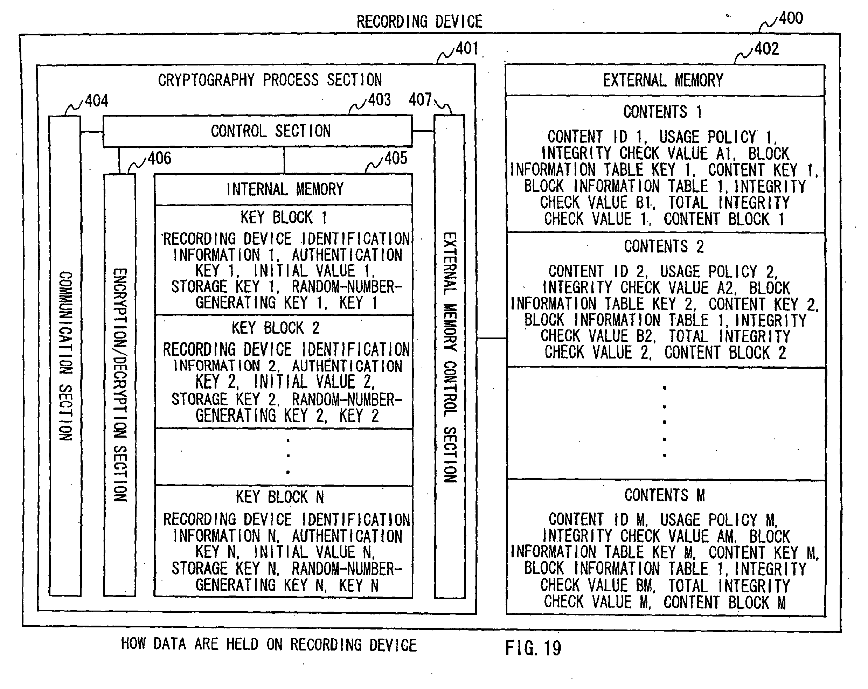

Fig. 19 is a view showing how data are held on the recording device. In this figure, the internal memory 405 is divided into a plurality of (in this example, N) blocks each storing the following keys and data:

IDmen: recording device identification information that is unique to the recording device.

Kake: authentication key that is used for mutual authentication with the recording and reproducing device 300.
IVmem: initial value that is used for a cryptography process for mutual authentication, or the like.
Kstr: storage key that is a cryptography key for the block information table and other content data.
Kr: random number generating key.
S: seed.

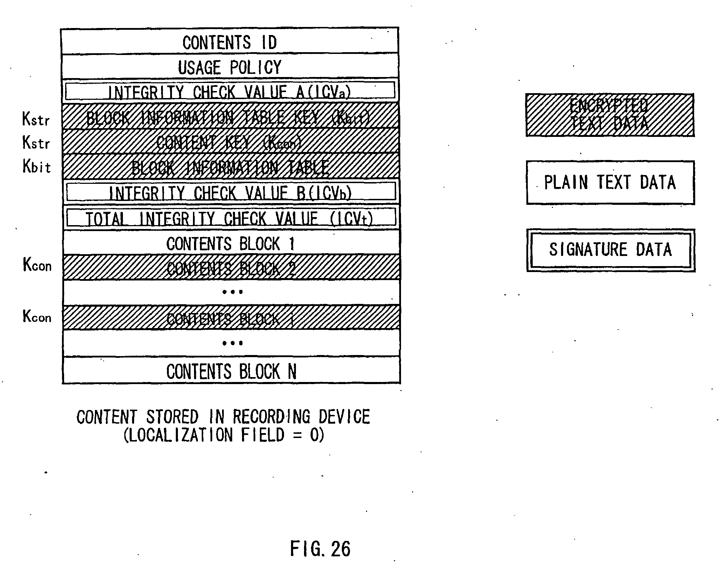

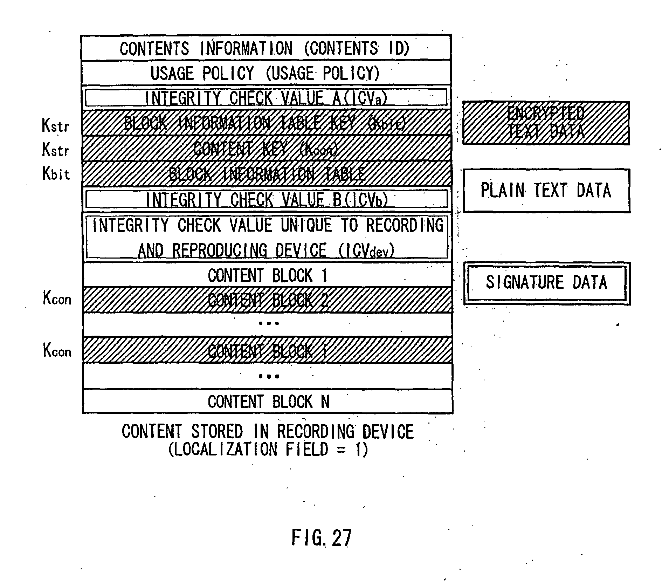

These data are each held in the corresponding block. An external memory 402 holds a plurality of (in this example, M) content data; it holds the data described in Fig. 4 as shown, for example, in Fig. 26 or 27. The difference in configuration between Figs. 26 and 27 will be described later.

(6) Mutual Authentication Process between recording and reproducing device and recording device

(6-1) Outline of Mutual Authentication Process

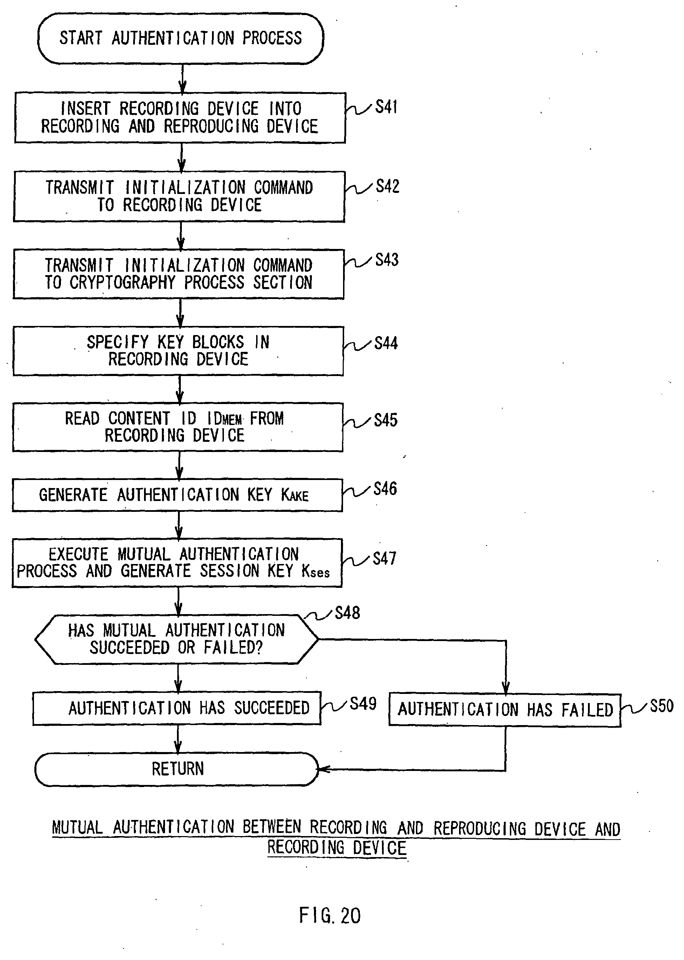

Fig. 20 is a flow chart showing a procedure for an authentication between the recording and reproducing device 300 and the recording device 400. At step S41, the user inserted the recording device 400 into the recording and reproducing device 300. If, however, the recording device 400 is capable of communication in a non-contact manner, it need not be inserted thereinto.

When the recording device 400 is set in the recording and reproducing device 300, a recording device detecting means (not shown) in the recording and reproducing device 300 shown in Fig. 3 notifies the control section 301 that the recording device 400 has been installed. Then at step S42, the control section 301 of the recording and reproducing device 300 transmits an initialization command to the recording device 400 via the recording device controller 303. On receiving the command, the recording device 400 causes the control section 403 of the recording device cryptography process section 401 to receive the command via the communication section 404 and clear an authentication completion flag if it has been set. That is, unauthenticated state is set.

Then at step S43, the control section 301 of the recording and reproducing device 300 transmits an initialization command to the recording and reproducing device cryptography process section 302. At this point, it also transmits a recording device insertion port number. When the recording device insertion port number is transmitted, even if a plurality of recording devices 400 are connected to the recording and reproducing device 300, the recording and reproducing device 300 can simultaneously execute authentication with these recording devices 400 and transmit and receive data thereto and therefrom.

On receiving the initialization command, the recording and reproducing device cryptography process section 302 of the recording and reproducing device 300 causes the control section 306 thereof to clear the authentication complete flag corresponding to the recording device insertion port number if it has been set. That is, the unauthenticated state is set.

Then at step S44, the control section 301 of the recording and reproducing device 300 specifies a key block number used by the recording device cryptography process section 401 of the recording device 400. Details of the key block number will be described later. At step S45, the control section 301 of the recording and reproducing device 300 reads out the recording device identification information IDmem stored in the specified key block in the internal memory 405 of the recording device 400. At step S46, the control section 301 of the recording and reproducing device 300 transmits the recording device identification information IDmem to the recording and reproducing device cryptography process section 302 to generate the authentication key Kake based on the recording device identification information IDmem. The authentication key Kake is generated, for example, as follows:

$$Kake = DES(MKake, IDmem \oplus IVake) \qquad (3)$$

In this case, the MKake denotes the master key for the recording device authentication key used to generate the authentication key Kake required for the mutual authentication process executed between the recording and reproducing device 300 and the recording device 400 (see Fig. 3), the master key being stored in the internal memory 307 of the recording and reproducing device 300 as described above. Additionally, the IDmem denotes the recording device identification information unique to the recording device 400. Furthermore, the IVake denotes the initial key for the recording device authentication key. In addition, in the above equation, the DES() denotes a function that uses a first argument as cryptography key and that encrypts the value of a second argument based on the DES. The operation $\phi$ denotes an exclusive OR executed every 64 bits.

If, for example, the DES configuration shown in Fig. 7 or 8 is applied, the message M shown in Figs. 7 and 8 corresponds to the recording device identification information: IDmem, the key K1 corresponds to the master key for the device authentication key: MKake, the initial value IV corresponds to the value: IVake, and the output obtained is the authentication key Kake.

Then at step S47, the mutual authentication process and the process for generating the session key Kses are carried out. The mutual authentication is executed between the encryption/decryption section 308 of the recording and reproducing device cryptography process section 302 and the encryption/decryption section 406 of the recording device cryptography process section 401; the control section 301 of the recording and reproducing device 300 mediates therebetween.

The mutual authentication process can be executed as previously described in Fig. 13. In the configuration shown in Fig. 13, the A and B correspond to the recording and reproducing device 300 and the recording device 400, respectively. First, the recording and reproducing device cryptography process section 302 of the recording and reproducing device 300 generates the random number Rb and transmits the Rb and the recording and reproducing device identification information IDdev, which is its own ID, to the recording device cryptography process section 401 of the recording device 400. The recording and reproducing device identification information IDdev is an identifier unique to a reproducing device stored in a memory section configured in the recording and reproducing device 300. The recording and reproducing device identification information IDdev may be recorded in the internal memory of the recording and reproducing device cryptography process section 302.

On receiving the radom number Rb and the recording and reproducing device identification information IDdev, the recording device cryptography process section 401 of the recording device 400 generates a new 64-bit random number Ra, encrypts the data in the DES CBC mode in the order of the Ra, Rb, and recording and reproducing device identification information IDdev using the authentication key Kake, and returns them to the recording and reproducing device cryptography process section 302 of the recording and reproducing device 300. For example, according to the DES CBC mode process configuration shown in Fig. 7, the Ra, Rb, and IDdev correspond to the M1, M2, and M3, respectively, and when the initial value : IV=IVmem, the outputs E1, E2, and E3 are encrypted texts.

On receiving the encrypted texts E1, E2, and E3, the recording and reproducing device cryptography process section 302 of the recording and reproducing device 300 decrypts the received data with the authentication key Kake. To decrypt the received data, the encrypted text E1 is first decrypted with the key Kake and the result and the IVmem are exclusive-ORed to obtain the random number Ra. Then, the encrypted text E2 is decrypted with the key Kake, and the result and the E1 are exclusive-ORed to obtain the Rb. Finally, the encrypted text E3 is decrypted with the key Kake, and the result and the E2 are exclusive-ORed to obtain the recording and reproducing device identification information IDdev. Of the Ra, Rb, and recording and reproducing device identification information IDdev thus obtained, the Rb and recording and reproducing device identification information IDdev are checked for equality to those transmitted by the recording and reproducing device 300. If they are successfully verified, the recording and reproducing device cryptography process section 302 of the recording and reproducing device 300 authenticates the recording device 400.

Then, the recording and reproducing device cryptography process section 302 of the recording and reproducing device 300 generates a session key (hereafter referred to as "Kses") used after the authentication (this is generated using a random number). The Rb, Ra, and Kses are encrypted in the DES CBC mode in this order using the key Kake and the initial value IVmem and then returned to the recording device cryptography process section 401 of the recording device 400.

On receiving the data, the recording device cryptography process section 401 of the recording device 400 decrypts the received data with the key Kake. The method for decrypting the received data is similar to that executed by the recording and reproducing device cryptography process section 302 of the recording and reproducing device 300, so detailed description thereof is omitted. Of the Ra, Rb, and Kses thus obtained, the Rb and Ra are checked for equality to those transmitted by the recording device 400. If they are successfully verified, the recording device cryptography process section 401 of the recording device 400 authenticates the recording and reproducing device 300. After these devices have authenticated each other, the session key Kses is used as a common key for secret communication after the authentication.

If illegality or inequality is found during the verification of the received data, the mutual authentication is considered to have failed and the process is aborted.

If the mutual authentication has been successful, the process proceeds from step S48 to step S49 where the recording and reproducing device cryptography process section 302 of the recording and reproducing device 300 holds the session key Kses and where the authentication complete flag is set, indicating that the mutual authentication has been completed. Additionally, if the mutual authentication has failed, the process proceeds to step S50, the session key Kses is discarded and the authentication complete flag is cleared. If the flag has already been cleared, the clearing process is not necessarily required.

If the recording device 400 is removed from the recording device insertion port, the recording device detecting means in the recording and reproducing device 300 notifies the control section 301 of the recording and reproducing device 300 that the recording device 400 has been removed. In response to this, the control section *301* of the recording and reproducing device 300 commands the recording and reproducing device cryptography process section 302 of the recording and reproducing device 300 to clear the authentication complete flag corresponding to the recording device insertion port number. In response to this, the recording and reproducing device cryptography process section 302 of the recording and reproducing device 300 clears the authentication complete flag corresponding to the recording device insertion port number.

The example has been described where the mutual authentication process is executed in accordance with the procedure shown in Fig. 13, but the present invention is not limited to the above described example of authentication process but the process may be executed, for example, in accordance with the above described mutual authentication procedure in Fig. 15. Alternatively, in the procedure shown in Fig. 13, the A in Fig. 13 may be set as the recording and reproducing device 300, the B may be set as the recording device 400, and the ID that the B: recording device 400 first delivers to the A: recording and reproducing device 300 may be set as the recording device identification information in the key block in the recording device. Various processes are applicable to the authentication process procedure executed in the present invention, and the present invention is not limited to the above described authentication process.

(6-2) Switching Key Block during Mutual Authentication

The mutual authentication process in the data processing apparatus according to the present invention is partly characterized in that the authentication process is executed by configuring a plurality of (for example, N) key blocks on the recording device 400 side and allowing the recording and reproducing device 300 to specify one of them (step S44 in the process flow in Fig. 20). As previously described in Fig. 19, the internal memory 405 configured in the cryptography process section 401 of the recording device 400 has a plurality of key blocks formed therein which store various different data such as key data and ID information. The mutual authentication process executed between the recording and reproducing device 300 and the recording device 400 as described in Fig. 20 is carried out on one of the plurality of key blocks of the recording device 400 in Fig. 19.

Conventional configurations for executing a mutual authentication process between a recording medium and a reproducing device therefor generally use a common authentication key for the mutual authentication. Thus, when the authentication key is to be changed for each product destination (country) or each product, key data required for authentication processes for the recording and reproducing device side and the recording device side must be changed on both devices. Accordingly, key data required for an authentication process stored in a newly sold recording and reproducing device do not correspond to key data required for an authentication process stored in a previously sold recording and reproducing device, so the new recording and reproducing device cannot access an old version of recording device. On contrary, a similar situation occurs in the relationship between a new version of recording device and the old version of recording and reproducing device.

In the data processing apparatus according to the present invention, key blocks are stored in the recording device 400 as a plurality of different key sets as shown in Fig. 19. The recording and reproducing device has a key block to be applied to the authentication process, that is, a specified key block set, for example, for each product destination (country), product, device type, version, or application. This set information is stored in the memory section of the recording and reproducing device, for example, the internal memory 307 in Fig. 3 or other storage elements of the recording and reproducing device 300, and is accessed by the control section 301 in Fig. 3 during the authentication process to specify a key block in accordance therewith.

The master key Mkake for the recording device authentication key in the internal memory 307 of the recording and reproducing device 300 is set in accordance with settings for a specified key block and can correspond only to that specified key block; it does not establish mutual authentication with any key blocks other than the specified one.

As is seen in Fig. 19, the internal memory 405 of the recording device 400 has N key blocks (1 to N) set which each store recording device identification information, an authentication key, an initial value, a storage key, a random-number generating key, and a seed; each key block stores at least authenticating key data as data varying depending on the block.

In this manner, the key data configuration of the key block in the recording device 400 varies depending on the block. Thus, for example, a key block with which a certain recording and reproducing device A can execute the authentication process using the master key MKake for the recording device authentication key stored in the internal memory can be set as a key block No. 1, and a key block with which a recording and reproducing device B with a different specification can execute the authentication process can be set as another key block, for example, a key block No. 2.

Although described later in detail, when a content is stored in the external memory 402 of the recording device 400, the storage key Kstr stored in each key block is used to encrypt and store the content. More specifically, the storage key is used to encrypt a content key for encrypting a content block.

As shown in Fig. 19, the storage key is configured as a key that varies depending on the block. Thus, a content stored in a memory of a recording device is prevented from being shared by two different recording and reproducing devices set to specify different key blocks. That is, differently set recording and reproducing devices can each use only the contents stored in a recording device that is compatible with its settings.

Data that can be made common to each key block can be made so, while, for example, only the authenticating key data and the storage key data may vary depending on the key block.

In a specific example where key blocks comprising a plurality of different key data are configured in the recording device, for example, different key block numbers to be specified are set for different types of recording and reproducing device 300 (an installed type, a portable type, and the like), or different specified key blocks are set for different applications. Furthermore, different key blocks may be set for different territories; for example, the key block No. 1 is specified for recording and reproducing devices sold in Japan, and the key block No. 2 is specified for recording and reproducing devices sold in the U.S. With such a configuration, a content that is used in different territories and that is stored in each recording device with a different storage key cannot be used in a recording and reproducing device with different key settings even if a recording device such as a memory card is transferred from the U.S. to Japan or vice versa, thereby preventing the illegal or disorderly distribution of the content stored in the memory. Specifically, this serves to exclude a state where a content key Kcon encrypted with different storage keys Kstr can be mutually used in two different countries.

Moreover, at least one of the key blocks 1 to N in the internal memory 405 of the recording device 400 shown in Fig. 19, for example, the No. N key block may be shared by any recording and reproducing device 300.

For example, when the key block No. N and the master key MKake for the recording device authentication key, which is capable of authentication, are stored in all apparatuses, contents can be distributed irrespective of the type of the recording and reproducing device 300, the type of the application, or the destined country. For example, an encrypted content stored in a memory card with the storage key stored in the key block No. N can be used in any apparatuses. For example, music data or the like can be decrypted and reproduced from a memory card by encrypting the data with the storage key in a shared key block, storing them in the memory card, and setting the memory card in, for example, a portable sound reproducing device storing the master key MKake for the recording device authentication key, which is also shared.

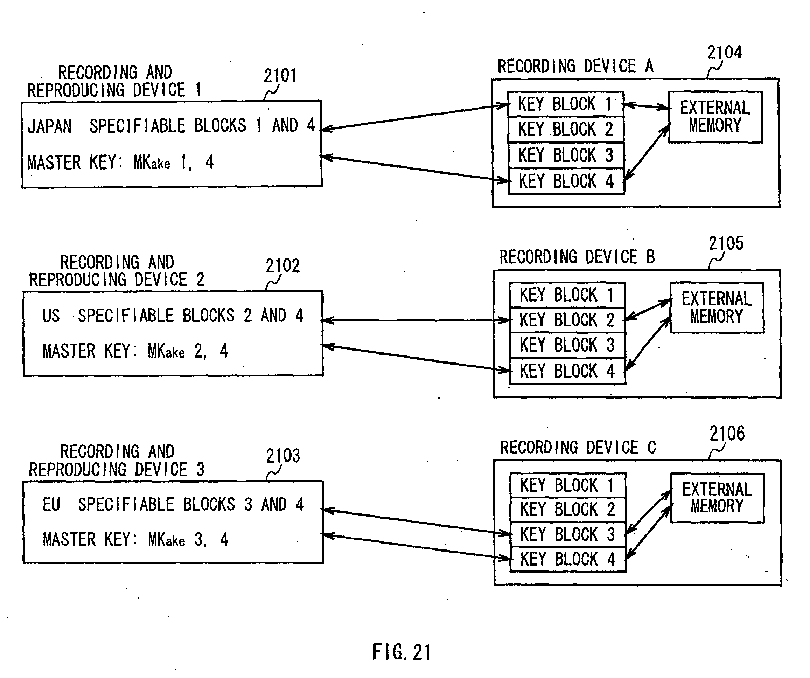

Fig. 21 shows an example of the usage of the recording device of the present data processing apparatus, which has a plurality of key blocks. A recording and reproducing device 2101 is a product sold in Japan and has a master key that establishes an authentication process with the key blocks No. 1 and No. 4 in the recording device. A recording and reproducing device 2102 is a product sold in the U.S. and has a master key that establishes an authentication process with the key blocks No. 2 and No. 4 in the recording device. A recording and reproducing device 2103 is a product sold in the EU and has a master key that establishes an authentication process with the key blocks No. 3 and No. 4 in the recording device.

For example, the recording and reproducing device 2101 establishes authentication with the key block 1 or 4 in the recording device A 2104 to store, in the external memory, contents encrypted via the storage key stored in that key block. The recording and reproducing device 2102 establishes authentication with the key block 2 or 4 in the recording device B 2105 to store, in the external memory, contents encrypted via the storage key stored in that key block. The recording and reproducing device 2103 establishes authentication with the key block 3 or 4 in the recording device C 2106 to store, in the external memory, contents encrypted via the storage key stored in that key block. Then, if the recording device A 2104 is installed in the recording and reproducing device 2102 or 2103, a content encrypted with the storage key in the key block 1 is unavailable because authentication is not established between the recording and reproducing device 2102 or 2103 and the key block 1. On the other hand, a content encrypted with the storage key in the key block 4 is available because authentication is established between the recording and reproducing device 2102 or 2103 and the key block 4.

As described above, in the data processing apparatus according to the present invention, the key blocks comprising the plurality of different key sets are configured in the recording device, while the recording and reproducing device stores the master key enabling authentication for a particular key block, thereby enabling the setting of restrictions on the use of contents depending on different use form.

Moreover, a plurality of key blocks, for example, 1 to k may be specified in one recording and reproducing device, while a plurality of key blocks p and q may be specified in the other recording and reproducing devices. Additionally, a plurality of sharable key blocks may be provided.

(7) Process for Downloading from Recording and Reproducing Device to Recording Device

Next, a process for downloading a content from the recording and reproducing device 300 to the external memory of the recording device 400 in the present data processing apparatus will be explained.

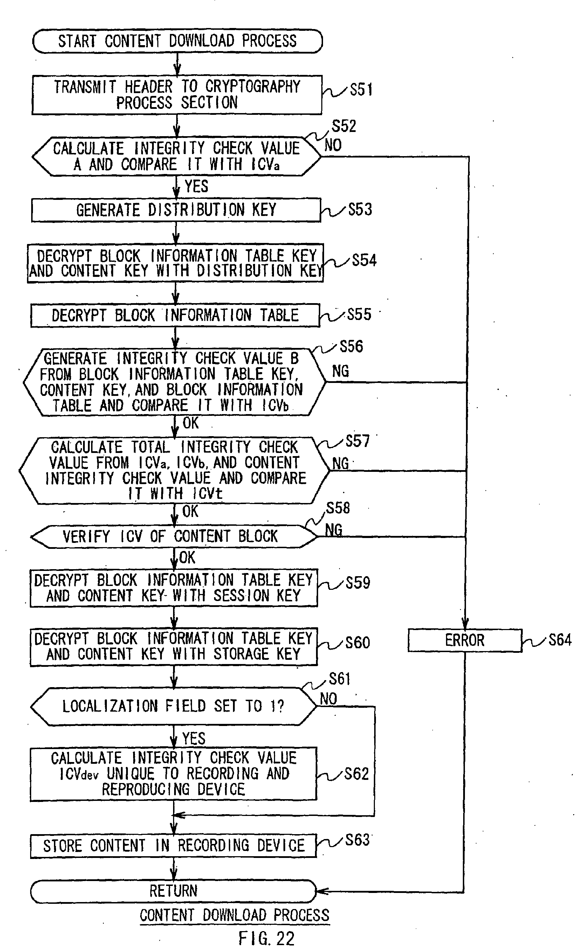

Fig. 22 is a flow chart useful in explaining a procedure for downloading a content from the recording and reproducing device 300 to the recording device 400. In this figure, the above described mutual authentication process is assumed to have been completed between the recording and reproducing device 300 and the recording device 400.

At step S51, the control section 301 of the recording and reproducing device 300 uses the read section 304 to read data of a predetermined format out from the medium 500 storing contents or uses the communication section 305 to receive data from the communication means 600 in accordance with a predetermined format. Then, the control section 301 of the recording and reproducing device 300 transmits the header section (see Fig. 4) of the data to the recording and reproducing device cryptography process section 302 of the recording and reproducing device 300.

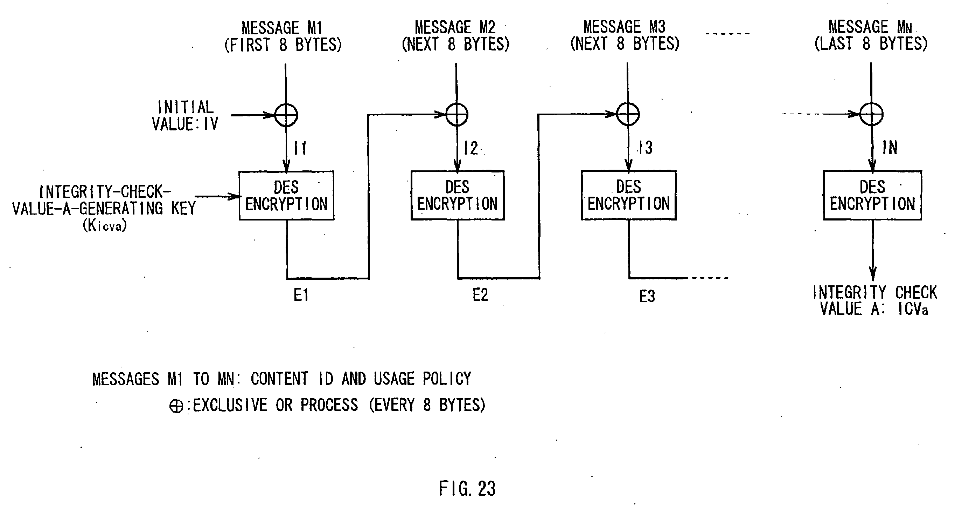

Next, at step S52, the control section 306 of the recording and reproducing device cryptography process section 302, which has received the header at step S51, causes the encryption/decryption section 308 of the recording and reproducing device cryptography process section 302 to calculate the integrity check value A. The integrity check value A is calculated in accordance with the ICV calculation method described in Fig. 7, using as a key the integrity-check-value-A-generating key Kicva stored in the internal memory 307 of the recording and reproducing device cryptography process section 302 and using the content ID and the usage policy as a message, as shown in Fig. 23. The initial value may be IV = 0 or may be the integrity-check-value-A-generating initial value IVa may be used which *is* stored in the internal memory 307 of the recording and reproducing device cryptography process section 302. Finally, the integrity check value A and the check value: ICVa stored in the header are compared together, and if they are equal, the process proceeds to step S53.

As previously described in Fig. 4, the check value A, ICVa is used to verify that the content ID and the usage policy have not been tampered. If the integrity check value A calculated in accordance with the ICV calculation method described in Fig. 7, using as a key the integrity-check-value-A-generating key Kicva stored in the internal memory 307 of the recording and reproducing device cryptography process section 302 and using the content ID and the usage policy as a message, equals the check value: ICVa stored in the header, it is determined that the content ID and the usage policy have not been tampered.

Next, at step S53, the control section 306 of the recording and reproducing device cryptography process section 302 causes the encryption/decryption section 308 of the recording and reproducing device cryptography process section 302 to generate the distribution key Kdis. The distribution key Kdis is generated, for example, as follows:

$$Kdis=DES(MKdis, ContentID^{\phi}IVdis) \qquad (4)$$

In this case, the MKdis denotes the master key for the distribution key for generating the distribution key Kdis, the master key being stored in the internal memory of the recording and reproducing device 300 as described above. In addition, the content ID is identification information for the header section of content data, and the IVdis denotes the initial value for the distribution key. Additionally, in the above equation, the DES() denotes a function that uses a first argument as cryptography key and that encrypts the value of a second argument. The operation $\phi$ denotes an exclusive OR executed every 64 bits.

At step S54, the control section 306 of the recording and reproducing device cryptography process section 302 uses the encryption/decryption section 308 of the recording and reproducing device cryptography process section 302 as well as the distribution key Kdis generated at step S53, to decrypt the block information table key Kbit and content key Knon (see Fig. 4) stored in the header section of the data obtained from the medium 500 via the read section 304 or received from the communication means 600 via the communication section 305. As shown in Fig. 4, the block information table key Kbit and the content key Knon are encrypted beforehand with the distribution key Kdis on the medium such as a DVD or CD or on a communication path such as the Internet.

Further, at step S55, the control section 306 of the recording and reproducing device cryptography process section 302 uses the encryption/decryption section 308 of the recording and reproducing device cryptography process section 302 to decrypt the block information table (BIT) with the block information table key Kbit decrypted at step S54. The block information table (BIT) as shown in Fig. 4 is encrypted beforehand with the block information table key Kbit on the medium such as the DVD or CD or the communication path such as the Internet.

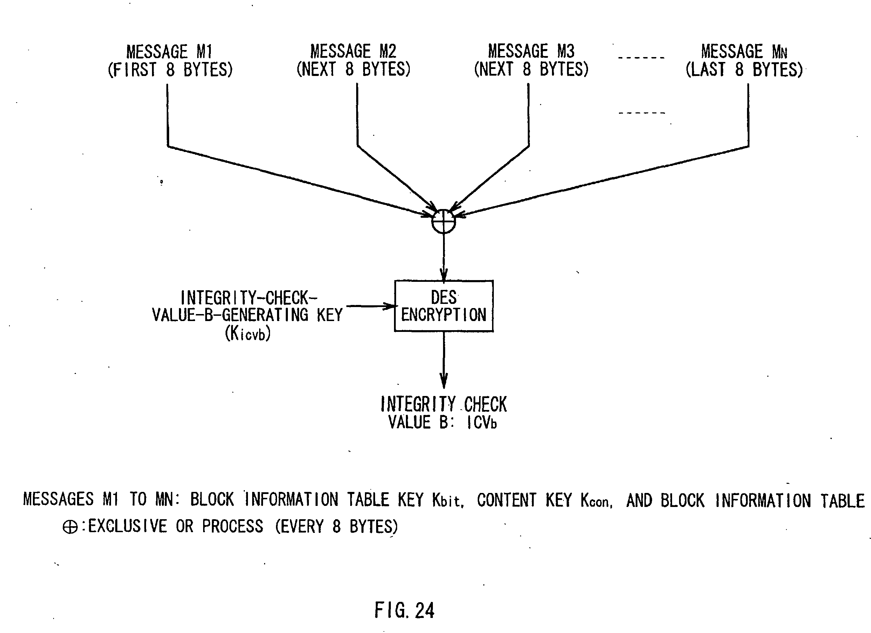

Further, at step S56, the control section 306 of the recording and reproducing device cryptography process section 302 divides the block information table key Kbit, the content key Kcon, and the block information table (BIT) into 8-byte pieces, which are all exclusive-ORed (any operation such as an addition or subtraction may be used). Next, the control section 306 of the recording and reproducing device cryptography process section 302 causes the encryption/decryption section 308 of the recording and reproducing device cryptography process section 302 to calculate the integrity check value B (ICVb). The integrity check value B is generated by using as a key the integrity-check-value-B-generating key Kicvb stored in the internal memory 307 of the recording and reproducing device cryptography process section 302, to decrypt the previously calculated exclusive-ORed value based on the DES, as shown in Fig. 24. Finally, the integrity check value B and the ICVb in the header are compared together, and if they are equal, the process proceeds to step S57.

As previously described in Fig. 4, the check value B, ICVb is used to verify that the block information table key Kbit, the content key Kcon, and the block information table (BIT) have not been tampered. If the integrity check value B generated by using as a key the integrity-check-value-B-generating key Kicvb stored in the internal memory 307 of the recording and reproducing device cryptography process section 302, dividing the block information table key Kbit, the content key Kcon, and the block information table (BIT) into 8-byte pieces, exclusive-Oring these data, and encrypting the exclusive-ORed data based on the DES, equals the check value: ICVb stored in the header, it is determined that the block information table key Kbit, the content key Kcon, and the block information table have not been tampered.

At step S57, the control section 306 of the recording and reproducing device cryptography process section 302 causes the encryption/decryption section 308 of the recording and reproducing device cryptography process section 302 to calculate an intermediate integrity check value. The intermediate value is calculated in accordance with the ICV calculation method described in Fig. 7, using as a key the total-integrity-check-value generating key Kicvt stored in the internal memory 307 of the recording and reproducing device cryptography process section 302 and using the integrity check values A and B and all the held content integrity check values as a message. The initial value may be IV=0 or the total-integrity-check-value-generating initial value IVt may be used which is stored in the internal memory 307 of the recording and reproducing device cryptography process section 302. Additionally, the intermediate integrity check value generated is stored in the recording and reproducing device cryptography process section 302 of the recording and reproducing device 300 as required.

This intermediate integrity check value is generated using the integrity check values A and B and all the content integrity check values as a message, and data verified by each of these integrity check values may be verified by collating them with the intermediate integrity check value. In this embodiment, however, a plurality of different integrity check values, that is, total integrity check values ICVt and the check value ICVdev unique to the recording and reproducing device 300 can be separately generated based on the intermediate integrity check value so that the process for verifying the absence of tamper which process is executed for shared data for the entire system and the verification process for identifying occupied data occupied only by each recording and reproducing device 300 after the download process can be distinguishably executed. These integrity check values will be described later.

The control section 306 of the recording and reproducing device cryptography process section 302 causes the . encryption/decryption section 308 of the recording and reproducing device cryptography process section 302 to calculate the total integrity check value ICVt. The total integrity check value ICVt is generated by using as a key a system signature key Ksys stored' in the internal memory 307 of the recording and reproducing device cryptography process section 302, to decrypt the intermediate integrity check value based on the DES. Finally, the total integrity check value ICVt generated and the ICVt in the header stored at step S51 are compared together, and if they are equal, the process proceeds to step S58. The system signature key Ksys is common to a plurality of recording and reproducing devices, that is, the entire system executing the process of recording and reproducing certain data.

As previously described in Fig. 4, the total integrity check value ICVt is used to verify that all of the integrity check values ICVa and ICVb and the integrity check value for each content block have not been tampered. Thus, if the total integrity check value generated by means of the above described process equals the integrity check value: ICVt, stored in the Header it is determined that all of the integrity check values ICVa and ICVb and the integrity check value for each content block have not been tampered.

Then at step S58, the control section 301 of the recording and reproducing device 300 takes content block information out from the block information table (BIT) and checks whether any content block is to be verified. If any content block is to be verified, the content integrity check value has been stored in the block information in the header.

If any content block is to be verified, the control section 301 reads this content block out from the medium 500 by using the read section 304 of the recording and reproducing device 300 or received from communicating means 600 by using the communication section 305 of the recording and reproducing device 300, and transmits the content block to the recording and reproducing device cryptography process section 302 of the recording and reproducing device 300. On receiving the content block, the control section 306 of the recording and reproducing device cryptography process section 302 causes the encryption/decryption section 308 of the recording and reproducing device cryptography process section 302 to calculate the content intermediate value.

The content intermediate value is generated by using the content key Kcon decrypted at step S54 to decrypt an input content block in the DES CBC mode, separating the resulting data into 8-byte pieces, and exclusive-ORing all these pieces (any operation such as an addition or subtraction may be used).

Then, the control section 306 of the recording and reproducing device cryptography process section 302 causes the encryption/decryption section 308 of the recording and reproducing device cryptography process section 302 to calculate the content integrity check value. The content integrity check value is generated by using as a key the content-integrity-check-value-generating key Kicvc stored in the internal memory 307 of the recording and reproducing device cryptography process section 302, to decrypt the content intermediate value based on the DES. Then, the control section 306 of the recording and reproducing device cryptography process section 302 compares this content integrity check value with the ICV in the content block received from the control section 301 of the recording and reproducing device 300 at step S51, and passes the result to the control section 301 of the recording and reproducing device 300. On receiving the result and if the verification has been successful, the control section 301 of the recording and reproducing device 300 takes out the next content block to be verified and causes the recording and reproducing device cryptography process section 302 of the recording and reproducing device 300 to verify this content block. Similar verification processes are repeated until all the content blocks are verified. The initial value may be IV=0 or the content-integrity-check-value-generating initial value IVc may be used which is stored in the internal memory 307 of the recording and reproducing device cryptography process section 302, if the header generating side uses the same settings. Additionally, all the checked content integrity check values are held in the recording and reproducing device cryptography process section 302 of the recording and reproducing device 300. Furthermore, the recording and reproducing device cryptography process section 302 of the recording and reproducing device 300 monitors the order in which the content blocks are verified to consider the authentication to have failed if the order is incorrect or if it is caused to verify the same content block twice or more. If all the content blocks have been successfully verified, the process proceeds to step S59.

Then at step S59, the recording and reproducing device cryptography process section 302 of the recording and reproducing device 300 causes the encryption/decryption section 308 of the recording and reproducing device cryptography process section 302 to encrypt the block information table key Kbit and content key Kcon decrypted at step S54, using the session key Kses made sharable during the mutual authentication. The control section 301 of the recording and reproducing device 300 reads the block information table key Kbit and content key Kcon from the recording and reproducing device cryptography process section 302 of the recording and reproducing device 300, the block information table key Kbit and content key Kcon being decrypted using the session key Kses. The control section 301 then transmits these data to the recording device 400 via the recording device controller 303 of the recording and reproducing device 300.

Then at step S60, on receiving the block information table key Kbit and content key Kcon transmitted from the recording and reproducing device 300, the recording device 400 causes the encryption/decryption section 406 of the recording device cryptography process section 401 to decrypt the received data using the session key Kses made sharable during the mutual authentication and to reencrypt the decrypted data with the storage key Kstr unique to the recording device which is stored in the internal memory 405 of the recording device cryptography process 401. Finally, the control section 301 of the recording and reproducing device 300 reads the block information key Kbit and the content key Kcon out from the recording device 400 via the recording device controller 303 of the recording and reproducing device 300, the block information key Kbit and the content key Kcon being reencrypted with the storage key Kstr. These are then substituted with the block information key Kbit and content key Kcon encrypted with the distribution key Kdis.

At step S61, the control section 301 of the recording and reproducing device 300 takes the localization field out from the usage policy in the header section of the data to determine whether the downloaded content can be used only in this recording and reproducing device 300 (in this case, the localization field is set to 1) or also by other similar recording and reproducing devices 300 (in this case, the localization field is set to 0). If the result of the determination shows that the localization field is set to 1, the process proceeds to step S62.

At step S62, the control section 301 of the recording and reproducing device 300 causes the recording and reproducing device cryptography process section 302 of the recording and reproducing device 300 to calculate the integrity check value unique to the recording and reproducing device. The integrity check value unique to the recording and reproducing device is generated by using as a key a recording and reproducing device signature key Kdev stored in the internal memory 307 of the recording and reproducing device cryptography process section 302, to decrypt the intermediate integrity check value based on the DES, the intermediate integrity check value being held at step S58. The calculated integrity check value ICVdev unique to the recording and reproducing device substitutes for the total integrity check value ICVt.

As previously described, the system signature key Ksys is used to add a common signature or ICV to the distribution system, and the recording and reproducing device signature key Kdev varies depending on the recording and reproducing device and is used by the recording and reproducing device to add a signature or ICV. That is, data signed with the system signature key Ksys are successfully checked by a system (recording and reproducing device) having the same system signature key, that is, such data have the same total integrity check value ICVt so as to be sharable. If, however, data are signed with the recording and reproducing device signature key Kdev, since this signature key is unique to the recording and reproducing device, the data signed with the recording and reproducing device signature key Kdev, that is, the data stored in a recording device after the signing cannot be reproduced if an attempt is made to reproduce them after this recording device has been inserted in another recording and reproducing device; that is, an error occurs due to the unequal integrity check values ICVdev unique to the recording and reproducing device.

Thus, in the data processing apparatus according to the present invention, the setting of the localization field enables contents to be arbitrarily set so as to be shared throughout the entire system or used only by particular recording and reproducing devices.

At step S63, the control section 301 of the recording and reproducing device 300 stores the content in the external memory 402 of the recording device 400.

Fig. 26 is a view showing how the content is stored in the recording device if the localization field is set to 0. Fig. 27 is a view showing how the content is stored in the recording device if the localization field is set to 1. Only the difference between Figs. 26 and 4 is whether the content block information key Kbit and the content key Kcon are encrypted with the distribution key Kdis or the storage key Kstr. The different between Figs. 27 and 26 is that the integrity check value calculated from the intermediate integrity check value is encrypted with the system signature key Ksys in Fig. 26, whereas it is encrypted with the recording and reproducing device signature key Kdev unique to the recording and reproducing device in Fig. 27.

In the process flow in Fig. 22, if the verification of the integrity check value A has failed at step S52, if the verification of the integrity check value B has failed at step S56, if the verification of the total integrity check value ICVt has failed at step S57, or if the verification of the content block content integrity check value has failed at step S58, then the process proceeds to step S64 to provide a predetermined error display.

In addition, if the localization field is 0 at step S61, the process skips step S62 to advance to step S63.

(8) Process Executed by Recording and Reproducing Device to Reproduce Information Stored in Recording Device

Next, a process executed by the recording and reproducing device 300 to reproduce content information stored in the external memory 402 of the recording device 400.

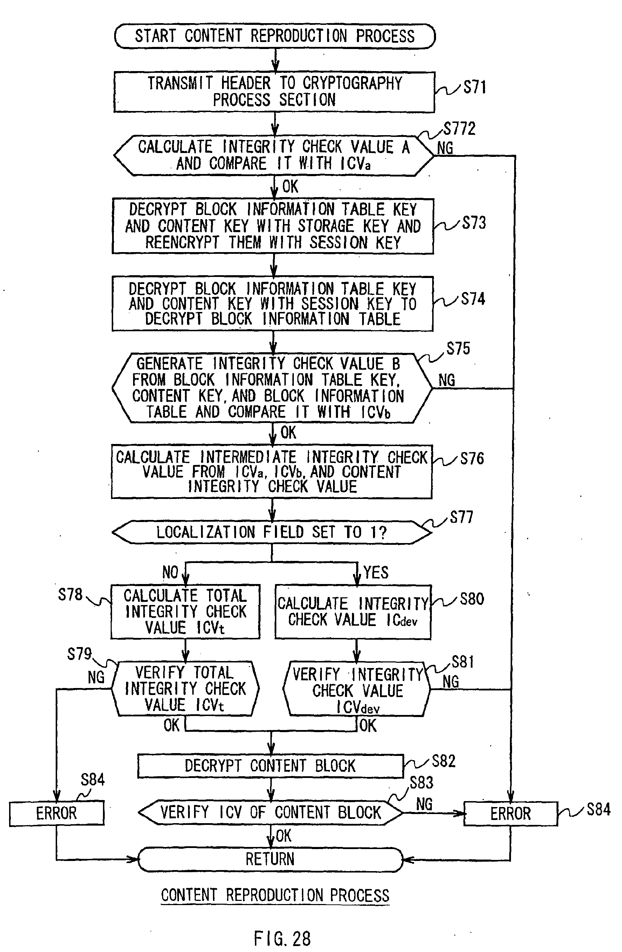

Fig. 28 is a flow chart useful in explaining a procedure executed by the recording and reproducing device 300 to read a content out from the recording device 400 and use it. In Fig. 28, the mutual authentication is assumed to have been completed between the recording and reproducing device 300 and the recording device 400.

At step S71, the control section 301 of the recording and reproducing device 300 uses the recording device controller 303 to read the content out from the external memory 402 of the recording device 400. The control section 301 of the recording and reproducing device 300 then transmits the header section of the data to the recording and reproducing device cryptography process section 302 of the recording and reproducing device 300. Step 372 is similar to step S52 described in "(7) Process for Downloading from Recording and Reproducing Device to Recording Device"; at this step, the control section 306 of the recording and reproducing device cryptography process section 302, which has received the header, causes the encryption/decryption section 308 of the recording and reproducing device cryptography process section 302 to calculate the integrity check value A. The integrity check value A is calculated in accordance with an ICV calculation method similar to that described in Fig. 7, using as a key the integrity-check-value-A-generating key Kicva stored in the internal memory 307 of the recording and reproducing device cryptography process section 302 and using the content ID and the usage policy as a message, as shown in the previously described Fig. 23.

As previously described, the check value A, ICVa is used to verify that the content ID and the usage policy have not been tampered. If the integrity check value A calculated in accordance with the ICV calculation method described in Fig. 7, using as a key the integrity-check-value-A-generating key Kicva stored in the internal memory 307 of the recording and reproducing device cryptography process section 302 and using the content ID and the usage policy as a message, equals the check value: ICVa stored in the header, it is determined that the content ID and usage policy stored in the recording device 400 have not been tampered.

Then at step S73, the control section 301 of the recording and reproducing device 300 takes the block information table key Kbit and the content key Kcon out from the read-out header section and then transmits them to the recording device 400 via the recording device controller 303 of the recording and reproducing device 300. On receiving the block information table key Kbit and the content key Kcon transmitted from the recording and reproducing device 300, the recording device 400 causes the encryption/decryption section 406 of the recording device cryptography process section 401 to decrypt the received data with the storage key Kstr unique to the recording device which is stored in the internal memory 405 of the recording device cryptography process 401 and to then reencrypt the decrypted data using the session key Kses made sharable during the mutual authentication. Then, the control section 301 of the recording and reproducing device 300 reads the block information key Kbit and the content key Kcon out from the recording device 400 via the recording device controller 303 of the recording and reproducing device 300, the block information key Kbit and the content key Kcon being reencrypted with the session key Kses from the recording device 400.

Then at step S74, the control section 301 of the recording and reproducing device 300 transmits the received block information key Kbit and content key Kcon to the recording and reproducing device cryptography process section 302 of the recording and reproducing device 300, the block information key Kbit and content key Kcon being reencrypted with the session key Kses.

On receiving the block information key Kbit and content key Kcon reencrypted with the session key Kses, the recording and reproducing device cryptography process section 302 of the recording and reproducing device 300 causes the encryption/decryption section 308 of the recording and reproducing device cryptography process section 302 to decrypt the block information key Kbit and content key Kcon encrypted with the session key Kses, using the session key Kses made sharable during the mutual authentication. The recording and reproducing device cryptography process section 302 then causes the encryption/decryption section 308 to decrypt the block information table received at step S71, using the decrypted block information table key Kbit.

The recording and reproducing device cryptography process section 302 of the recording and reproducing device 300 substitutes the decrypted block information table key Kbit, content key Kcon, and block information table BIT with those received at step S71 for retention. In addition, the control section 301 of the recording and reproducing device 300 reads the decrypted block information table BIT out from the recording and reproducing device cryptography process section 302 of the recording and reproducing device 300.

At step S75 is similar to step S56 described in "(7) Process for Downloading from Recording and Reproducing Device to Recording Device". The control section 306 of the recording and reproducing device cryptography process section 302 divides the block information table key Kbit, content key Kcon, and block information table (BIT) read out from the recording device 400, into 8-byte pieces and then exclusive-ORs all of them. The control section 306 of the recording and reproducing device cryptography process section 302 then causes the encryption/decryption section 308 of the recording and reproducing device cryptography process section 302 to calculate the integrity check value B(ICVb). The integrity check value B is generated by using as a key the integrity-check-value-B-generating key Kicvb stored in the internal memory 307 of the recording and reproducing device cryptography process section 302, to encrypt the previously calculated exclusive-ORed value based on the DES, as shown in the previously described Fig. 24. Finally, the check value B and the ICVb in the header are compared together, and if they are equal, the process proceeds to step S76.

As previously described, the check value B, ICVb is used to verify that the block information table key Kbit, the content key Kcon, and the block information table have not been tampered. If the integrity check value B generated by using as a key the integrity-check-value-B-generating key Kicvb stored in the internal memory 307 of the recording and reproducing device cryptography process section 302, dividing the block information table key Kbit, the content key Kcon, and the block information table (BIT) read from the recording device 400 into 8-byte pieces, exclusive-Oring these data, and encrypting the exclusive-ORed data based on the DES, equals the check value: ICVb stored in the header of the data read out from the recording device 400, it is determined that the block information table key Kbit, the content key Kcon, and the block information table have not been tampered.

At step S76, the control section 306 of the recording and reproducing device cryptography process section 302 causes the encryption/decryption section 308 of the recording and reproducing device cryptography process section 302 to calculate the intermediate integrity check value. The intermediate value is calculated in accordance with the ICV calculation method described in Fig. 7 or the like, using as a key the total-integrity-check-value-generating key Kicvt stored in the internal memory 307 of the recording and reproducing device cryptography process section 302 and using the integrity check values A and B and all the held content integrity check values as a message. The initial value may be IV=0 or the total-integrity-check-value-generating initial value IVt may be used which is stored in the internal memory 307 of the recording and reproducing device cryptography process section 302. Additionally, the intermediate integrity check value generated is stored in the recording and reproducing device cryptography process section 302 of the recording and reproducing device 300 as required.

Then at step S77, the control section 301 of the recording and reproducing device 300 takes the localization field out from the usage policy contained in the header section of the data read out from the external memory 402 of the recording device 400, to determine whether the downloaded content can be used only in this recording and reproducing device 300 (in this case, the localization field is set to 1) or also by other similar recording and reproducing devices 300 (in this case, the localization field is set to 0). If the result of the determination shows that the localization field is set to 1, that is, it is set such that the downloaded content can be used only in this recording and reproducing device 300, the process proceeds to step S80. If the localization is set to 0, that is, it is set such that the content can also be used by other similar recording and reproducing device 300, then the process proceeds to step S78. Step S77 may be processed by the cryptography process section 302.

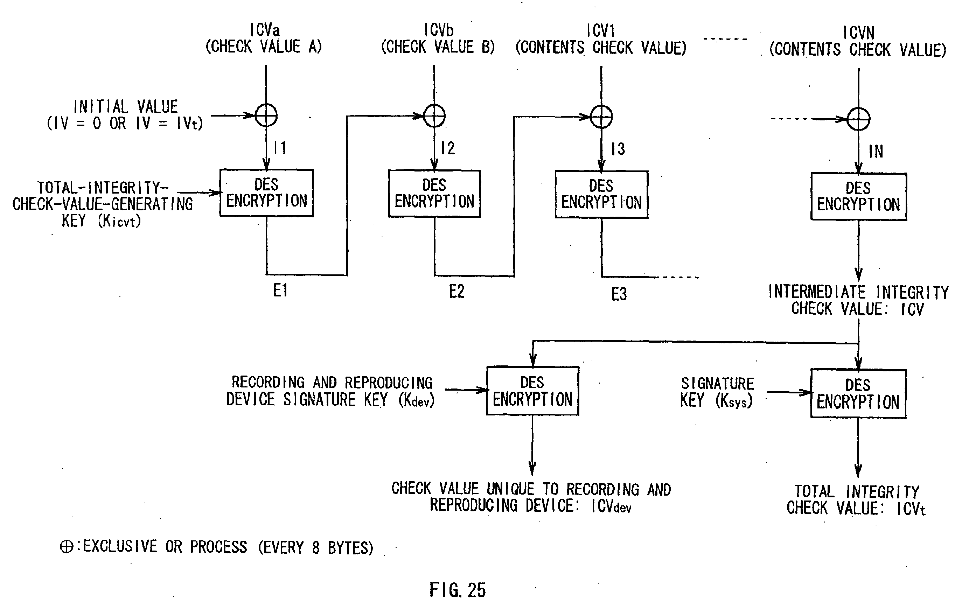

At step S78, the total integrity check value ICVt is calculated in the same manner as step S58 described in "(7) Process for Downloading from Recording and Reproducing Device to Recording Device". That is, the control section 306 of the recording and reproducing device cryptography process section 302 causes the encryption/decryption section 308 of the recording and reproducing device cryptography process section 302 to calculate the total integrity check value ICVt. The total integrity check value ICVt iS generated by using as a key a system signature key Ksys stored in the internal memory 307 of the recording and reproducing device cryptography process section 302, to encrypt the intermediate integrity check value based on the DES, as shown in the previously described Fig. 25.

The, the process proceeds to step S79 to compare the total integrity check value ICVt generated at step S78 with the ICVt in the header stored at step S71. If the values are equal, the process proceeds to step S82.

As previously described, the total integrity check value ICVt is used to verify that the integrity check values ICVa and ICVb and all the content block integrity check values have not been tampered. Thus, if the total integrity check value generated by means of the above described process equals the integrity check value: ICVt stored in the header, it is determined that the integrity check values ICVa and ICVb and all the content block integrity check values have not been tampered in the data stored in the recording device 400.

If the result of the determination at step S77 shows that the localization field is set such that the downloaded content can be used only in this recording and reproducing device 300, that is, it is set to 1, the process proceeds to step S80.

At step S80, the control section 306 of the recording and reproducing device cryptography process section 302 causes the encryption/decryption section 308 of the recording and reproducing device cryptography process section 302 to calculate the integrity check value ICVdev unique to the recording and reproducing device. The integrity check value ICVdev unique to the recording and reproducing device is generated, as shown in the previously described Fig. 25, by using as a key a recording and reproducing device signature key Kdev unique to the recording and reproducing device stored in the internal memory 307 of the recording and reproducing device cryptography process section 302, to encrypt the intermediate integrity check value based on the DES, the intermediate integrity check value being held at step S58. At step S81, the check value ICVdev unique to the recording and reproducing device calculated at step S80 is compared with the ICVdev stored at step S71, and if they are equal, the process proceeds to step S82.

Thus, data signed with the same system signature key Ksys are successfully checked by a system (recording and reproducing device) having the same system signature key, that is, such data have the same total integrity check value ICVt so as to be sharable. If, however, data are signed with the recording and reproducing device signature key Kdev, since this signature key is unique to the recording and reproducing device, the data signed with the recording and reproducing device signature key Kdev, that is, the data stored in a recording device after the signing cannot be reproduced if an attempt is made to reproduce them after this recording device has been inserted in another recording and reproducing device; that is, an error occurs due to a mismatch in the integrity check value ICVdev unique to the recording and reproducing device. Accordingly, the setting of the localization field enables contents to be arbitrarily set so as to be shared throughout the entire system or used only by particular recording and reproducing devices.

At step S82, the control section 301 of the recording and reproducing device 300 takes content block information out from the block information table (BIT) read out at step S74 and checks whether any content block is to be encrypted. If any content block is to be encrypted, the control section 301 reads this content block out from the external memory 402 of the recording device 400 via the recording device controller 303 of the recording and reproducing device 300 and then transmits the content block to the recording and reproducing device cryptography process section 302 of the recording and reproducing device 300. On receiving the content block, the control section 306 of the recording and reproducing device cryptography process section 302 causes the encryption/decryption section 308 of the recording and reproducing device cryptography process section 302 to decrypt the content, while causing the encryption/decryption section 308 to calculate the content integrity check value at step S83 if the content block is to be verified.

Step S83 is similar to step S58 described in "(7) Process for Downloading from Recording and Reproducing Device to Recording Device". The control section 301 of the recording and reproducing device 300 takes content block information out from the block information table (BIT) and determines from the stored content integrity check value whether any content block is to be verified. If any content block is to be verified, the control section 301 receives this content block from the external memory 402 of the recording device 400 and transmits it to the recording and reproducing device cryptography process section 302 of the recording and reproducing device 300. On receiving the content block, the control section 306 of the recording and reproducing device cryptography process section 302 causes the encryption/decryption section 308 of the recording and reproducing device cryptography process section 302 to calculate the content intermediate value.

The content intermediate value is generated by using the content key Kcon decrypted at step S74 to decrypt the input content block in the DES CBC mode, separating the resulting data into 8-byte pieces, and exclusive-ORing all these pieces.

Then, the control section 306 of the recording and reproducing device cryptography process section 302 causes the encryption/decryption section 308 of the recording and reproducing device cryptography process section 302 to calculate the content integrity check value. The content integrity check value is generated by using as a key the content-integrity-check-value-generating key Kicvc stored in the internal memory 307 of the recording and reproducing device cryptography process section 302, to encrypt the content intermediate value based on the DES. Then, the control section 306 of the recording and reproducing device cryptography process section 302 compares this content integrity check value with the ICV in the content block received from the control section 301 of the recording and reproducing device 300 at step S71, and passes the result to the control section 301 of the recording and reproducing device 300. On receiving the result and if the verification has been successful, the control section 301 of the recording and reproducing device 300 takes out the next content block to be verified and causes the recording and reproducing device cryptography process section 302 of the recording and reproducing device 300 to verify this content block. Similar verification processes are repeated until all the content blocks are verified. The initial value may be IV=0 or the content-integrity-check-value-generating initial value IVc may be used which is stored in the internal memory 307 of the recording and reproducing device cryptography process section 302. Additionally, all the checked content integrity check values are held in the recording and reproducing device cryptography process section 302 of the recording and reproducing device 300. Furthermore, the recording and reproducing device cryptography process section 302 of the recording and reproducing device 300 monitors the order in which the content blocks are verified to consider the authentication to have failed if the order is incorrect or if it is caused to verify the same content block twice or more.

The control section 301 of the recording and reproducing device 300 receives the result of the comparison of the content integrity check value (if no content block is to be verified, all the results of comparisons will be successful), and if the verification has been successful, it takes the decrypted content from the recording and reproducing device cryptography process section 302 of the recording and reproducing device 300. It then takes out next content block to be verified and causes the recording and reproducing device cryptography process section 302 of the recording and reproducing device 300 to decrypt this content block. Similar verification processes are repeated until all the content blocks are decrypted.

At step S83, if the recording and reproducing device cryptography process section 302 of the recording and reproducing device 300 determines after the verification process that the content integrity check values are not equal, it considers the verification to have failed and avoids decrypting the remaining contents. In addition, the recording and reproducing device cryptography process section 302 of the recording and reproducing device 300 monitors the order in which the content blocks are decrypted to consider the decryption to have failed if the order is incorrect or if it is caused to decrypt the same content block twice or more.

If the verification of the integrity check value A has failed at step S72, if the verification of the integrity check value B has failed at step S75, if the verification of the total integrity check value ICVt has failed at step S79, if the verification of the integrity check value ICVdev unique to the recording and reproducing device has failed at step S81, or if the verification of the content block content integrity check value has failed at step S81, then the process proceeds to step S84 to provide a predetermined error display.

As described above, not only important data or content can be encrypted, concealed, or checked for tamper when the content is downloaded or used, but even if data on a recording medium are simply copied to another recording medium, the content can be prevented from being correctly decrypted because the block information table key Kbit for decrypting the block information table BIT and the content key Kcon for decrypting the content are stored with the storage key Kstr unique to the recording medium. More specifically, for example, at step S74 in Fig. 28, the another recording device cannot decrypt the data correctly because each recording device decrypts data encrypted with a different storage key Kstr.

(9) Key Exchanging Process after Mutual Authentication

The data processing apparatus according to the present invention is partly characterized in that the recording device 400 can be used only after the above described mutual authentication process between the recording and reproducing device 300 and the recording device 400 and in that the use form of the recording device is limited.

For example, to prevent a user from generating a recording device such as a memory card in which a content is stored by means of illegal copying or the like and setting this recording device in a recording and reproducing device for use, the mutual authentication process is executed between the recording and reproducing device 300 and the recording device 400 and (encrypted) contents can be transferred between the recording and reproducing device 300 and the recording device 400 only if they have been mutually authenticated.

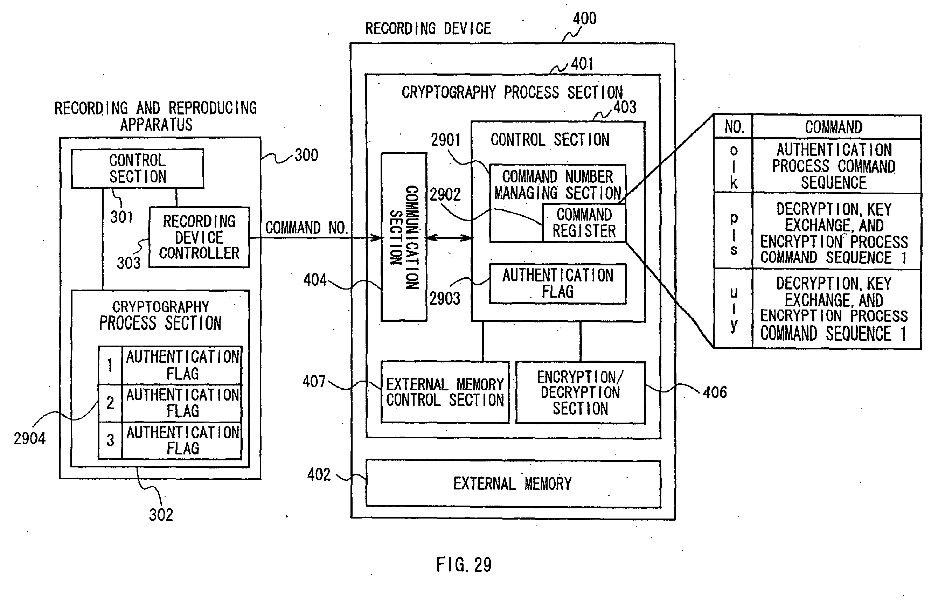

To achieve the above restrictive process, according to the present data processing apparatus, all the processes in the cryptography process section 401 of the recording device 400 are executed based on preset command strings. That is, the recording device has such a command process configuration that it sequentially obtains commands from a register based on command numbers. Fig. 29 is a view useful in explaining the command process configuration of the recording device.

As shown in Fig. 29, between the recording and reproducing device 300 having he recording and reproducing device cryptography process section 302 and the recording device 400 having the recording device cryptography process section 401, command numbers (No.) are output from the recording device controller 303 to the communication section (including a reception register) 404 of the recording device 400 under the control of the control section 301 of the recording and reproducing device 300.

The recording device 400 has a command number managing section 2201 (2901?) in the control section 403 in the cryptography process section 401. The command number managing section 2901 holds a command register 2902 to store command strings corresponding to command numbers output from the recording and reproducing device 300. In the command strings, command numbers 0 to y are sequentially associated with execution commands, as shown in the right of Fig. 29. The command number managing section 2901 monitors command numbers output from the recording and reproducing device 300 to take corresponding commands out from a command register 2902 for execution.

In command sequences stored in the command register 2902, a command string for an authentication process sequence is associated with the leading command numbers 0 to k, as shown in the right of Fig. 29. Furthermore, command numbers p to s following the command string for the authentication process sequence are associated with a decryption, key exchange, and encryption process command sequence 1, and the following command numbers u to y are associated with a decryption, key exchange, and encryption process command sequence 2.

As previously described for the authentication process flow in Fig. 20, when the recording device 400 is installed in the recording and reproducing device 300, the control section 301 of the recording and reproducing device 300 transmits an initialization command to the recording device 400 via the recording device controller 303. On receiving the command, the recording device 400 causes the control section 403 of the recording device cryptography process section 401 to receive the command via the communication section 404 and clear an authentication flag 2903. That is, unauthenticated state is set. Alternatively, in such a case that power is supplied from the recording and reproducing device 300 to the recording device 400, the unauthenticated state (?) may be set on power-on.

Then, the control section 301 of the recording and reproducing device 300 transmits an initialization command to the recording and reproducing device cryptography process section 302. At this point, it also transmits a recording device insertion port number. When the recording device insertion port number is transmitted, even if a plurality of recording devices 400 are connected to the recording and reproducing device 300, the recording and reproducing device 300 can simultaneously execute authentication with these recording devices 400 and transmit and receive data thereto and therefrom.

On receiving the initialization command, the recording and reproducing device cryptography process section 302 of the recording and reproducing device 300 causes the control section thereof to clear the authentication flag 2904 corresponding to the recording device insertion port number. That is, the unauthenticated state is set.

Once this initialization process has been completed, the control section 301 of the recording and reproducing device 300 sequentially outputs command numbers via the recording device controller 303 in an ascending order starting with the command number 0. The command number managing section 2901 of the recording device 400 monitors the command numbers input from the recording and reproducing device 300 to ascertain that they are sequentially input starting with the command number 0, and obtains the corresponding commands from the command register 2902 to execute various processes such as the authentication process. If the input command numbers are not in a specified order, an error occurs and a command number acceptance value is reset to an initial state, that is, an executable command number is reset at 0.

In the command sequences stored in the command register 2902 as shown in Fig. 29, the command numbers are imparted so as to carry out the authentication process first, and following this process sequence, decryption the key exchange, and encryption process sequence is stored.

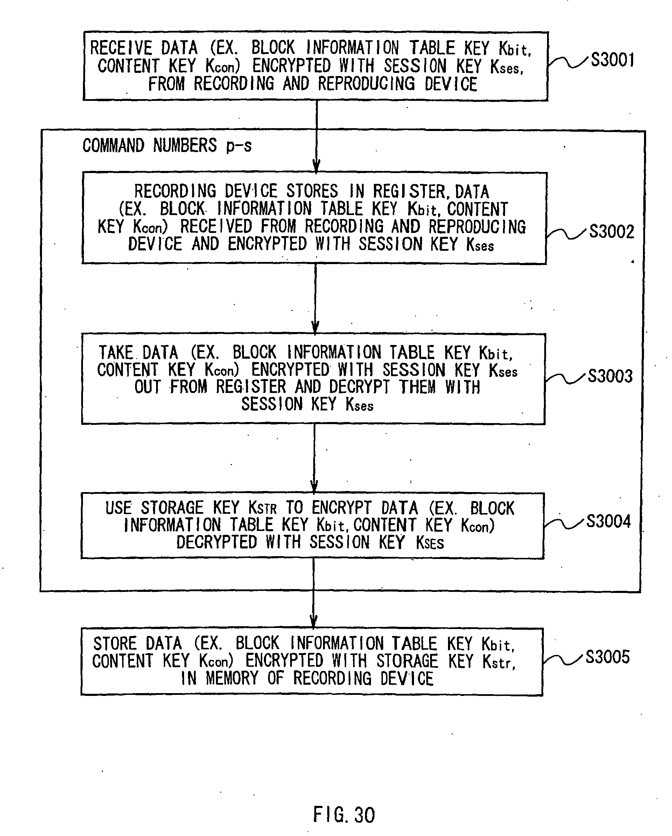

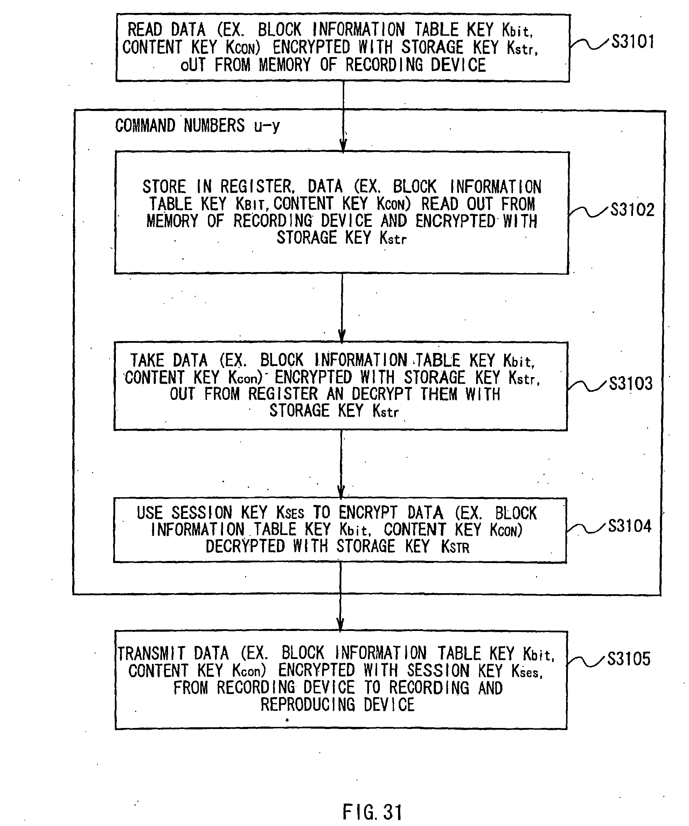

A specific example of the decryption the key exchange, and the encryption process sequence will be explained with reference to Figs. 30 and 31.

Fig. 30 shows part of the process executed in downloading a content from the recording and reproducing device 300 to the recording device 400 as previously described in Fig. 22. Specifically, this process is executed between steps 59 and 60 in Fig. 22.

In Fig. 30, at step S3001, the recording device receives data (ex. the block information table Kbit and the content key Kcon) encrypted with the session key Kses, from the recording and reproducing device. Thereafter, the command strings p to s shown in the above described Fig. 29 are started. The command strings p to s are started after the authentication process commands 0 to k have been completed to cause authentication flags 2903 and 2904 shown in Fig. 29 to be set to indicate the completion. This is ensured by the command number managing section 2901 by accepting the command numbers only in the ascending order starting with 0.

At step S3002, the recording device stores in the register the data (ex. the block information table Kbit and the content key Kcon) received from the recording and reproducing device and encrypted with the session key Kses.

At step S3003, a process is executed which takes the data (ex. the block information table Kbit and the content key Kcon) encrypted with the session key Kses, out from the register and decrypts them with the session key Kses.

At step S3004, a process is executed which encrypts the data (ex. the block information table Kbit and the content key Kcon) decrypted with the session key Kses, using the storage key Kstr.

The above process steps 3002 to 3004 correspond to processes included in the command numbers p to s in the command register previously described in Fig. 29. These processes are sequentially executed by the recording device cryptography process section 401 in accordance with the command numbers p to s received by the command number managing section 2901 of the recording device 400 from the recording and reproducing device 300.

At the next step S3005, the data (ex. the block information table Kbit and the content key Kcon) encrypted with the storage key Kstr are stored in the external memory of the recording device. At this step, the recording and reproducing device 300 may read the data encrypted with the storage key Kstr, out from the recording device cryptography process section 401 and then store them in the external memory 402 of the recording device 400.

The above described steps S3002 to S3004 constitute an uninterruptible continuously-executed execution sequence; even if, for example, the recording and reproducing device 300 issues a data read command at the end of the decryption process at step S3003, since this read command differs from the command numbers p to s set in the command register 2902 in the ascending order, the command number managing section 2901 does not accept execution of the read. Accordingly, the decrypted data resulting from the key exchange in the recording device 400 cannot be read out by an external device, for example, the recording and reproducing device 300, thereby preventing key data or contents from being illegally read out.

Fig. 31 shows part of the content reproducing process previously described in Fig. 28 in which a content is read out from the recording device 400 and reproduced by the recording and reproducing device 300. Specifically, this process is executed at step S73 in Fig. 28.

In Fig. 31, at step S3101, the data (ex. the block information table Kbit and the content key Kcon) encrypted with the storage key Kstr are read out from the external memory 402 of the recording device 400.

At step S3102, the data (ex. the block information table Kbit and the content key Kcon) read out from the memory of the recording device and encrypted with the storage key Kstr are stored in the register. At this step, the recording and reproducing device 300 may read the data encrypted with the storage key Kstr, out from the external memory 402 of the recording device 400 and then store them in the register of the recording device 400.

At step S3103, the data (ex. the block information table Kbit and the content key Kcon) encrypted with the storage key Kstr are taken out from the register and decrypted with the storage key Kstr.

At step S3104, the data (ex. the block information table Kbit and the content key Kcon) decrypted with the storage key Kstr are encrypted with the session key Kses.

The above process steps 3102 to 3104 correspond to processes included in the command numbers u to y in the command register previously described in Fig. 29. These processes are sequentially executed by the recording device cryptography process section 406 in accordance with the command numbers u to y received by the command number managing section 2901 of the recording device from the recording and reproducing device 300.

At the next step S3105, the data (ex. the block information table Kbit and the content key Kcon) encrypted with the session key Kses are transmitted from the recording device to the recording and reproducing device.

The above described steps S3102 to S3104 constitute an uninterruptible continuously-executed execution sequence; even if, for example, the recording and reproducing device 300 issues a data read command at the end of the decryption process at step S3103, since this read command differs from the command numbers u to y set in the command register 2902 in the ascending order, the command number managing section 2901 does not accept execution of the read. Accordingly, the decrypted data resulting from the key exchange in the recording device 400 cannot be read out by an external device, for example, the recording and reproducing device 300, thereby preventing key data or contents from being illegally read out.

For the process shown in Figs. 30 and 31, the example is shown where the block information table key Kbit and the content key Kcon are decrypted and encrypted by means of key exchange, but these command sequences stored in the command register 2902 shown in Fig. 29 may include decryption and encryption processes involving key exchanges for the content itself. The object to'be decrypted or encrypted by means of key exchanges is not limited to the above described example.

The key exchange process after the mutual authentication in the present data processing apparatus has been described. Thus, the key exchange process in the present data processing apparatus can be carried out only after the authentication process between the recording and reproducing device and the recording device has been completed. Further, decrypted data can be prevented from being externally accessed during the key exchange process, thereby ensuring the improved security of contents and key data.

(10) Plural Content Data Formats and Download and Reproduction Processes Corresponding to Each Format

In the above described embodiment, for example, the data format for the medium 500 or communication means 600 shown in Fig. 3 is of the type shown in Fig. 4. The data format for the medium 500 or the communication means 600 is not limited to the one shown in Fig. 4 but preferably depends on the content, that is, whether the content is music, image data, a program such as a game, or the like. A plurality of data formats as well as processes for downloading and reproducing data from and to the recording device 400 will be explained.

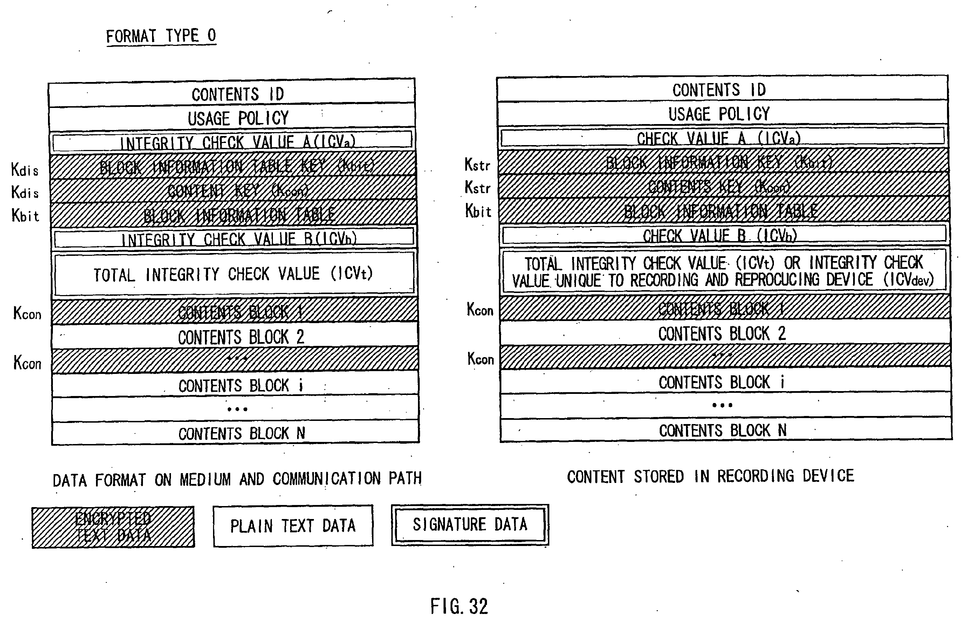

Figs. 32 to 35 show four different data formats. A data format used on the medium 500 or the communication means 600 shown in Fig. 3 is shown in the left of each figure, while a data format used in storing data in the external memory 402 of the recording device 400 is shown in the right of each figure. An outline of the data formats shown in Figs. 32 to 35 will first be provided, and the contents of each data in each format and differences among data in each format will be explained.

Fig. 32 shows a format type 0, which is of the same type as that shown as an example in the above description. The format type 0 is characterized in that the entire data are divided into N data blocks each having an arbitrary size, that is, blocks 1 to N, each of which is arbitrarily encrypted so that data can be configured by mixing together encrypted blocks and non-encrypted blocks, that is, plain text blocks. The blocks are encrypted with the content key Kcon, which is encrypted with the distribution key Kdis on the medium or with the storage key Kstr stored in the internal memory of the recording device when it is stored in the recording device. The block information key Kbit is also encrypted with the distribution key Kdis on the medium or with the storage key Kstr stored in the internal memory of the recording device when it is stored in the recording device. These key exchanges are carried out in accordance with the process described in "(9) Key Exchange Process after Mutual Authentication".

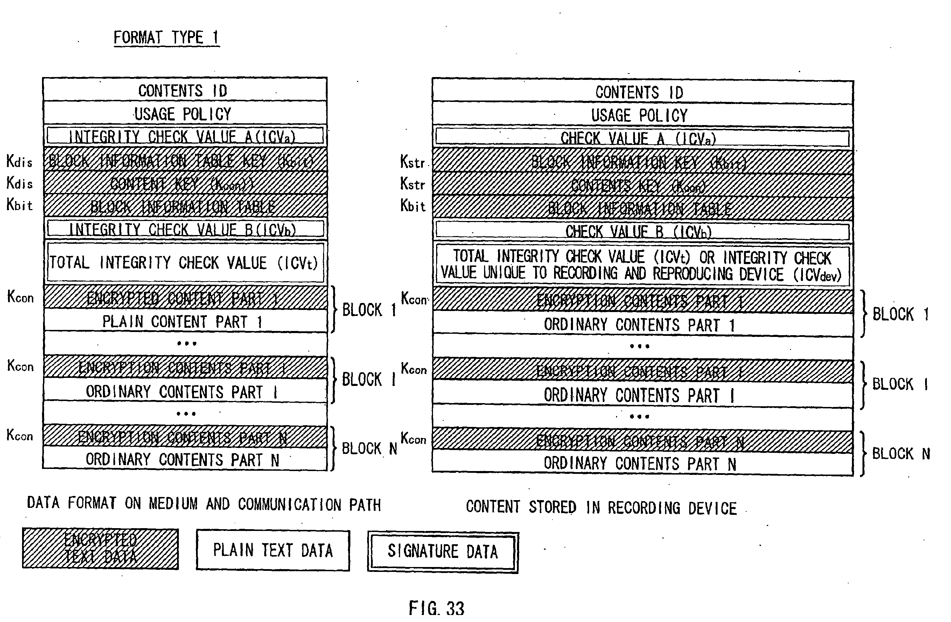

Fig. 33 shows a format type 1, in which the entire data are divided into N data blocks, that is, blocks 1 to N, as in the format type 0 but which differs from the format type 0 in that the N blocks are all of the same size. The aspect of the process for encrypting blocks with the content key Kcon is similar to that in the format type 0. Additionally, as in the above described format type 0, the content key Kcon and the block information table key Kbit are encrypted with the distribution key Kdis on the medium or with the storage key Kstr stored in the internal memory of the recording device when it is stored in the recording device. Unlike the format type 0, the format type 1 has a fixed block configuration to simplify configuration data such as data length for each block, thereby enabling a memory size for block information to be reduced compared to the format type 0.

In the example of configuration in Fig. 33, each block comprises a set of an encrypted part and a non-encrypted (plain text) part. If the length and configuration of the block are thus regular, each block length or configuration need not be checked during the decryption process or the like, thereby enabling efficient decryption and encryption processes. In the format 1, the parts constituting each block, that is, the encrypted part and the non-encrypted (plain text) part can each be defined as an object to be checked, so that the content integrity check value ICVi is defined for a block containing a part that must be checked.

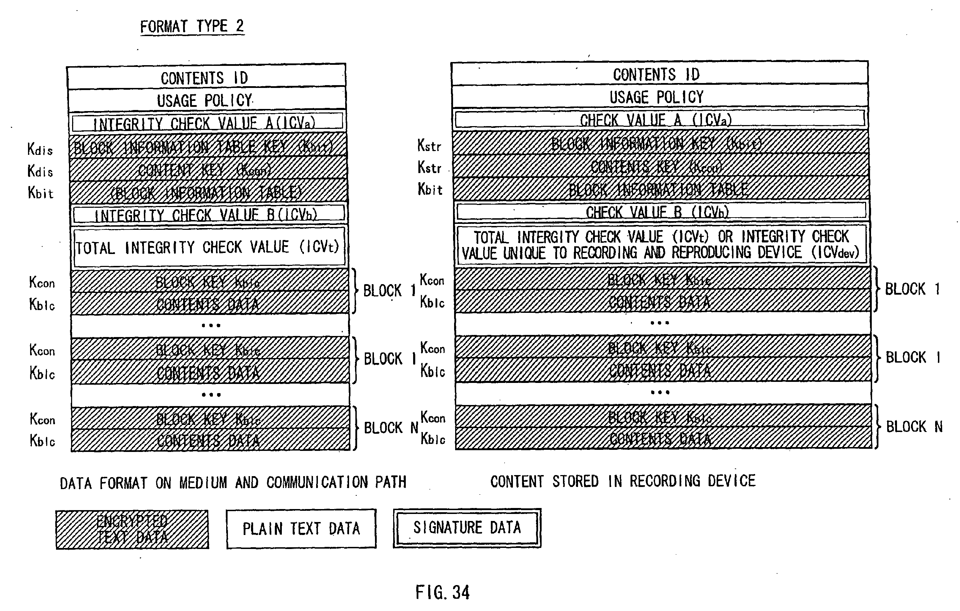

Fig. 34 shows a format type 2, which is characterized in that the data are divided into N data blocks all having the same size, that is, blocks 1 to N, each of which is encrypted with an individual block key Kblc. Each block key Kblc is encrypted with the content key Kcon, which is encrypted with the distribution key Kdis on the medium or with the storage key Kstr stored in the internal memory of the recording device when it is stored in the recording device. The block information table key Kbit is also encrypted with the distribution key Kdis on the medium or with the storage key Kstr stored in the internal memory of the recording device when it is stored in the recording device.

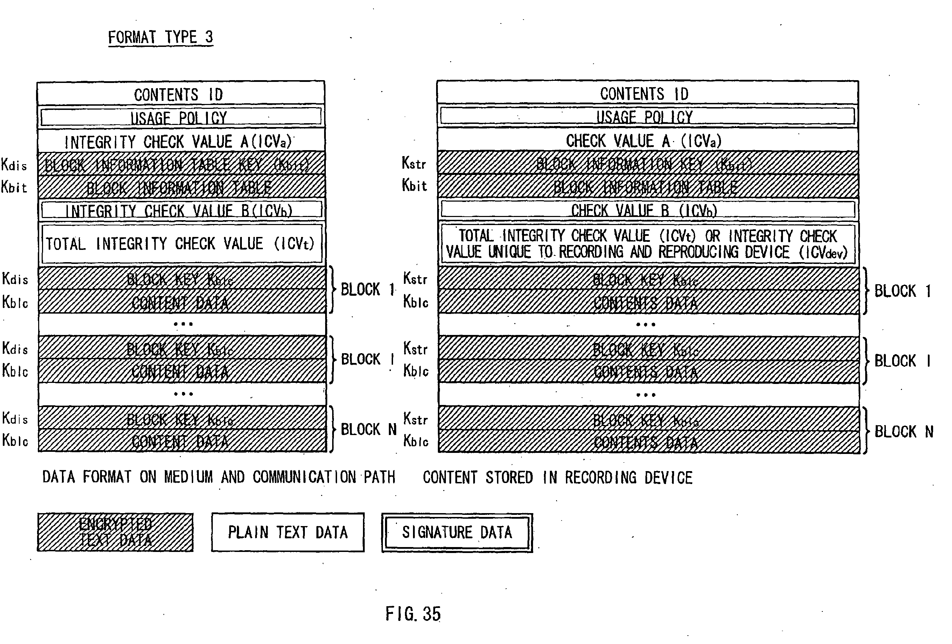

Fig. 35 shows a format type 3, which is characterized in that the data are divided into N data blocks all having the same size, that is, blocks 1 to N, each of which is encrypted with an individual block key Kblc, as in the format type 2, and in that each block key Kblc is encrypted with the distribution key Kdis on the medium or with the storage key Kstr on the recording device, without the use of the content key. No content key Kcon is present on the medium or on the device. The block information table key Kbit is encrypted with the distribution key Kdis on the medium or with the storage key Kstr stored in the internal memory of the recording device when it is stored in the recording device.

Next, the contents of the data in the above format types 0 to 3 will be described. As previously described, the data are roughly divided into two, that is, the header section and the content section. The header section contains the content ID, the usage policy, the integrity check values A and B, the total integrity check value, the block information table key, the content key, and the block information table.

The usage policy stores the data length of a content, its header length, its format type (formats 0 to 3 described below), a content type indicating whether the content is a program or data, a localization flag that determines whether the content can be used only by a particular recording and reproducing device as described in the section relating to the processes for downloading and reproducing a content to and from the recording device, a permission flag for a content copying or moving process, and various localization and process information for the content such as a content encryption algorithm and a mode.

The integrity check value A: ICVa is used to check the content ID and the usage policy and generated using, for example, the method described in the above described Fig. 23.

The block information table key Kbit is used to encrypt block information table and is encrypted with the distribution key Kdis on the medium or with the storage key Kstr stored in the internal memory of the recording device when it is stored in the recording device, as previously described.

The content key Kcon is used to encrypt a content. For the format types 0 and 1, it is encrypted with the distribution key Kdis on the medium or with the storage key Kstr stored in the internal memory of the recording device when it is stored in the recording device, similarly to the block information table key Kbit. For the format type 2, the content key Kcon is also used to encrypt the block key Kblc configured for each content block.

Additionally, for the format type 3, no content key Kcon is present.

The block information table describes information on the individual blocks and stores the size of each block and a flag indicating whether the block has been encrypted, that is, information indicating whether or not the block is to be checked (ICV). If the block is to be checked, the block integrity check value ICVi (the integrity check value for the block i) is defined and stored in the table. This block information table is encrypted with the block information table key Kbit.

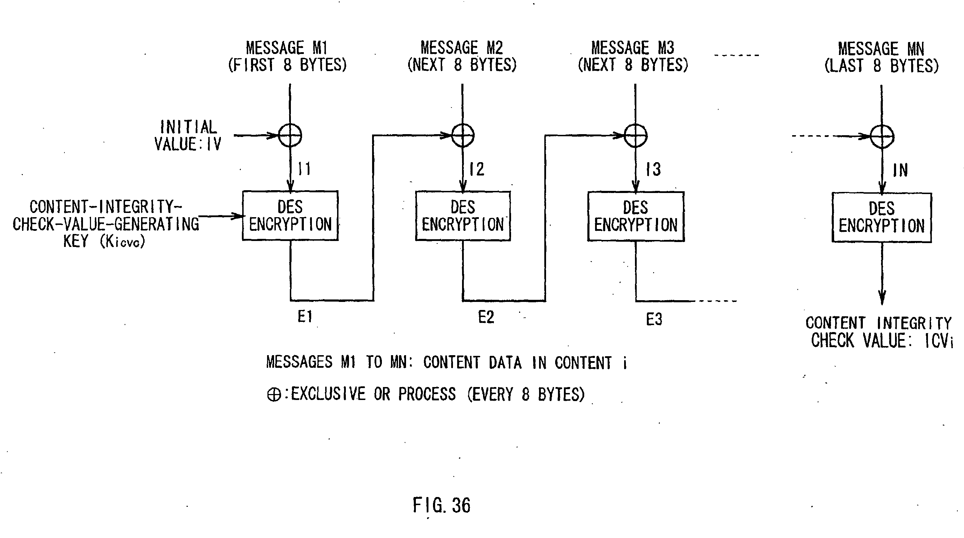

If the block has been encrypted, the block integrity check value, that is, the content integrity check value ICVi is generated by exclusive-ORing the entire plain text (decrypted text) every 8 bytes and then encrypting the obtained value with the content-integrity-check-value-generating key Kicvc stored in the internal memory 307 of the recording and reproducing device 300. Additionally, if the block has not been encrypted, the block integrity check value is generated by sequentially inputting the entire block data (plain text) to a tamper-check-value-generating function shown in Fig. 36 (DES-CBC-MAC using the content-integrity-check-value-generating key Kicvc) 'in such a manner that 8 bytes are input each time. Fig. 36 shows an example of a configuration for generating the content block integrity check value ICVi. Each message M constitutes each set of 8 bytes of decrypted text data or plain text data.

For the format type 1, if at least one of the parts in the block is data to be processed with the integrity check value ICVi, that is, a part to be checked, the content integrity check value ICVi is defined for that block. An integrity check value P-ICVij for a part j of a block i is generated by exclusive ORing the entire plain text (decrypted text) every 8 bytes and then encrypting the obtained data with the content-integrity-check-value-generating value Kicvc. In addition, if a part j has not bee encrypted, the integrity check value P-ICVij is generated by sequentially inputting the entire block data (plain text) to the tamper-check-value-generating, function shown in Fig. 36 (DES-CBC-MAC using the content-integrity-check-value-generating key Kicvc) in such a manner that 8 bytes are input each time.

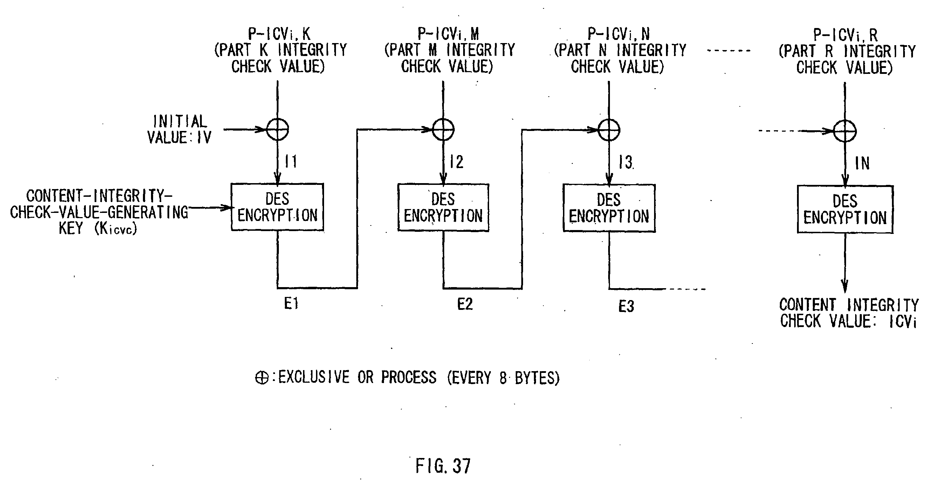

Further, if the block i contains one part having [ICV flag = subject of ICV] indicating that it is to be checked, the integrity check value P-ICVij generated using the above method is directly used as the block integrity check value ICVi. If the block i contains a plurality of parts having [ICV flag = subject of ICV] indicating that they are to be checked, the integrity check value P-ICVij is generated by connecting a plurality of parts integrity check values P-ICVij together in accordance with part numbers to obtain data and sequentially inputting the entire data (plain data) to the temper-check-value-generating function shown in Fig. 37 (DES-CBC-MAC using the content-integrity-check-value-generating key Kicvc) in such a manner that 8 bytes are input each time. Fig. 37 shows an example of configuration for generating the content block content integrity check value ICVi.

The block integrity check value ICVi is not defined for the format types 2 or 3.

The integrity check value B:ICVb is used to check the block information table key, the content key, and the entire block information table and generated using, for example, the method described in the previously described Fig. 24.

The total integrity check value ICVt is used to check the entirety of the previously described integrity check values A: ICVa and B: ICVb and the integrity check value ICVi contained in each block of the content to be checked and is generated by applying the system signature key Ksys to the intermediate integrity check value generated from each integrity check value such as the integrity check value A: ICVa to execute the encryption process as described in the previously described Fig. 25.

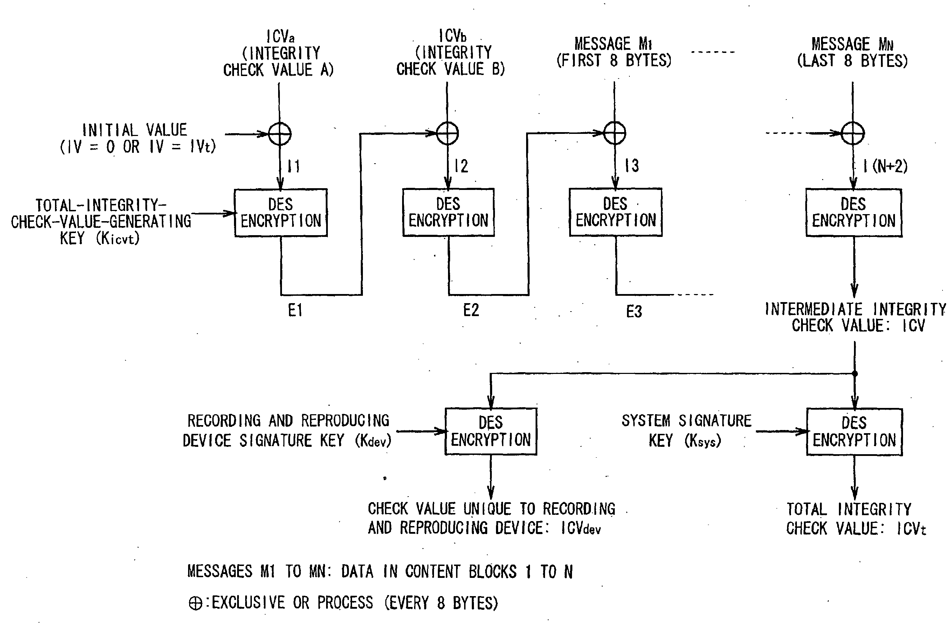

For the format types 2 and 3, the total integrity check value ICVt is generated by applying the system signature key Ksys to the intermediate integrity check value generated by connecting the previously described integrity check values A: ICVa and B: ICVb to the content data, that is, the entire content data between the block key in block 1 and the final block, to execute the encryption process. Fig. 38 shows an example of configuration for generating the total integrity check value ICVt for the format types 2 and 3.

The unique integrity check value ICVdev is substituted with the total integrity check value ICVt if the previously described localization flag is set to 1, that is, indicates that the content can be used only by a particular recording and reproducing device. For the format types 0 and 1, the unique integrity check value ICVdev is generated to check the previously described integrity check values A: ICVa and B: ICVb and the integrity check value ICVi contained in each block of the content to be checked. Specifically, the unique integrity check value ICVdev is generated by applying the recording and reproducing device signature key Kdev to the intermediate integrity check value generated from the integrity check values such as the integrity check value A: ICVa, as explained in the previously described Fig. 25 or 38.

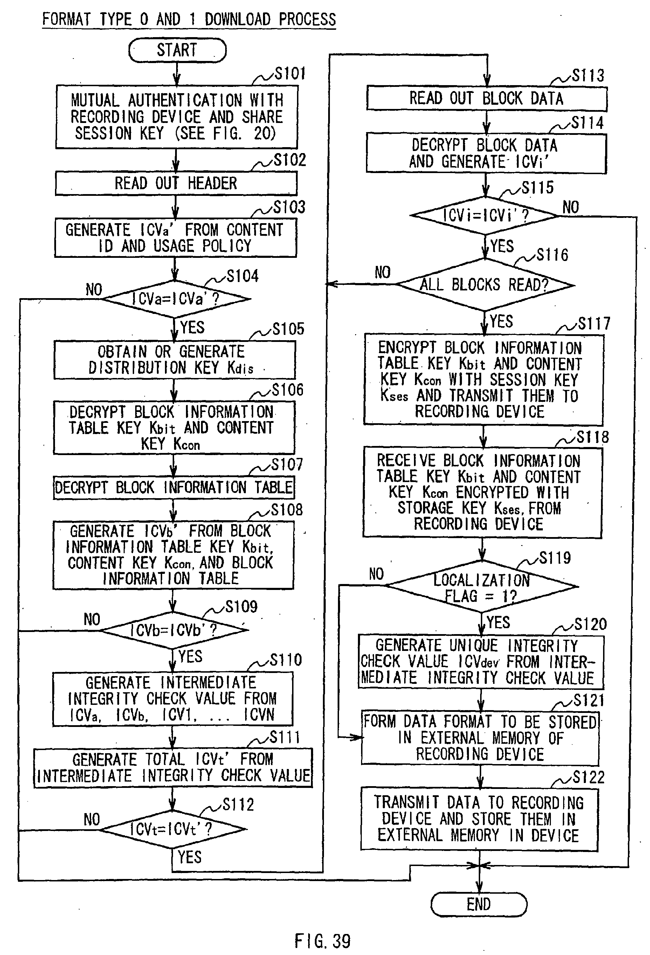

Next, processes for downloading a content of each of the format types 0 to 3 from the recording and reproducing device 300 to the recording device 400 and processes executed by the recording and reproducing device 300 to reproduce a content of each of the format types 0 to 3 from the recording device 400 will be described with reference to the flow charts in Figs. 39 to 44.

First, the process for downloading a content of the format type 0 or 1 will be explained with reference to Fig. 39.

The process shown in Fig. 39 is started, for example, by installing the recording device 400 into the recording and reproducing device 300 shown in Fig. 3. At step S101, authentication is executed between the recording and reproducing device and the recording device, and this step is carried out in accordance with the authentication process flow previously described in Fig. 20.

If the authentication process at step S101 has been completed to set the authentication flag, then at step S 102, the recording and reproducing device 300 reads data of a predetermined format from the medium 500 via the read section 304, the medium 500 storing content data, or uses the communication section 305 to receive data from the communication means 600 in accordance with a predetermined format. Then, the control section 301 of the recording and reproducing device 300 transmits the header section of the data to the recording and reproducing device cryptography process section 302 of the recording and reproducing device 300.

Next, at step S103, the control section 306 of the recording and reproducing device cryptography process section 302 causes the encryption/decryption section 308 of the recording and reproducing device cryptography process section 302 to calculate the integrity check value A. The integrity check value A is calculated in accordance with the ICV calculation method described in Fig. 7, using as a key the integrity-check-value-A-generating key Kicva stored in the internal memory 307 of the recording and reproducing device cryptography process section 302 and using the content ID and the usage policy as a message, as shown in Fig. 23. Then at step S104, the integrity check value A and the check value: ICVa stored in the header are compared together, and if they are equal, the process proceeds to step S105.

As previously described, the check value A, ICVa is used to verify that the content ID and the usage policy have not been tampered. If the integrity check value A calculated, for example, in accordance with the ICV calculation, using as a key the integrity-check-value-A-generating key Kicva stored in the internal memory 307 of the recording and reproducing device cryptography process section 302 and using the content ID and the usage policy as a message, equals the check value: ICVa stored in the header, it is determined that the content ID and the usage policy have not been tampered.

Next, at step S105, the control section 306 of the recording and reproducing device cryptography process section 302 causes the encryption/decryption section 308 of the recording and reproducing device cryptography process section 302 to obtain or generate the distribution key Kdis. The distribution key Kdis is generated using, for example, the master key MKdis for the distribution key, as in step S53 in the previously described Fig. 22.

Then at step S106, the control section 306 of the recording and reproducing device cryptography process section 302 uses the encryption/decryption section 308 of the recording and reproducing device cryptography process section 302 as well as the generated distribution key Kdis, to decrypt the block information table key Kbit and content key Knon stored in the header section of the data obtained from the medium 500 via the read section 304 or received from the communication means 600 via the communication section 305.

Further, at step S107, the control section 306 of the recording and reproducing device cryptography process section 302 uses the encryption/decryption section 308 of the recording and reproducing device cryptography process section 302 to decrypt the block information table with the decrypted block information table key Kbit.

Further, at step S108, the control section 306 of the recording and reproducing device cryptography process section 302 calculates the integrity check value B (ICVb') from the block information table key Kbit, the content key Kcon, and the block information table (BIT). The integrity check value B is generated, as shown in Fig. 24, by using as a key the integrity-check-value-B-generating key Kicvb stored in the internal memory 307 of the recording and reproducing device cryptography process section 302, to decrypt an exclusive-ORed value based on the DES, the exclusive-ORed value comprising the block information table key Kbit, the content key Kcon, and the block information table (BIT). Then at step S109, the integrity check value B and the ICVb in the header are compared together, and if they are equal, the process proceeds to step S110.

As previously described, the check value B, ICVb is used to verify that the block information table key Kbit, the content key Kcon, and the block information table have not been tampered. If the integrity check value B generated by using as a key the integrity-check-value-B-generating key Kicvb stored in the internal memory 307 of the recording and reproducing device cryptography process section 302, dividing the block information table key Kbit, the content key Kcon, and the block information table (BIT) into 8-byte pieces, exclusive-Oring these data, and encrypting the exclusive-ORed data based on the DES, equals the check value: ICVb stored in the header, it is determined that the block information table key Kbit, the content key Kcon, and the block information table have not been tampered.

At step S110, the control section 306 of the recording and reproducing device cryptography process section 302 causes the encryption/decryption section 308 of the recording and reproducing device cryptography process section 302 to calculate the intermediate integrity check value. The intermediate value is calculated in accordance with the ICV calculation method described in Fig. 7 or the like, using as a key the total-integrity-check-value-generating key Kicvt stored in the internal memory 307 of the recording and reproducing device cryptography process section 302 and using the integrity check values A and B and all the held content integrity check values as a message. The intermediate integrity check value generated is stored in the recording and reproducing device cryptography process section 302 of the recording and reproducing device 300 as required.

Next, at step S111, the control section 306 of the recording and reproducing device cryptography process section 302 causes the encryption/decryption section 308 of the recording and reproducing device cryptography process section 302 to calculate the total integrity check value ICVt'. As shown in Fig. 25, the total integrity check value ICVt is generated by using as a key a system signature key Ksys stored in the internal memory 307 of the recording and reproducing device cryptography process section 302, to encrypt the intermediate integrity check value based on the DES. Then at step S112, the total integrity check value ICVt generated and the ICVt' in the header stored at step S112 are compared together, and if they are equal, the process proceeds to step S113.

As previously described in Fig. 4, the total integrity check value ICVt is used to verify that all of the integrity check values ICVa and ICVb and the integrity check value for each content block have not been tampered. Thus, if the total integrity check value generated by means of the above described process equals the integrity check value: ICVt stored in the Header, it is determined that all of the integrity check values ICVa and ICVb and the integrity check value for each content block have not been tampered.

Then at step S113, the control section 301 of the recording and reproducing device 300 takes content block information out from the block information table (BIT) and checks whether any content block is to be verified. If any content block is to be verified, the content integrity check value has been stored in the block information in the header.

If any content block is to be verified, then at step S114, the control section 301 reads this content block out from the medium 500 using the read section 304 of the recording and reproducing device 300 or received from the communicating means 600 by using the communication section 305 of the recording and reproducing device 300, and transmits the content block to the recording and reproducing device cryptography process section 302 of the recording and reproducing device 300. On receiving the content block, the control section 306 of the recording and reproducing device cryptography process section 302 causes the encryption/decryption section 308 of the recording and reproducing device cryptography process section 302 to calculate the content integrity check value ICVi'.

If the block has been encrypted, the content integrity check value ICVi is generated by decrypting the input content block in the DES CBC mode using the content key Kcon, exclusive-ORing all of the decrypted text every 8 bytes, and then encrypting the generated content intermediate value with the content-integrity-check-value-generating key Kicvc stored in the internal memory 307 of the recording and reproducing device 300. Additionally, if the block has not been encrypted, the content integrity check value is generated by sequentially inputting the entire block data (plain text) to the tamper-check-value-generating function shown in Fig. 36 (DES-CBC-MAC using the content-integrity-check-value-generating key Kicvc) in such a manner that 8 bytes are input each time.

Then at step S115, the control section 306 of the recording and reproducing device cryptography process section 302 compares this content integrity check value with the ICV in the content block received from the control section 301 of the recording and reproducing device 300 at step S102, and passes the result to the control section 301 of the recording and reproducing device 300. On receiving the result and if the verification has been successful, the control section 301 of the recording and reproducing device 300 takes out the next content block to be verified and causes the recording and reproducing device cryptography process section 302 of the recording and reproducing device 300 to verify this content block. Similar verification processes are repeated until all the content blocks are verified (step S116).

In this regard, if the check values are not equal at any of steps 104, 109, 112, and 115, an error occurs to end the download 'process.

Then at step S117, the recording and reproducing device cryptography process section 302 of the recording and reproducing device 300 causes the encryption/decryption section 308 of the recording and reproducing device cryptography process section 302 to encrypt the block information key Kbit and content key Kcon decrypted at step S106, using the session key Kses made sharable during the mutual authentication. The control section 301 of the recording and reproducing device 300 reads the block information table key Kbit and the content key Kcon out from the recording and reproducing device cryptography process section 302 of the recording and reproducing device 300 and then transmits them to the recording device 400 via the recording device controller 303 of the recording and reproducing device 300.

Then at step S118, on receiving the block information table key Kbit and the content key Kcon transmitted from the recording and reproducing device 300, the recording device 400 causes the encryption/decryption section 406 of the recording device cryptography process section 401 to decrypt the received data with the session key Kses made sharable during the mutual authentication and to then reencrypt the decrypted data using the storage key Kstr unique to the recording device which is stored in the internal memory 405 of the recording device cryptography process 401. Then, the control section 301 of the recording and reproducing device 300 reads the block information key Kbit and the content key Kcon out from the recording device 400 via the recording device controller 303 of the recording and reproducing device 300, the block information key Kbit and the content key Kcon being reencrypted with the storage key Kstr. That is, the block information table key Kbit encrypted with the distribution key Kdis is exchanged with the content key Kcon.

Then at step S119, the control section 301 of the recording and reproducing device 300 takes the localization field out from the usage policy in the header section of the data, to determine whether the downloaded content can be used only in this recording and reproducing device 300. If the localization field is set to 1, the downloaded content can be used only by the recording and reproducing device 300, if the localization field is set to 0, the downloaded content can also be used by other similar recording and reproducing devices 300. If the result of the determination shows that the localization field is set to 1, the process proceeds to step S120.

At step S120, the control section 301 of the recording and reproducing device 300 causes the recording and reproducing device cryptography process section 302 of the recording and reproducing device 300 to calculate the integrity check value unique to the recording and reproducing device. The integrity check value unique to the recording and reproducing device is generated by using as a key a recording and reproducing device signature key Kdev stored in the internal memory 307 of the recording and reproducing device cryptography process section 302, to encrypt the intermediate integrity check value based on the DES, the intermediate integrity check value being generated at step S110. The calculated integrity check value ICVdev unique to the recording and reproducing device substitutes for the total integrity check value ICVt.

As previously described, the system signature key Ksys is used to add a common signature or ICV to the distribution system, and the recording and reproducing device signature key Kdev varies depending on the recording and reproducing device and is used by the recording and reproducing device to add a signature or ICV. That is, data signed with the system signature key Ksys are successfully checked by a system (recording and reproducing device) having the same system signature key, that is, such data have the same total integrity check value ICVt so as to be sharable. If, however, data are signed with the recording and reproducing device signature key Kdev, since this signature key is unique to the recording and reproducing device, the data signed with the recording and reproducing device signature key Kdev, that is, the data stored in a recording device after the signing cannot be reproduced if an attempt is made to reproduce them after this recording device has been inserted in another recording and reproducing device; that is, an error occurs due to the unequal integrity check values ICVdev unique to the recording and reproducing device. In the data processing apparatus according to the present invention, the setting of the localization field enables contents to be arbitrarily set so as to be shared throughout the entire system or used only by particular recording and reproducing devices.

Next, at step S121, the control section 301 of the recording and reproducing device 300 causes the recording and reproducing device cryptography process section 302 to form a storage data format. As previously described, one of the three format types 0 to 3 is set in the usage policy (see Fig. 5) in the header so that data are formed in accordance with the storage format in the right of one of the previously described Figs. 32 to 35 depending on the set type. The flow shown in Fig. 39 is for the format 0 or 1, so that the data are formed into one of the formats in Figs. 32 and 33.

Once the storage data format has been completed at step S121, the control section 301 of the recording and reproducing device 300 stores the content in the external memory 402 of the recording device 400 at step S122.

How the process for downloading content data of the format type 0 or 1 is carried out has been described.

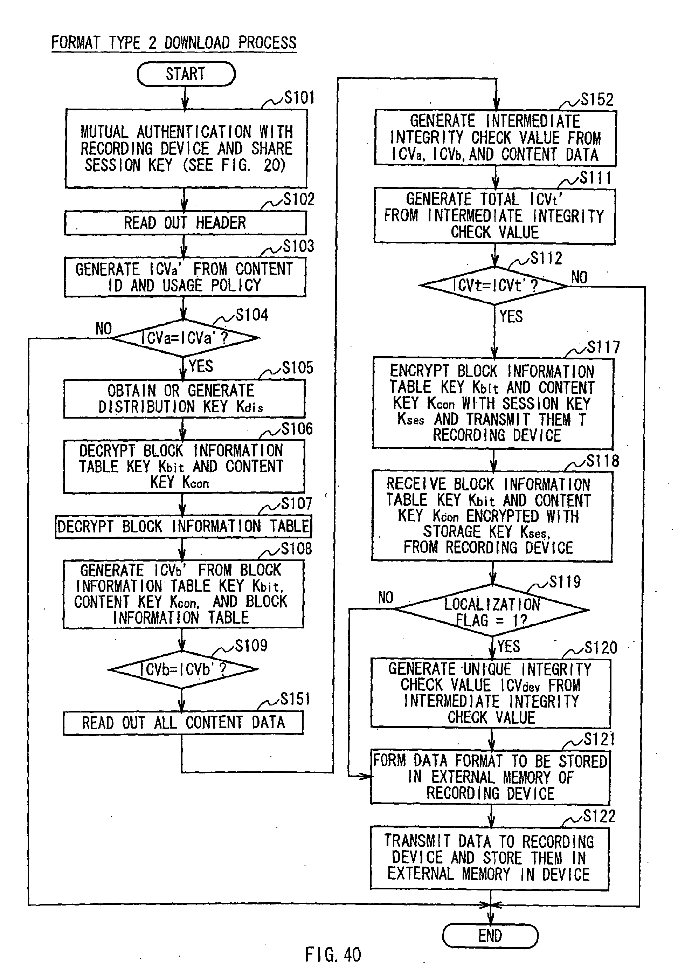

The process for downloading content data of the format type 2 will be explained with reference to Fig. 40. Differences from the above described process for downloading data of the format type 0 or 1 will be focused on.

Steps S101 to S109 are similar to the above described process for downloading data of the format type 0 or 1, so description thereof is omitted.

Since the format type 2 has no content integrity check value ICVi defined therefor as previously described, the block information table contains no content integrity check value ICVi. The intermediate integrity check value in the format type 2 is generated by applying the system signature key Ksys to the intermediate integrity check value generated by connecting the integrity check values A and B to the entire content data between the leading data of the first block (the block key in the block 1) and the final block, to execute the encryption process.

Thus, in the process for downloading data of the format type 2, the content data are read out at step S151, and the intermediate integrity check value is generated based on the integrity check values A and B and the read-out content data at step S152. In this regard, the content data are not decrypted even if they have been encrypted.

For the format type 2, the processes for decrypting the block data and collating the content integrity check values are omitted contrary to the previously described process for the format type 0 or 1, thereby increasing the processing speed.

The processing at step S111 and subsequent steps is similar to that for the format type 0 or 1, so description thereof is omitted.

How the process for downloading content data of the format type 2 is carried out has been described. As described above,' the process for downloading data of the format type 2 omits the processes for decrypting the block data and collating the content integrity check values contrary to the process for the format type 0 or 1, thereby increasing the processing speed; this format is thus suitable for processing of music data or the like which must be executed in real time.

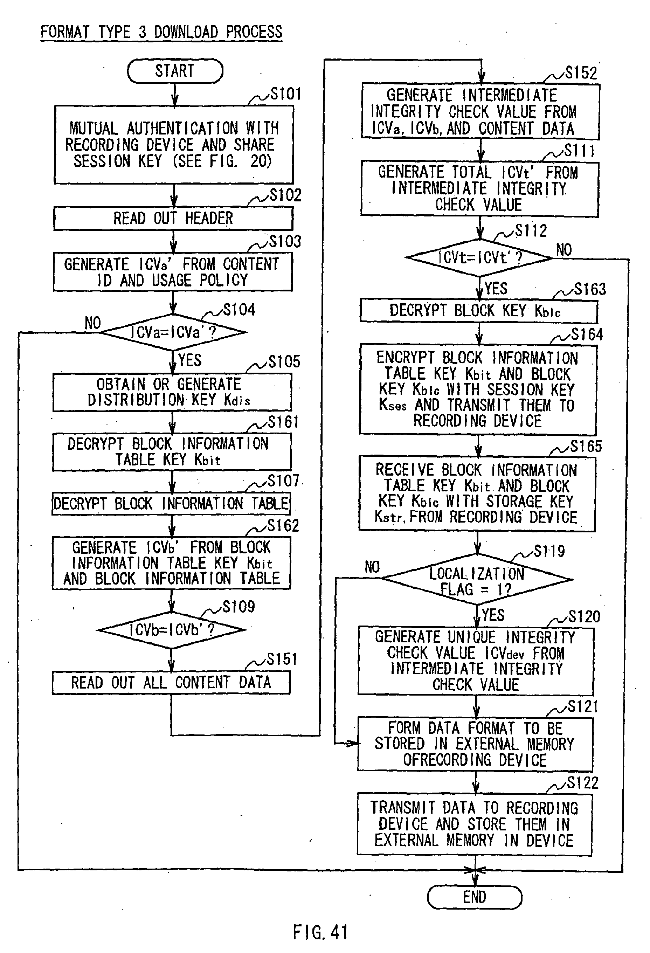

Next, the process for downloading content data of format type 3 will be described with reference to Fig. 41. The following description will focus on differences from the above described download process for the format types 0, 1, and 2.

Steps S101 to S105 are similar to those of the above described download process for the format types 0, 1, and 2.

The process for the format type 3 essentially has many characteristics in common with that for the format type 2, but differs therefrom in that the format type 3 has no content key in that the block key Kblc is stored in the recording device after encryption with the storage key Kstr.

The following description will focus on the differences between the download process for the format type 3 and that for the format type 2. With the format type 3, at step S161, following step S105, the block information table key is decrypted. The control section 306 of the recording and reproducing device cryptography process section 302 uses the encryption/decryption section 308 of the recording and reproducing device cryptography process section 302 as well as the distribution key Kdis generated at step S105 to decrypt the block information table key Kbit stored in the header section of the data obtained from the medium 500 via the read section 304 or received from the communication means 600 via the communication section 305. With the format type 3, data contains no content key Kcon, so that the process for decrypting the content key Kcon is not executed.

At the next step S107, the block information table key Kbit decrypted at step S161 is used to decrypt the block information table, and at step S162, the control section 306 of the recording and reproducing device cryptography process section 302 generates integrity check value B(ICVb') from the block information table key Kbit and block information table (BIT). The integrity check value B is generated by using as a key the integrity-check-value-B-generating key Kicvb stored in the internal memory 307 of the recording and reproducing device cryptography process section 302, to encrypt the exclusive-ORed value comprising the block information table key Kbit and block information table (BIT), based on the DES. Next, at step S109, the integrity check value B and the ICVb in the header are compared together, and if they are equal, the process proceeds to step S151.

With the format type 3, the check value B, ICVb functions to verify that the block information table key Kbit and the block information table have not been tampered. If the integrity check value B generated equals the check value: ICVb stored in the header, it is determined that the block information table key Kbit and the block information table have not been tampered.

Steps S151 to S112 are similar to those of the process for the format type 2, and description thereof is omitted.

At step S163, the block key Kblc contained in the content data read out at step S151 is decrypted with the distribution key Kdis generated at step S105.

Then at step S164, the recording and reproducing device cryptography process section 302 of the recording and reproducing device 300 causes the encryption/decryption section 308 of the recording and reproducing device cryptography process section 302 to encrypt the block information key Kbit decrypted at step S161 and the block key Kblock decrypted at step S163, using the session key Kses made sharable during the mutual authentication. The control section 301 of the recording and reproducing device 300 reads the block information table key Kbit and the block key Kblc out from the recording and reproducing device cryptography process section 302 of the recording and reproducing device 300 and then transmits these data to the recording device 400 via the recording device controller 303 of the recording and reproducing device 300.

Then at step S165, on receiving the block information table key Kbit and the block key Kblc transmitted from the recording and reproducing device 300, the recording device 400 causes the encryption/decryption section 406 of the recording device cryptography process section 401 to decrypt the received data with the session key Kses made sharable during the mutual authentication and to then reencrypt the decrypted data using the storage key Kstr unique to the recording device which is stored in the internal memory 405 of the recording device cryptography process 401. The control section 301 of the recording arid reproducing device 300 reads the block information table key Kbit and the block key Kblc reencryted by a storage key Kstr from the recording device 400 via the recording device controller of the recording and reproducing device 300. That is, the block information table key Kbit and block key Kblc initially encrypted with the distribution key Kdis are replaced with the block information table key Kbit and block key Kblc reencrypted with the storage key Kstr.

The subsequent steps S119 to S122 are similar to those for the format types 0, 1, and 2, so description thereof is omitted.

The aspect of the process for downloading content data of the format type 3 has been described. As described above, the download process for the format type 3 omits the decryption of the block data and the process for collating the content integrity check value as for the format type 2, thereby enabling prompt processing; the format type 3 is thus suitable for processing data such as music data which requires real-tile processing. In addition, since the range within which the encrypted content is protected is localized by the block key Kblc, advanced security is achieved compared to the format type 2.

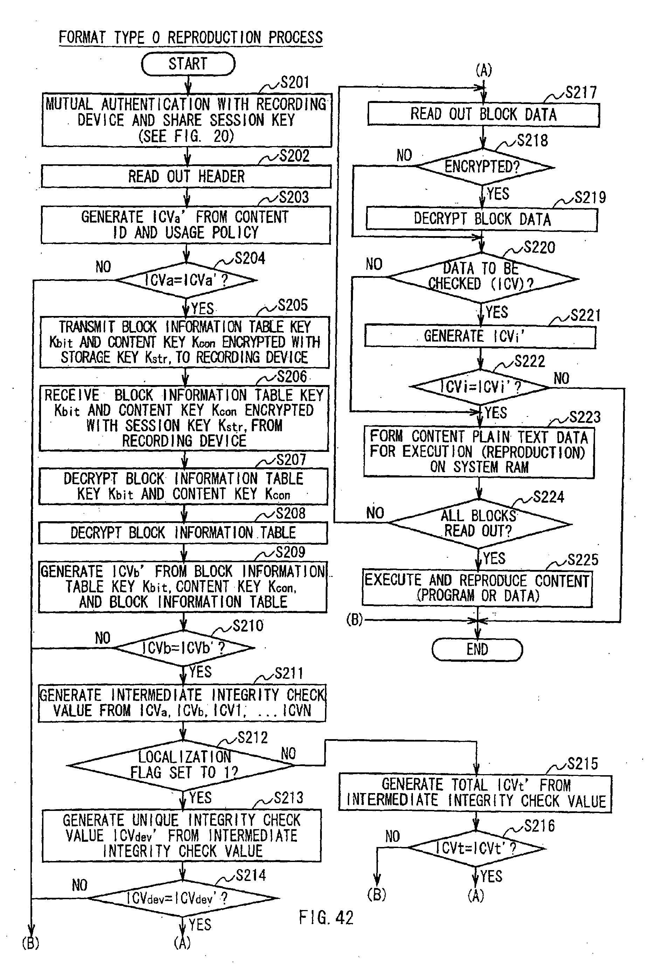

Next, processes for reproducing data of each of the format types 0 to 3 from the recording device 400 of the recording and reproducing device 300 will be explained with reference to the flow charts in Figs. 42 to 45.

First, a process for reproducing a content of the format type 0 will be explained with reference to Fig. 42.

Step S201 corresponds to an authentication process between the recording and reproducing device and the recording device and is executed in accordance with the authentication process flow previously described in Fig. 20.

Once the authentication process at step S201 has been completed to set the authentication flag, at step S202, the recording and reproducing device 300 reads the header of data of a predetermined format out from the recording device 400 and transmits it to the recording and reproducing device cryptography process section 302 of the recording and reproducing device 300.

Then at step S203, the control section 306 of the recording and reproducing device cryptography process section 302 causes the encryption/decryption section 308 of the recording and reproducing device cryptography process section 302 to calculate the integrity check value A. The integrity check value A is calculated using as a key the integrity-check-value-A-generating key Kicva stored in the internal memory 307 of the recording and reproducing device cryptography process section 302 and using the content ID and the usage policy as a message, as shown in the previously described Fig. 23. Then, the integrity check value A and the check value: ICVa stored in the header are compared together at step S204, and if they are equal, the process proceeds to step S205.

The check value A, ICVa is used to verify that the content ID and the usage policy have not been tampered. If the calculated integrity check value A equals the check value: ICVa stored in the header, it is determined that the content ID and the usage policy have not been tampered.

Then at step S205, the control section 301 of the recording and reproducing device 300 takes out, from the read-out header section, the block information table key Kbit and content key Kcon encrypted with the storage key Kstr unique to the recording device and then transmits them to the recording device 400 via the recording device controller 303 of the recording and reproducing device 300.

On receiving the block information table key Kbit and the content key Kcon transmitted from the recording and reproducing device 300, the recording device 400 causes the encryption/decryption section 406 of the recording device cryptography process section 401 to decrypt the received data with the storage key Kstr unique to the recording device which is stored in the internal memory 405 of the recording device cryptography process and to then reencrypt the decrypted data using the session key Kses made sharable during the mutual authentication. This process is as previously described in detail in (9) Key Exchange Process after Mutual Authentication.

At step S206, the control section 301 of the recording and reproducing device 300 receives the block information table key Kbit and content key Kcon reencrypted with the session key Kses, from the' recording device 400 via the recording device controller 303 of the recording and reproducing device 300.

Then at step S207, the control section 301 of the recording and reproducing device 300 transmits the received block' information table key Kbit and content key Kcon which are reencrypted with the session key Kses, to the recording and reproducing device cryptography process section 302 of the recording and reproducing device 300. On receiving the block information table key Kbit and content key Kcon reencrypted with the session key Kses the content block, the cryptography process section 302 of the recording and reproducing device 300 causes the encryption/decryption section 308 of the recording and reproducing device cryptography process section 302 to decrypt these keys Kbit and Kcon with the session key Kses made sharable during the mutual authentication.

Further at step S208, the decrypted block information table key Kbit is used to decrypt the block information read out at step S202. The recording and reproducing device cryptography process section 302 of the recording and reproducing device 300 replaces the decrypted block information table key Kbit, content key Kcon, and block information table BIT with the block information table key Kbit, content key Kcon, and block information table BIT contained in the header read out at step S202, to hold the latter. Additionally, the control section 301 of the recording and reproducing device 300 reads the decrypted block information table BIT out from the recording and reproducing device cryptography process section 302 of the recording and reproducing device 300.

Further, at step S209, the control section 306 of the recording and reproducing device cryptography process section 302 generates the integrity check value B(ICVb') from the block information table key Kbit, the content key Kcon, and the block information table (BIT). The integrity check value B is generated, as shown in Fig. 24, by using as a key the integrity-check-value-B-generating key Kicvb stored in the internal memory 307 of the recording and reproducing device cryptography process section 302, to decrypt the exclusive-ORed value comprising the block information table key Kbit, the content key Kcon, and the block information table (BIT), based on the DES. Then at step S210, the integrity check value B and the ICVb in the header are compared together, and if they are equal, the process proceeds to step S211.

The check value B, ICVb is used to verify that the block information table key Kbit, the content key Kcon, and the block information table have not been tampered. If the integrity check value B generated equals the check value: ICVb stored in the header, it is determined that the block information table key Kbit, the content key Kcon, and the block information table stored in the recording device 400 have not been tampered.

At step S211, the control section 306 of the recording and reproducing device cryptography process section 302 causes the encryption/decryption section 308 of the recording and reproducing device cryptography process section 302 to calculate the intermediate integrity check value. The intermediate value is calculated in accordance with the ICV calculation method described in Fig. 7, using as a key the total-integrity-check-value generating key Kicvt stored in the internal memory 307 of the recording and reproducing device cryptography process section 302 and using the integrity check values A and B in the verified header and all the content integrity check values in the block information table as a message as shown in Fig. 25. In this regard, the intermediate integrity check value generated is stored in the recording and reproducing device cryptography process section 302 of the recording and reproducing device 300 as required.

Next, at step S212, the control section 301 of the recording and reproducing device 300 takes the localization field out from the usage policy contained in the header section of the data read from the external memory 402 of the recording device 400 to determine whether the content to be reproduced can be used only by this recording and reproducing device 300 (in this case, the localization field is set to 1) or also by other similar recording and reproducing devices 300 (in this case, the localization field is set to 0). If the result of the determination shows that the localization field is set to 1, that is, the reproduced content can be used only by this recording and reproducing device 300, the process proceeds to step S213. If the localization field is set to 0, that is, the reproduced content can also be used by other similar recording and reproducing devices 300, the process proceeds to step S215. The processing at step S211 may be executed by the cryptography process section 302.

At step S213, the control section 301 of the recording and reproducing device 300 causes the recording and reproducing device cryptography process section 302 of the recording and reproducing device 300 to calculate the integrity check value ICVdev' unique to the recording and reproducing device. The integrity check value ICVdev' unique to the recording and reproducing device is generated, as shown in Fig. 25, by using as a key a recording and reproducing device signature key Kdev stored in the internal memory 307 of the recording and reproducing device cryptography process section 302, to decrypt the intermediate integrity check value based on the DES, the intermediate integrity check value being held at step S58.

Then at step S214, the integrity check value ICVdev' unique to the recording and reproducing device calculated at step S213 and the ICVdev in the header read out at step S202 are compared together, and if they are equal, the process proceeds to step S217.

On the other hand, at step S215, the control section 306 of the recording and reproducing device cryptography process section 302 causes the encryption/decryption section 308 of the recording and reproducing device cryptography process section 302 to calculate the total integrity check value ICVt. The total integrity check value ICVt' is generated by using as a key the system signature key Ksys stored in the internal memory 307 of the recording and reproducing device cryptography process section 302, to decrypt the intermediate integrity check value based on the DES, as shown in Fig. 25. Then at step S216, the total integrity check. value ICVt' generated and the ICVt in the header are compared together, and if they are equal, the process proceeds to step S217.

The total integrity check value ICVt and the integrity check value ICVdev unique to the recording and reproducing device are used to verify that all of the integrity check values ICVa and ICVb and the integrity check value for each content block have not been tampered. Thus, if the total integrity check value generated by means of the above described process equals the integrity check value: ICVt or ICVdev stored in the header, it is determined that all of the integrity check values for each content block have not been tampered.

Next, at step S217, the control section 301 of the recording and reproducing device 300 reads the block data out from the recording device 400. Furthermore, at step S218, it is determined whether or not the data have been encrypted, and if the data have been encrypted, the cryptography process section 302 of the recording and reproducing device 300 decrypts the block data. If the data have not been encrypted, the process skips step S219 and advances to step S220.

Then at step S220, the control section 301 of the recording and reproducing device 300 checks whether any content block is to be verified, based on the content block information table in the block information table (BIT). If any content block is to be verified, the content integrity check value has been stored in the block information in the header. In this case, the content integrity check value ICVi for this content block is calculated at step S221. If no content block is to be verified, the process skips steps S221 and S222 to advance to step S223.

If the block has been encrypted as previously described in Fig. 36, the content integrity check value ICVi' is generated by decrypting the input content block with the content key Kcon in the DES CBC mode, exclusive-ORing all of the result every 8 bytes to generate the content intermediate value, and then encrypting the obtained value with the content-integrity-check-value-generating key Kicvc stored in the internal memory 307 of the recording and reproducing device 300. Additionally, if the block has not been encrypted, the content integrity check value is generated by sequentially inputting the entire data (plain text) to the tamper-check-value-generating function shown in Fig. 36 (DES-CBC-MAC using the content-integrity-check-value-generating key Kicvc) in such a manner that 8 bytes are input each time.

At step S222, the control section 306 of the recording and reproducing device cryptography process section 302 compares the generated content integrity check value ICVi' with the ICVi stored in the content block received from the recording device 400 at step S202, and passes the result to the control section 301 of the recording and reproducing device 300. On receiving the result and if the verification has been successful, the content plain data for execution (reproduction) on the RAM of the recording and reproducing device system at step S223. The control section 301 of the recording and reproducing device 300 takes out the next content block to be verified and causes the recording and reproducing device cryptography process section 302 of the recording and reproducing device 300 to verify this content block. Similar verification processes and RAM storage processes are repeated until all the content blocks are verified (step S224).

If the check values do not match at any of steps S204, S210, S214, S216, and S222, an error occurs to end the reproduction process.

When it is determined at step S224 that all the blocks have been read out, the process proceeds to step S225 to start executing and reproducing the content (program or data).

The aspect of the process for reproducing content data of the format type 0 has been explained.

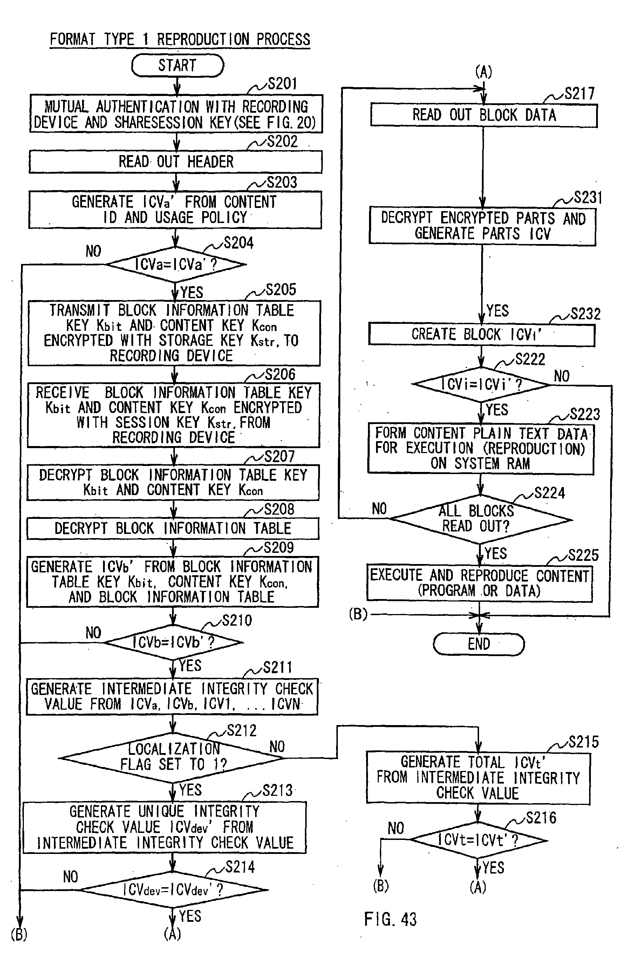

Next, the process for downloading content data of the format type 1 will be explained with reference to Fig. 43. The following description will focus on differences from the above described download process for the format type 0.

The processing from steps S201 to S217 is similar to that in the above described download process for the format type 0, so description thereof is omitted.

For the format type 1, at step S231, encrypted parts are decrypted to generate a part ICV. Further at step S232, the block ICVi' is generated. As previously described, with the format type 1, if at least one of the parts in a block contains data to be verified with the integrity check value ICVi, the content integrity check value ICVi is defined for this block. If the part j has been encrypted, an integrity check value P-ICVij for a part j of a block i is generated by exclusive-ORing the entire plain text (decrypted text) every 8 bytes and decrypting the obtained value with the content-integrity-check-value-generating key Kicvc. Additionally, if the part j has not been encrypted, the integrity check value P-ICVij is generated by sequentially inputting the entire data (plain text) to the tamper-check-value-generating function shown in Fig. 36 (DES-CBC-MAC using the content-integrity-check-value-generating key Kicvc) in such a manner that 8 bytes are input each time.

Further, if the. block i contains only one part having [ICV flag = subject of ICV] indicating that it is to be checked, the integrity check value P-ICVij generated using the above method is directly used as the block integrity check value ICVi. If the block i contains a plurality of parts having [ICV flag = subject of ICV] indicating that they are to be checked, the integrity check value P-ICVij is generated by connecting a plurality of parts integrity check values P-ICVij together in accordance with part numbers to obtain data and sequentially inputting the entire data (plain text) to the tamper-check-value-generating function shown in Fig. 36 (DES-CBC-MAC using the content-integrity-check-value-generating key Kicvc) in such a manner that 8 bytes are input each time. This is the same as explained in Fig. 37.

For the format type 1, the content integrity check value generated by means of the above described procedure undergoes comparison at step S222. Processing at the next step S223 and the subsequent steps is similar to that for the format type 0, so description thereof is omitted.

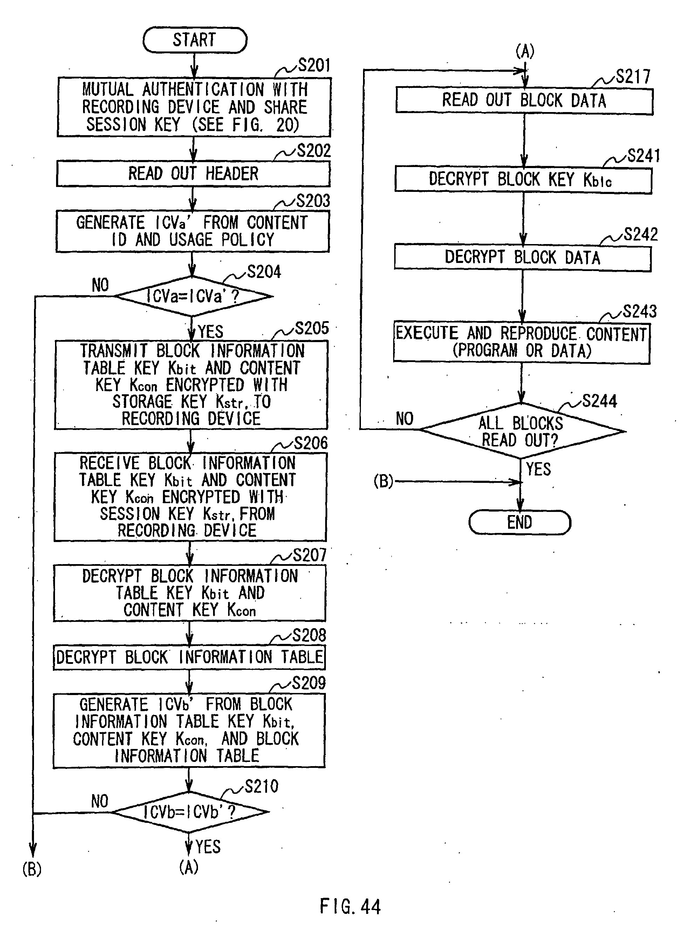

Next, the process for reproducing content data of the format type 2 will be explained with reference to Fig. 44. The following description will focus on differences from the above described reproduction processes for the format types 0 and 2.

Steps S201 to S210 is similar to that in the above described reproduction processes for the format types 0 and 1, so description thereof is omitted.

For the format type 2, the processing at steps S211 to S216, which is executed for the format types 0 and 1, is not executed. In addition, the format type 2 has no content integrity check value, so that verification of the content integrity check value, which is executed for the format types 0 and 1, is not executed.

In the data reproduction process for the format type 2, after step S210 for verifying the integrity check value B, the process proceeds to step S217 where the block data are read out under the control of the control section 301 of the recording and reproducing device 300. Further, at step S241, the cryptography process section 306 of the recording and reproducing device 300 decrypts the block key Kblc contained in the block data. The block key Kblc stored in the recording device 400 has been encrypted with the content key Kcon as shown in Fig. 34 and is thus decrypted with the content key Kcon decrypted at the previous step S207.

Then at step S242, the block key Kblc decrypted at step S241 is used to decrypt the block data. Furthermore, at step S243, the content (program or data) is executed and reproduced. The processing from steps S217 to S243 is repeated for all the blocks. When it is determined at step S244 that all the blocks have been read out, the reproduction process is ended.

As described above, the process for the format type 2 omits the process for verifying the integrity check value such as the total integrity check value. It thus provides a configuration suitable for executing the decryption process at a high speed and a format suitable for processing data such as music data which requires real-time processing.

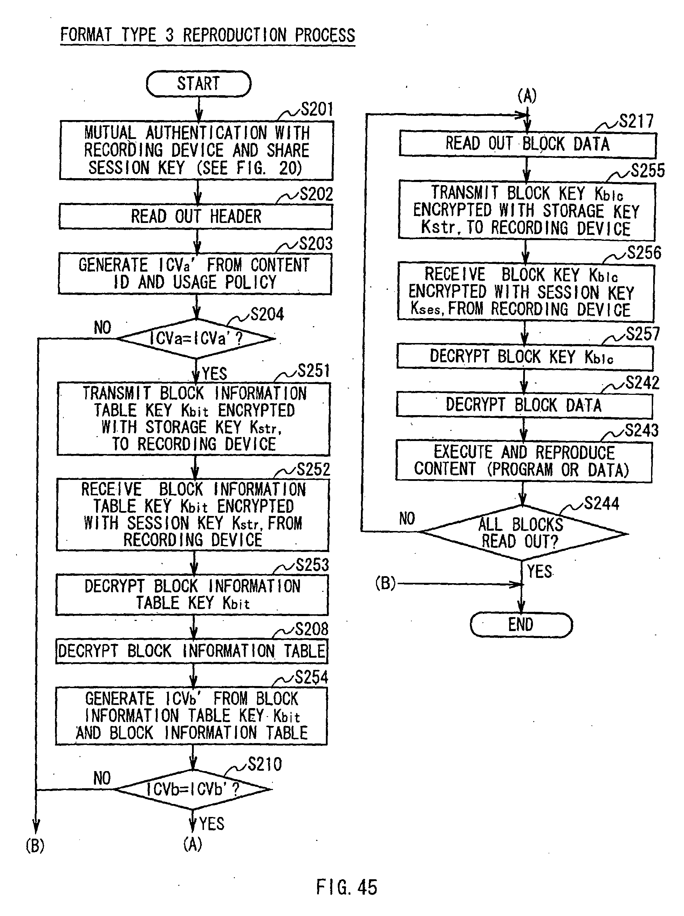

Next, the process for reproducing content data of format type 3 will be described with reference to Fig. 45. The following description will focus on differences from the above described reproduction process for the format types 0, 1, and 2.

The process for the format type 3 essentially has many characteristics in common with that for the format type 2, but differs therefrom in that, as described in Fig. 35, the format type 3 has no content key in that the block key Kblc is stored in the recording device after encryption with the storage key Kstr.

Between steps S201 and S210, processing at steps S251, S252, S253, and S254 is configured to omit the use of the content key contrary to the corresponding processing for the formats 0, 1, and 2.

At step S251, the control section 301 of the recording and reproducing device 300 takes out, from the read-out header, the block information table key Kbit encrypted with the storage key Kstr unique to the recording device and then transmits this key to the recording device 400 via the recording device controller 303 of the recording and reproducing device 300.

On receiving the block information table key Kbit transmitted from the recording and reproducing device 300, the recording device 400 causes the encryption/decryption section 406 of the recording device cryptography process section 401 to decrypt the received data with the storage key Kstr unique to the recording device which is stored in the internal memory 405 of the recording device cryptography process section 401 and to then reencrypt the decrypted data using the session key Kses made sharable during the mutual authentication. This process is as previously described in detail in (9) Key Exchange Process after Mutual Authentication.

At step S252, the control section 301 of the recording and reproducing device 300 receives the block information table key Kbit reencrypted with the session key Kses, from the recording device 400 via the recording device controller 303 of the recording and reproducing device 300.

Then at step S253, the control section 301 of the recording and reproducing device 300 transmits the received block information table key Kbit reencrypted with the session key Kses, to the recording and reproducing device cryptography process section 302 of the recording and reproducing device 300. On receiving the block information table key Kbit reencrypted with the session key Kses the content block, the recording and reproducing device cryptography process section 302 of the recording and reproducing device 300 causes the encryption/decryption section 308 of the recording and reproducing device cryptography process section 302 to decrypt this block information table key Kbit with the session key Kses made sharable during the mutual authentication.

Further at step S208, the decrypted block information table key Kbit is used to decrypt the block information read out at step S202. The recording and reproducing device cryptography process section 302 of the recording and reproducing device 300 replaces the decrypted block information table key Kbit and block information table BIT with the block information table key Kbit and block information table BIT contained in the header read out at step S202, to hold the latter. Additionally, the control section 301 of the recording and reproducing device 300 reads the decrypted block information table BIT out from the recording and reproducing device cryptography process section 302 of the recording and reproducing device 300.

Further, at step S254, the control section 306 of the recording and reproducing device cryptography process section 302 generates the integrity check value B(ICVb') from the block information table key Kbit and the block information table (BIT). The integrity check value B is generated, as shown in Fig. 24, by using as a key the integrity-check-value-B-generating key Kicvb stored in the internal memory 307 of the recording and reproducing device cryptography process section 302, to decrypt the exclusive-ORed value comprising the block information table key Kbit and the block information table (BIT), based on the DES. Then at step S210, the integrity check value B and the ICVb in the header are compared together, and if they are equal, the process proceeds to step S211.

With the format type 3, the block key is further encrypted with the storage key when stored in the recording device, thereby requiring the recording device 400 to execute a decryption processes with the storage key and the session key Kses and also requiring the recording and reproducing device 300 to execute a decryption process with the session key. This series of steps correspond to the process steps shown as steps S255 and S256.

At step S255, the control section 301 of the recording and reproducing device 300 takes out, from the read-out header, the block key Kblc encrypted with the storage key Kstr unique to the recording device which has been read out at step S217 and then transmits this key to the recording device 400 via the recording device controller 303 of the recording and reproducing device 300.

On receiving the block key Kblc transmitted from the recording and reproducing device 300, the recording device 400 causes the encryption/decryption section 406 of the recording device cryptography process section 401 to decrypt the received data with the storage key Kstr unique to the recording device which is stored in the internal memory 405 of the recording device cryptography process section 401 and to then reencrypt the decrypted data using the session key Kses made sharable during the mutual authentication. This process is as previously described in detail in (9) Key Exchange Process after Mutual Authentication.

At step S256, the control section 301 of the recording and reproducing device 300 receives the block key Kblc reencrypted with the session key Kses, from the recording device 400 via the recording device controller 303 of the recording and reproducing device 300.

Then, at step S257, the cryptography process section 306 of the recording and reproducing device 300 decrypts the block key Kblc using the session key Kses.

Then at step S242, the block key Kblc decrypted at step S257 is used to decrypt the block data. Furthermore, at step S243, the content (program or data) is executed and reproduced. The processing from steps S217 to S243 is repeated for all the blocks. When it is determined at step S244 that all the blocks have been read out, the reproduction process is ended.

The process for reproducing a content of the format type 3 has been described. The format type 3 is similar to the format type 2 in that the process for verifying the total integrity check value is omitted, but provides a processing configuration with a higher security level due to the inclusion of the process for exchanging the block key.

(11) Process Executed by Content Provider to Generate Integrity Check Value (ICV)

In the above described embodiments, the verification processes with the various integrity check values ICV are executed during downloading or reproduction of a content. Aspects of the process for generating the integrity check values ICV and the verification process will be described below.

First, each of the integrity check value explained in the embodiments will be described in brief. The following integrity check values ICV are used in the data processing apparatus according to the present invention.

Integrity check value A, ICVa: integrity check value for verifying that the content ID and usage policy in the content data have not been tampered.

Integrity check value B, ICVb: integrity check value for verifying that the block information table key Kbit, the content key Kcon, and the block information table have not been tampered.

Content integrity check value ICVi: integrity check value for verifying that each content block of the content has not been tampered.

Total integrity check value ICVt: integrity check value for verifying that the integrity check value ICVa, the integrity check value ICVb, and all the integrity check values for the content blocks have not been tampered.

Integrity check value ICVdev unique to the recording and reproducing device: integrity check value that is replaced with the total integrity check value ICVt if the localization flag is set to 1, that is, the content can be used only by a particular recording and reproducing device and that is generated as an integrity check value for the previously described integrity check value A: ICVa, integrity check value B: ICVb, and integrity check value ICVi contained in each block of the content to be checked.

Depending on the format, not the check value for each content block but the content itself is checked by the integrity check values ICVt and ICVdev.

Each of the above integrity check value is used in the data processing apparatus according to the present invention. Of these integrity check values, the integrity check values A and B, the total integrity check value, and the content integrity check value are generated by a content provider for providing content data or a content manager based on data to be verified, as shown, for example, in Figs. 32 to 35 and 6 and are stored in the data together with the content before being provided to a user of the recording and reproducing device 300. When downloading or reproducing the content to or from the recording device, the user of the recording and reproducing device, that is, the content user generates verifying ICVs based on each data to be verified, to compare them with the stored ICVs. Additionally, the integrity check value ICVdev unique to the reproducing device is replaced with the total integrity check value ICVt and then stored in the recording device if it is shown that the content can be used only by this recording and reproducing device.

In the above described embodiments, the processes for generating the integrity check values are principally based on the DES-CBC. The present invention, however, is not limited to the above described method but includes various ICV-generating and -verifying process aspects. In particular, for the relationship between the content provider or manager and the content user, the following various ICV-generating and -verifying process configurations are possible.

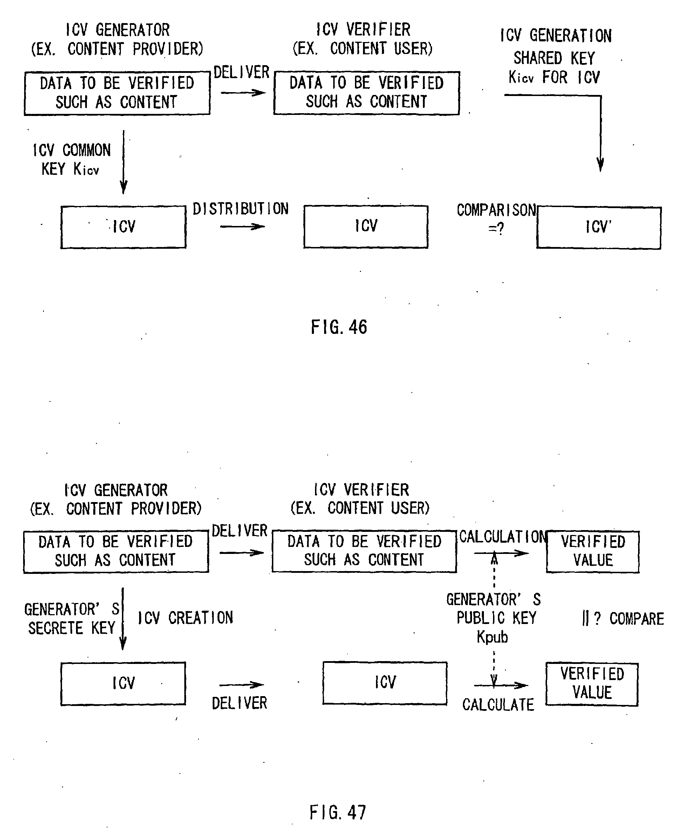

Figs. 46 to 48 are views useful in explaining a generation process executed by a generator of the integrity check value ICV and a verification process executed by a verifier.

Fig. 46 shows a configuration wherein, for example, an ICV generator who is a content provider or manager executes the process for generating the ICV based on the DES-CBC as described in the above embodiments and then provides the generated ICV to a recording and reproducing device user, that is, a verifier together with the content. In this case, for the verification process, the recording and reproducing device user, that is, the verifier requires, for example, the keys stored in the internal memory 307 shown in Fig. 18, for generating the corresponding integrity check values. The verifier (recording and reproducing device user) who is the content user uses the integrity-check-value-generating key stored in the internal memory 307 to apply the DES-CBC to data to be verified in order to generate the integrity check values and then compares these values with stored integrity check values. In this case, each integrity-check-value-generating key is configured so as to be secretly shared by the ICV creator and the verifier.

Fig. 47 shows a configuration wherein the ICV creator who is the content provider or manager generates ICVs using a digital signature of a public key cryptosystem and then provides the generated ICVs to the content user, that is, the verifier together with the content and wherein the content user, that is, the verifier stores the public key of the ICV creator and uses this key to verify the ICVs. In this case, the public key of the ICV creator which is held by the content user (recording and reproducing device user), that is, the verifier need not be secret, resulting in easier management. This aspect is thus suitable for ICV generation and management executed at a high security management level, for example, that executed in one entity.

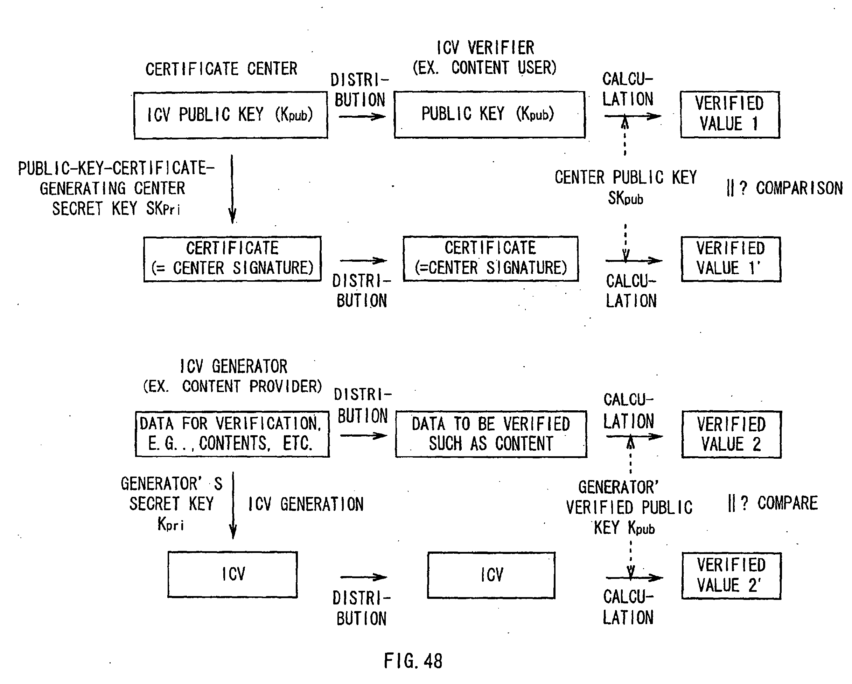

In Fig. 48, the ICV creator who is the content provider or manager generates ICVs using a digital signature of a public key cryptosystem, then provides the generated ICVs to the content user, that is, the verifier together with the content, further stores a public key used by the verifier for verification, in a public key certificate (see, for example, Fig. 14), and then provides this key to the recording and reproducing device user, that is, the verifier. With a plurality of ICV creators, each creator has a key managing center create data (a public key certificate) for certifying the validity of the public key.

The content user who is the ICV verifier has a public key of the key managing center. The verifier verifies the public key certificate using the public key of the key managing center, and takes out the public key of the ICV creator stored in the public key certificate if its validity has been ascertained. The verifier further verifies the ICVs using the taken-out public key of the ICV creator.

This method is an aspect useful if a plurality of ICV creators are present and if a center for managing these creators has an established management system.

(12) Configuration for Generating Cryptography Process Keys Based on Master Keys

A configuration for generating various cryptography process keys based on the master keys, which configuration is characteristic of the present data processing system, will be described below.

As previously described with reference to Fig. 18, the internal memory of the recording and reproducing device 300 in the present data processing apparatus stores the various master keys, each of which is used, for example, to generate the authentication key Kate (see Equation 3) or the distribution key Kdis (see Equation 4).

When cryptography communication, mutual authentication, MAC generation, verification, or the like is carried out between two entities, that is, the content provider and the content provider, or the recording and reproducing device 300 and the recording device 400 in the present data processing apparatus, these entities conventionally hold secret information common to them, for example, key information. Additionally, when the above process is carried out between one and many entities, for example, one content provider and many content users, or one recording and reproducing device and many recording media, these entities conventionally store and hold secret information common to all the entities, that is, secret information common to many content users or many recording media, or one content provider individually manages and uses secret information (ex. key) for each of many content users.

With the one-to-many relationship as described above, however, the configuration owning secret information (key) shared by all the entities is disadvantageous in that leakage of the secret from one entity affects all the other entities using the same secret information (ex. key). In addition, when one manager, for example, a content provider individually manages and uses secret information for each content user, a list is required which serves to identify all the users and which associates this identification data with unique secret information (ex. keys), thereby advantageously increasing list maintaining and managing burdens in proportion to the number of users.

The data processing apparatus according to the present invention has solved such a conventional problem with the sharing of secret information between entities using a configuration for holding the master keys and generating various individual keys therefrom. This configuration will be described below.

In the data processing apparatus according to the present invention, if different individual keys are required for various cryptography processes, authentication processes, and the like between recording devices, media storing contents, or recording and reproducing devices, these individual keys are generated using individual information such as identifier data (ID) unique to the devices or media and an individual-key generating method previously determined in the recording and reproducing device 300. With this configuration, if any individual key generated should be identified, damage to the entire system can be precluded by preventing the corresponding master key from leaking. In addition, the configuration for generating the keys from the master keys eliminates the needs for the association list.

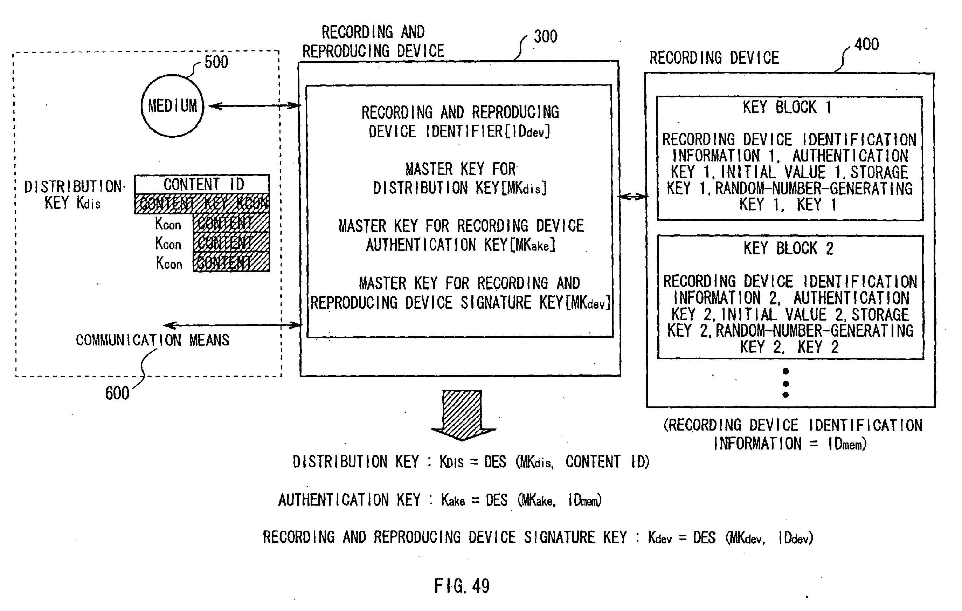

A specific example of configuration will be described with reference to the drawings. Fig. 49 is a view useful in explaining the configuration for generating various keys using the various master keys held by the recording and reproducing device 300. The medium 500 and the communication means 600 in Fig. 49 input contents as in the already described embodiments. The content is encrypted by the content key Kcon, which is in turn encrypted by the distribution key Kdis.

For example, if the recording and reproducing device 300 attempts to take a content out from the medium 500 or the communication means 600 and download it to the recording device 400, the recording and reproducing device 300 must obtain the distribution key Kdis that has encrypted the content key as previously described in Figs. 2 and 39 to 41. Although the key Kdis can be directly obtained from the medium 500 or the communication means 600 or the recording and reproducing device 300 can obtain and store it in its memory beforehand, the configuration for distributing such a key to many users may be subjected to leakage, which may affect the entire system, as described above.

The data processing system according to the present invention is configured to generate the distribution key Kdis by applying a master key MKdis for the distribution key stored in the memory of the recording and reproducing device 300 as well as a process based on the content ID, that is, Kdis = DES (MKdis, content ID), as shown in the lower part of Fig. 49. In a content distributing configuration between a content provider providing contents from the medium 500 or the communication means 600 and the recording and reproducing device 300, which is a content user, despite a large number of content providers, this configuration enables advanced security to be maintained without the need to distribute the individual distribution keys Kdis via the medium, the communication means, or the like or to store them in each recording and reproducing device 300.

Next, the generation of the authentication key Kakae will be explained. In downloading a content from the recording and reproducing device 300 to the recording medium 400 as previously described in Figs. 22 and 39 to 41 or causing the recording and reproducing device 300 to execute and reproduce a content stored in the recording medium 400 as described in Figs. 42 to 45, the recording and reproducing device 300 and the recording medium 400 must execute the mutual authentication process (see Fig. 20).

As described in Fig. 20, this authentication process requires the recording and reproducing device 300 to have the authentication key Kake. Although the recording and reproducing device 300 can obtain the authentication key directly from, for example, the recording medium 400 or can obtain and store it in its memory beforehand, the configuration for distributing such a key to many users may be subjected to leakage, which may affect the entire system, as in the above described configuration for the distribution key.

The data processing system according to the present invention is configured to obtain the authentication key Kake by applying a master key MKake for the distribution key stored in the memory of the recording and reproducing device 300 as well as a process based on the recording device ID: IDmem, that is, Kake = DES (MKake, IDmem), as shown in the lower part of Fig. 49.

Further, in downloading a content from the recording and reproducing device 300 to the recording medium 400 as previously described in Figs. 22 and 39 to 41 or causing the recording and reproducing device 300 to execute and reproduce a content stored in the recording medium 400 as'described in Fig. 28, Figs. 42 to 45, a configuration similar to that for the distribution or authentication key described above can be used for the recording and reproducing device signature key Kdev required to generate the integrity check value ICVdev unique to the recording and reproducing device if the content can be used only by a particular recording and reproducing device. In the above described embodiments, the recording and reproducing device signature key Kdev is stored in the internal memory, but if the master key Mkdev for the recording and reproducing device signature key is stored in the memory whereas the recording and reproducing device signature key Kdev is not stored therein and if the recording and reproducing device signature key Kdev is obtained by means of Kdes = DES (MKdev, IDdev) based on the recording and reproducing device identifier: IDdev and the master key MKdev for the recording and reproducing device signature key, as required, as shown in the lower part of Fig. 49, then it advantageously becomes unnecessary for each apparatus to have the recording and reproducing device signature key Kdev.

In this manner, the data processing apparatus according to the present invention is configured to sequentially generate from the master keys and each ID, information such as a key which is required for the cryptography information process between two entities such as the provider and the recording and reproducing device or the recording and reproducing device and the recording device. Consequently, even if the key information leaks from each entity, the range of damage incurred by the individual keys is further limited, and it also becomes unnecessary to manage key lists for the individual entities as described above.

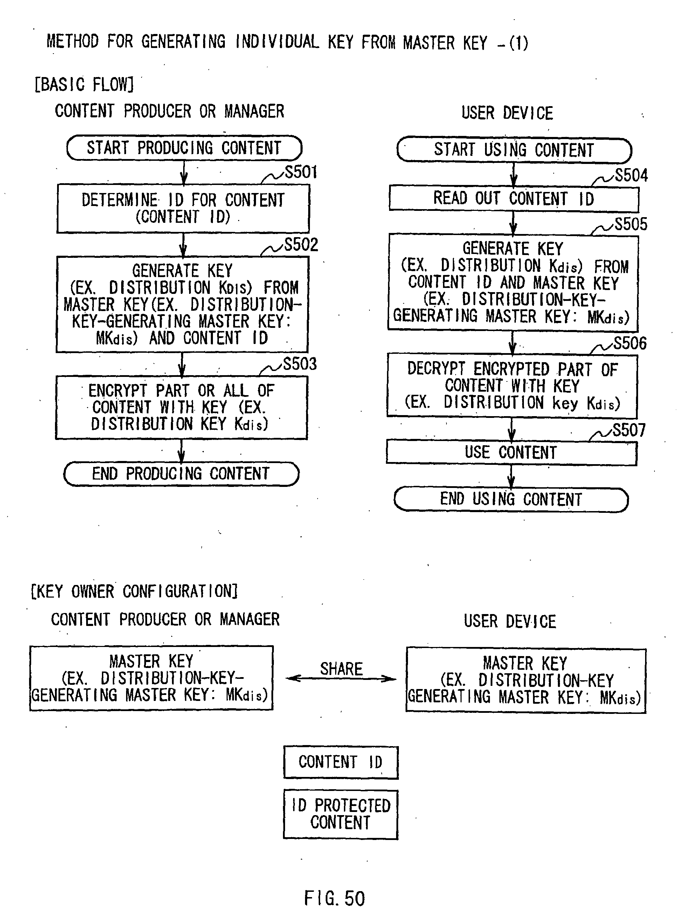

A plurality of examples of processes relating to this configuration will be explained by showing a flow. Fig. 50 shows examples of a process executed by the content producer or manager to decrypt a content or the like using a master key and a process executed by a user device, for example, the recording and reproducing device 300 in the above described embodiment to decrypt the encrypted data using the master key.

At step S501, a content producer or manager imparts an identifier (content identifier) to a content. At step S502, the content producer or manager generates a key for encrypting a content or the like based on its owned master key and a content ID. At this step, if the distribution key Kdis is to be generated, it is generated based on the above described Kdis = DES (MKdis, medium ID). Then at step S503, the content producer or manager uses a key (for example, the distribution key Kdis) to encrypt part or all of the content stored in the medium. The content producer supplies the content encrypted through these steps, via the medium such as a DVD, the communication means, or the like.

On the other hand, at step S504, a user device such as the recording and reproducing device 300 reads the content ID from the content data received via the medium such as a DVD, the communication means, or the like. Then at step S505, the user device generates a key applied to decryption of the encrypted content based on the read-out medium ID and its owned master key. If the distribution key Kdis is to be obtained, this generation process corresponds to, for example, the distribution key Kdis = DES (MKdis, medium ID). At step S506, the user device uses this key to decrypt the content, and at step S507, uses, that is, reproduces the decrypted content or execute the program.

In this example, as shown in the lower part of Fig. 50, both the content producer or manager and the user device have the master key (for example, the distribution-key-generating master key MKdis) to sequentially generate the distribution key required to encrypt or decrypt the content based on their owned master key and each ID (medium ID).

With this system, if the distribution key leaks to a third person, the third person can decrypt that content, but contents stored in other media with different content IDs can be prevented from decryption, thereby minimizing the adverse effects of the leakage of one content key on the entire system. Additionally, this system does not require the user device, that is, the recording and reproducing device to hold a key associating list for each medium.

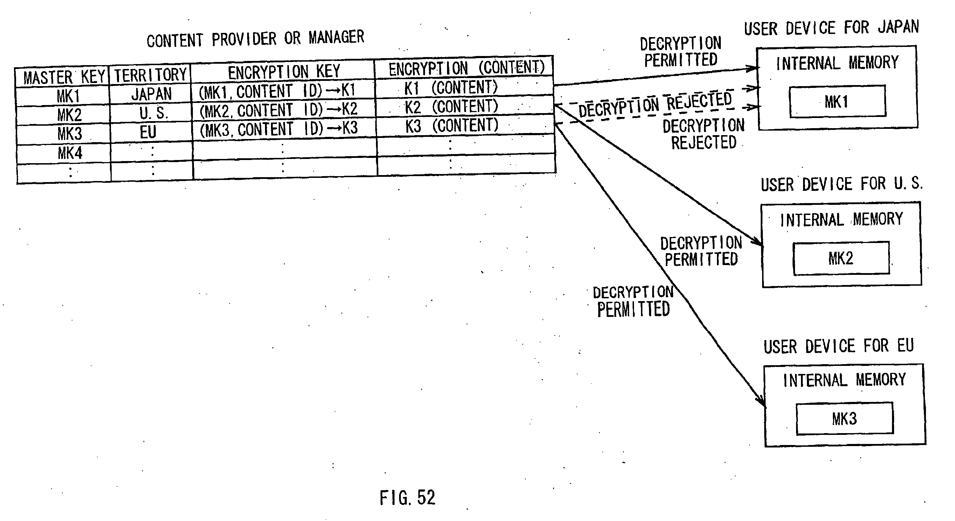

An example where the content producer or manager holds a plurality of master keys to execute a process depending on a content distribution destination with reference to Fig. 52.

Step S511 executed by the content producer or manager comprises imparting an identifier (content ID) to the content. Step S512 comprises selecting one of a plurality of master keys (for example, a plurality of distribution-key-generating master keys MKdis) held by the content producer or manager. Although described in further detail with reference to Fig. 52, this selection process comprises setting an applied master key beforehand for each of the countries to which content users belong, each apparatus type, or each apparatus version and executing the master keys in accordance with the settings.

Then at step S513, the content producer or manager generates an encryption key based on the master key selected at step S512 and the content ID determined at step S511. If, for example, the distribution key Kdis is to be generated, it is generated based on the above described Kdis = DES (MKdis, medium ID). Then at step S514, the content producer or manager uses a key (for example, the distribution key Kdisi) to encrypt part or all of the content stored in the medium. At step S515, the content producer distributes the encrypted content via the medium such as a DVD, the communication means, or the like, using a distribution unit comprising the content ID, the master-key-geherating information used, and the encrypted content.

On the other hand, at step S516, for example, the user device such as a recording and reproducing device 300 determines whether or not its holds the master key corresponding the master key ID in the content data distributed by the medium such as a DVD or by the communication means. If it does not have the master key corresponding to the master key ID in the content data, the distributed content cannot be used by this user device and the process is ended.

If the user device has the master key corresponding to the master key ID in the content data, then at step S517, it reads the content ID out from the content data received via the medium, the communication means, or the like. Then at step S518, the user device generates a key applied to decryption of the encrypted content based on the read-out content ID and its held master key. This process is a distribution-key Kdisi = DES (Mkdisi, contents ID) if it intends to get a distribution key Kdisi. At step S519 contents are decrypted by means of the key. At step S520 decrypted contents are used, that is, reproduction or program is performed.

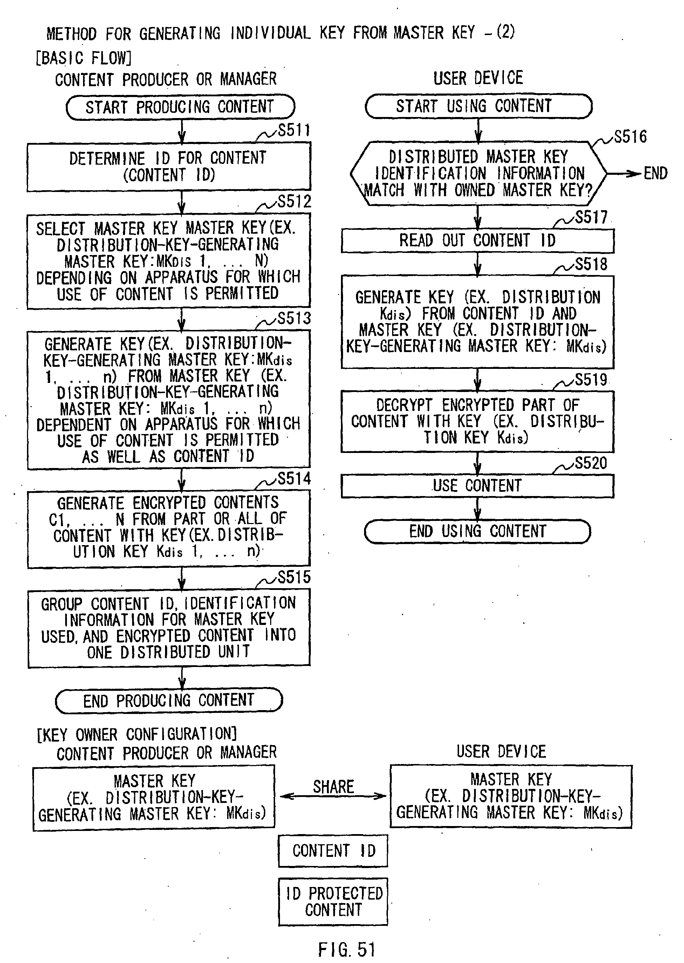

In this example, as shown in the lower part of Fig. 51, the content producer or manager has a master key set comprising a plurality of master keys, for example, distribution-key-generating master keys MKdis 1 to n. On the other hand, the user device has one master key, for example, one distribution-key-generating master key KKdisi so that it can decrypt the content only when the content producer or manager has used the key KKdisi for the encryption.

Fig. 52 shows an example where master keys varying depending on the country is applied, as a specific example of the aspect shown in the flow in Fig. 51. The content provider has master keys MK1 to n, of which the key MK1 is used to generate keys for encrypting contents distributed to user devices for Japan. For example, an encryption key K1 is generated from a content ID and the key MK1 and then user to encrypt a content. The master keys MK1 to n are further set such that the key MK2 is used to generate keys for encrypting contents distributed to user devices for the U.S., and the key MK3 is used to generate keys for encrypting contents distributed to user devices for the EU (Europe).

On the other hand, for user devices for Japan, specifically, recording and reproducing devices such as PCs or game apparatuses which are sold in Japan, the master key MK1 is stored in their internal memories, for user devices for the U.S., the master key MK2 is stored in their internal memories, and for user devices for the EU, the master key MK3 is stored in their internal memories.

With this configuration, the content provider selectively uses one of the master keys MK1 to n depending on user devices that can use a content, in order to encrypt the content to be distributed to the user devices. For example, to allow the content to be used only by the user devices for Japan, the master key K1 generated using the master key MK1 is used to encrypt the content. This encrypted content can be decrypted using the master key MK1 stored in the user devices for Japan, that is, allows a decryption key to be generated, whereas the key K1 cannot be obtained from the master keys MK2 and MK3 stored in the user devices for the U. S. and EU, respectively, thereby preventing the encrypted content from being decrypted.

In this manner, the content provider can selectively use a plurality of master keys to set localization for various contents. Fig. 52 shows an example where the different master keys are used for the different countries to which the user devices belong, but various use forms are possible; for example, the master key can be switched depending on the type of the user device or its version, as described above.

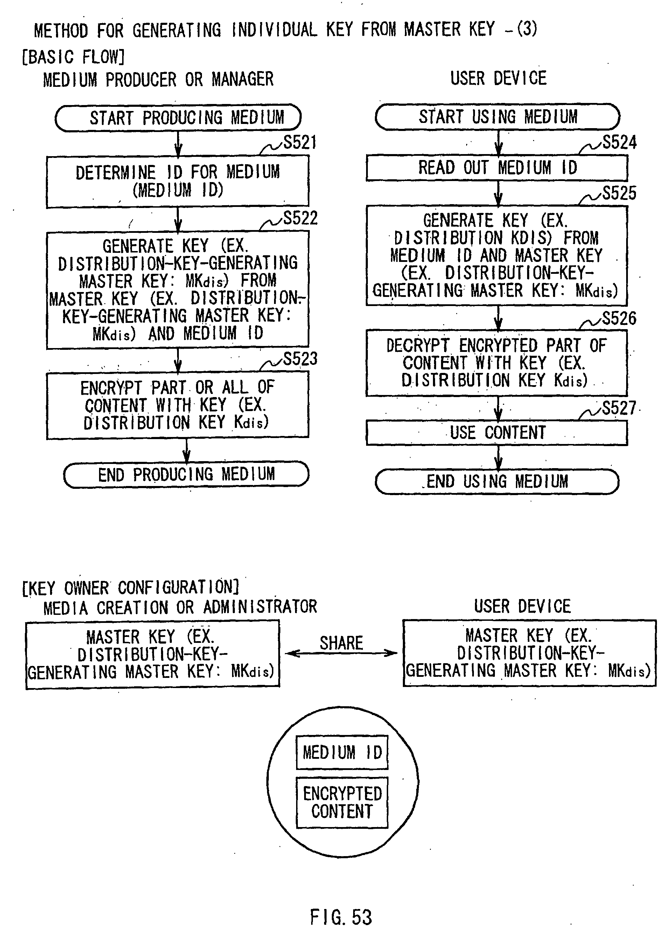

Next, Fig. 53 shows an example of a process where an identifier unique to a medium, that is, a medium ID and a master key are combined together. Here, the medium refers to, for example, DVDs or CDs in which contents are stored. The medium ID may be unique to individual media, the titles of contents such as movies, or individual medium manufacturing lots. In this manner, medium IDs may be assigned in various manners.

At step S52, a medium producer or manager determines an identifier (medium identifier) for a medium. At step S522, the medium producer or manager generates a key for encrypting a content stored in the medium based on its owned master key and a medium ID. At this step, if, for example, the distribution key Kdis is to be generated, it is generated based on the above described Kdis = DES (MKdis, medium ID). Then at step S523, the medium producer or manager uses a key (for example, the distribution key Kdis) to encrypt part or all of the content stored in the medium. The medium producer supplies the medium storing the content encrypted through these steps.

On the other hand, at step S524, a user device such as the recording and reproducing device 300 reads the medium ID from the supplied medium. Then at step S525, the user device generates a key applied to decryption of the encrypted content based on the read-out medium ID and its owned master key. If the distribution key Kdis is to be obtained, this generation process corresponds to, for example, the distribution key Kdis = DES (MKdis, medium ID). At step 5526, the user device uses this key to decrypt the content, and at step S527, uses, that is, reproduces the decrypted content or execute the program.

In this example, as shown in the lower part of Fig. 53, both the medium producer or manager and the user device have the master key (for example, the distribution-key-generating master key MKdis) to sequentially generate the distribution key required to encrypt or decrypt the content based on their owned master key and each ID (medium ID).

With this system, if any medium key leaks to a third person, the third person can decrypt the content in the medium, but contents stored in other media with different medium IDs can be prevented from decryption, thereby minimizing the adverse effects of the leakage of one medium key on the entire system. Additionally, this system does not require the user device, that is, the recording and reproducing device to hold a key associating list for each medium. Further, the size of a content encrypted with one medium key is limited to a capacity that can be stored within that medium, so that there is a slim possibility that the content reaches the amount of information required to attack the encrypted text, thereby reducing the possibility of decrypting the encrypted text.

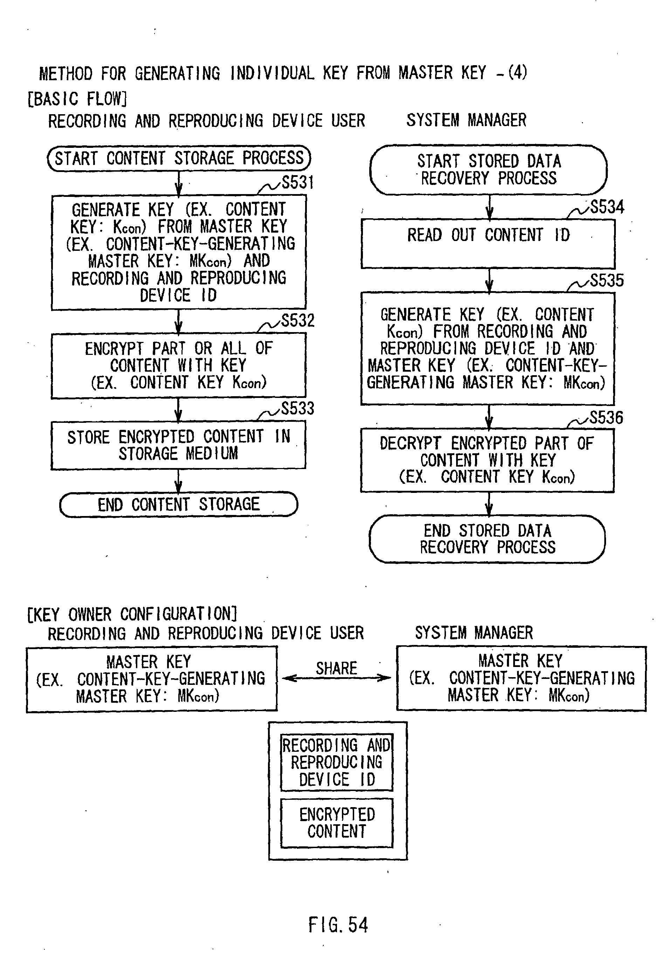

Next, Fig. 54 shows an example of a process where an identifier unique to the recording and reproducing device, that is, a recording and reproducing device ID and a master key are combined together.

At step S531, a recording and reproducing device user generates a key for encrypting a content or the like based on a master key and a recording and reproducing device ID stored, for example, in the internal memory of the recording and reproducing device. If, for example, the content key Kcon is to be obtained, this generation process corresponds to Kcon = DES (MKcon, recording and reproducing device ID). Then at step S532, the user uses a key (form example, the distribution key Kcon) to decrypt the content. At step S533, the user stores the encrypted content in the recording and reproducing device such as a hard disk.

On the other hand, when the recording and reproducing device user that has stored the content requests the stored data to be recovered, a system manager for managing the recording and reproducing device reads a recording and reproducing device ID from the recording and reproducing device. Then at step S535, the system manager generates a key applied to recovery of the encrypted content based on the read-out recording and reproducing device ID and its owned master key. If the content key Kcon is to be obtained, this generation process corresponds to, for example, the content key Kcon = DES (MKcon, recording and reproducing device ID). At step S536, the user device uses this key to decrypt the content.

In this example, as shown in the lower part of Fig. 54, both the recording and reproducing device user and the system manager have the master key (for example, the content-key-generating master key MKcon) to sequentially generate the distribution key required to encrypt or decrypt the content based on their owned master key and each ID (recording and reproducing device ID).

With this system, if the content key leaks to a third person, the third person can decrypt that content, but contents stored in other media with different recording and reproducing device IDs can be prevented from decryption, thereby minimizing the adverse effects of the leakage of one content key on the entire system. Additionally, this system does not require the system manager or the user device to hold a key associating list for each medium.

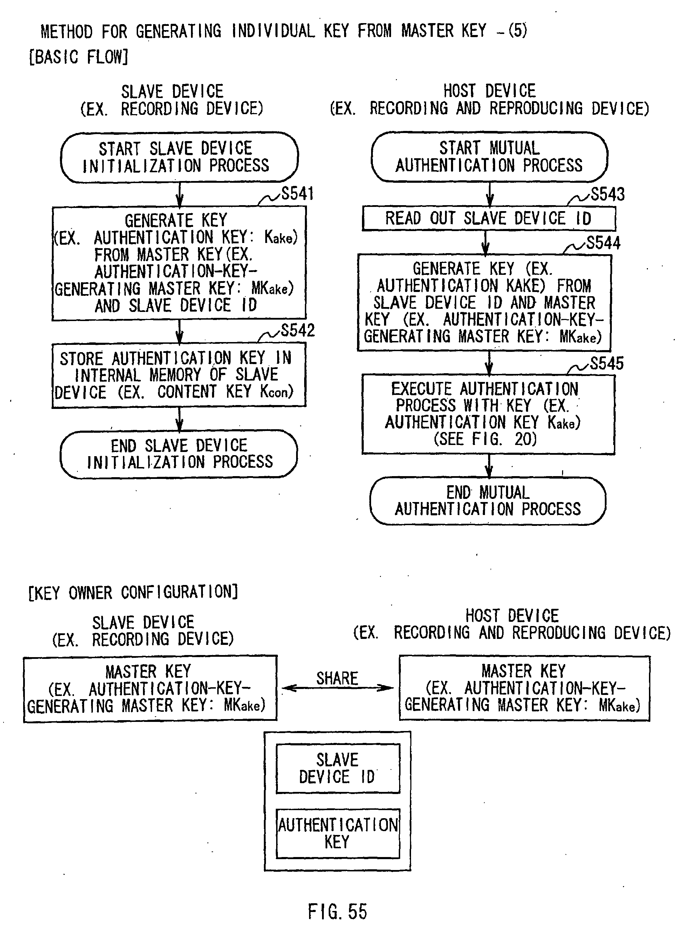

Fig. 55 shows a configuration wherein an authentication key used for a mutual authentication process between a slave device, for example, the recording and reproducing device such as a memory card and a host device, for example, the recording and reproducing device is generated based on a master key. Although in the previously described authentication process (see Fig. 20), the authentication key is stored in the internal memory of the slave device in advance, it can be generated during the authentication. process based on the master key as shown in Fig. 55.

For example, at step S541, the slave device that is the recording device generates, as an initialization process before starting the authentication process, the authentication key Kake for use in the mutual authentication process based on the master key and slave device ID stored in the internal memory of the slave device that is the recording device. The authentication key is generated based on Kake = DES (MKake, slave device ID). Then at step S542, the generated authentication key is stored in the memory.

On the other hand, at step S543, the host device such as the recording and reproducing device reads a slave device ID out from the installed recording device, that is, the slave device via the communication means. Then at step S544, the host device generates a authentication key applied to a mutual authentication process based on the read-out slave device ID and its owned authentication-key-generating master key. This generation process corresponds to, for example, the authentication key Kake = DES (MKake, slave device ID). At step S545, this authentication key is used to execute the authentication process.

In this example, as shown in the lower part of Fig. 55, both the slave device and the master device have the master key, that is, the authentication-key-generating master key MKake to sequentially generate the distribution key required for the authentication process based on their owned master key and the slave device ID.

With this system, if the authentication key leaks to a third person, this authentication key is effective only on the corresponding slave device and authentication is not established with other slave devices, thereby minimizing the adverse effects of the leakage of the key.

As described above, the data processing apparatus according to the present invention is configured so that the information such as the key which is required for the procedure for the cryptography information process between the two entities such as the content provider and the recording and reproducing device, or the recording and reproducing device and the recording device. Thus, even if the key information leaks from each entity, the range of damage incurred by the individual keys is further limited, and it also becomes unnecessary to manage key lists for the individual entities as described above.

(13) Control of Cryptography Intensity in Cryptography Process

In the above described embodiments, the cryptography process between the recording and reproducing device 300 and the recording device 400 is principally described in conjunction with the example using the cryptography process based on the single DES configuration described with reference to Fig. 7. The encryption process method applied to the present data processing apparatus is not limited to the above described Single DES, but any encryption method may be employed depending on a required security state.

For example, the Triple DES method configured as shown in the previously described Figs. 8 to 10 is applicable. For example, both the cryptography process section 302 of the recording and reproducing device 300 and the cryptography process section 401 of the recording device 400 shown in Fig. 3 can be configured so as to execute the Triple DES method so that a process can be executed which corresponds to the cryptography process based on the Triple DES method described in Figs. 8 to 10.

The content provider, however, may give top priority to processing speed dependent on the content to use a 64-bit content key Kcon based on the Single DES method, or gives top priority to security to use a 128- or 192-bit content key Kcon based on the Triple DES method. Accordingly, it is not preferable to configure the cryptography process section 302 of the recording and reproducing device 300 and the cryptography process section 401 of the recording device 400 so as to accommodate only one of the Triple and Single DES methods. Therefore, the cryptography process section 302 of the recording and reproducing device 300 and the cryptography process section 401 of the recording device 400 are desirably configured so as to accommodate both the Triple and Single DES methods.

However, to configure the cryptography process section 302 of the recording and reproducing device 300 and the cryptography process section 401 of the recording device 400 so as to execute both the Triple and Single DES methods, different circuits and logics must be configured for these cryptography process sections. For example, to allow the recording device 400 to execute a process corresponding to the Triple DES, a command set for the Triple DES must be stored in the command register shown in the above Fig. 29. This may complicate the process section configured in the recording device 400.

Thus, for the present data processing apparatus, a configuration is proposed wherein the logic of the cryptography process section 401 of the recording device 400 is configured to accommodate the Single DES, while executing a process corresponding to the Triple DES process to store data (keys, contents, or the like) encrypted based on the Triple DES method , in the external memory 402 of the recording device.

For example, in the example for the data format type 0 shown in Fig. 32, when content data are downloaded from the recording and reproducing device 300 to the recording device 400, the authentication process is executed at step S101 in the previously described Fig. 39 showing the flow of downloading data of the format type 0, and the session key Kses is generated. Further, at step S117, the cryptography process section 302 of the recording and reproducing device 300 encrypts the content key Kcon with the session key Kses and transmits the encrypted key to the recording device 400 via the communication means. At step S118, the cryptography process section 403 of the recording device 400, which has received the encrypted key, decrypts the content key Kcon with the session key Kses, further encrypts it with the storage key Kstr, and transmits the resulting key to the cryptography process section 302 of the recording and reproducing device 300. The recording and reproducing device 300 subsequently forms a data format (step S121) and transmits formatted data to the recording device 400, and the recording device 400 stores the received data in the external memory 402.

If the cryptography process executed by the cryptography process section 401 of the recording device 400 between steps S117 and S118 of the above process is configured to selectively execute either the Single or Triple DES method, the cryptography process section works whether the content provider provides content data using the content key Kcon in accordance with the Triple DES or the Single DES.

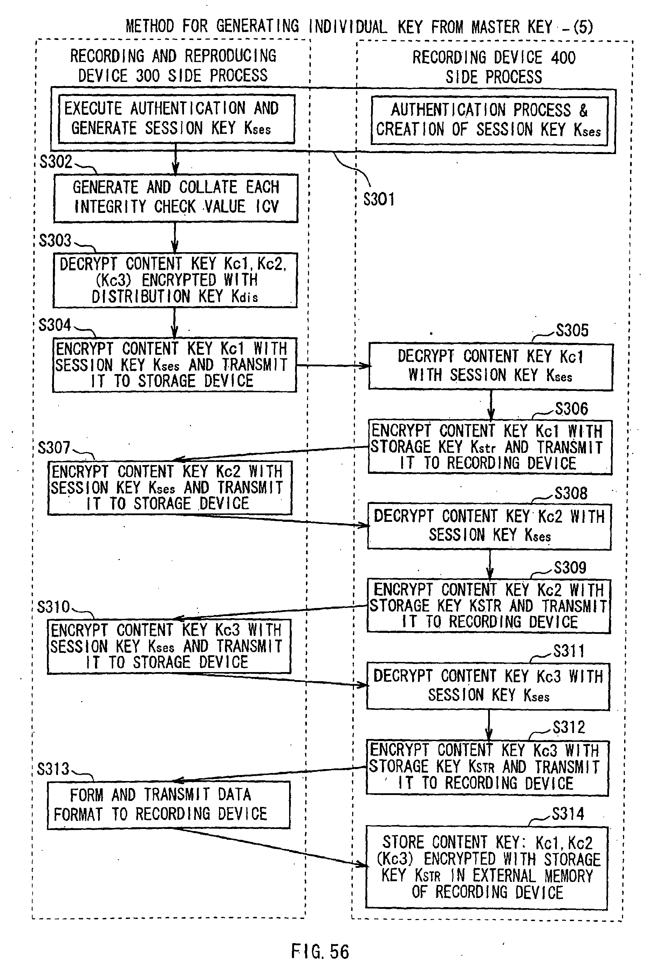

Fig. 56 shows a flow useful in explaining a configuration for executing the cryptography process method in accordance with the Triple DES method, using both the cryptography process section 302 of the recording and reproducing device 300 and the cryptography process section 401 of the recording device 400. Fig. 56 shows an example of a process for encrypting the content key Kcon with the storage key Kstr which process is executed in downloading content data from the recording and reproducing device 300 to the recording device 400, wherein the content key Kcon is based on the Triple DES method. Here, the example of the process for the content key Kcon is shown, but other keys or other data such as contents can be similarly processed.

The Triple DES method uses two or three keys in such a manner that a 64-bit key is used for the Single DES, while a 128- or 192-bit key is used for the Triple DES, as previously described in Figs. 8 to 10. These three content keys Kcon are referred to as Kcon1, Kcon2, and (Kcon3). The Kcon3 is shown in the parentheses because it may not be used.

The process in Fig. 56 will be explained. At step S301, the mutual authentication process is carried out between the recording and reproducing device 300 and the recording device 400. This mutual authentication process step is executed during the process in the previously described Fig. 20. During this authentication process, the session key Kses is generated.

Once the authentication process at step S301 has been completed, the integrity check values ICV including the integrity check values A and B, the content integrity check value, and the total integrity check value are collated.

When all the check values (ICV) have been collated and it has been determined that no data have been tampered, the process proceeds to step S303 where the control section 306 of the recording and reproducing device cryptography process section 302 of the recording and reproducing device 300 uses the encryption/decryption section 308 of the recording and reproducing device cryptography process section 302 as well as the previously obtained or generated distribution key Kdis, to decrypt the content Kcon stored in the header section of the data obtained from the medium 500 or received from the communication means 600 via the communication section 305. The content key in this case is a triple DES type key, such as content keys Kcon1, Kcon2, and (Kcon3).

Then at step S304, the control section 306 of the recording and reproducing device cryptography process section 302 causes the encryption/decryption section 308 of the recording and reproducing device cryptography process section 302 to encrypt only the content key Kcon1 of the content keys Kcon1, Kcon2, and (Kcon3) decrypted at step S303, using the session key Kses made sharable during the mutual authentication.

The control section 301 of the recording and reproducing device 300 reads data containing the content key Kcon1 encrypted with the session key Kses, out from the recording and reproducing device cryptography process section 302 of the recording and reproducing device 300. The control section 301 then transmits these data to the recording device 400 via the recording device controller 303 of the recording and reproducing device 300.

Then at step S305, on receiving the content key Kcon1 transmitted from the recording and reproducing device 300, the recording device 400 causes the encryption/decryption section 406 of the recording device cryptography process section 401 to decrypt the received content key Kcon1 using the session key Kses made sharable during the mutual authentication. Further at step S306, the recording device 400 causes the encryption/decryption section 406 to reencrypt the decrypted content key with the storage key Kstr unique to the recording device which is stored in the internal memory 405 of the recording device cryptography process, and then transmits the reencrypted key to the recording and reproducing device 300 via the communication section 404.

Then at step S307, the control section 306 of the recording and reproducing device cryptography process section 302 causes the encryption/decryption section 308 of the recording and reproducing device cryptography process section 302 to encrypt only the content key Kcon2 of the content keys Kcon1, Kcon2, and (Kcon3) decrypted at step S303, using the session key Kses made sharable during the mutual authentication.

The control section 301 of the recording and reproducing device 300 reads data containing the content key Kcon2 encrypted with the session key Kses, out from the recording and reproducing device cryptography process section 302 of the recording and reproducing device 300. The control section 301 then transmits these data to the recording device 400 via the recording device controller 303 of the recording and reproducing device 300.

Then at step S308, on receiving the content key Kcon2 transmitted from the recording and reproducing device 300, the recording device 400 causes the encryption/decryption section 406 of the recording device cryptography process section 401 to decrypt the received content key Kcon2 using the session key Kses made sharable during the mutual authentication. Further at step S309, the recording device 400 causes the encryption/decryption section 406 to reencrypt the decrypted content key with the storage key Kstr unique to the recording device which is stored in the internal memory 405 of the recording device cryptography process section 401, and then transmits the reencrypted key to the recording and reproducing device 300 via the communication section 404.

Then at step S310, the control section 306 of the recording and reproducing device cryptography process section 302 causes the encryption/decryption section 308 of the recording and reproducing device cryptography process section 302 to encrypt only the content key Kcon3 of the content keys Kcon1, Kcon2, and (Kcon3) decrypted at step S303, using the session key Kses made sharable during the mutual authentication.

The control section 301 of the recording and reproducing device 300 reads data containing the content key Kcon3 encrypted with the session key Kses, out from the recording and reproducing device cryptography process section 302 of the recording and reproducing device 300. The control section 301 then transmits these data to the recording device 400 via the recording device controller 303 of the recording and reproducing device 300.

Then at step S311, on receiving the content key Kcon3 transmitted from the recording and reproducing device 300, the recording device 400 causes the encryption/decryption section 406 of the recording device cryptography process section 401 to decrypt the received content key Kcon3 using the session key Kses made sharable during the mutual authentication. Further at step S312, the recording device 400 causes the encryption/decryption section 406 to reencrypt the decrypted content key with the storage key Kstr unique to the recording device which is stored in the internal memory 405 of the recording device cryptography process, and then transmits the reencrypted key to the recording and reproducing device 300 via the communication section 404.

Then at step S313, the cryptography process section of the recording and reproducing device forms the various data formats described in Figs. 32 to 35 and transmits them to the recording device 400.

Finally, at step S314, the recording device 400 stores the received formatted data in the external memory 402. These format data contain the content keys Kcon1, Kcon2, and (Kcon3) encrypted with the storage key Kstr.

This process enables the content keys stored in the recording device 400 to be stored as keys based on the Triple DES cryptosystem. If only two content keys Kcon1 and Kcon2 are used, the processing from steps S310 to S312 is omitted.

As described above, the recording device 400 can store the keys with the Triple DES applied thereto in the memory by repeating processing of the same aspect, that is, the process steps at steps S305 and S306 plural times with only the target changed. If the Single DES is applied to the content keys Kcon, step S305 and S306 may be executed to carry out the formatting process at step S313 before storing the keys in the memory. Such a configuration may store commands for executing the processing at steps S305 and S306 in the command register in the previously described Fig. 29 and execute this processing one to three times depending on the aspect of the key, that is, whether the key is based on the Triple or Single DES method. Accordingly, the processes based on both the Triple and Single DES methods can be executed without containing the Triple DES process method in the process logic of the recording device 400. In this regard, the cryptosystem may be recorded in the usage policy in the header section of the content data so as to be determined by referencing the usage policy.

(14) Program Activation Process Based on Activation Priority in Usage Policy in Content Data

As understood from the content data configurations in the previously described Figs. 4 to 6, the usage policy stored in the header section of the content data used in the present data processing apparatus contains the content type and the activation priority. With a plurality of accessible content data recorded in various recording media such as the recording device 400, a DVD, a CD, a hard disk, or a game cartridge, the recording and reproducing device 300 in the present data processing apparatus determines the order in which these contents are activated, in accordance with the activation priority.

The recording and reproducing device 300 executes the mutual authentication with various recording devices such as each recording device DVD device, CD drive device, and hard disk drive device and then executes the program in the content data with the top priority in accordance with the priority in the content data. The "Program Activation Process Based on Activation Priority in Usage Policy in Content Data" will be explained below.

The above description of the present data processing apparatus focuses on the process executed if the recording and reproducing device 300 reproduces and executes content data from the one recording device 400. However, the recording and reproducing device 300 is generally configured so as to access, in addition to the recording device 400,a DVD, a CD, and a hard disk via the read section 304 as well as recording media such as a memory card and a game cartridge which are connected via the PIO111 or SIO112. In Fig. 2, only one read section 304 is described in order to avoid complicating the drawing, the recording and reproducing device 300 can have different recording media, for example, a DVD, a CD, a floppy disk, and a hard disk installed therein in parallel.

The recording and reproducing device 300 can access a plurality of recording media, each of which store content data. Content data supplied by an external content provider such as a CD are stored in the medium in the data configuration shown in the previously described Fig. 4 or in each recording medium such as a memory card in the content data configuration shown in Figs. 26 or 27 if the data are taken out from the medium or downloaded via the communication means. Furthermore, specifically, the content data are stored on the medium and the recording device in different formats depending on the format type thereof, as shown in Figs. 32 to 35. In either case, the usage policy in the header of the content data contains the content type and the activation priority.

A process executed by the recording and reproducing device to activate a content if a plurality of content data are accessible will be explained in accordance with the flow.

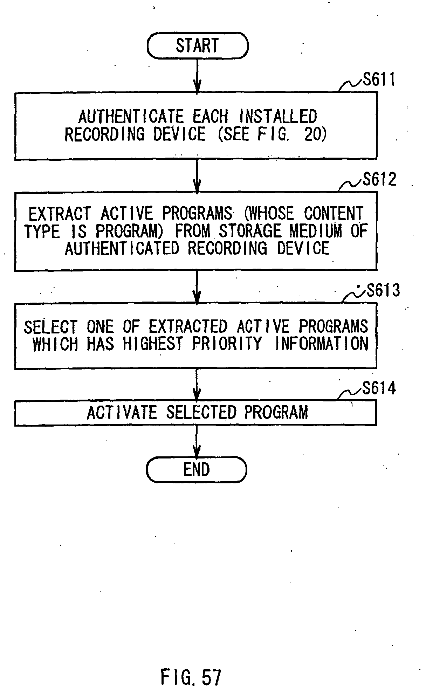

Fig. 57 shows a process flow showing an example (1) of a process where there a plurality of contents that can be activated. At step S611, recording devices that are accessible to the recording and reproducing device 300 are authenticated. The accessible recording devices include a memory card, a DVD device, a CD drive, a hard disc device, and a game cartridge or the like which is connected, for example, via the PIO111 or SIO112. Each recording device is authenticated under the control of the control section 301 shown in Fig. 2, for example, in accordance with the procedure previously explained in Fig. 20.

Next, at step S612, programs that can be activated are detected from the content data stored in the memory of the successfully authenticated recording device. Specifically, this is executed as a process of extracting contents for which the content type contained in the usage policy of the content data indicates a program.

Then at step S613, the priority of the program that can be activated and which has been extracted at step S612 is determined. Specifically, this corresponds to a process of comparing the priorities contained in the usage policies in the headers of the plurality of content data that can be activated in step S612, to select the top priority.

Then at step S614, the selected program is activated. If the plurality of programs that can be activated have the same priority, default priorities are set for the recording devices so that the content program stored in the device with the top priority is executed.

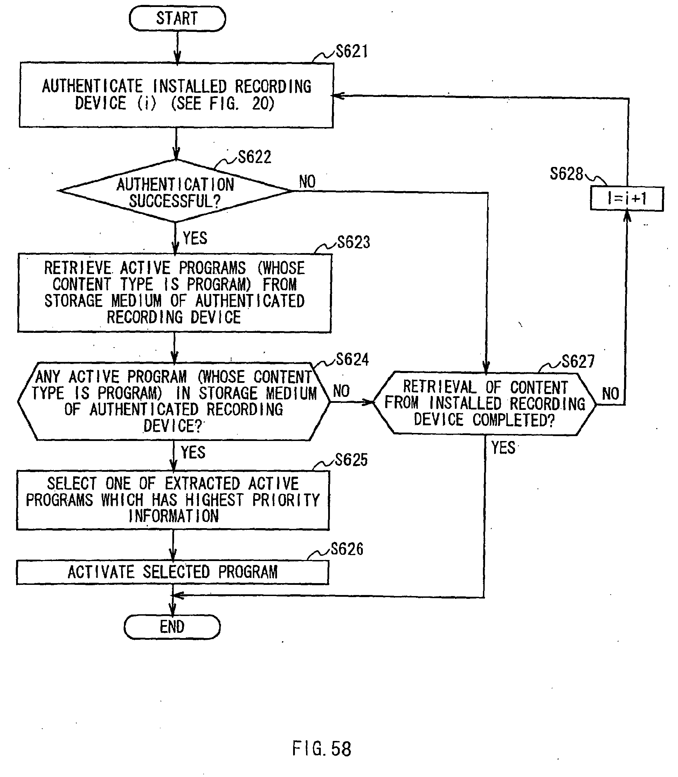

Fig. 58 shows an example (2) of a process where identifiers are set for a plurality of recording devices so that the authentication and the retrieval of a content program are sequentially executed for the recording devices with the identifiers, that is, a process for a plurality of contents that can be activated.

At step S621, recording devices (i) installed in the recording and reproducing device 300 are authenticated. A plurality of (n) recording device 400 are sequentially imparted with identifiers 1 to n.

At step S622, it is determined whether or not the authentication at step S621 has been successful, and if so, the process proceeds to step S623 where programs that can be activated are retrieved from the recording media of the recording devices (i). If the authentication has failed, the process proceeds to step S627 where it is determined whether or not there is a new recording device from which a content can be retrieved. Without such a recording device, the process is ended, and otherwise the process advances to step S628 to update the recording device identifier i and repeat step S621 and the subsequent authentication process steps.

At step S623, programs that can be activated are detected from the content data stored in the recording devices (i). Specifically, this is executed as a process of extracting contents for which the content type contained in the usage policy of the content data indicates a program.

At step S624, it is determined whether or not the contents of which the content type is a program have been extracted. If such contents have been extracted, one of the extracted programs which has the top priority is selected at step S626, and the selected program is executed at step S626.

If it is determined at step S624 that no content of which the content type is a program has been extracted, the process proceeds to step S627 to determine whether or not there is a new recording device from which a content can be retrieved. Without such a recording device, the process is ended, and otherwise, the process proceeds to step S628 to update the recording device identifier i and repeat step S621 and the subsequent authentication process steps.

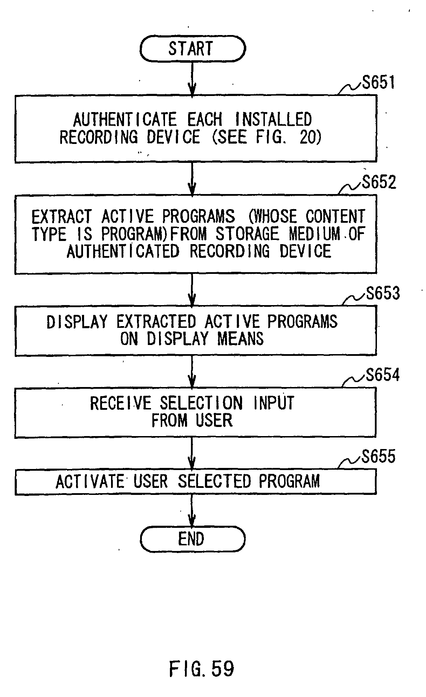

Fig. 59 shows a process flow showing an example of a process for a plurality of contents that can be activated. At step S651, recording devices that are accessible to the recording and reproducing device 300 are authenticated. Accessible DVD device, CD drive, hard disc device, and game cartridge or the like are authenticated. Each recording device is authenticated under the control of the control section 301 shown in Fig. 2, for example, in accordance with the procedure previously explained in Fig. 20.

Next, at step S652, programs that can be activated are detected from the content data stored in the memory of the successfully authenticated recording device. Specifically, this is executed as a process of extracting contents for which the content type contained in the usage policy of the content data indicates a program.

Then at step S653, information such as the name of the program that can be activated and which has been extracted at step S652 is displayed on a display means. Although the display means is not shown in Fig. 2, AV output data are output to the display means (not shown). User provided information such as a program name for each content data is stored in the content ID of the content data so that program information such as a program name for each authenticated content data is output to the output means via the control section 301 under the control of the main CPU 106 shown in Fig. 2.

Then at step S654, the main CPU 106 receives the user's program selection input from the input means such as the input interface, controller, mouse, or keyboard shown in Fig. 2 via the interface 110, and at step S655, executes the user selected program in accordance with the selection input.

As described above, in the data processing apparatus according to the present invention, the program activation priority is stored in the usage policy in the header of the content data so that the recording and reproducing device 300 activates programs in accordance with this priority or the display means displays activated program information from which the user selects a desired program. This configuration eliminates the need for the user to retrieve programs to save the amount of time and labor required for the activation. Additionally, the programs that can be activated are activated after all the recording devices have been authenticated or are shown to be such programs, thereby eliminating the complicatedness of the process such as the need to validate a program after selection.

(15) Content Configuring and Reproducing (Decompressing) Process

In the data processing apparatus according to the present invention, the recording and reproducing device 300 downloads a content from the medium 500 or the communication means 600 or reproduces data from the recording device 400, as described above. The above description focuses on the processing of encrypted data associated with the downloading or reproduction of a content.

The control section 301 of the recording and reproducing device 300 in Fig. 3 generally controls the authentication, encryption, and decryption processes associated with the downloading or reproduction of content data from the device 500 such as a DVD which provides content data, the communication means 600, or the recording device.

Reproducible contents resulting from these processes are, for example, sound or image data or the like. Decrypted data from the control section 301 are placed under the control of the main CPU shown in Fig. 2 and output to the AV output section depending on the sound or image data or like. If, however, the content is, for example, sound data that have been MP3-compressed, an MP3 decoder in the AV output section shown in Fig. 2 decrypts and outputs the sound data. In addition, if the content data are images that have been MPEG2-compressed, an MP2 decoder in the AV output section decompresses and outputs the image data. In this manner, the data contained in the content data may have or have not been compressed (encoded), and are output after being processed depending on the content.

However, due to various types of compression and decompression process programs, even if the content provider provides compressed data, these data cannot be reproduced without a corresponding decompression process executing program.

Thus, the present invention discloses a data processing apparatus wherein compressed data and a decryption (decompression) process program therefor are stored in a data content or link information for the compressed data and the decryption (decompression) process program therefor is stored as header information in the content data.

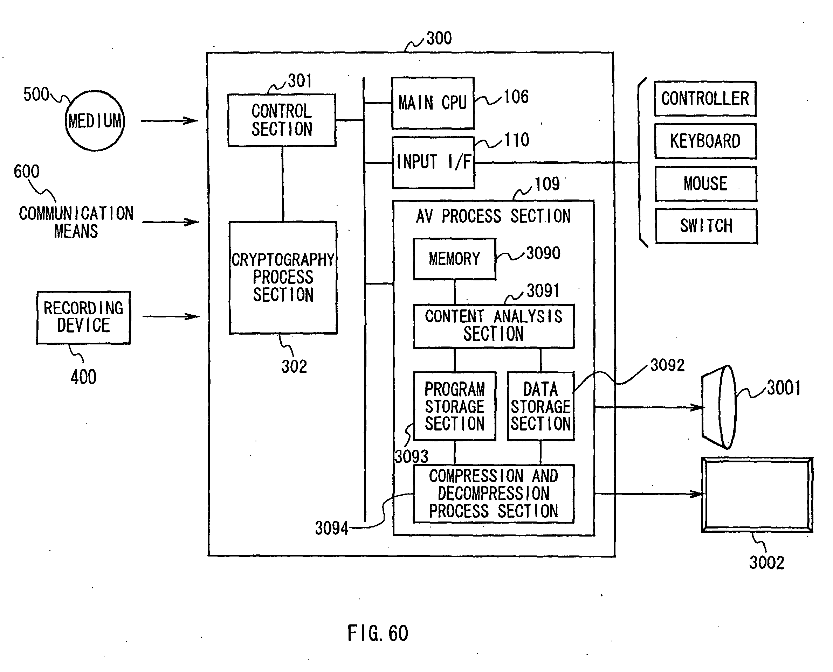

Fig. 60 is a view obtained by simplifying elements from the general view of data processing shown in Fig. 2 which relate to this configuration. The recording and reproducing device 300 receives various contents from the device 500 such as a DVD or a CD, the communication means 600, or the recording device 400 such as a memory card which stores contents. These contents include various data such as sound data, still images, animated image data, and program data which have or have not been encrypted or compressed.

If the received content has been encrypted, the decryption process is executed using a method such as that described above and based on the control of the control section 301 and the cryptography process by the cryptography process section 302. The decrypted data are transferred to the AV process section 109 under the control of the CPU 106, where the data are stored in a memory 3090 of the AV process section 109. Then, a content analysis section 3091 analyzes the configuration of the content. If, for example, a data decompressing program is stored in the content, it is stored in a program storage section 3093. If, the content contains sound or image data or the like, these data are stored in a data storage section 3092. A decompression process section 3094 uses a decompression process program such as MP3 which is stored in the program storage section, to decompress compressed data stored in the data storage section 3092. The data are then output to speakers 3001 or a monitor 3002.

Next, some examples of configurations of data received by the AV process section 109 via the control section 301 and of relevant processes will be explained. Here, sound data will be shown as an example of a content, and a content with the MP3 applied thereto will be described as a representative compression program. This configuration, however, is applicable to image data as well as sound data, and not only the MP3 decompression process program but also other various such programs for MPEG2 or MPEG4 can be applied thereto.

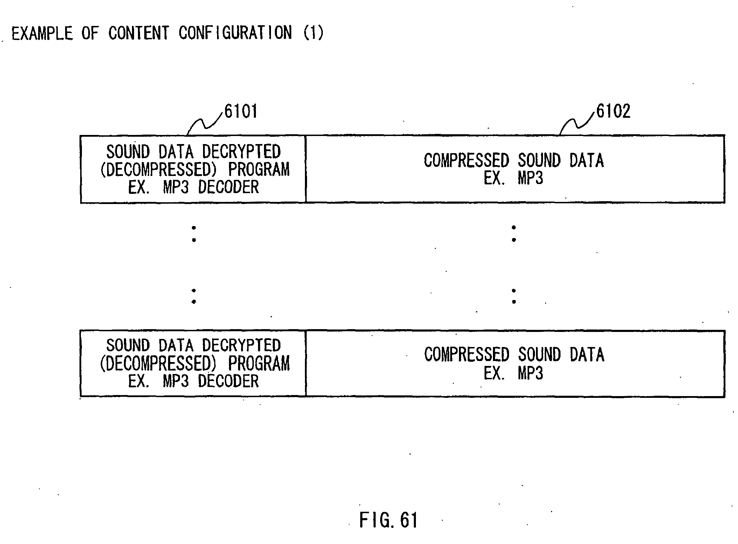

Fig. 61 shows an example of the configuration of a content. This figure shows music data 6102 compressed by means of the MP3 and a MP3 decryption (decompression) process program 6101, which are integrated together into one content. Such contents are each stored in the medium 500 or the recording device 400 and distributed from the communication means 600, as a single content. If these contents have been encrypted as previously described, the recording and reproducing device 300 uses the cryptography process section 303 to decrypt the content and then transfers it to the AV process section 109.

The content analysis section 3091 of the AV process section 109 analyzes the received content, takes a sound data decompression program (MP3 decoder) section out from the content, comprising a sound data decompression program (MP3 decoder) section and a compressed sound data section, and stores it in the program storage section 3093 while storing the compressed sound data in the data storage section 3092. The content analysis section 3091 may receive information such as a content name or content configuration information in addition to the content, or analyze the content based on identification data such as a data name or other data such as a data length or a data configuration which are all contained in the content. Then, a compression and decompression process section 3094 decompresses the MP3-compressed sound data stored in the data storage section 3092 in accordance with the sound data decompression program (MP3 decoder) stored in the program storage section 3093. The AV process section 109 then outputs the decompressed sound data to the speakers 3001.

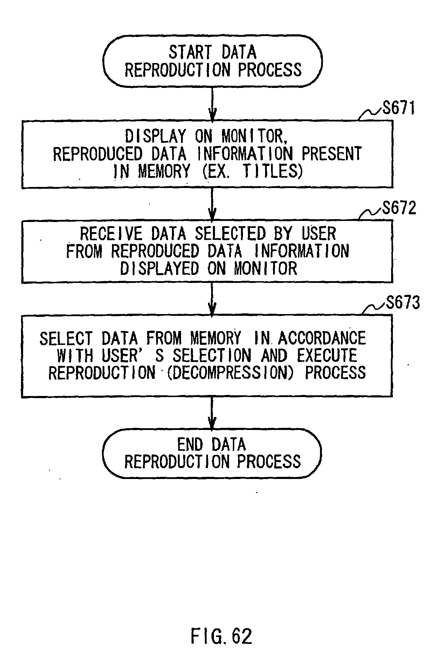

Fig. 62 shows a flow showing an example of a process for reproducing data of the content configuration in Fig. 61. At step S671, a data name stored in the memory 3090 of the AV process section 109, for example, information such as the title of music present if the content is sound data is taken out from the information received separately from the content or from data in the content, and is then displayed on the monitor 3002. At step S672, the user's selection is received from one of the various input means such as the switches and the keyboard via the input interface 110, and a reproduction process command based on user input data is then output to the AV process section 109 under the control of the CPU 106. At step S673, the AV process section 109 extract and decompress data selected by the user.

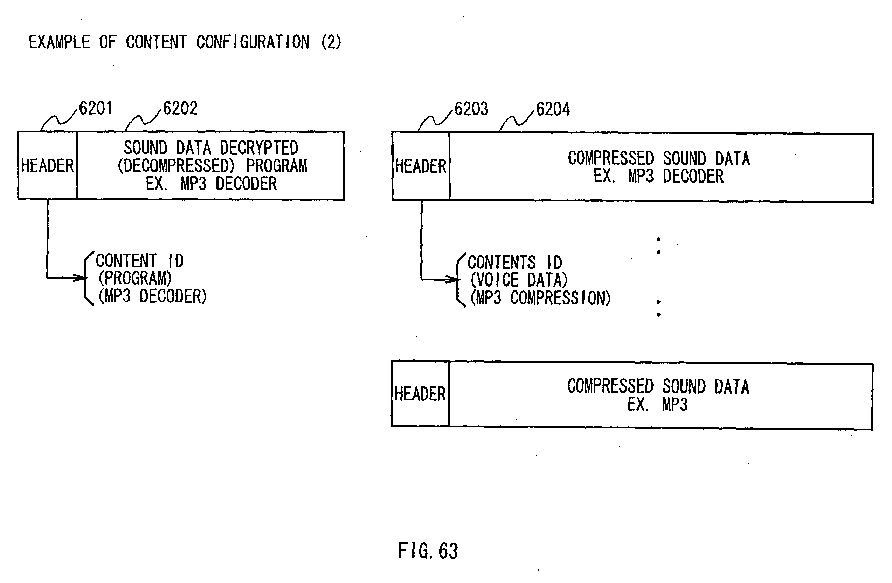

Next, Fig. 63 shows an example of a configuration wherein a content contains either the compressed sound data or the decompression process program and also contains content information indicating what the content contains, as header information for each content.

As shown in Fig. 63, if the content is a program 6202, the content contains as header information 6201 content identification information indicating that this is a program and that the type of program is to be MP3-decompressed. On the other hand, if sound data 6204 are contained as a content, the content information in the header 6203 indicates that the data have been MP3-compressed. This header information can be configured by selecting only information required for reproduction from the data contained in the usage policy (see Fig. 5) in the above described content data configuration shown, for example, in Fig. 4 and adding this information to the content transferred to the AV process section 109. Specifically, identification values for usage policy data required for the cryptography process section 302 and for data required for the AV process section 109 during the reproduction process are added to each constituent data of the "usage policy" shown in Fig. 5, and only data indicating that these identification values are required for the AV process section 109 are extracted as header information.

On receiving each content shown in Fig. 63, the content analysis section 3091 of the AV process section 109 stores, in accordance with the header information, a program content in the program storage section 3093 if the content is a program or in the data storage section 3092 if the content is data. Thereafter, the compression and decompression section 3094 takes the data out from the data storage section and decompresses them in accordance with the MP3 program stored in the program storage section 3093 before outputting the decompressed data. If the program storage section 3093 has the same program already stored therein, the program storage process may be omitted.

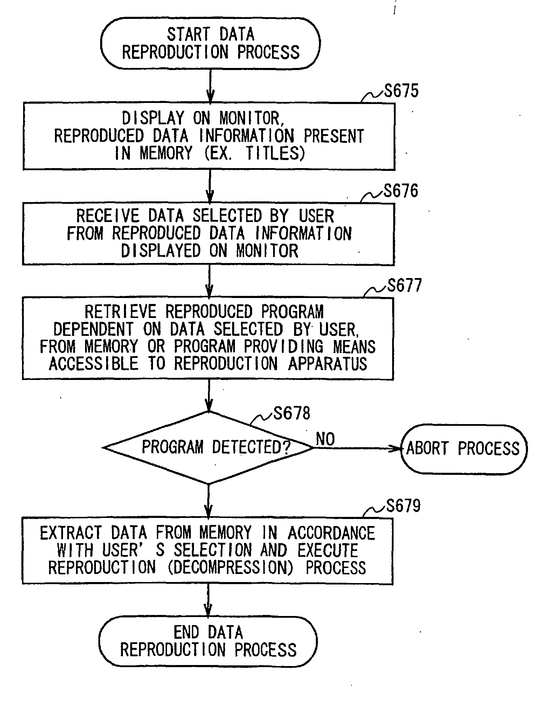

Fig. 64 shows a flow showing an example of process for reproducing data of the content configuration in Fig. 63. At step S675, a data name stored in the memory 3090 of the AV process section 109, for example, information such as the title of music present if the content is sound data is taken out from the information received separately from the content or from the header in the content, and is then displayed on the monitor 3002. At step S676, the user's selection is received from one of the various input means such as the switches and the keyboard via the input interface 110.

Then at step S677, a data reproducing program (for example, the MP3) corresponding to the user selection is retrieved. The maximum range of this program retrieval is preferably set as the possible access range of the recording and reproducing device 300, and for example, the media 500, communication means 600, and recording device 400 shown in Fig. 60 are included in the retrieval range.

Only the content passed to the AV process section 109 is the data section, while the program content may be stored in another recording medium in the recording and reproducing device 300 or provided by the content provider via the medium such as a DVD or a CD. Accordingly, the retrieval range is set as the possible access range of the recording and reproducing device 300. When a reproduction program is found as a result of the retrieval, a reproduction process command based on the user input data is output to the AV process section 109 under the control of the CPU 106. At step S679, the AV process section 109 extracts and decompress data depending on the user's selection. In another embodiment, the program retrieval is executed before step S675 so that only the data in which the program has been detected are displayed at step S675.

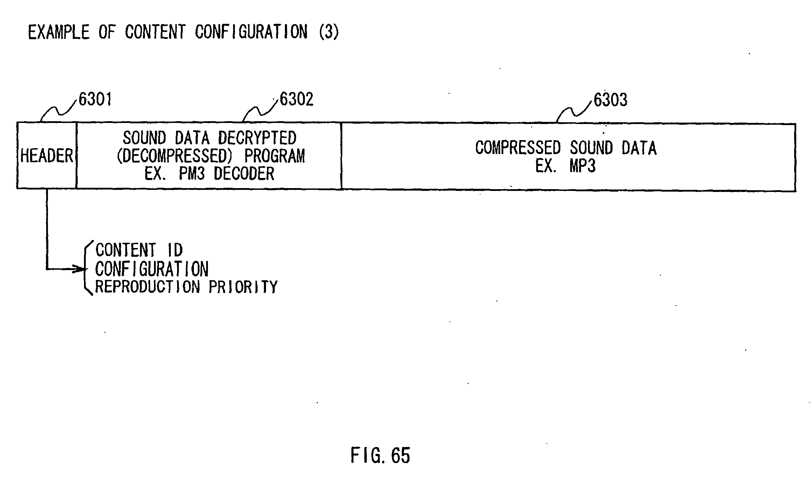

Next, Fig. 65 shows an example of a configuration wherein a content contains compressed sound data 6303 and decompressed process program 6302 and further contains a content reproduction priority as header information 6301 therefor. This is an example of the above content configuration in Fig. 61 with the reproduction priority added thereto as header information. As in the above described section "(14) Program Activating Process Based on Activation Priority in Usage Policy in Content Data", the order of reproduction is determined based on a reproduction priority set among contents received by the AV process section 109.

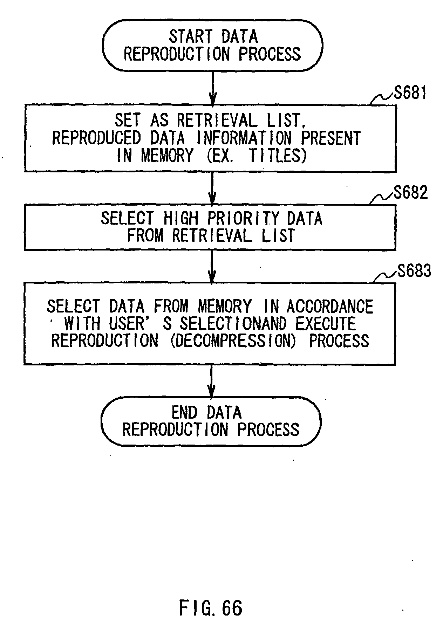

Fig. 66 shows a flow showing an example of a process for reproducing data of the content configuration in Fig. 65. At step S681, data stored in the memory 3090 of the AV process section 109, that is, data information for data to be reproduced is set in a retrieval list. The retrieval list is set using some areas of the memory in the AV process section 109. Then at step S682, the content analysis section 3091 of the AV process section 109 selects data of top priority, and at step S683, reproduces the selected data.

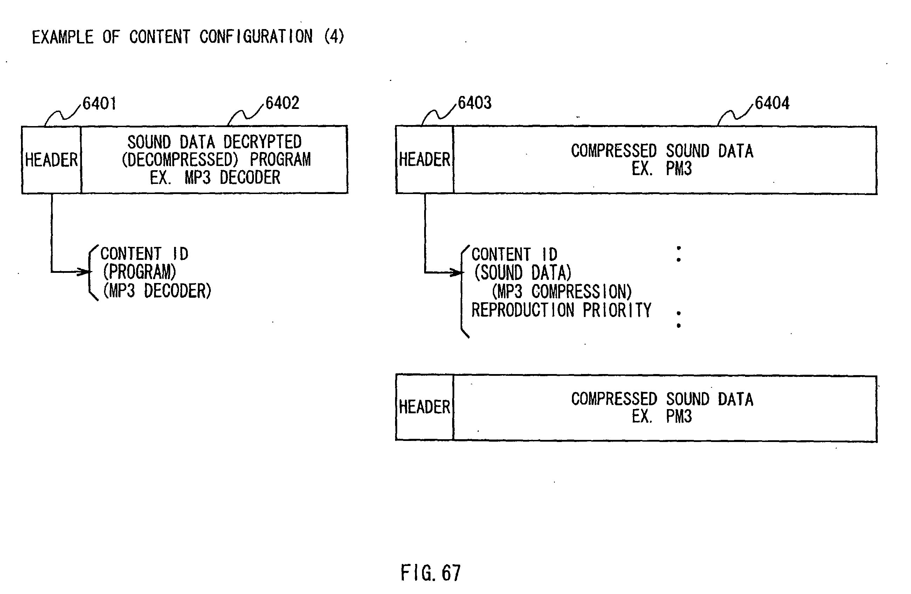

Next, Fig. 67 shows an example of a configuration wherein a content comprises a combination of header information and program data 6402 or header information 6403 and compressed data 6404 and wherein a reproduction priority is added only to the header 6403 of the data content.

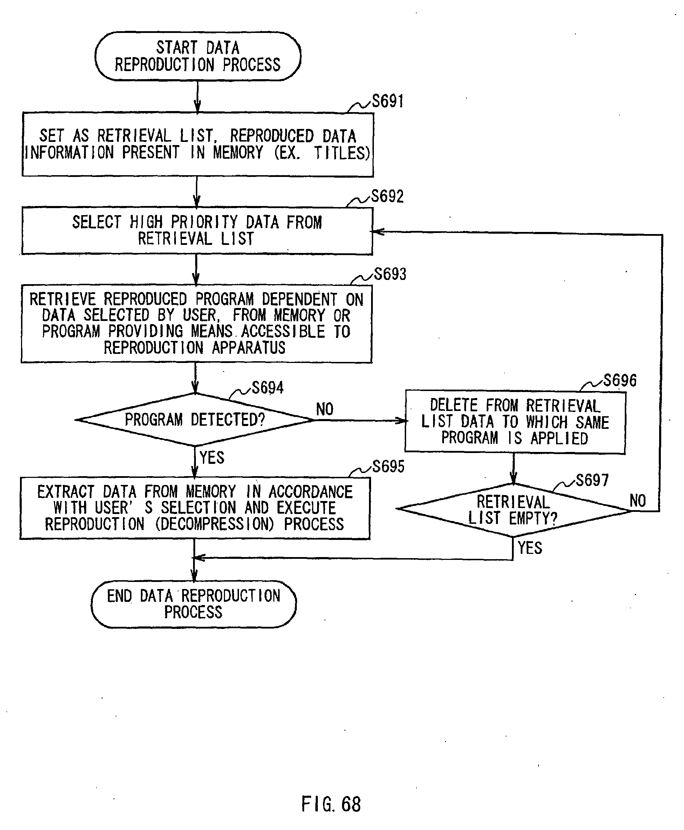

Fig. 68 shows a flow showing an example of a process for reproducing data of the content configuration in Fig. 67. At step S691, data stored in the memory 3090 of the AV process section 109, that is, data information for data to be reproduced is set in a retrieval list. The retrieval list is set using some areas of the memory in the AV process section 109. Then at step S692, the content analysis section 3091 of the AV process section 109 selects data of top priority.

Then at step S693, a data reproducing program (for example, the MP3) corresponding to the user selection is retrieved. As in the process in the flow in Fig. 64, the maximum range of this program retrieval is preferably set as the possible access range of the recording and reproducing device 300, and for example, the media 500, communication means 600, and recording device 400 shown in Fig. 60 are included in the retrieval range.

When a reproduction program is found as a result of the retrieval (Yes at step S694), the selected data are decompressed and reproduced using the program obtained as a result of the retrieval.

On the other hand, if no program is found as a result of the retrieval (Yes at step S694), the process proceeds to step S696 to delete those of the remaining data contained in the retrieval list set at step S691 that must be reproduced using the same program. This is because it is apparent that a new attempt to retrieve a reproduction program from these data fails. Furthermore, when it is determined whether or not the retrieval list is empty and if the list is determined not to be empty, the process returns to step S692 to extract data of the next highest priority to execute the program retrieving process.

Thus, according to this configuration, if the compressed content is constructed with its decryption (decompression) program or comprises only data obtained by compressing the content or only the decompression process program, since it has the header information indicating what compressed data the content is or what process the content executes, the process section (for example, the AV process section) receiving the content uses the decompression process program attached to the compressed data in order to execute the decompression and reproduction process or retrieves the decompression and reproduction program based on the header information in the compressed data to execute the decompression and reproduction process in accordance with the program obtained as a result of the retrieval. This eliminates the needs for processes executed by the user such as the selection and retrieval of the data decompressing program to reduce burdens on the user, thereby enabling efficient data reproduction. Moreover, the configuration having the reproduction priority in the header enables the reproduction order to be automatically set to allow the user to omit the operation of setting the reproduction order.

In the above described embodiments, the MP3 is taken as an example of a decompression process program for compressed sound data contents and sound compressed data, but this configuration is also applicable to contents containing compressed data or a decompression process program for compressed image data and provides similar effects in this case.

(16) Generation of Save Data and Storage and Reproduction of the Same in and from Recording Device

If, for example, the content executed in the recording and reproducing device 300 is a game program or the like and if the game program is to be resumed a predetermined period of time after suspension, the state of the game and the like at the time of the suspension are saved, that is, stored in the recording device so as to be read out on resumption to enable the game to be continued.

In conventional recording and reproducing devices for game apparatuses, personal computers, or the like, a save data preservation configuration is provided with such a configuration as to preserve save data in a recording medium such as a memory card, a floppy disk, a game cartridge, or a hard disk which can be built into the recording and reproducing device or externally attached thereto. In particular, however, these recording and reproducing devices have no configuration for maintaining the security of the save data and carry out the save process using, for example, specifications common to a game application program.

Thus, for example, save data saved using a recording and reproducing device A may be used or rewritten by another game program; little attention has been paid to the security of the save data.

The data processing apparatus according to the present invention provides a configuration that can maintain the security of save data. For example, save data for a certain game program are encrypted based on information used only by this game program before being stored in the recording device. Alternatively, the save data are encrypted based on information unique to the recording and reproducing device before being stored in the recording device. These methods enables the usage of the save data to be limited to particular apparatuses or programs to maintain the security of the data. "Generation of Save Data and Storage and Reproduction of the Same in and from Recording Device" in the present data processing apparatus will be explained below.

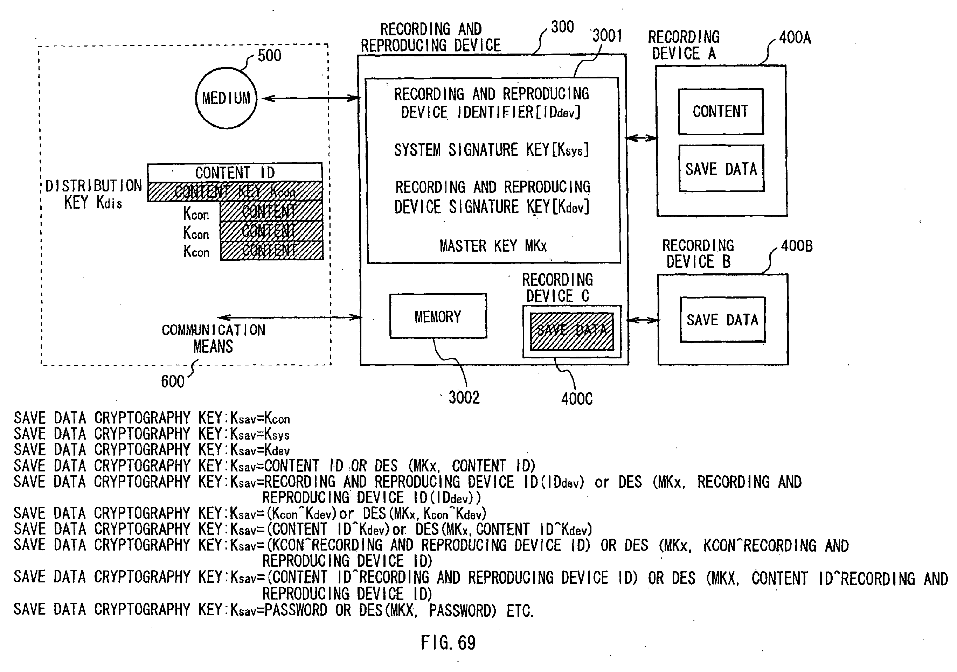

Fig. 69 is a block diagram useful in explaining a save data storage process in the present data processing apparatus. A content from the medium 500 such as a DVD or CD or the communication means 600 is provided to the recording and reproducing device 300. The provided content has been encrypted with the content key Kcon, which is a key unique to the content as described above, and the recording and reproducing device 300 obtains the content key in accordance with the process described in the above described section "(7) Process for Downloading from Recording and Reproducing Device to Recording device" (see Fig. 22), to decrypt the encrypted content and then stores it in the recording device 400. The following description is directed to a process executed by the recording and reproducing device 300 to decrypt a content program from the medium or the communication means, reproduce and execute this program, and then store the obtained save data in one of the various recording devices 400A, 400B, and 400B such as external or built-in memory card and hard disk for reproduction, or to download a content in the recording device 400A, reproduce and execute the content from the recording device 400A, and store the resulting save data in a processing and recording device 400 for storing the save data in any one of the various recording devices 400A, 400B, and 400B such as external or built-in memory card and hard disk for reproduction and reproducing the save data.

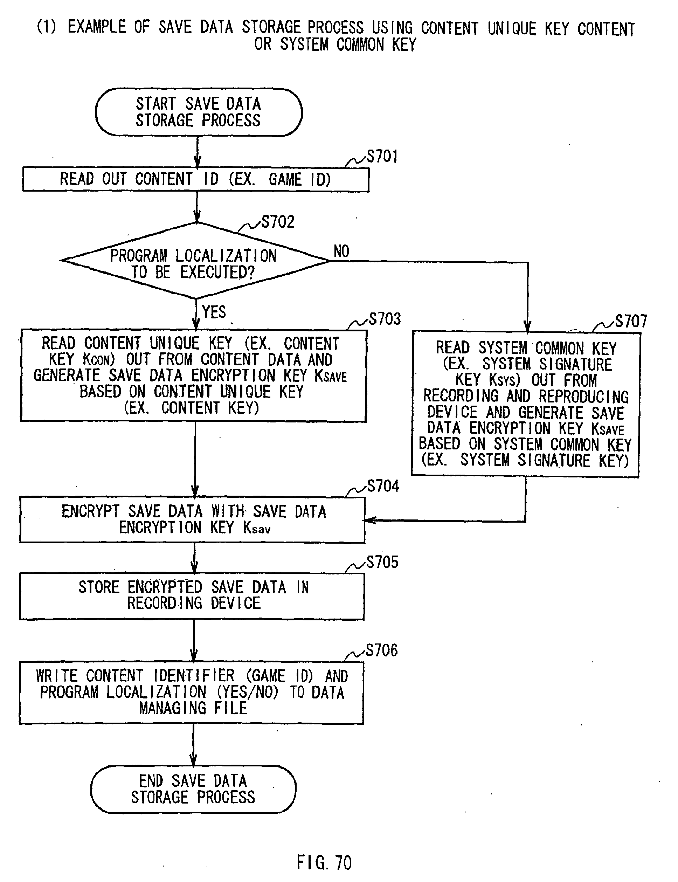

The recording and reproducing device 300 has the recording and reproducing device identifier IDdev, the system signature key Ksys, which is a signature key shared throughout the system, the recording and reproducing device signature key Kdev, which is unique to individual recording and reproducing devices, and the master keys for generating various individual keys, as previously described. The master keys are used to generate, for example, the distribution key Kdis or the authentication key Kake, as described in detail in "(12) Configuration for Generating Cryptography Process Keys Based on Master Keys". Here, the type of the master key is not particularly limited but a key representing the master keys of the recording and reproducing device 300 is denoted by MKx. Fig. 69 shows an example of the cryptography key Ksav for save data in the lower part thereof. The save data cryptography key Ksav is used for the encryption process executed to store save data in one of the various recording device 400A to C and for the decryption process executed to reproduce these data therefrom. The processes for storing and reproducing save data will be explained with reference to Fig. 70 and subsequent figures.

Fig. 70 is a flow chart of a process of storing save data in one of the recording device 400A to C using either the content unique key or the system common key. The process in each flow is executed by the recording and reproducing device 300, and the recording device 400 storing the save data in each flow may be any of the external recording devices 400A to C and is not limited to a particular one.

At step S701, the recording and reproducing device 300 reads out the content ID, for example, the game ID. This ID is the data contained in the identification information in the content data shown in the previously described Figs. 4, 26, 27, and 32 to 35. On receiving a command for storage of save data via the interface 110 shown in Fig. 2, the main CPU 106 commands the control section 301 to read the content ID.

The control section 301 takes the identification information out from the header in the content data via the read section if the execution program is a content from a DVD, a CD-ROM, or the like which is executed via the read section 304, or takes it out via the recording device controller 303 if the execution program is a content stored in the recording device 400. If the recording and reproducing device 300 is executing the content program and the content ID has already been stored in a RAM or anther accessible recording medium in the recording and reproducing device, the identification information contained in the loaded data may be used without executing a new read process.

Then at step S702, the process is changed depending on whether or not the program is to be localized. The program localization is used to set whether or not a limitation is added which allows save data to be used only by this program; to allow the save data to be used only by this program, "Program Localization" is set to "Yes", and to prevent the usage of the data from being limited to this program, "Program Localization" is set to "No". This may be arbitrarily set by the user or may be set and stored in the content program by the content producer, and the set localization is stored in one of the recording devices 400A to C of Fig. 69 as a data managing file.

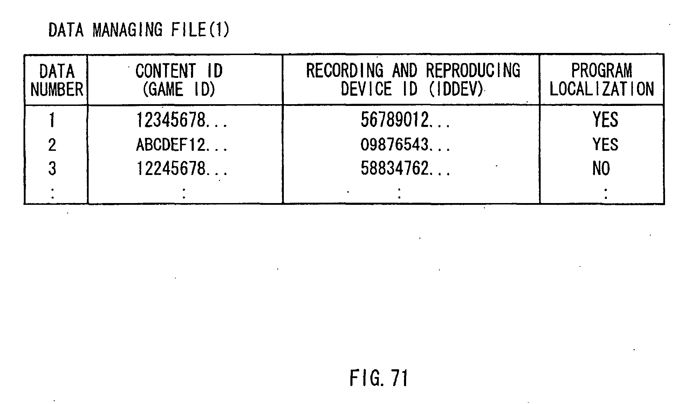

Fig. 71 shows an example of the data managing file. The data managing file is generated as a table containing entries including data numbers, content IDs, recording and reproducing device IDs, and program localization. The content ID is identification data for a content program for which save data are saved. The recording and reproducing device ID indicates a recording and reproducing device that has stored the save data, and an example thereof is [IDdev] shown in Fig. 69. The program localization is set to "Yes" in order to allow the save data to be used only by this program or to "No" in order to prevent the usage of the data from being limited to this program. The program localization may be arbitrarily set by the user using the content program or may be set and stored in the content program by the content producer.

Referring back to Fig. 70, the flow will be continuously explained. If the program localization is set to "Yes" at step S702, the process proceeds to step S703. At step 703, the key unique to the content, for example, the content key Kcon is read out from the content data and used as the save data cryptography key Ksav, or the save data cryptography key Ksav is generated based on the content unique key.

On the other hand, if the program localization is set to "No" at step S702, the process proceeds to step S707. At step 707, the system common key stored in the recording and reproducing device 300, for example, the system signature key Ksys is read out from the internal memory 307 of the recording and reproducing device 300 and used as the save data cryptography key Ksav, or the save data cryptography key Ksav is generated based on the system signature key Ksys. Alternatively, a cryptography key different from the other keys which has been separately saved to the internal memory 307 of the recording and reproducing device 300 may be used as the save data cryptography key Ksav.

Then at step S704, the save data cryptography Ksav selected or generated at step S703 or S707 is used to execute a process for encrypting save data. This encryption process is executed by the cryptography process section 302 of Fig. 2 by applying, for example, the above described DES algorithm.

The save data encrypted at step S704 are stored in the recording device at step S705. If there are a plurality of recording devices that can store save data, as shown in Fig. 69, the user selects in advance one of the recording devices 400A to C as a save data storage destination. Further, at step S706, the program localization set at step S702, that is, "Yes" or "No" for the program localization is written to the data managing file described with reference to Fig. 71.

The process for storing the save data is thus completed. At step S702, save data for which "Yes" is selected for the program localization at step S702 and which are encrypted at step S703 with the save data encryption key Ksav generated based on the content unique key are prevented from being decrypted by content programs having no content unique key information, so that these save data can be used only by content programs having the same content key information. In this case, however, the save data encryption key Ksav is not generated based on information unique to the recording and reproducing device, so that save data stored in a removable recording device such as a memory card can be reproduced even from a different recording and reproducing device as long as they are used together with a corresponding content program.

Additionally, save data for which "No" is selected for the program localization at step S702 and which are encrypted at step S707 with the save data encryption key Ksav based on the system common key can be reproduced and used even if a program with a different content identifier is used or if a different recording and reproducing device is used.

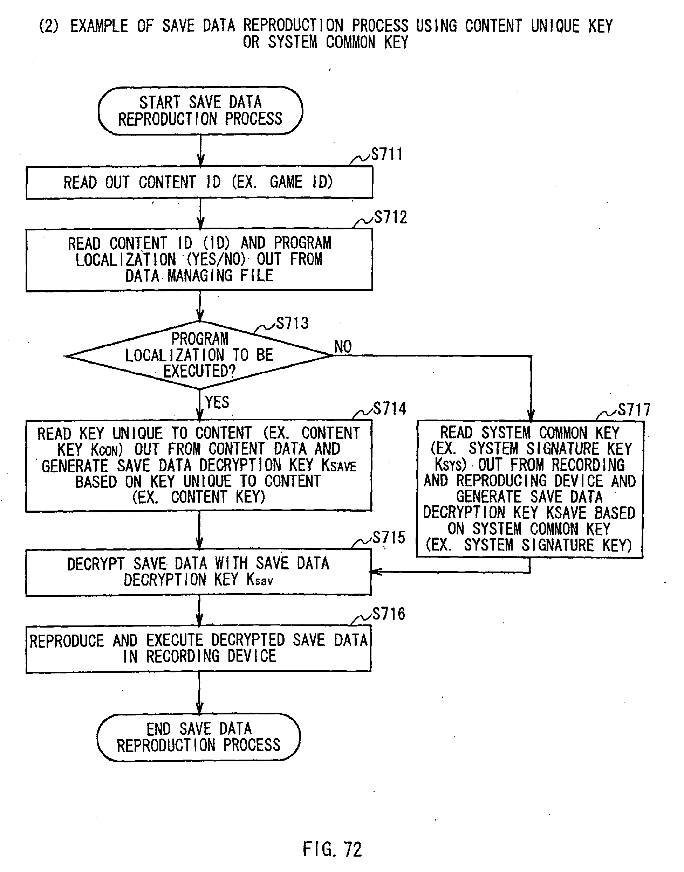

Fig. 72 shows a flow showing a process for reproducing save data stored by means of the save data storage process in Fig. 20.

At step S711, the recording and reproducing device 300 reads out the content ID, for example, the game ID. This is a process similar to step S701 of the previously described in Fig. 70 and which reads out data contained in the identification information in the content data.

Then at step S712, the data managing file descried with reference to Fig. 71 is read out from one of the recording devices 400A to C shown in Fig. 69, and the content ID read out at step S711 and correspondingly set program localization are extracted therefrom. If the data managing file has the program localization set to "Yes, the process proceeds to step S714, whereas if the data managing file has the program localization set to "No", the process advances to step S717.

At step S714, the key unique to the content, for example, the content key Kcon is read out from the content data and used as the save data decryption key Ksav, or the save data decryption key Ksav is generated based on the content unique key. This decryption key generating process uses a process algorithm corresponding to the encryption key generating process, that is, a decryption key generating algorithm that enables data encrypted based on a certain content unique key to be decrypted with a decryption key generated based on the same content unique key.

On the other hand, if it is determined at step S712 that the data managing file has the program localization set to "No", then at step S717, the system common key stored in the recording and reproducing device 300, for example, the system signature key Ksys is read out from the internal memory 307 of the recording and reproducing device 300 and used as the save data decryption key Ksav, or the save data decryption key Ksav is generated based on the system signature key Ksys. Alternatively, a cryptography key different from the other keys which has been separately saved to the internal memory 307 of the recording and reproducing device 300 may be used as the save data cryptography key Ksav.

Then at step S715, the save data decryption key Ksav selected or generated at step S714 or S717 is used to execute a process for decrypting save data, and at step S716, the decrypted save data are reproduced and executed in the recording and reproducing device 300.

The save data reproduction process is thus completed. As described above, the save data decryption key is generated based on the content unique key if the data managing file has the program localization set to "Yes", while the save data decryption key is generated based on the system common key if the data managing file has the program localization set to "No". If the program localization is set to "Yes", a decryption key cannot decrypt the save data without the same content ID for the content, thereby enabling the security of the save data to be improved.

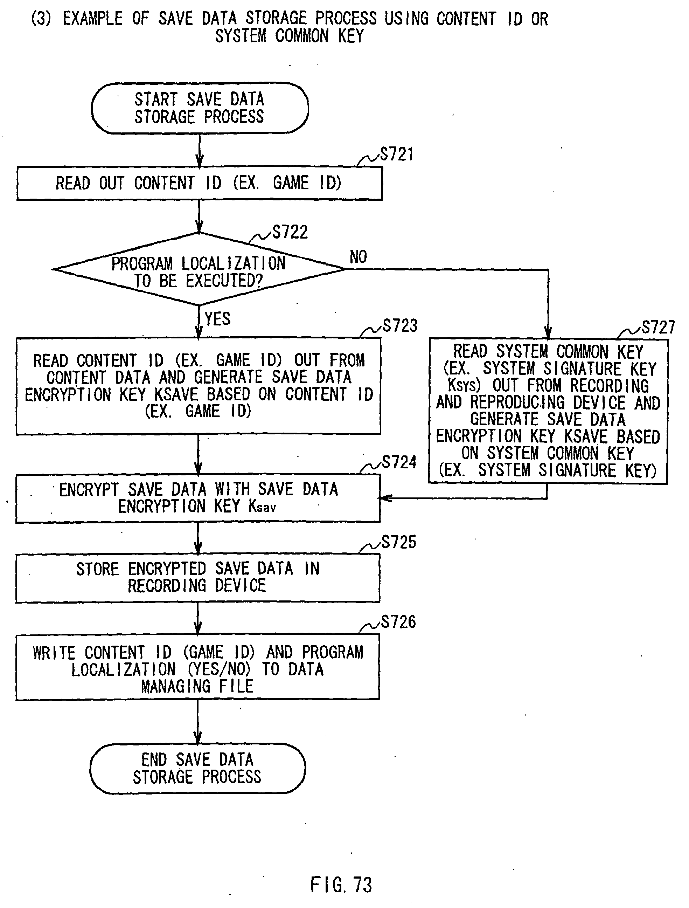

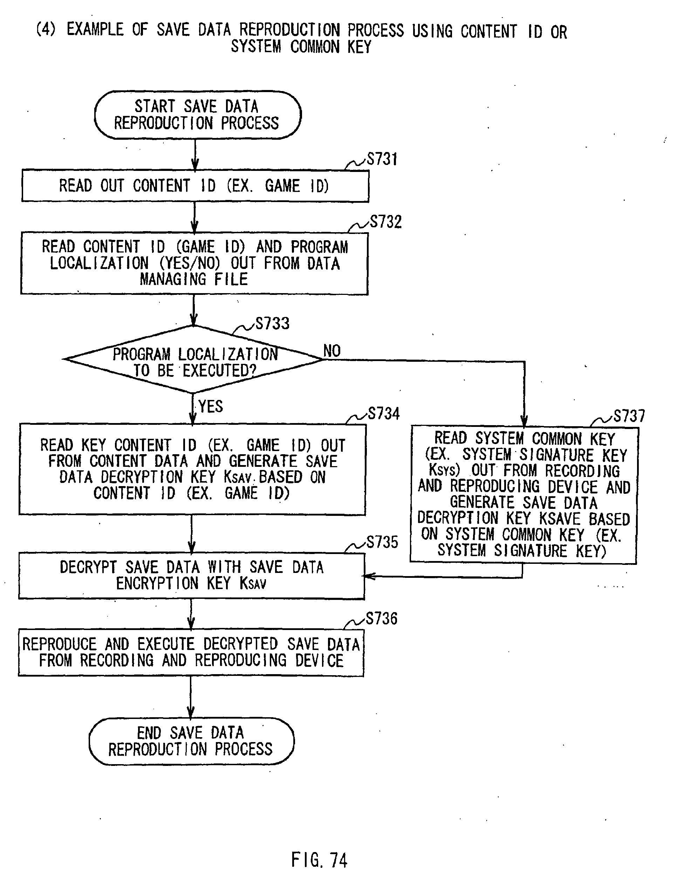

Figs. 73 and 74 show save data storage and reproduction flows, respectively, that generate save data encryption and decryption keys using the content ID.

In Fig. 73, steps S721 to 722 are similar to steps S701 and S702 in Fig. 70, so description thereof is omitted.

The save data storage flow in Fig. 73, if the program localization" is set to "Yes" at step S722, then at step S723, the content ID is read out from the content data and used as the save data decryption key Ksav, or the save data decryption key Ksav is generated based on the content ID. For example, the cryptography process section 307 of the recording and reproducing device 300 can apply the master key MKx stored in the internal memory of the' recording and reproducing device 300, to the content ID read out from the content data, to obtain the save data decryption key Ksav based, for example, on the DES (MKx, content ID). Alternatively, a cryptography key different from the other keys which has been separately saved to the internal memory 307 of the recording and reproducing device 300 may be used as the save data decryption key Ksav.

On the other hand, if the program localization is set to "No" at step S722, then at step S727, the system common key stored in the recording and reproducing device 300, for example, the system signature key Ksys is read out from the content data and used as the save data encryption key Ksav, or the save data encryption key Ksav is generated based on the system signature key. Alternatively, a cryptography key different from the other keys which has been separately saved to the internal memory 307 of the recording and reproducing device 300 may be used as the save data decryption key Ksav.

The processing at step S724 and the subsequent steps is similar to that at step S704 and the subsequent steps in the process flow in the above described Fig. 70, and description thereof is thus omitted.

Further, Fig. 74 shows a process flow for reproducing and executing save data stored in the recording device during the save data storage process flow in Fig. 73, and steps S731 to S733 are similar to the corresponding processing in the above described Fig. 72 except for step S734. At step 734, the content ID is read out from the content data and used as the save data decryption key Ksav, or the save data decryption key Ksav is generated based on the content ID. This decryption key generating process uses a process algorithm corresponding to the encryption key generating process, that is, a decryption key generating algorithm that enables data encrypted based on a certain content ID to be decrypted with a decryption key generated based on the same content ID.

The subsequent processing, steps S735, S736, and S737 are similar to the corresponding processing in Fig. 72, and description thereof is thus omitted. According to the save data storage and reproduction processes in Figs. 73 and 74, if the program localization is set to "Yes", the content ID is used to generate the save data encryption and decryption keys, so that as in the above save data storage and reproduction processes using the content unique key, save data cannot be obtained without matching the corresponding content program, thereby enabling save data to be saved more securely.

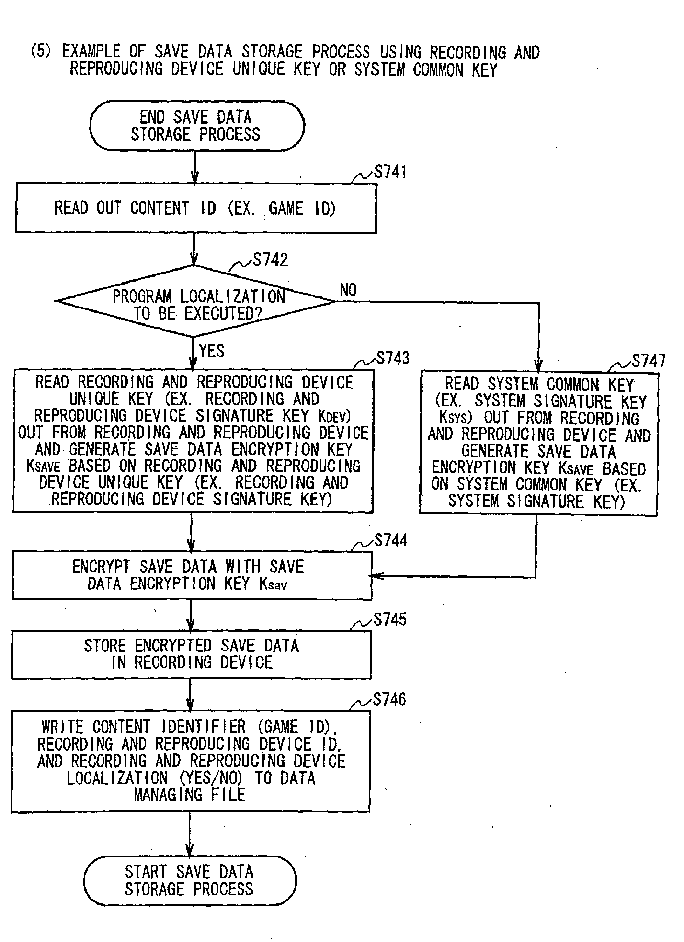

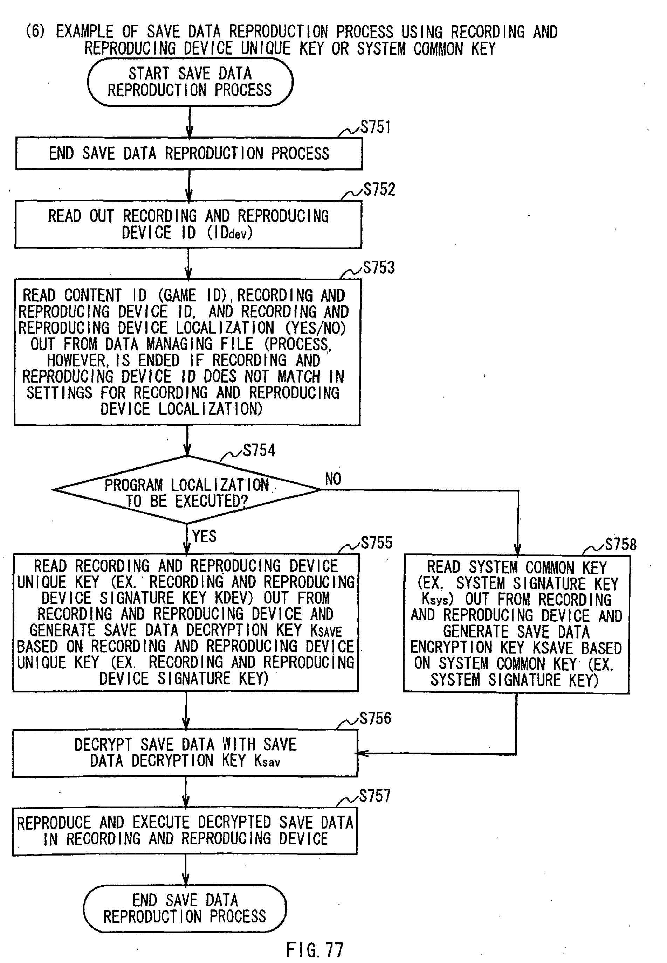

Figs. 75 and 77 show save data storage (Fig. 75) and' reproduction (Fig. 77) flows, respectively, that generate save data encryption and decryption keys using the recording and reproducing device unique key.

In Fig. 75, step S741 is similar to step S701 in Fig. 70, so description thereof is omitted. At step S742, localization is or is not set for the recording and'reproducing device. In case of lacalizing a particular recording and reproducing device capable of utilizing the save data, a recording and reproducing device localization, that is, allows the save data to be used only by the recording and reproducing device that has generated and stored the data, the recording and reproducing device localization is set to "Yes", and to allow other recording and reproducing device to use the save data, the recording and reproducing device localization is set to "No". If the recording and reproducing device localization is set to "Yes" at step S742, the process proceeds to step S743, and if this localization is set to "No", the process proceeds to step S747.

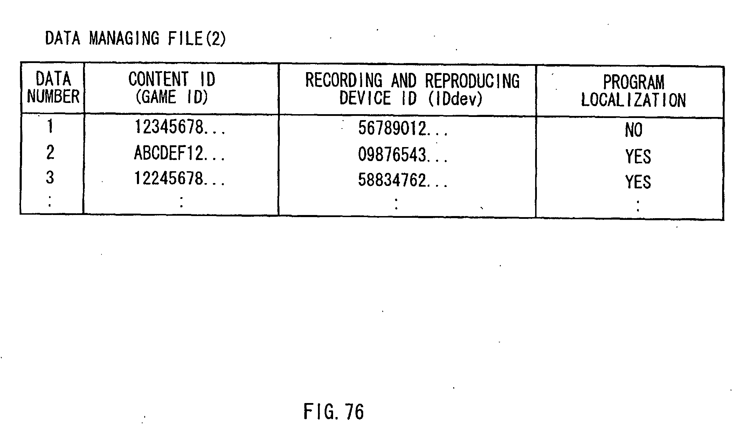

An example of the data managing file is shown in Fig. 76. The data managing file is generated as a table containing entries including data numbers, content IDs, recording and reproducing device IDs, and recording and reproducing device localization. The content ID is identification data for a content program for which save data are saved. The recording and reproducing device ID indicates a recording and reproducing device that has stored the save data, and an example thereof is [IDdev] shown in Fig. 69. The recording and reproducing device localization is set to "Yes" in order to limit the usage of the save data to a particular recording and reproducing device, that is, allow the save data to be used only by the recording and reproducing device that has generated and stored the data, or to "No" in order to allow other recording and reproducing devices to use the save data. The recording and reproducing device localization may be arbitrarily set by the user using the content program or may be set and stored in the content program by the content producer.

In the save data storage process flow in Fig. 75, if the recording and reproducing device localization is set to "Yes" at step S742, the recording and reproducing device unique key, for example, the recording and reproducing device signature key Kdev is read out from the internal memory 307 of the recording and reproducing device 300 data and used as the save data encryption key Ksav, or the save data encryption key Ksav is generated based on the recording and reproducing device signature key Kdev. Alternatively, a cryptography key different from the other keys which has been separately saved to the internal memory 307 of the recording and reproducing device 300 may be used as the save data decryption key Ksav.

On the other hand, if the recording and reproducing device localization is set to "No" at step S742, then at step S747, the system common key stored in the recording and reproducing device 300, for example, the system signature key Ksys is read out from internal memory 307 of the recording and reproducing device 300 and used as the save data encryption key Ksav, or the save data encryption key Ksav is generated based on the system signature key. Alternatively, a cryptography key different from the other keys which has been separately saved to the internal memory 307 of the recording and reproducing device 300 may be used as the save data decryption key Ksav.

The processing at steps S744 and S745 is similar to the corresponding processing in the process flow in the above described Fig. 72, and description thereof is thus omitted.

At step S746, the content ID, the recording and reproducing device ID, and the recording and reproducing device localization "Yes/No" set by the user at step S742 are written to the data managing file (see Fig. 76).

Furthermore, Fig. 77 shows a process flow for reproducing and executing save data stored in the recording device during the save data storage process flow in Fig. 75. At step S751, the content ID is read out as in the corresponding processing in the above described Fig. 72. Then at step S752, the recording and reproducing device ID (IDdev) stored in the memory of the recording and reproducing device 300 is read out.

At step S753, the content ID, the recording and reproducing device ID, and the set recording and reproducing device localization "Yes/No" are read out from the data managing file (see Fig. 76). If any entry in the data managing file which has the same content ID has the recording and reproducing device localization set to "Yes", the process is ended if the table entry has a recording and reproducing device ID different from that read out at step S752.

Next, if it is determined at step S754 that the data managing file has the recording and reproducing device localization set to "Yes", the process proceeds to step S755, whereas if the data managing file has the recording and reproducing device localization set to "No", the process proceeds to step S758.

At step S755, the recording and reproducing device unique key, for example, the recording and reproducing device signature key Kdev is read out from the internal memory 307 of the recording and reproducing device 300 data and used as the save data decryption key Ksav, or the save data encryption key Ksav is generated based on the recording and reproducing device signature key Kdev. This decryption key generating process uses a process algorithm corresponding to the encryption key generating process, that is, a decryption key generating algorithm that enables data encrypted based on a certain recording and reproducing device unique key to be decrypted with a decryption key generated based on the same recording and reproducing device unique key. Alternatively, a cryptography key different from the other keys which has been separately saved to the internal memory 307 of the recording and reproducing device 300 may be used as the save data decryption key Ksav.

On the other hand, at step S758, the system common key stored in the recording and reproducing device 300, for example, the system signature key Ksys is read out from internal memory 307 of 'the recording and reproducing device 300 and used as the save data decryption key Ksav, or the save data decryption key Ksav is generated based on the system signature key. Alternatively, a cryptography key different from the other keys which has been separately saved to the internal memory 307 of the recording and reproducing device 300 may be used as the save data decryption key Ksav.

The processing at the subsequent steps S756 and 757 are similar to that at the corresponding steps in the above described save data reproduction process flow.

According to the save data storage and reproduction process flows shown in Figs. 75 and 77, save data for which the recording and reproducing device localization is set to "Yes" are encrypted and decrypted using the recording and reproducing device unique key. These save data can thus be decrypted and used only by the recording and reproducing device having the same recording and reproducing device unique key, that is, the same recording and reproducing device.

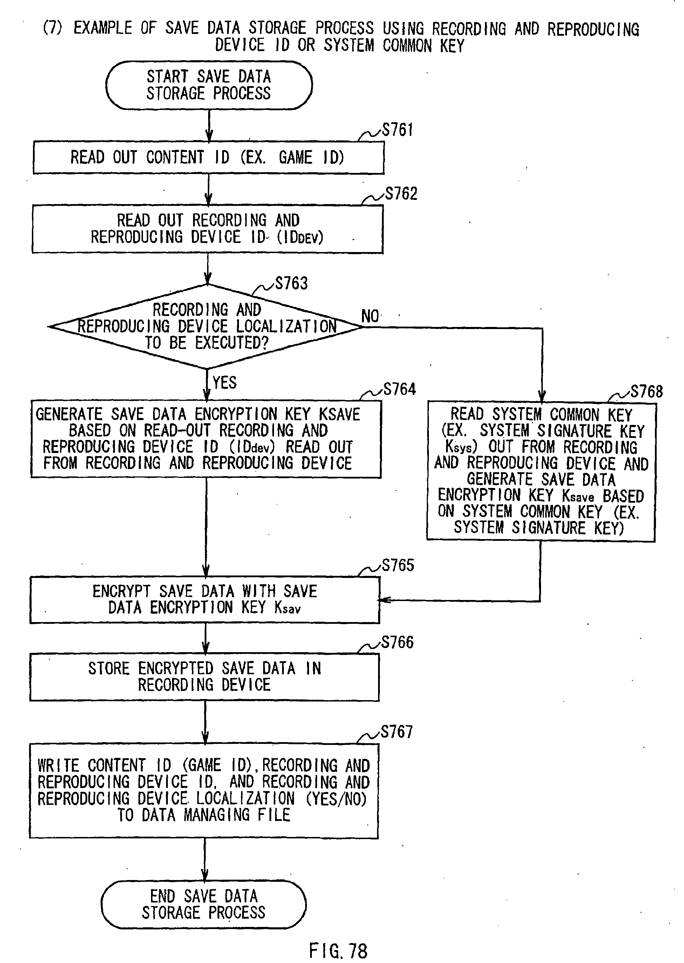

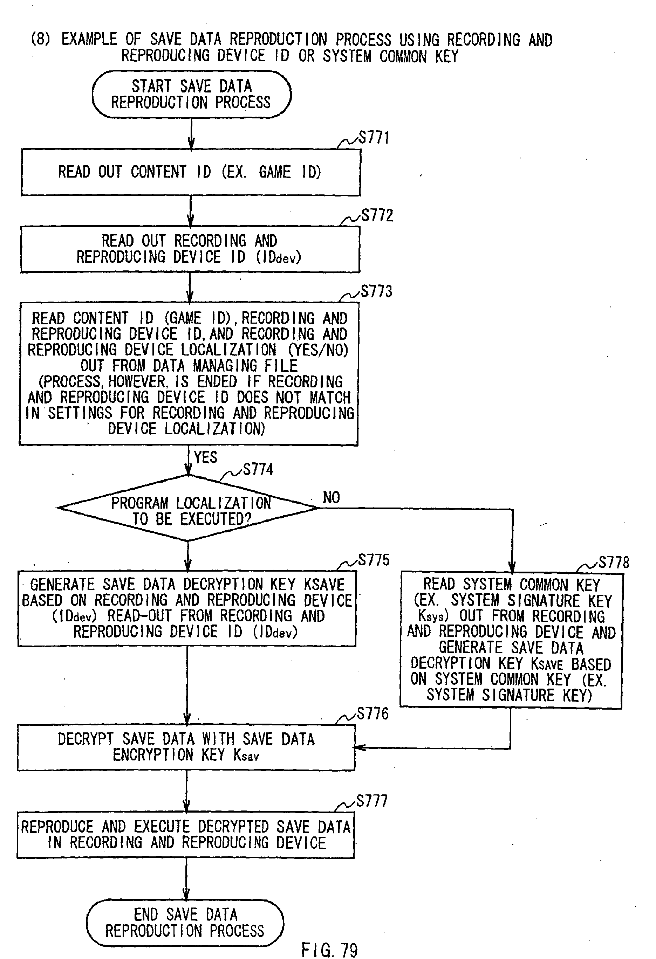

Next, Figs. 78 and 79 show process flows for generating encryption and decryption keys for save data using the recording and reproducing device ID and storing and reproducing the save data.

In Fig. 78, the recording and reproducing device ID is used to encrypt and store save data in the recording device. Steps S761 to S763 are similar to those in the above Fig. 75. At step S764, the recording and reproducing device ID (IDdev) read out from the recording and reproducing device is used to generate the save data encryption key Ksav. The save data encryption key Ksav is obtained based on the IDdev by, for example, applying the IDdev as the save data encryption key Ksav or applying the master key MKx stored in the internal memory of the recording and reproducing device 300 to obtain the save data encryption key Ksav based on the DES (MKx, IDdev). Alternatively, a cryptography key different from the other keys which has been separately saved to the internal memory 307 of the recording and reproducing device 300 may be used as the save data decryption key Ksav.

The subsequent process steps S765 to S768 are similar to the corresponding processing in the above described Fig. 75, so description thereof is omitted.

Fig. 79 shows a process flow for reproducing and executing the save data stored in the recording device by means of the process in Fig. 78. Steps S771 to S774 are similar to the corresponding processing in the above described Fig. 77.

At step S775, the recording and reproducing device ID (IDdev) read out from the recording and reproducing device is used to generate the save data decryption key Ksav. The save data encryption key Ksav is obtained based on the IDdev by, for example, applying the IDdev as this key Ksav or applying the master key MKx stored in the internal memory of the recording and reproducing device 300 to obtain this key Ksav based on the DES (MKx, IDdev). This decryption key generating process uses a process algorithm corresponding to the encryption key generating process, that is, a decryption key generating algorithm that enables data encrypted based on a certain recording and reproducing device unique key to be decrypted with a decryption key generated based on the same recording and reproducing device unique key. Alternatively, a cryptography key different from the other keys which has been separately saved to the internal memory 307 of the recording and reproducing device 300 may be used as the save data decryption key Ksav.

The subsequent process steps S776 to S778 are similar to the corresponding processing in the above described Fig. 76.

According to the save data storage and reproduction process flows shown in Figs. 78 and 79, save data for which the recording and reproducing device localization is set to "Yes" are encrypted and decrypted using the recording and reproducing device unique key. These save data can thus be decrypted and used only by the recording and reproducing device having the same recording and reproducing device unique key, that is, the same recording and reproducing device.

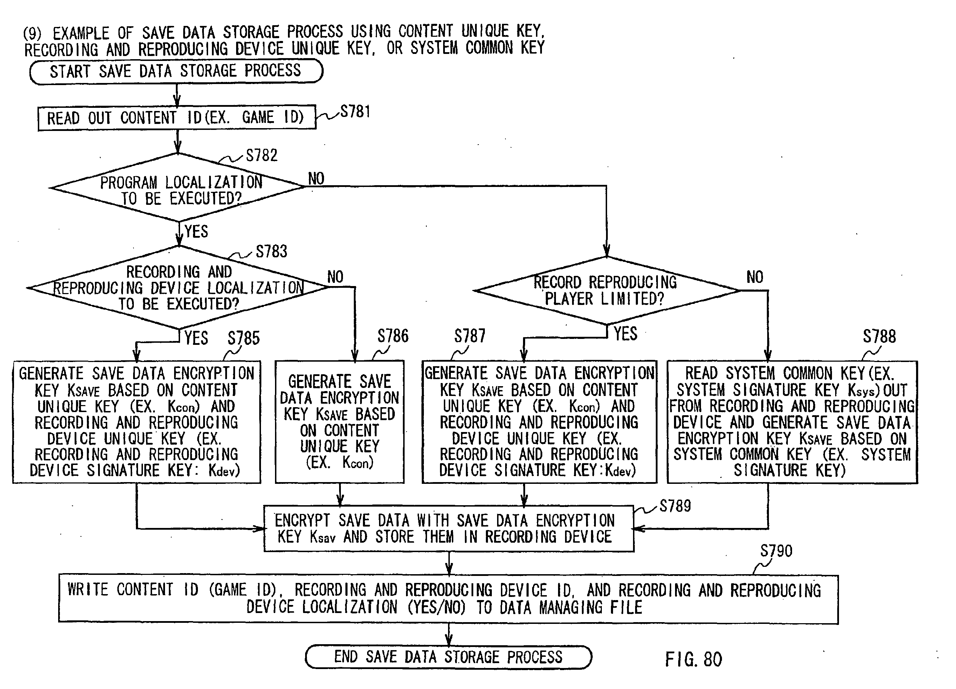

Next, save data storage and reproduction processes of executing both the above described program localization and recording and reproducing device localization will be explained with reference to Figs. 80 to 82.

Fig. 80 shows a save data storage process flow. At step S781, the content ID is read out from the content data, at step S782, it is determined whether the program localization is set, and at step S783, it is determined whether the recording and reproducing device localization is set.

If both the program localization and the recording and reproducing device localization are set to "Yes", then at step S785, the save data encryption key Ksav is generated based on both the content unique key (ex. Kcon) and the recording and reproducing device unique key (Kdev). The save data encryption key is obtained, for example, based on Ksav = (Kcon XOR Kdev) or by applying the master key MKx stored in the internal memory of the recording and reproducing device 300 to obtain this key based on Ksave = DES (MKx, Kcon XOR Kdev). Alternatively, a cryptography key different from the other keys which has been separately saved to the internal memory 307 of the recording and reproducing device 300 may be used as the save data decryption key Ksav.

If the program localization is set to "Yes" while the recording and reproducing device localization is set to "No", then at step S786, the content unique key (ex. Kcon) is used as the save data encryption key Ksav, or the save data encryption key Ksav is generated based on the content unique key (ex. Kcon).

If the program localization is set to "No" while the recording and reproducing device localization is set to "Yes", then at step S787, the recording and reproducing device unique key (Kdev) is used as the save data encryption key Ksav, or the save data encryption key Ksav is generated based on the recording and reproducing device unique key (Kdev). Alternatively, a cryptography key different from the other keys which has been separately saved to the internal memory 307 of the recording and reproducing device 300 may be used as the save data decryption key Ksav.

Further, if both the program localization and the recording and reproducing device localization are set to "No", then at step S787, the system common key, for example, the system signature key Ksys is used as the save data encryption key Ksav, or the save data encryption key Ksav is generated based on the system signature key Ksys. Alternatively, a cryptography key different from the other keys which has been separately saved to the internal memory 307 of the recording and reproducing device 300 may be used as the save data decryption key Ksav.

At step S789, the save data encryption key Ksav generated at one of the steps S785 to S788 is used to encrypt the save data, which are then stored in the recording device.

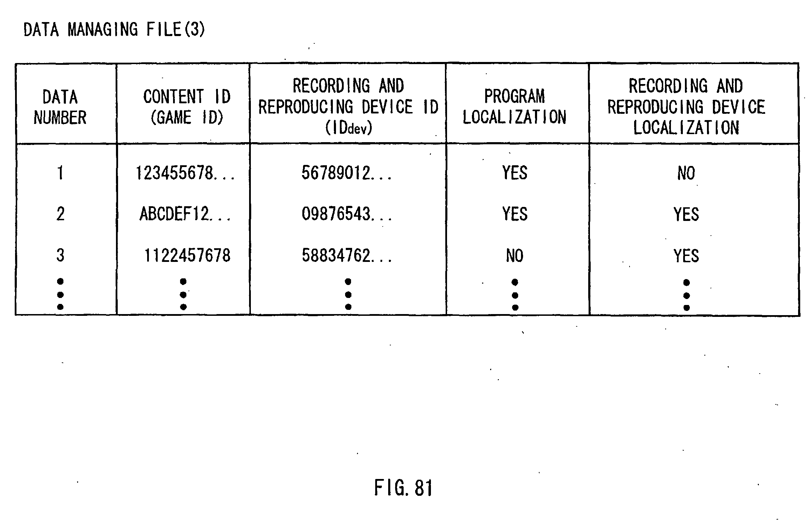

Furthermore, at step S790, the localization set at steps S782 and S783 is stored in the data managing file. The data managing file is configured, for example, as shown in Fig. 81 and contains entries including data numbers, content IDs, recording and reproducing device IDs, program localization, and recording and reproducing device localization.

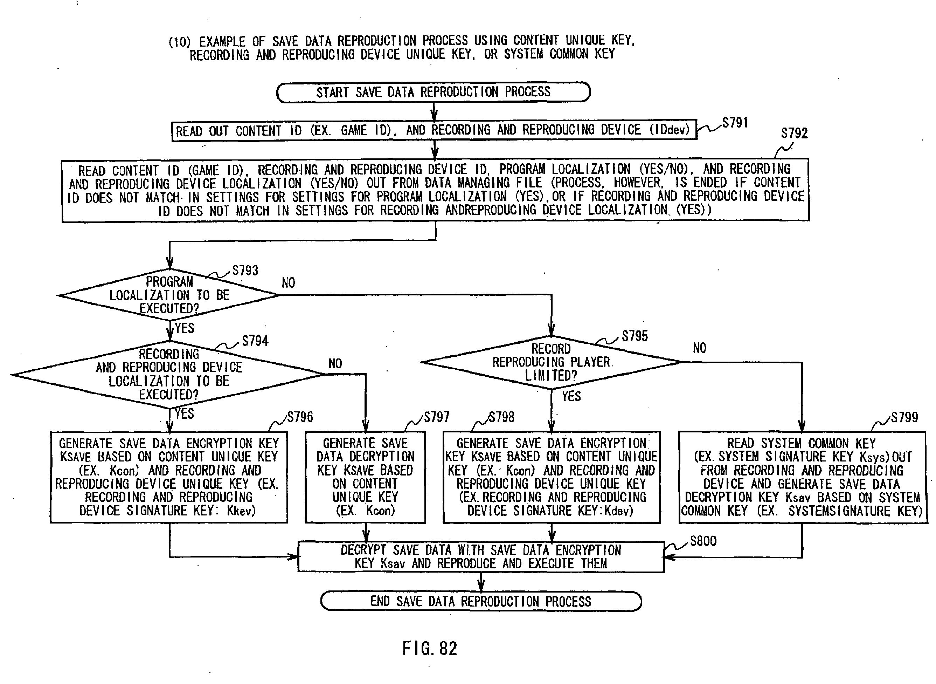

Fig. 82A and 82B show a process flow for reproducing and executing the save data stored in the recording device by means of the process in Fig. 80. At step S791, the content ID and the recording and reproducing device ID are read out from the execution program, and at step S792, the content ID, the recording and reproducing device ID, the program localization, and the recording and reproducing device localization are read out from the data managing file shown in Fig. 81. In this case, if the program localization is set to "Yes" and the content IDs are not the same or if the recording and reproducing device localization is set to "Yes" and the recording and reproducing device IDs are not the same, the process is ended.

Then at steps S793, S794, and S795, the decryption key generating process is set to one of the four manners at steps 796 to S799 in accordance with the data recorded in the data managing file.

If both the program localization and the recording and reproducing device localization are set to "Yes", then at step S796, the save data encryption key Ksav is generated based on both the content unique key (ex. Kcon) and the recording and reproducing device unique key (Kdev). Alternatively, a cryptography key different from the other keys which has been separately saved to the internal memory 307 of the recording and reproducing device 300 may be used as the save data decryption key Ksav. If the program localization is set to "Yes" while the recording and reproducing device localization is set to "No", then at step S797, the content unique key (ex. Kcon) is used as the save data encryption key Ksav, or the save data encryption key Ksav is generated based on the content unique key (ex. Kcon). Alternatively, a cryptography key different from the other keys which has been separately saved to the internal memory 307 of the recording and reproducing device 300 may be used as the save data decryption key Ksav.

If the program localization is set to "No" while the recording and reproducing device localization is set to "Yes", then at step S798, the recording and reproducing device unique key (Kdev) is used as the save data encryption key Ksav, or the save data encryption key Ksav is generated based on the recording and reproducing device unique key (Kdev). Alternatively, a cryptography key different from the other keys which has been separately saved to the internal memory 307 of the recording and reproducing device 300 may be used as the save data decryption key Ksav. Further, if both the program localization and the recording and reproducing device localization are set to "No", then at step S799, the system common key, for example, the system signature key Ksys is used as the save data encryption key Ksav, or the save data encryption key Ksav is generated based on the system signature key Ksys. Alternatively, a cryptography key different from the other keys which has been separately saved to the internal memory 307 of the recording and reproducing device 300 may be used as the save data decryption key Ksav.

These decryption key generating processes uses a process algorithm corresponding to the encryption key generating process, that is, a decryption key generating algorithm that enables data encrypted based on the same content unique key and recording and reproducing device unique key to be decrypted with a decryption key generated based on the same content unique key and recording and reproducing device unique key.

At step S800, the save data encryption key Ksav generated at one of the steps S796 to S799 is used to execute the decryption process, and the decrypted save data are reproduced and executed in the recording and reproducing device 300.

According to the save data storage and reproduction process flows shown in Figs. 80 and 82, save data for which "Yes" is selected for the program localization are encrypted and decrypted with the content unique key, so that these save data can be decrypted and used only if content data having the same content unique key are used. Additionally, save data for which "Yes" is selected for the recording and reproducing device localization are encrypted and decrypted with the recording and reproducing device ID, so that these save data can be decrypted and used only by the recording and reproducing device having the same recording and reproducing device ID, that is, the same recording and reproducing device. Consequently, both the content and the recording and reproducing device can set the localization to further improve the security of the save data.

Although Figs. 80 and 82 show the configuration for generating the save data encryption key and the decryption key using the content unique key and the recording and reproducing device unique key, the content ID and the recording and reproducing device ID may be used instead of the content unique key and the recording and reproducing device unique key, respectively, to generate the save data encryption key and the decryption key based on these IDs.

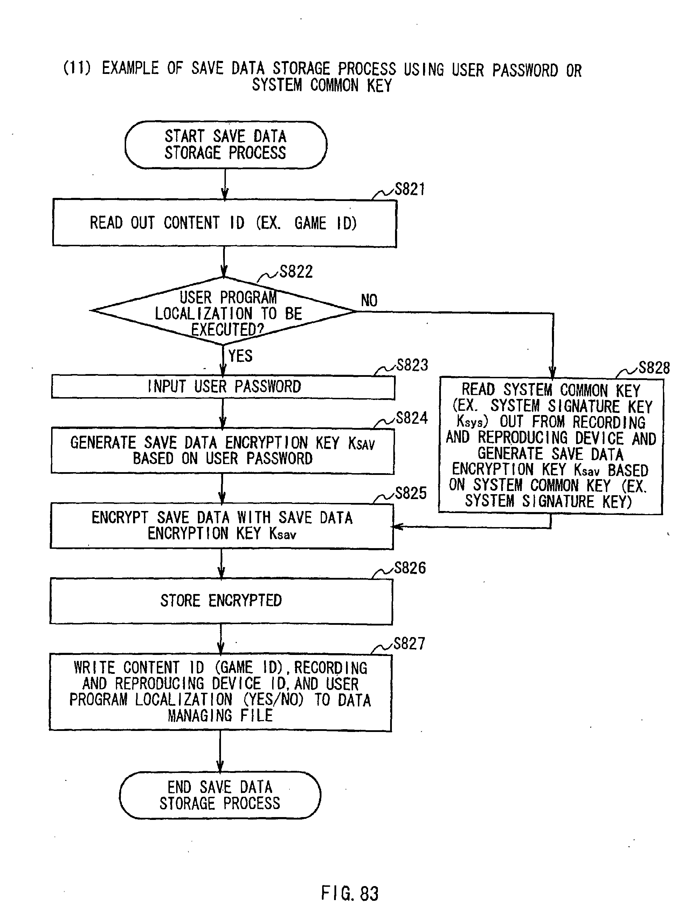

Next, a configuration for generating an encryption and a decryption keys based on a password input by the user will be described with reference to Figs. 83 to 85.

Fig. 83 shows a process flow for generating a save data encryption key based on a password input by the user and storing save data in the recording device.

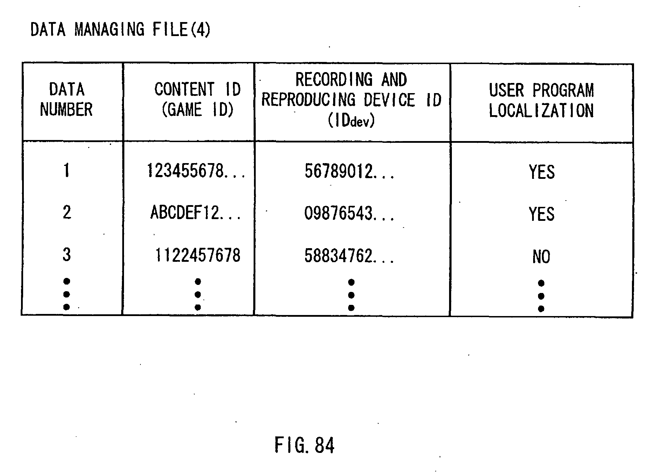

At step S821, the content ID is read out from the content data as in each of the above described processes. At step S822, the user determines whether to set the program localization. The data managing file set in this configuration has, for example, the configuration shown in Fig. 84.

As shown in Fig. 84, the data contains data numbers, content IDs, recording and reproducing device IDs, and user set program localization. The "user set program localization" is an entry that determines whether or not the usage of the program is limited to a particular user.

If the localization is set to "Yes" at step S822 in the process flow in Fig. 83, then at step S823, the user's password is input. The password is input from an input means such as the keyboard shown in Fig. 2.

The input password is output to the cryptography process section 302 under the control of the main CPU 106 and the control section 301, and the processing at step S824 is executed, that is, the save data encryption key Ksav is generated based on the input user password. The save data encryption key Ksav may be generated by, for example, setting the password itself as this key Ksav or using the master key MKx of the recording and reproducing device to generate this key Ksav based on the save data encryption key Ksav = DES (MKx, password). Alternatively, a unidirectional function may be applied using the password as an input so that an encryption key can be generated based on an output from the function.

If the user localization is set to "No" at step S822, then at step S828, a save data encryption key is generated based on the system common key of the recording and reproducing device 300.

Further, at step S825, the save data encryption key Ksav generated at step S824 or S828 is used to encrypt the save data, and at step S826, the encrypted save data are stored in the recording device.

Furthermore, at step S827, the program localization set by the user at step S822 is written to the data managing file in Fig. 84 so as to be associated with the content ID and the recording and reproducing device ID.

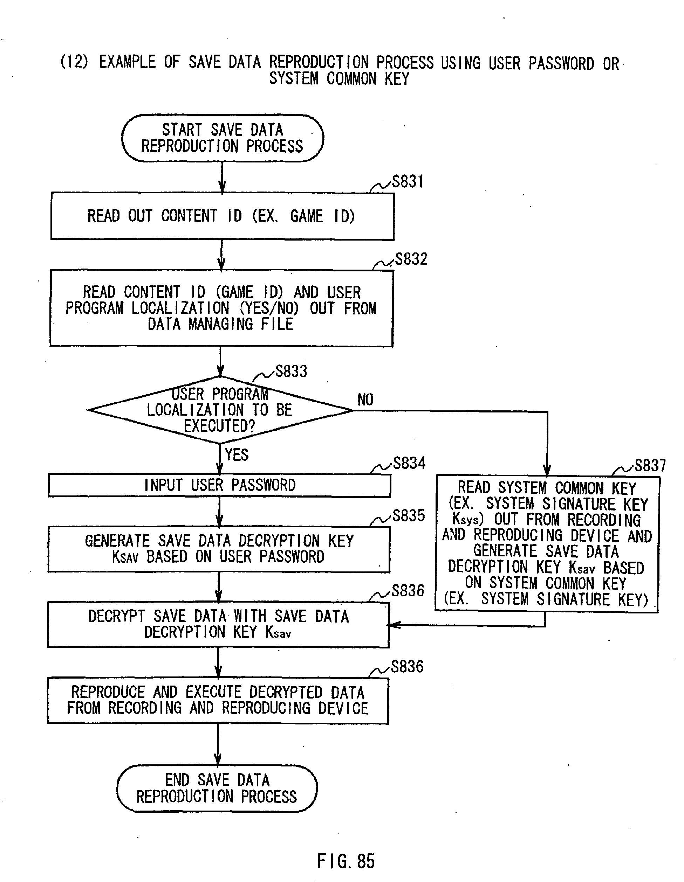

Fig. 85 is a view showing a flow of a process for reproducing the save data stored by means of the process in Fig. 83. At step S831, the content ID is read out from the content data, and at step S832, the content ID and the program localization by the user are read out from the data managing file shown in Fig. 84.

At step S833, determination is made based on the data in the data managing file. If "the user set program localization" is set to "Yes", then at step S834, the user is prompted to input a password, and at step S835, a decryption key is generated based on the input password. This decryption key generating process uses a process algorithm corresponding to the encryption key generating process, that is, a decryption key generating algorithm that enables data encrypted based on a certain password to be decrypted with a decryption key generated based on the same password.

If it is determined at step S833 that the program localization by the user is set to "No", then at step S837, the system common key stored in the internal memory of the recording and reproducing device 300 is used to generate the save data decryption key Ksav by using the system signature key Ksys. Alternatively, an encryption key different from the other keys which has been separately saved to the internal memory 307 of the recording and reproducing device 300 may be used as the save data encryption key Ksav.

At step S836, the decryption key Ksav generated at step S835 or S837 is used to decrypt the save data stored in the recording device, and at step S836, the recording and reproducing device reproduces and executes the save data.

According to the save data storage and reproduction process flows shown in Figs. 83 and 85, save data for which "Yes" is selected for "the user set program localization" are encrypted and decrypted with the key based on the user input password, so that these save data can be decrypted and used only if the same password is input, thereby improving the security of the save data.

The several aspects of the save data storage and reproduction processes have been described, but it is also possible to implement a process obtained by merging the above described processes together, for example, an aspect of generating save data encryption and decryption keys using an arbitrary combination of the password, the recording and reproducing device ID, the content ID, and others.

(17) Configuration for Excluding (Revoking) Invalid Apparatuses

As described above, the data processing apparatus according to the present invention improves the security of provided contents and allow such contents to be used only by valid users, using the configuration wherein the recording and reproducing device 300 executes processes such as authentication and encryption on various content data provided by the medium 500 (see Fig. 3) or the communication means 600 and then stores the data in the recording device.

As understood from the above description, the input content is authenticated, encrypted, and decrypted using the various signature keys, master keys, and integrity-check-value-generating keys (see Fig. 18) stored in the internal memory 307 configured in the cryptography process section 302 of the recording and reproducing device 300. The internal memory 307 storing the key information is desirably characterized to restrain external illegal reads in that it comprises a semiconductor chip that essentially rejects external accesses and has a multilayer structure, an internal memory sandwiched between dummy layers of aluminum or the like or arranged in the lowest layer, and a narrow range of operating voltages and/or frequencies. If, however, these key data or the like should be read out from the internal memory and copied to an unauthorized recording and reproducing device, the copied key information may be used for invalid usage of the content.

A configuration for preventing the invalid use of a content based on invalid copying of a key will be described below.

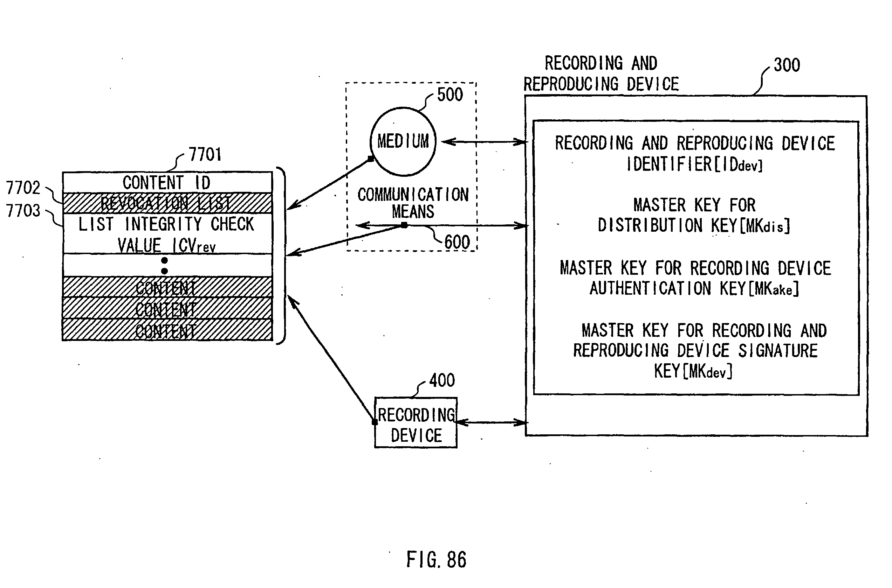

Fig. 86 is a block diagram useful in explaining "(17) Configuration for Excluding Invalid Apparatuses", which' corresponds to this configuration. The recording and reproducing device 300 is similar to the recording and reproducing device shown in the above described Figs. 2 and 3 and has an internal memory and the previously described various key data (Fig. 18) and recording and reproducing device ID. Here, the recording and reproducing device ID, the key data, or the like copied by a third person is not necessarily stored in the internal memory 307, but the key data or the like in the recording and reproducing device 300 shown in Fig. 86 are collectively or distributively stored in a memory section accessible to the cryptography process section 302 (see Figs. 2 and 3).

To implement the configuration for excluding invalid apparatuses, a list of invalid recording and reproducing device IDs is stored in the header section of the content data. As shown in Fig. 86, the content data holds a list of revocation list as the list of invalid recording and reproducing device IDs (IDdev). Further, a list integrity check value ICVrev is used to check the revocation list for tamper. The list of invalid recording and reproducing device IDs (IDdev) contains the identifiers IDvev of invalid recording and reproducing devices determined by the content provider or manager based on the state of distribution of invalid copies or the like. The revocation list may be encrypted with the distribution key Kdis before being stored. The decryption process executed by the recording and reproducing device is similar to, for example, that in the content download process in the above Fig. 22.

Here, for better understanding the revocation list is shown as single data in the content data in Fig. 86 but may be contained, for example, in the previously described usage policy (for example, see Figs. 32 to 35), which is a component of the header section of the content data. In this case, the previously described integrity check value ICVa is used to check the usage policy data containing the revocation list for tamper. If the revocation list is contained in the usage policy, the integrity check value A: ICVa is used for the check and the integrity-check-value-A-generating key Kicva in the recording and reproducing device is used, thereby eliminating the need to store the integrity-check-value-generating key Kicv-rev.

If the revocation list is contained in the content data as independent data, the revocation list is checked using the list integrity check value ICVrev for checking the revocation list for tamper, and an intermediate integrity check value is generated from the list integrity check value ICVrev and another partial integrity check value in the content data and is used to carry out a verification process.

A method for checking the revocation list using the list integrity check value ICVrev for checking the revocation list for tamper is similar to the process for generating the integrity check value such as ICVa or ICVb as explained in the above described Figs. 23 and 24. That is, the calculation is executed in accordance with the ICV calculation method described in Figs. 23 and 24 and other figures, using as a key the integrity-check-value-generating key Kicv-rev stored in the internal memory 307 of the recording and reproducing device cryptography process section 302 and using as a message the revocation list contained in the content data. The calculated integrity check value ICV-rev' and the integrity check value: ICV-rev stored in the header are compared together, and if they are equal, it is determined that the list have not been tampered.

The intermediate integrity check value containing the list integrity check value ICVrev is generated, for example, by using as a key the total-integrity-check-value-generating key Kicvt stored in the infernal memory 307 of the recording and reproducing device cryptography process section 302 and applying the ICV calculation method described in Fig. 7 and other figures to a message string comprising the integrity check values A and B and list integrity check value ICVrev in the verified header, with the content integrity check value added thereto depending on the format, as shown in Fig. 25.

The revocation list and the list integrity check value are provided to the recording and reproducing device 300 via the medium 500 such as a DVD or a CD or the communication means 600 or via the recording device 400 such as a memory card. In this case, the recording and reproducing device 300 may hold valid key data or illegally copied ID.

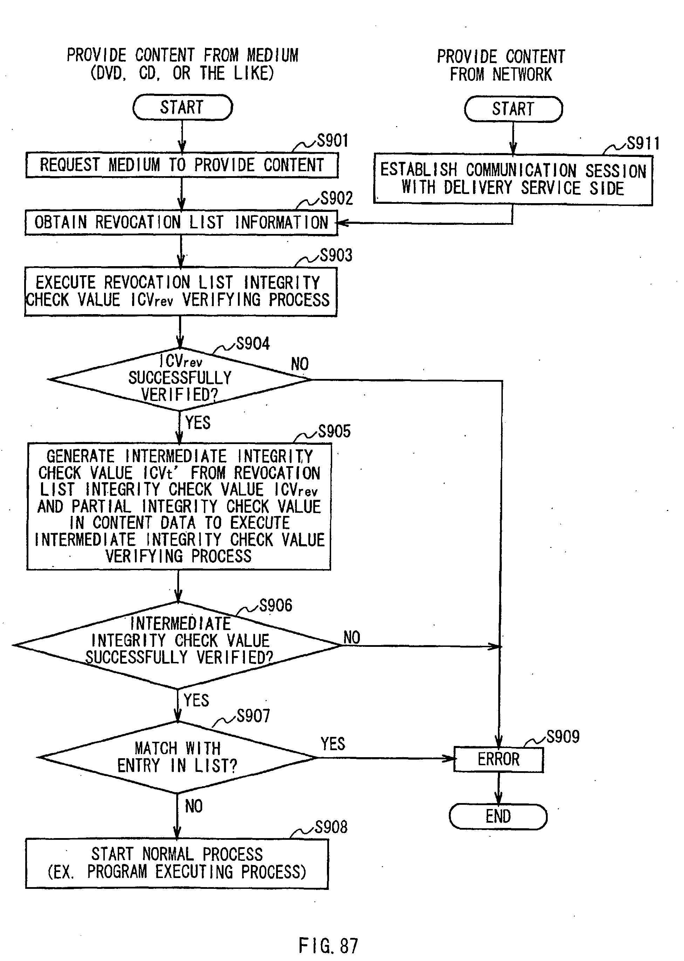

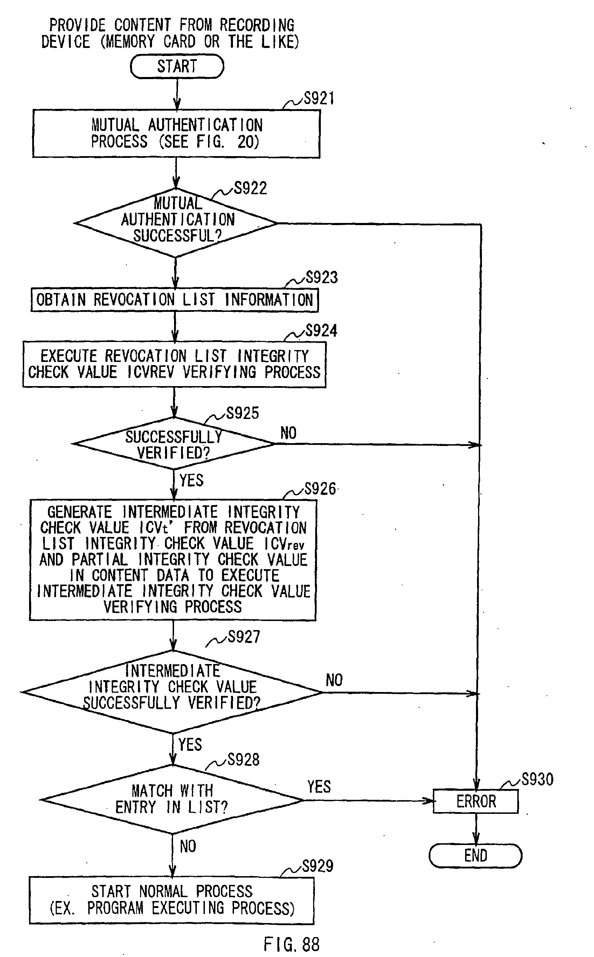

Figs. 87 and 88 show a flow of a process for excluding invalid recording and reproducing devices in this configuration. Fig. 87 shows a flow of a process for excluding (revoking) invalid recording and reproducing devices if a content is provided by the medium 500 such as a DVD or a CD or the communication means 600, while Fig. 88 shows a flow of a process for excluding (revoking) invalid recording and reproducing devices if a content is provided by the recording device 400 such as a memory card.

First, the process flow in Fig. 87 will be explained. At step S901, the medium is installed and a request is made for a content, that is, a reproduction or download process. The process shown in Fig. 87 corresponds to a step executed, for example, before installation of the medium such as DVD or the like in the recording device followed by the download process. The download process is as previously described with reference to Fig. 22 and is executed as a step before the process flow in Fig. 22 or a process inserted into this process flow.

If the recording and reproducing device 300 receives a content via the communication means such as a network, then at step S911, a communication session with a content distribution service side is established, and the process then proceeds to step S902.

At step S902, the revocation list (see Fig. 86) is obtained from the header section of the content data. In this list obtaining process, if the content is present in the medium, the control section 301 shown in Fig. 3 reads it out therefrom via the read section 304. If the content is obtained from the control section, the communication means 301 shown in Fig. 3 receives it from the content distributing side via the communication section 305.

Next, at step S903, the control section 301 passes the revocation list obtained from the medium 500 or the communication means 600, to the cryptography process section 302, which is then caused to execute the check value generating process. The recording and reproducing device 300 internally has the revocation-integrity-check-value-generating key Kicv-rev, calculates the integrity check value ICV-rev' in accordance with the ICV calculation method described in Figs. 23 and 24 and other figures, by applying the integrity-check-value-generating key Kicv-rev using the received revocation list as a message, and compares the result of the calculation with the integrity check value: ICV-rev stored in the header to determine that the list have not been tampered if they are equal (Yes at step S904). If the values are not equal, the recording and reproducing device determines that the list has been tampered, and the process proceeds to step S909 to indicate a process error to end the process.

Then at step S905, the control section 306 of the recording and reproducing device cryptography process section 302 causes the encryption/decryption section 308 of the recording and reproducing device cryptography process section 302 to calculate the total integrity check value ICVt'. The total integrity check value ICVt' is generated by using as a key the system signature key Ksys stored in the internal memory 307 of the recording and reproducing device cryptography process section 302 and encrypting the intermediate integrity check value based on the DES, as shown in Fig. 25. The verification process with each partial integrity check value such as the ICVa or ICVb is omitted from the process flow shown in Fig. 87, but verification with these partial check values is carried out depending on the data format as in the process flow in the previously described Figs. 39 to 45.

Then at step S906, the generated total integrity check value ICVt' is compared with the integrity check value ICVt in the header, and if they are equal (Yes at step S906), the process advances to step S907. If the values are not equal, the recording and reproducing device determines that the list has been tampered, and the process proceeds to step S909 to indicate a process error to end the process.

As previously described, the total integrity check value ICVt is used to check all the partial integrity check value contained in the content data, such as the ICVa and ICVb and integrity check values for corresponding content blocks which are dependent on the data format. In this case, however, the list integrity check value ICVrev for checking the revocation list for tamper is added to the partial integrity check values, and all of these integrity check values are checked for tamper. If the total integrity check value equals the integrity check value: ICVt stored in the header, it is determined that none of the ICVa and ICVb, the content block integrity check values, and the list integrity check value ICVrev have not been tampered.

Further at step S907, the revocation list, which has been determined to be free from tamper, is compared with the recording and reproducing device ID (IDdev) stored in this recording and reproducing device 300.

If the list of invalid recording and reproducing device IDs IDdev read out from the content data contains the identifier IDdev of this recording and reproducing device, this recording and reproducing device 300 is determined to have illegally copied key data. The process then advances to step S909 to abort the subsequent procedure. For example, the process disables, for example, the execution of the content download process in Fig. 22.

At step S907, if the list of invalid recording and reproducing device IDs IDdev is determined not to contain the identifier IDdev of this recording and reproducing device, this recording and reproducing device 300 is determined to have valid key data. The process proceeds to step S908 to enable the subsequent procedure, for example, the program executing process or the content download process in Fig. 22 or other figures.

Fig. 88 shows a process executed to reproduce content data stored in the recording device 400 such as a memory card. As previously described, the recording device 400 such as a memory card and the recording and reproducing device 300 carry out the mutual authentication process described in Fig. 20 (step S921). Only if the mutual authentication is successful at step S922, the process proceeds to step S923 and the subsequent processing, whereas if the mutual authentication fails, an error occurs at step S930 to prevent the subsequent processing from being executed.

At step S923, the revocation list (see Fig. 86) is obtained from the header section of the content data. The processing at the subsequent steps S924 to 930 is similar to the corresponding processing in Fig. 87. That is, the list is verified with the list integrity check value (S924 and S925) and with the total integrity check value (S926 and S927), and the list entry is compared with the recording and reproducing device ID IDdev (S928). Then, if the list of invalid recording and reproducing device IDs IDdev contains the identifier IDdev of this recording and reproducing device, this recording and reproducing device 300 is determined to have illegally copied key data, and the process then advances to step S930 to abort the subsequent procedure. For example, the process disables, for example, the execution of the content reproduction process in Fig. 28. On the other hand, if the list of invalid recording and reproducing device IDs IDdev is determined not to contain the identifier IDdev of this recording and reproducing device, this recording and reproducing device 300 is determined to have valid key data, and the process proceeds to step S929 to enable the subsequent procedure.

As described above, according to the present data processing apparatus, the data identifying invalid recording and reproducing devices, that is, the revocation list containing the identifiers IDdev of invalid recording and reproducing devices is contained in the content provided by the content provider or manager as constituent data of the header section of the content data. Before using the content in the recording and reproducing device, the recording and reproducing device user collates the recording and reproducing device ID IDdev stored in the memory of this recording and reproducing device with the ID in the list and prevents the subsequent processing if matching data are found. Consequently, the content can be prevented from being used by invalid recording and reproducing devices that store copied key data in their memory.

(18) Method for Configuring and Manufacturing Secure Chip

As previously described, the internal memory 307 of the recording and reproducing device cryptography process section 302 or the internal memory 405 of the recording device 400 holds important information such as the cryptography keys and thus needs to be structured to reject external invalid reads. Thus, the recording and reproducing device cryptography process section 302 and the recording device cryptography process section 401 are configured as a tamper resistant memory characterized to restrain external illegal reads in that it comprises, for example, a semiconductor chip that rejects external accesses and has a multilayer structure, an internal memory sandwiched between dummy layers of aluminum or the like or arranged in the lowest layer, and a narrow range of operating voltages and/or frequencies.

As understood from the above description, however, data such as the recording and reproducing device signature key Kdev which vary depending on the recording and reproducing device must be written to the internal memory 307 of the recording and reproducing device cryptography process section 302. Additionally, data rewrites or reads must be difficult after individual information for each chip, for example, identification information (ID) and encryption key information has been written to a non-volatile storage area in the chip, for example, a flash memory or an FeRAM, for example, after shipment.

A conventional method for making data reads and rewrites difficult comprises, for example, making a data write command protocol secret or separating signal lines on the chip for accepting the data write command from communication signal lines used after completion of the product so that the data write command will not be effective unless the signal is directly transmitted to the chip on a substrate.

Even with such a conventional method, however, those who have a technical knowledge of storage elements can output signals to a data write area of the chip if they have a facility and a technique for driving the circuit, and even if a data write command protocol is secret, there is always a possibility that the protocol may be analyzed.

Distribution of elements for storing cryptography process data which allow secret data to be modified may threaten the entire cryptography process system. In addition, to prevent data from being read out, it is possible to avoid implementing the data read command. In this case, however, even if a regular data write has been executed, it is impossible to determined whether or not the written data has been accurately written, resulting' in a possibility of supplying chips with inappropriate data written thereto.

In view of these conventional techniques, the present invention provides a secure chip configuration that enables data to be accurately written to a non-volatile memory such as a flash memory or an FeRAM while restraining data from being read out therefrom, as well as a method for manufacturing such a secure chip.

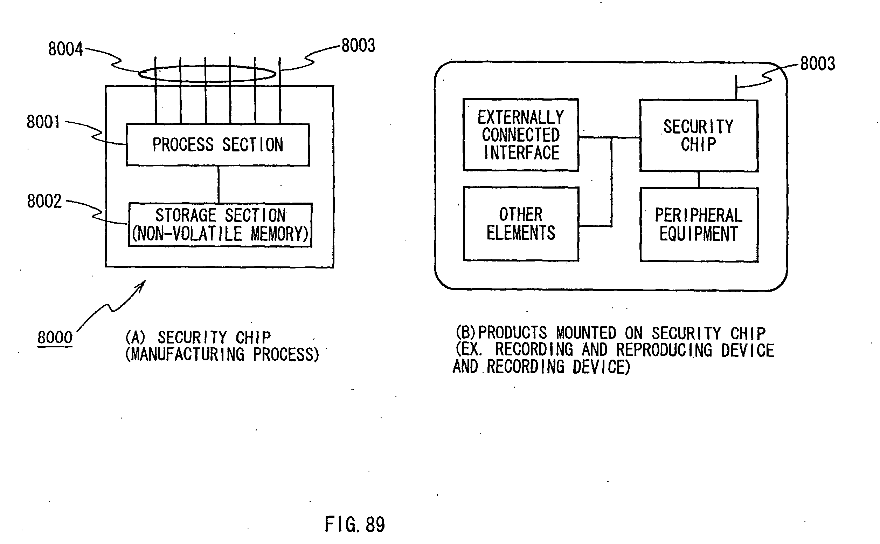

Fig. 89 shows a security chip configuration applicable to, for example, the above described recording and reproducing device cryptography process section 302 or the cryptography process section 401 of the recording device 400. Fig. 89(A) shows a security chip configuration formed during a chip manufacturing process, that is, during a data write process, and Fig. 89B shows an example of the configuration of a product such as the recording and reproducing device 300 or the recording device 400 which has a security chip mounted in the product and having data written thereto.

During the manufacturing process, a process section 8001 of the security chip has mode specifying signal lines 8003 and various command signal lines 8004 connected thereto and write or read data to or from a storage section 8002 comprising a non-volatile memory, depending on, for example, whether the chip is in a data write mode or a data read mode.

On the other hand, in the security chip mounted product in Fig. 89B, the security chip is connected to an externally connected interface, peripheral equipment, and other elements via general purpose signal lines, whereas the mode signal lines 8003 are not connected. Specific processing for the mode signal lines 8003 includes connecting these lines 8003 to the ground, increasing the voltage on these lines to Vcc, cutting them, sealing them with an insulator resin, etc. Such processing hinders the mode signal lines in the security chip from being accessed after shipment, thereby preventing data from being externally read out from the chip or written thereto.

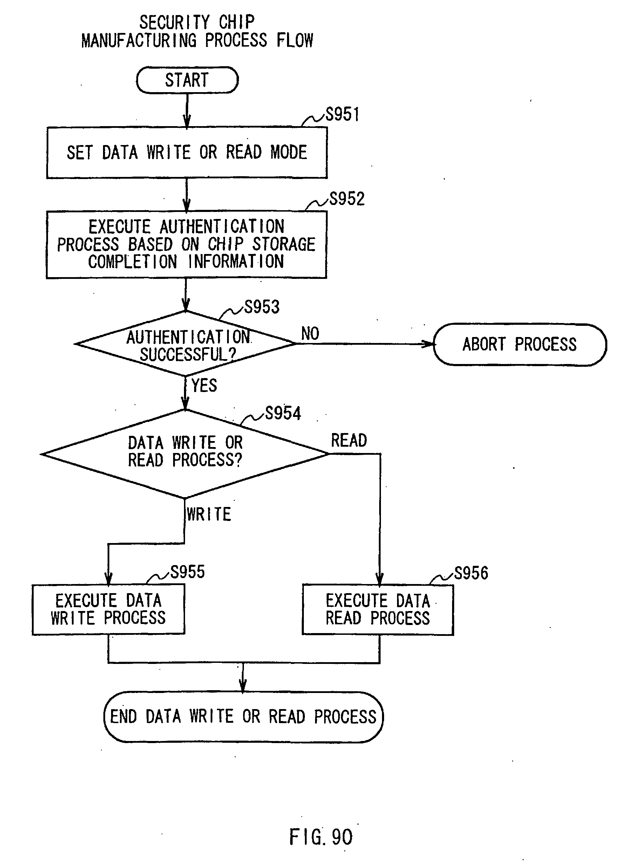

Further, the security chip 8000 of this configuration hinders data from being written to the storage section 8002 while hindering written data from being read out therefrom, thereby preventing invalid data writes or reads even if a third person successfully accesses the mode signal lines 8003. Fig. 90 shows a process flow of a data write to or a data read from the security chip of this configuration.

At step S951, the mode signal lines 8003 are set for a data write or read mode.

At step S952, authentication information is taken out from the chip. The security chip of this configuration stores information required for the authentication process, such as a password and key information for the authentication process for the cryptography technique, for example, by wires or the mask ROM configuration. At step S952, this authentication information is read out to execute the authentication process. If, for example, regular data write jig and data read device are connected to the general purpose signal lines to execute the authentication process, the authentication will be successful (Yes at step S953). If, however, invalid data write jig and data read device are connected to the general purpose signal lines to execute the authentication process, the authentication will fail (No at step S953) and the process is stopped. The authentication process can be executed, for example, in accordance with the mutual authentication process procedure previously described in Fig. 13. The process section 8001 shown in Fig. 89A has a configuration capable of such an authentication process. This can be implemented, for example, using a configuration similar to a command register integrated into the control section 403 of the cryptography process section 401 of the recording device 400 shown in the previously described Fig. 29. For example, the process section of the chip in Fig. 89A has a configuration similar to the command register integrated into the control section 403 of the cryptography process section 401 of the recording device 400 shown in Fig. 29, and carries out an appropriate process to enable the authentication process sequence to be executed, in response to an input of a predetermined command from an apparatus connected to the various command signal lines 8004.

Only if the authentication process is successful, the process section 8001 accepts the data write or read command to execute the data write (step S955) or read (step S956) process.

As described above, the security chip of this configuration is configured to execute the authentication process on a data write or read, thereby preventing an unauthorized third person from reading or writing data to or from the storage section of the security chip.

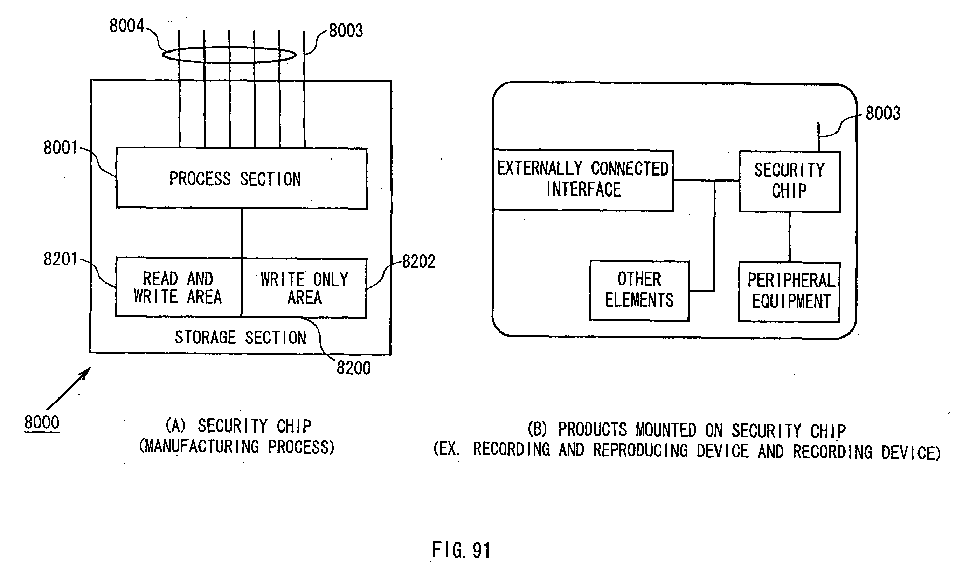

Next, Fig. 91 shows an embodiment of a securer element configuration. In this example, the storage section 8200 of the security chip is separated into two areas; one of the areas is a Read Write (RW) area 8201 to and from which data can be written and read, while the other is a Write Only (WO) area 8202 to which data can only be written.

In this configuration, cryptography key data, ID data, and other data which require high security are written to the Write Only (WO) area 8202, whereas integrity check data and other data which do not require so high security are written to the Read Write (RW) area 8201.

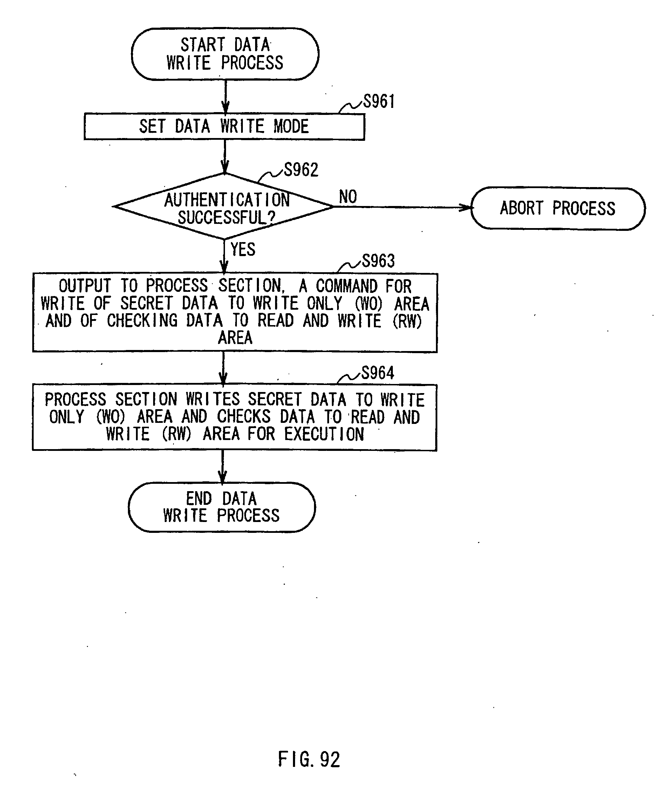

As a process for reading data out from the Read Write (RW) area 8201, the process section 8001 executes a data read process involving the authentication process described in the above described Fig. 90. The data write process, however, is executed following the flow in Fig. 92.

At step S961 in Fig. 92, the mode signal lines 8003 are set for the write mode, and at step S962, an authentication process similar to that described in the above Fig. 90 is executed. When the authentication process is successful, the process proceeds to step S963 to output to the process section 8001, a command for writing information such as key data which requires high security to the Write Only (WO) area 8202 via the command signal lines 8004, while writing check data or other data which do not require so high security to the Read Write (RW) area 8201.

At step S964, on receiving the command, the process section 8001 executes a data write process on the Write Only (WO) area 8202 or the Read Write (RO) area 8201 depending on the command.

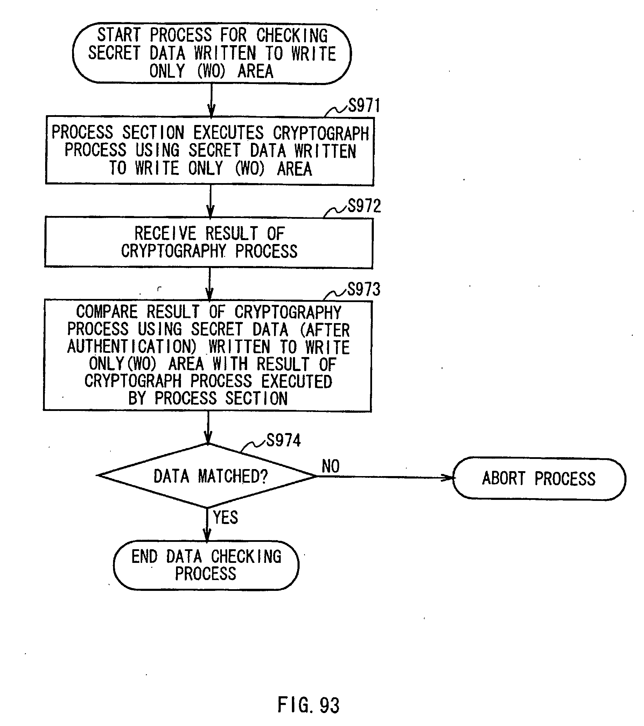

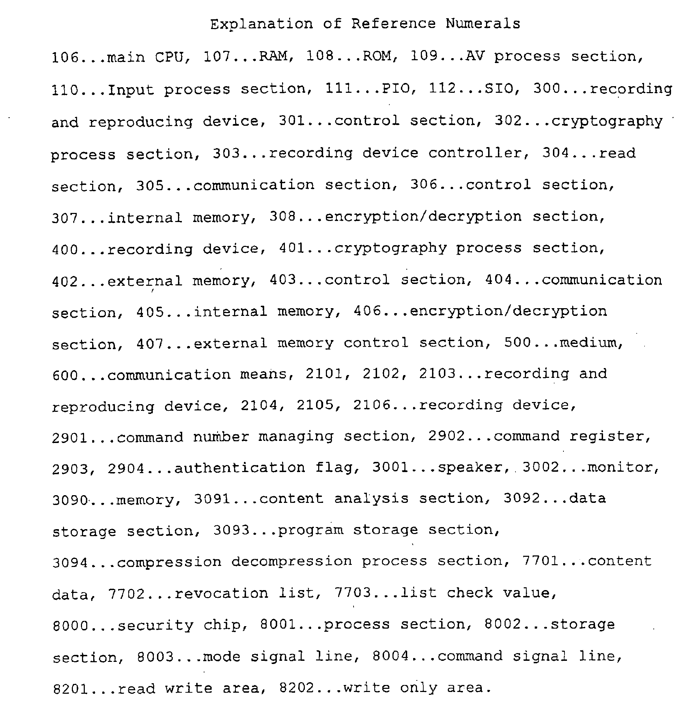

In addition, Fig. 93 shows a flow of a process for verifying data written to the Write Only (WO) area 8202.

At step S971 in Fig. 93, the process section 8001 causes the Write Only (WO) area 8202 to execute the cryptography process based on the written data. Like the above authentication process executing configuration, this execution configuration is implemented by a configuration for sequentially executing the cryptography process sequence stored in the command register. Additionally, the cryptography process algorithm executed in the process section 8001 is not particularly limited, but for example, the previously described DES algorithm can be carried out.

Then at step S972, a verification device connected to the security chip receives the result of the cryptography process from the process section 8001. Then at step S973, the result of the application of a cryptography process similar to the algorithm executed by the process section 8001 on the regular write data written to the storage section at step S973 is compared with the result of encryption from the process section 8001.

If the compared results are identical, it is verified that the data written to the Write Only (WO) area 8202 are correct.

With this configuration, if the authentication process should be deciphered to enable the read command to be executed, data can be read out only from the Read Write (RW) area 8201, while data written to the Write Only (WO) area 8202 cannot be read out; thus this configuration provides much higher security. In addition, unlike chips that prohibit data reads, this chip includes the Read Write (RW) area 8201 to enable memory accesses to be validated.

This invention has been described with reference to the particular embodiments. Obviously, however, modifications or substitutions may be made to the present invention by those skilled in the art without deviating from the spirits thereof. That is, the present invention has been disclosed for illustrative purposes only and should not be interpreted in a restrictive manner. In addition, in the above described embodiments, the recording and reproducing device capable of recording and reproducing contents are described by way of example. However, the configuration of the present invention is applicable to apparatuses capable of only recording or reproducing data, and the present invention can be implemented in personal computers, game apparatuses, and other various data processing apparatuses in general. To determine the points of the present invention, the claims set forth at the beginning should be referenced.

Industrial Applicability

The present invention can be utilized in apparatuses and systems which are capable of reproducing various contents such as sounds, images, games, and programs, which can be obtained via a storage medium, such as a DVD and a CD, or via various wired and radio communication means such as CATV, Internet, and satellite communication, in a recording and reproducing a user has, and storing the contents in a special recording device, such as a memory card, a hard disk, and a CD-R, and at the same time, of offering security in which the utilization that a contents provider wants is limited in the case of using the contents stored in the recording device, and a third party other than regular users is prevented from illegally using the provided contents.

**Claims**

1. A data processing system comprising a recorder/reproducer and a recording device for executing transmission of encryption data to each other, **characterized in that**:

   said recording device has a data storing section for storing content data that is transferable between the recorder/reproducer and the recording device, and at the same time, has a plurality of key blocks storing key data applicable at least to authentication processing between the recorder/reproducer and the recording device, and the key data stored in the plurality of key blocks has a configuration in which different key data is stored for each block;
   said recorder/reproducer has a configuration for, in the authentication processing between the recorder/reproducer and the recording device, designating one key block out of the plurality of key blocks held by said recording device, and executing the authentication processing with said recording device based on the key data stored in the designated key block.

2. The data processing system according to Claim 1, **characterized in that** an authentication key that is applicable at least to the authentication processing is included in each of the plurality of key blocks of said recording device, and the authentication key of each key block is configured as key data different from each other.

3. The data processing system according to Claim 1, **characterized by** having a configuration in which:

   said recorder/reproducer holds setting information in which a key block to be applied to the authentication processing as a designated key block in a memory in the recorder/reproducer; and
   said recorder/reproducer designates one key block out of the plurality of key blocks held by said recording device based on the setting information held in the memory in the recorder/reproducer when the authentication processing between the recorder/reproducer and the recording device is performed, and executes the authentication processing.

4. The data processing system according to Claim 3, **characterized by** having a configuration in which the designated key block setting information of said recorder/reproducer is set to be different for each predetermined product unit such as a model of the recorder/reproducer, a version or a delivery destination.

5.  The data processing system according to Claim 1, **characterized in that**:

    said recorder/reproducer has a configuration in which authentication processing key data required for the authentication processing with said recording device is stored in the memory in the recorder/reproducer; and authentication of the authentication processing key data stored in said memory in the recorder/reproducer is only established in the authentication processing using a key data in a block stored in a part of the plurality of key blocks in said recording device, and is not established in the authentication processing using a key data in other key blocks.

6.  The data processing system according to Claim 1, **characterized in that**:

    said recorder/reproducer stores a master key Mkake for recording device authentication key in the memory of the recorder/reproducer; and an authentication key Kake that is generated based on said master key Mkake for recording device authentication key is an authentication key whose authentication is only established in the authentication processing using key data in a designated block set in the recorder/reproducer, and is not established in the authentication processing using key data in other key blocks.

7.  The data processing system according to Claim 6, **characterized in that**:

    said recording device has a configuration in which a recording device identification information IDmem in said memory in the recording device and, at the same time, an authentication key Kake that is different for each key block is stored in each of said plurality of key blocks; and said recorder/reproducer has a configuration for generating the authentication key Kake by encryption processing of said recording device identification information IDmem based on the master key Mkake for recording device authentication stored in the memory of the recorder/reproducer, and performing the authentication processing with the designated key block of said recording device using the generated authentication key Kake.

8.  The data processing system according to Claim 1, **characterized in that** each key block of said recording device includes recording device identifier information that is peculiar information of the recording device, an authentication key and a random number generation key to be used in the authentication processing with the recorder/reproducer, and a storing key to be used in encryption processing of storage data in said data storage section.

9.  The data processing system according to Claim 8, **characterized in that**:

    said storing key stored in each of the plurality of key blocks of said recording device is key data that is different for each key block and, at the same time, is a key to be used in encryption processing with respect to stored data of said data storage section; and said recording device has a configuration for executing key exchange processing of the storing key in the recording device, and outputting encryption data by a key different from the storing key to outside the recording device if utilization request of data that is encrypted by the storing key received from outside the recording device.

10. The data processing system according to Claim 1, **characterized in that**:

    said recording device has an encryption processing section; and the encryption processing section has a configuration for selecting one key block of the plurality of key blocks of the recording device in accordance with the key block designation information received from said recorder/reproducer, and executing the authentication processing with said recorder/reproducer using the key data in the selected key block.

11. The data processing system according to Claim 10, **characterized in that** the encryption processing section of said recording device has a configuration for executing the encryption processing executed in the data storing processing in the data storing section storing content data transferable between the recorder/reproducer and the recording device and in the data transfer processing from the data storing section, using the key data in one key block that is selected in accordance with the key block designation information received from said recorder/reproducer.

12. The data processing system according to Claim 1, **characterized in that** there are a plurality of designatable key blocks in said recording device in said recorder/reproducer, and at least one key block in the plurality of designatable key blocks is configured as a commonly designatable key block that is also designatable in other recorder/reproducers.

**13.** A recording device having a data storage section for storing content data transferable with an external apparatus, **characterized by** having a plurality of key blocks storing key data applicable at least to authentication processing between the recording device and said external device, and key data stored the plurality of key blocks has a configuration for storing key data for each block.

**14.** The recording device according to Claim 13, **characterized in that** each of the plurality of key blocks of said recording device includes an authentication key applicable at least to the authentication processing, and an authentication key for each key block is configured as key data that is different from each other.

**15.** The recording device according to Claim 13, **characterized in that** said recording device has a configuration in which a memory in said recording device has recording device identification information IDmem and, at the same time, a different authentication key Kake for each key block is stored in each of the plurality of key blocks.

**16.** The recording device according to Claim 13, **characterized in that** each key block of said recording device includes recording device identifier information that is peculiar information of the recording device, an authentication key and a random number generation key to be used in the authentication processing with said external apparatus, and a storing key to be used in encryption processing of storage data in said data storage section.

**17.** The recording device according to Claim 16, **characterized in that**:

said storing stored in each of the plurality of key blocks of said recording device is key data that is different for each key block and, at the same time, is a key to be used in encryption processing with respect to stored data of said data storage section; and said recording device has a configuration for executing key exchange processing of the storing key in the recording device, and outputting encryption data by a key different from the storing key to outside the recording device if utilization request of data that is encrypted by the storing key s received from outside the recording device.

**18.** The recording device according to Claim 13, **characterized in that**:

said recording device has an encryption processing section; and the encryption processing section has a configuration for selecting on key block of the plurality of key blocks of the recording device in accordance with the key block designation information received from said external apparatus, and executing the authentication processing with said recorder/reproducer using the key data in the selected key block.

**19.** The recording device according to Claim 18, **characterized in that** the encryption processing section of said recording device has a configuration for executing the encryption processing executed in the data storing processing in the data storing section storing content data transferable between said external apparatus and the recording device and in the data transfer processing from the data storing section, using the key data in one key block that is selected in accordance with the key block designation information received from said external apparatus.

**20.** A data processing method in a data processing system comprising a recorder/reproducer and a recording device for executing transmission of encryption data to each other, **characterized in that** a recorder/reproducer designates one key block out of a plurality of key blocks held by the recording device, and executes authentication processing with said recording device based on key data stored in the designated key block.

**21.** The data processing method according to Claim 20 **characterized in that** an authentication key that is applicable at least to the authentication processing is included in each of the plurality of key blocks of said recording device, and the authentication key of each key block is configured as key data different from each other.

**22.** The data processing method according to Claim 20 **characterized in that** said recorder/reproducer designates one key block out of the plurality of key blocks held by said recording device based on the setting information held in the memory in the recorder/reproducer when the authentication processing between the recorder/reproducer and the recording device is performed, and executes the authentication processing.

**23.** The data processing method according to Claim 20 **characterized in that** said recorder/reproducer stores a master key Mkake for recording device authentication key in the memory of the recorder/reproducer, generates an authentication key Kake based on said master key Mkake for recording device authentication key, and executes authentication processing using key data in the designated key block of the plurality of key blocks held by said recording device using the generated authentication key Kake.

24. The data processing method according to Claim 20 **characterized in that**:

> said recording device has a configuration in which a recording device identification information IDmem in said memory in the recording device and, at the same time, an authentication key Kake that is different for each key block is stored in each of said plurality of key blocks; and
> said recorder/reproducer generates the authentication key Kake by executing encryption processing of said recording device identification information IDmem based on the master key Mkake for recording device authentication stored in the memory of the recorder/reproducer, and performing the authentication processing with the designated key block of said recording device using the generated authentication key Kake.

25. The data processing method according to Claim 20 **characterized in that** said recording device selects one key block of the plurality of key blocks of the recording device in accordance with the key block designation information received from said recorder/reproducer, and executes the authentication processing with said recorder/reproducer using the key data in the selected key block.

26. The data processing method according to Claim 20 **characterized in that** said recording device executes the encryption processing executed in the data storing processing in the data storing section storing content data transferable between the recorder/reproducer and the recording device and in the data transfer processing from the data storing section, using the key data in one key block that is selected in accordance with the key block designation information received from said recorder/reproducer.

27. The data processing method according to Claim 20 **characterized in that**:

> each of the plurality of key blocks of said recording device includes a storing key used in encryption processing of stored data of the data storage section in said recording device; and
> said recording device executes key exchange processing of the storing key in the recording device, and outputting encryption data by a key different from the storing key to outside the recording device if utilization request of data that is encrypted by the storing key received from outside the recording device.

28. A program providing medium for providing a computer program that causes a computer system to execute a data processing method in a data processing system comprising a recorder/reproducer and a recording device for executing transmission of encryption data to each other, **characterized in that** said computer program includes a step in which a recorder/reproducer designates one key block out of a plurality of key blocks held by the recording device, and executes authentication processing with said recording device based on key data stored in the designated key block.

29. A data processing system comprising a first apparatus and a second apparatus for executing transmission of encryption data to each other, **characterized in that**:

> said second apparatus has an encryption processing section for executing encryption processing for transmission data with said first apparatus;
> said encryption processing section has a control section for receiving a command identifier transferred from said first apparatus in accordance with a setting sequence defined in advance, taking out a command corresponding to the received command identifier from a register, and having the command executed; and
> the control section has a configuration for, if the command identifier transferred from the first apparatus is a command identifier different from the setting sequence, canceling processing of command corresponding to the command identifier.

30. The data processing system according to Claim 29, **characterized by** having a configuration in which:

> the setting sequence relating to the command identifier received from the first apparatus held by the control section is a command number setting sequence in which numbers are sequentially incremented; and
> said control section stores a received value of the command number received from said first apparatus in a memory, determines coincidence of a new command number received from said first apparatus with the setting sequence based on the received command number stored in said memory and, if it is determined that the new received command number is different from the setting sequence, executes resetting of the command number stored in said memory without performing command processing corresponding to the new received command number.

31. The data processing system according to Claim 29, **characterized in that**:

said second apparatus has a command register storing a command in accordance with said setting sequence;

an authentication processing command sequence for executing authentication processing between said first apparatus and said second apparatus, and an encryption processing command sequence for executing encryption processing relating to transferred data between said first apparatus and said second apparatus; and

a sequence is set such that a command identifier corresponding to said authentication processing command sequence is executed in a step before a command sequence corresponding to said encryption processing command sequence.

32. The data processing system according to Claim 31, **characterized in that** said encryption processing command sequence includes at least one of a command sequence including encryption key exchange processing for encryption data that is transferred from said first apparatus to said second apparatus and stored in storing means in said second apparatus, or a command sequence including an encryption key exchange processing for encryption data that is stored in the storing means in said second apparatus and transferred from said second apparatus to said first apparatus.

33. The data processing system according to Claim 31, **characterized in that** said control section set an authentication flag indicating that authentication is done if authentication is established by the authentication processing of said first apparatus and said second apparatus, and executes command management control that enables execution of said encryption processing command sequence during the authentication flag is set, and said control section resets said authentication flag in executing said authentication processing command sequence anew.

34. The data processing system according to Claim 32, **characterized in that** said data processing system has a configuration in which said control section manages an order of command execution based on said setting sequence and said command identifier in said encryption key exchange processing, and said control section does not accept command processing that is different from said setting sequence from an external apparatus including said first apparatus during a series of command execution relating to said key exchange processing.

35. The data processing system according to Claim 29, **characterized in that**:

said second apparatus is a storage device having a data storage section for storing encryption data;

said first apparatus is a recorder/reproducer for performing storing processing of data in said storage device, and taking out data stored in said storage device to reproduce and execute the data; and

said recorder/reproducer has an encryption processing section for executing encryption processing of transferred data with said recording device.

36. The data processing system according to Claim 35, **characterized by** having a configuration in which:

said recording device has a key block storing an authentication key applied to authentication processing between said recorder/reproducer and said recording device and a storing key as an encryption key of data stored in a data storage section in said recording device; and

said control section in an encryption processing section of said recording device receives a command identifier from said recorder/reproducer and executes authentication processing using the authentication key stored in said key block in accordance with said setting sequence, and executes encryption processing of data accompanying key exchange processing using said storing key after completing the authentication processing.

37. The data processing system according to Claim 36, **characterized by** having a configuration in which:

said key block is composed of a plurality of key blocks storing an authentication key and a storing key that are different each other; and

said recorder/reproducer notifies said recording device of one key block used in authentication processing and encryption processing of data as a designated key block out of said plurality of key blocks, and said recording device executes authentication processing using the authentication key stored in the designated key block and encryption processing of data using the storing key.

38. A recording device having a data storage section for storing content data that is transferable with an external apparatus,
**characterized in that**:

said recording device has an encryption processing section for executing encryption processing for transmission data with an external apparatus;
said encryption processing section has a control section for receiving a command identifier transferred from said external apparatus in accordance with a setting sequence defined in advance, taking out a command corresponding to the received command identifier from a register, and having the command executed; and
the control section has a configuration for, if the command identifier transferred from said external apparatus is a command identifier different from the setting sequence, canceling processing of command corresponding to the command identifier.

39. The recording device according to Claim 38, **characterized in that**:

said control section has a command number setting sequence in which numbers are sequentially incremented as said setting sequence; and
said control section has a configuration for storing a received value of the command number received from said external apparatus in a memory, determines coincidence of a new command number received from said external apparatus with the setting sequence based on the received command number stored in said memory and, if it is determined that the new received command number is different from the setting sequence, executes resetting of the command number stored in said memory without performing command processing corresponding to the new received command number.

40. The recording device according to Claim 38, **characterized in that**:

said recording device has a command register storing a command in accordance with said setting sequence;
an authentication processing command sequence for executing authentication processing between said external apparatus and said recording device, and an encryption processing command sequence for executing encryption processing relating to transferred data between said external apparatus and said recording device; and
a sequence is set such that a command identifier corresponding to said authentication processing command sequence is executed in a step before a command sequence corresponding to said encryption processing command sequence.

41. The recording device according to Claim 40, **characterized in that** said encryption processing command sequence includes at least one of a command sequence including encryption key exchange processing for encryption data that is transferred from said external apparatus to said recording device and stored in storing means in said recording device, or a command sequence including an encryption key exchange processing for encryption data that is stored in the storing means in said recording device and transferred from said storing device to said external apparatus.

42. The recording device according to Claim 40, **characterized in that** said control section set an authentication flag indicating that authentication is done if authentication is established by the authentication processing of said external apparatus and said recording device, and executes command management control that enables execution of said encryption processing command sequence during the authentication flag is set, and said control section resets said authentication flag in executing said authentication processing command sequence anew.

43. The recording device according to Claim 43, **characterized in that** said data processing system has a configuration in which said control section manages an order of command execution based on said setting sequence and said command identifier in said encryption key exchange processing, and said control section does not accept command processing that is different from said setting sequence from an external apparatus including said external apparatus during a series of command execution relating to said key exchange processing.

44. The recording device according to Claim 38, **characterized by** having a configuration in which:

said recording device has a key block storing an authentication key applied to authentication processing between said external apparatus and said recording device and a storing key as an encryption key of data stored in a data storage section in said recording device; and
said control section in an encryption processing section of said recording device receives a command identifier from said external apparatus and executes authentication processing using the authentication key stored in said key block in accordance with said setting sequence, and executes encryption processing of data accompanying key exchange processing using said storing key after completing the authentication processing.

**45.** The recording device according to Claim 44, **characterized by** having a configuration in which:

said key block is composed of a plurality of key blocks storing an authentication key and a storing key that are different each other; and said external apparatus notifies said recording device of one key block used in authentication processing and encryption processing of data as a designated key block out of said plurality of key blocks, and said recording device executes authentication processing using the authentication key stored in the designated key block and encryption processing of data using the storing key.

**46.** A data processing method in a data processing system comprising a first apparatus and a second apparatus for executing transmission of encryption data to each other, **characterized in that** said second apparatus executes command processing controlling steps for receiving a command identifier transferred from said first apparatus in accordance with a setting sequence defined in advance, taking out a command corresponding to the received command identifier from a register, and having the command executed, and in said command processing control, if the command identifier transferred from the first apparatus is a command identifier different from the setting sequence, processing of command corresponding to the command identifier is cancelled.

**47.** The data processing method according to Claim 46, **characterized in that**:

in said command processing controlling step, the setting sequence relating to the command identifier received from the first apparatus is a command number setting sequence in which numbers are sequentially incremented; and said command processing controlling steps comprises:

a step of storing a receiving value of a received command number from said first apparatus in a memory; and a determining step for determining coincidence of a new command number received from said first apparatus with the setting sequence based on the received command number stored in said memory and, if it is determined that the new received command number is different from the setting sequence in said determining step, executing resetting of the command number stored in said memory without performing command processing corresponding to the new received command number.

**48.** The data processing method according to Claim 46, **characterized in that**:

in said data processing method, said command processing controlling step is a step for executing:

an authentication processing command sequence for executing authentication processing between said first apparatus and said second apparatus; and an encryption processing command sequence for executing encryption processing relating to transferred data between said first apparatus and said second apparatus; and said setting sequence is a sequence for executing said authentication processing command sequence prior to said encryption processing command sequence.

**49.** The data processing method according to Claim 48, **characterized in that** said encryption processing command sequence includes at least one of a command sequence including encryption key exchange processing for encryption data that is transferred from said first apparatus to said second apparatus and stored in storing means in said second apparatus, or a command sequence including an encryption key exchange processing for encryption data that is stored in the storing means in said second apparatus and transferred from said second apparatus to said first apparatus.

**50.** The data processing method according to Claim 48, **characterized by** comprising, in said data processing method, an authentication flag setting step of setting an authentication flag indicating that authentication is done if authentication is established by the authentication processing of said first apparatus and said second apparatus, and **characterized in that** said command processing controlling step executes command management control that enables execution of said encryption processing command sequence during the authentication flag is set.

**51.** The data processing method according to Claim 50, **characterized by** comprising the step of resetting, in said data processing method, said authentication flag in executing said authentication processing command sequence anew.

**52.** The data processing method according to Claim 49, **characterized by** comprising, in said command processing controlling step in said data processing method, managing an order of command execution based on said setting sequence and said command identifier during execution of a series of commands relating to said key exchange processing, and not accepting command processing that is different from said setting sequence from an external apparatus including said first apparatus.

**53.** A program providing medium for providing a computer program for causing a computer system to execute data processing in a data processing system that comprises a first apparatus and a second apparatus for executing transmission of encryption data to each other, **characterized by** comprising:

a command processing controlling step of receiving a command identifier transferred from said first apparatus to said second apparatus in accordance with a setting sequence defined in advance, taking out a command corresponding to the received command identifier from a register, and having the command executed; and

a step of canceling processing of command corresponding to the command identifier if the command identifier transferred from the first apparatus is a command identifier different from the setting sequence in said command processing controlling step.

DVD
CD
30

PROGRAM/
DATA
KEY DATA

INTERNET

PROGRAM/
DATA
KEY DATA

40

**10**

REPRODUCTION MEANS
(PC OR GAME APPARATUS)

**12**

**13**   C P U

STORAGE PROCESS SECTION

ENCRYPT PROGRAM/DATA
WRITE TO FLOPPY DISK

REPRODUCTION PROCESS SECTION

READ FROM FLOPPY DISK
DECRYPT PROGRAM/DATA

14

**20**

STORAGE MEANS
(MEMORY CARD)
(HARD DISK)

STORAGE SECTION
PROGRAM/DATA

21

FIG. 1

FIG. 2

RECORDING DEVICE 400

401 CRYPTOGRAPHY PROCESS SECTION

403 CONTROL UNIT

405 INTERNAL MEMORY

406 ENCRYPTION/ DECRYPTION SECTION

404 CONTROL SECTION

407 EXTERNAL MEMORY CONTROL SECTION

402 EXTERNAL MEMORY

RECORDING AND REPRODUCING APPARATUS 300

301 CONTROL SECTION

303 RECORDING DEVICE CONTROLLER

302 CRYPTOGRAPHY PROCESS SECTION

306 CONTROL SECTION

308 ENCRYPTION/ DECRYPTION SECTION

307 INTERNAL MEMORY

304 READ SECTION

305 COMMUNICATION SECTION

MEDIUM 500

CONTENT ID | USAGE POLICY | BLOCK INFORMATION TABLE | KEY DATA | CONTENT BLOCK

COMMUNICATION MEANS (EX. NETWORK) 600

Internet/Cable/Satellite

CONTENT ID | USAGE POLICY | BLOCK INFORMATION TABLE | KEY DATA | CONTENT BLOCK

PLAIN TEXT DATA

ENCRYPTED TEXT DATA

FIG. 3

EP 1 164 748 A1

| CONTENT ID |
| --- |
| UDAGE POLICY |
| INTEGRITY CHECK VALUE A(ICVa) |
| BLOCK INFORMATION TABLE KEY (Kbit) |
| CONTENT KEY (Kcon) |
| BLOCK INFORMATION (BLOCK INFORMATION TABLE) |
| INTEGRITY CHECK VALUE B(ICVb) |
| TOTAL INTEGRITY CHECK VALUE (ICVt) |
| CONTENT BLOCK 1 |
| CONTENT BLOCK 2 |
| ... |
| CONTENT BLOCK i |
| ... |
| CONTENT BLOCK N |

Kdis
Kdis
Kbit

Kcon
Kcon

HEADER SECTION

CONTENT SECTION

ENCRYPTED TEXT DATA

PLAIN TEXT DATA

SIGNATURE DATA

DATA FORMAT ON MEDIUM AND COMMUNICATION PATH

FIG. 4

| HEADER LENGTH |
|---|
| CONTENT LENGTH |
| FORMAT VERSION |
| FORMAT TYPE |
| CONTENT TYPE |
| OPERATION PRIORITY |
| LOCALIZATION FIELD |
| COPY PERMISSION |
| MOVE PERMISSION |
| ENCRYPTION ALGORITHM |
| ENCRYPTION MODE |
| INTEGRITY CHECK METHOD |

USAGE POLICY

FIG. 5

| Kbit | BLOCK NUMBER |
|---|---|

| | BLOCK LENGTH |
|---|---|
| BLOCK 1 | ENCRYPTION FLAG |
| | FLAG TO BE VERIFIED (ICV FLAG) |
| | ICV1 |

.
.
.
.

| | BLOCK LENGTH |
|---|---|
| BLOCK N | ENCRYPTION FLAG |
| | ICV FLAG |
| | CONTENT INTEGRITY CHECK VALUE (ICVN) |

BLOCK INFORMATION TABLE

FIG. 6

MESSAGE M1
(FIRST 8 BYTES)

MESSAGE M2
(NEXT 8 BYTES)

MESSAGE M3
(NEXT 8 BYTES)

MESSAGE MN
(LAST 8 BYTES)

INITIAL
VALUE:IV

⊕    I1

⊕    I2

⊕    I3

⊕    IN

KEY(K1)

DES
ENCRYPTION

DES
ENCRYPTION

DES
ENCRYPTION

DES
ENCRYPTION

E1

E2

E3

MESSAGE AUTHENTICATION CODE:MAC

⊕:EXCLUSIVE OR (XOR) PROCESS (8-BYTE UNIT)

FIG. 7

EP 1 164 748 A1

FIG. 8

PLAIN TEXT (8 BYTES)

KEY1 → DES ENCRYPTION

KEY2 → DES ENCRYPTION

KEY1 → DES ENCRYPTION

ENCRYPTED TEXT (8 BYTES)

(A)

PLAIN TEXT (8 BYTES)

KEY1 → DES ENCRYPTION

KEY2 → DES ENCRYPTION

KEY3 → DES ENCRYPTION

ENCRYPTED TEXT (8 BYTES)

(B)

FIG. 9

EP 1 164 748 A1

FIG. 10

SIGNATURE GENERATION

P DENOTES CHARACTERISTIC, A AND B DENOTES COEFFICIENT OF ELLIPTIC CURVE, ELLIPTIC CURVE IS EXPRESSED BY $y^2 = x^3 + ax + b$. G DENOTES BASE POINT ON CURVE, R DENOTES DIGIT OF G, M DENOTES MESSAGE, Ks DENOTES SECRET KEY, AND G and Ks × G DENOTE PUBLIC KEYS. — S1

CALCULATE f = Hash (M) — S2

USE RANDOM NUMBER GENERATOR TO GENERATE u SO THAT 0 < u < r — S3

CALCULATE V = u × G = (Xv, yv) — S4

CALCULATE c = Xv mod r — S5

c = 0? — S6 Yes

No

CALCULATE d = [(f + cKs)/u] mod r — S7

d = 0? — S8 Yes

No

SET SIGNATURE DATA AS (c, d) — S9

GENERATION OF SIGNATURE (IEEE P1363/D3)

FIG. 11

SIGNATURE VERIFICATION

p DENOTES CHARACTERISTIC, a AND b DENOTES
COEFFICIENT OF ELLIPTIC CURVE, ELLIPTIC CURVE IS
EXPRESSED BY $y^2 = x^3 + ax + b$. G DENOTES BASE POINT — S11
ON CURVE, r DENOTES DIGIT OF G, M DENOTES MESSAGE,
(c, d) DENOTES SIGNATURE, AND G AND Ks x G DENOTE
PUBLIC KEYS

S12
$0 < c < r$ AND $0 < d < r$?

CALCULATE $f = $ Hash $(M)$ — S13

CALCULATE $h = 1/d$ mod $r$ — S14

CALCULATE $h1 = fh$ mod $r$, $h2 = ch$ mod $r$ — S15

CALCULATE
POINT $P = (Xp, Yp) = h1 \times G + h2 \cdot Ks \times G$ — S16

IS POINT P AT INFINITY? — S17 Yes

$c = Xp$ mod $r$ ESTABLISHED? — S18 Yes

No

SIGNATURE IS CORRECT — S19

S20
SIGNATURE IS INCORRECT

SIGNATURE VERIFICATION (IEEE P1363/D3)

FIG. 12

GENERATE 64-BIT RANDOM NUMBER Ra
AND CALCULATE
Token - AB = DES (Kab, Ra || Rb || ID(b))

TRANSMIT Rb || ID(b)

GENERATE 64-BIT RANDOM NUMBER Rb

TRANSMIT Token-AB

DECRYPT Token-AB USING Kab,
CHECK WHETHER Rb AND ID(b) ARE CORRECT,
GENERATE 64-BIT RANDOM NUMBER Kses,
AND CALCULATE
Token - BA = DES (Kab, Rb || Ra || Kses)

DECRYPT Token-BA USING Kab
AND CHECK WHETHER Rb AND Ra ARE CORRECT

TRANSMIT Toen-BA

SET Kses AS SESSION KEY

ISO/IEC 9798-2 MUTUAL AUTHENTICATION AND KEY SHARING METHOD USING SYMMETRICAL KEY CRYPTOGRAPHY TECHNIQUE

FIG. 13

PUBLIC KEY CERTIFICATE

| VERSION NUMBER OF CERTIFICATE |
| SEQUENTIAL NUMBER ALLOTTED BY CERITIFICATE AUTHORITY |
| ALGORITHM AND PARAMETERS USED FOR SIGNATURE |
| NAME OF CERTIFICATE AUTHORITY |
| VALID TERM OF CERTIFICATE |
| NAME OF CERTIFICATE USER (ID) |
| PUBLIC KEY OF CERTIFICATE USER |

} THE WHOLE OF A MESSAGE

SECRET KEY OF CERTIFICATE AUTHORITY

HASH FUNCTION

ENTIRE MESSAGE

} ELECTRONIC SIGNATURE

PUBLIC KEY CERTIFICATE

FIG. 14

EP 1 164 748 A1

| A' S SECRET KEY<br>A' S PUBLIC KEY CERTIFICATE<br>p, G | | B. Sig. Gen. Key<br>(B' S PRIVATE KEY)<br>B. Certificate<br>(B' S CERTIFICATE OF THE PUBLIC KEY)<br>p, G |

A ─────────────────────────────────────────── B

GENERATE 64-BIT RANDOM NUMBER $R_a$,
GENERATE $A_k$ $(0 < A_k < p)$,
CALCULATE $A_v = A_k \times G$,
AND CALCULATE A. $Sig$ = SIGN
(A. $Sig$. Gen. Key, $R_a \| R_b \| A_v$)

◄──── TRANSMIT $R_b$ ────

GENERATE 64-BIT RANDOM NUMBER $R_b$

TRANSMIT
A. Certicaite $\| R_a \| R_b \| A_v \| A. Sig$ ────►

VERIFY IF $R_B$ SENT FROM A COINCIDES
WITH WHAT IS GENERATED
VERIFY A' S PUBLIC KEY CERTIFICATE
WITH THE PUBLIC KEY OF THE
AUTHENTICATING AUTHORITIES
OBTAIN A. $Sig$. Ver. Key (A' S PUBLIC KEY)
VERIFY A. $Sig$. WITH A. $Sig$. Ver. Key

CHECK WHETHER $R_a$ TRANSMITTED FROM B
IS SAME AS THAT GENERATED BY $R_a$,
VERIFY B' S PUBLIC KEY CERTIFICATE
USING PUBLIC KEY OF CERTIFICATE AUTHORITY,
OBTAIN B. $Sig$. Ver. Key (B' S PUBLIC KEY),
VERIFY B. $Sig$ USING B. $Sig$. Ver. Key,
CALCULATE $A_k \times B_v$, AND SET 64 BITS OF X
COORDINATE AS SESSION KEY

◄──── TRANSMIT
B. Certicaite $\| R_b \| R_a \| B_v \| B. Sig$ ────

CHECK WHETHER $R_b$ TRANSMITTED FROM A
IS SAME AS THAT GENERATED BY $R_b$,
VERIFY A' S PUBLIC KEY CERTIFICATE
USING PUBLIC KEY OF CERTIFICATE AUTHORITY,
OBTAIN A. $Sig$. Ver. Key (A' S PUBLIC KEY),
VERIFY A. $Sig$ USING A. $Sig$. Ver. Key,
GENERATE RANDOM NUMBER $B_k$ $(0 < B_k < p)$,
CALCULATE $B_v = B_k \times G$, CLACULATE
B. $Sig$ = SIGN(B. $Sig$. Gen. Key, $R_b \| R_a \| B_v$),
CALCULATE $B_k \times A_v$, AND SET 64 BITS OF
X COORDINATE AS SESSION KEY

ISO/IEC 9798-3 MUTUAL AUTHENTICATION AND KEY SHARING METHOD USING SYMMETRICAL KEY CRYPTOGRAPHY TECHNIQUE

FIG. 15

## ENCRYPTION

p DENOTES CHARACTERISTIC, A AND B DENOTES COEFFICIENT OF ELLIPTIC CURVE, ELLIPIC CURVE IS EXPRESSED BY $y^2 = x^3 + ax + b$. G DENOTES BASE POINT ON CURVE, r DENOTES DIGIT OF G, M DENOTES MESSAGE, MX AND MY DENOTE MESSAGES, AND G AND Ks × G DENOTE PUBLIC KEYS ～S21

USE RANDOM NUMBER GENERATOR TO GENERATE u SO THAT $0 < u < r$ ～S22

CALCULATE $V = u(Ks \times G) = (Xv, yv)$ ～S23

CALCULATE $XO = Xv \times Mx \bmod p$ ～S24

CALCULATE $YO = Yv \times My \bmod p$ ～S25

CALCULATE u × G ～S26

SET ENCRYPTED TEXT DATA AS u × G, (XO, YO) ～S27

ENCRYPTION USING ELLIPTIC CURVE CRYPTOGRAPHY (MENEZES–VANSTONE)

FIG. 16

DECRYPTION

| |
|---|
| p DENOTES CHARACTERISTIC, a AND b DENOTES COEFFICIENT OF ELLIPTIC CURVE, ELLIPIC CURVE IS EXPRESSED BY $y^2 = x^3 + ax + b$. G DENOTES BASE POINT ON CURVE, r DENOTES DIGIT OF G, u × G, (XO, YO) DENOTES ENCRYPTED TEXT, AND Ks DENOTES SECRET KEYS |

S31

| |
|---|
| CALCULATE Ks × (u × G) = (Xv, yv) |

S32

| |
|---|
| CALCULATE X1 = XO/Xv × mod p |

S33

| |
|---|
| CALCULATE Y1 = YO/Yv × mod p |

S34

| |
|---|
| OBTAIN DECRYPTED TEXT (X1, Y1) = (Mx, My) |

S35

DECRYPTION USING ELLIPTIC CURVE CRYPTOGRAPHY (MENEZES-VANSTONE)

FIG. 17

RECORDING AND REPRODUCING DEVICE ∽300

READ SECTION 304

CONTROL SECTION 301 303

CRYPTOGRAPHY PROCESS SECTION 302

CONTROL SECTION 306

307 308

INTERNAL MEMORY

MASTER KEY FOR RECORDING DEVICE AUTHENTICATION KEY-MKate
INITIAL VALUE FOR RECORDING DEVICE AUTHENTICATION KEY- IVake
MASTER KEY FOR DISTRIBUTION KEY- MKdis
INITIAL VALUE FOR DISTRIBUTION KEY- IVdis
INTEGRITY-CHECK-VALUE-A-GENERATING KEY- Kicva
INTEGRITY-CHECK-VALUE-B-GENERATING KEY- Kicvb
CONTENT-INTEGRITY-CHECK-VALUE-GENERATING KEY- Kicvc
TOTAL-INTEGRITY-CHECK-VALUE-GENERATING KEY- Kicvt
SYSTEM SIGNATURE KEY- Ksys
RECORDING AND REPRODUCING DEVICE SIGNATURE KEY- Kdev
INITIAL VALUE FOR MUTUAL AUTHENTICATION PROCESS- IVmem

COMMUNICATION SECTION 305

ENCRYPTION/DECRYPTION SECTION

RECORDING DEVICE CONTROLLER

HOW DATA ARE HELD ON RECORDING AND REPRODUCING DEVICE

FIG. 18

EP 1 164 748 A1

RECORDING DEVICE ~400

## CRYPTOGRAPHY PROCESS SECTION ~401

EXTERNAL MEMORY ~402

COMMUNICATION SECTION ~404

ENCRYPTION/DECRYPTION SECTION ~406

CONTROL SECTION ~403 407~

INTERNAL MEMORY ~405

EXTERNAL MEMORY CONTROL SECTION

### KEY BLOCK 1

RECORDING DEVICE IDENTIFICATION INFORMATION 1, AUTHENTICATION KEY 1, INITIAL VALUE 1, STORAGE KEY 1, RANDOM-NUMBER-GENERATING KEY 1, KEY 1

### KEY BLOCK 2

RECORDING DEVICE IDENTIFICATION INFORMATION 2, AUTHENTICATION KEY 2, INITIAL VALUE 2, STORAGE KEY 2, RANDOM-NUMBER-GENERATING KEY 2, KEY 2

.
.
.

### KEY BLOCK N

RECORDING DEVICE IDENTIFICATION INFORMATION N, AUTHENTICATION KEY N, INITIAL VALUE N, STORAGE KEY N, RANDOM-NUMBER-GENERATING KEY N, KEY N

### CONTENTS 1

CONTENT ID 1, USAGE POLICY 1, INTEGRITY CHECK VALUE A1, BLOCK INFORMATION TABLE KEY 1, CONTENT KEY 1, BLOCK INFORMATION TABLE 1, INTEGRITY CHECK VALUE B1, TOTAL INTEGRITY CHECK VALUE 1, CONTENT BLOCK 1

### CONTENTS 2

CONTENT ID 2, USAGE POLICY 2, INTEGRITY CHECK VALUE A2, BLOCK INFORMATION TABLE KEY 2, CONTENT KEY 2, BLOCK INFORMATION TABLE 1, INTEGRITY CHECK VALUE B2, TOTAL INTEGRITY CHECK VALUE 2, CONTENT BLOCK 2

.
.
.
.

### CONTENTS M

CONTENT ID M, USAGE POLICY M, INTEGRITY CHECK VALUE AM, BLOCK INFORMATION TABLE KEY M, CONTENT KEY M, BLOCK INFORMATION TABLE 1, INTEGRITY CHECK VALUE BM, TOTAL INTEGRITY CHECK VALUE M, CONTENT BLOCK M

HOW DATA ARE HELD ON RECORDING DEVICE          FIG. 19

EP 1 164 748 A1

START AUTHENTICATION PROCESS

INSERT RECORDING DEVICE INTO RECORDING AND REPRODUCING DEVICE — S41

TRANSMIT INITIALIZATION COMMAND TO RECORDING DEVICE — S42

TRANSMIT INITIALIZATION COMMAND TO CRYPTOGRAPHY PROCESS SECTION — S43

SPECIFY KEY BLOCKS IN RECORDING DEVICE — S44

READ CONTENT ID $ID_{MEM}$ FROM RECORDING DEVICE — S45

GENERATE AUTHENTICATION KEY $K_{AKE}$ — S46

EXECUTE MUTUAL AUTHENTICATION PROCESS AND GENERATE SESSION KEY $K_{ses}$ — S47

HAS MUTUAL AUTHENTICATION SUCCEEDED OR FAILED? — S48

AUTHENTICATION HAS SUCCEEDED — S49

AUTHENTICATION HAS FAILED — S50

RETURN

MUTUAL AUTHENTICATION BETWEEN RECORDING AND REPRODUCING DEVICE AND RECORDING DEVICE

FIG. 20

RECORDING AND
REPRODUCING DEVICE 1          2101

JAPAN   SPECIFIABLE BLOCKS 1 AND 4

MASTER KEY: MKake 1, 4

RECORDING DEVICE A          2104

| KEY BLOCK 1 |
| KEY BLOCK 2 |
| KEY BLOCK 3 |
| KEY BLOCK 4 |

EXTERNAL MEMORY

RECORDING AND
REPRODUCING DEVICE 2          2102

US   SPECIFIABLE BLOCKS 2 AND 4

MASTER KEY: MKake 2, 4

RECORDING DEVICE B          2105

| KEY BLOCK 1 |
| KEY BLOCK 2 |
| KEY BLOCK 3 |
| KEY BLOCK 4 |

EXTERNAL MEMORY

RECORDING AND
REPRODUCING DEVICE 3          2103

EU   SPECIFIABLE BLOCKS 3 AND 4

MASTER KEY: MKake 3, 4

RECORDING DEVICE C          2106

| KEY BLOCK 1 |
| KEY BLOCK 2 |
| KEY BLOCK 3 |
| KEY BLOCK 4 |

EXTERNAL MEMORY

FIG. 21

START CONTENT DOWNLOAD PROCESS

TRANSMIT HEADER TO CRYPTOGRAPHY PROCESS SECTION ⟶ S51

CALCULATE INTEGRITY CHECK VALUE A AND COMPARE IT WITH ICVₐ — S52 / NO

↓ YES

GENERATE DISTRIBUTION KEY — S53

DECRYPT BLOCK INFORMATION TABLE KEY AND CONTENT KEY WITH DISTRIBUTION KEY — S54

DECRYPT BLOCK INFORMATION TABLE — S55

GENERATE INTEGRITY CHECK VALUE B FROM BLOCK INFORMATION TABLE KEY, CONTENT KEY, AND BLOCK INFORMATION TABLE AND COMPARE IT WITH ICVb — S56 / NG

↓ OK

CALCULATE TOTAL INTEGRITY CHECK VALUE FROM ICVa, ICVb, AND CONTENT INTEGRITY CHECK VALUE AND COMPARE IT WITH ICVt — S57 / NG

↓ OK

VERIFY ICV OF CONTENT BLOCK — S58 / NG

↓ OK

DECRYPT BLOCK INFORMATION TABLE KEY AND CONTENT KEY WITH SESSION KEY — S59

DECRYPT BLOCK INFORMATION TABLE KEY AND CONTENT KEY WITH STORAGE KEY — S60

LOCALIZATION FIELD SET TO 1? — S61 / NO

↓ YES

CALCULATE INTEGRITY CHECK VALUE ICVdev UNIQUE TO RECORDING AND REPRODUCING DEVICE — S62

STORE CONTENT IN RECORDING DEVICE — S63

RETURN

ERROR — S64

CONTENT DOWNLOAD PROCESS

FIG. 22

MESSAGE M1
(FIRST 8 BYTES)

MESSAGE M2
(NEXT 8 BYTES)

MESSAGE M3
(NEXT 8 BYTES)

------

MESSAGE Mn
(LAST 8 BYTES)

INITIAL
VALUE: IV

INTEGRITY-CHECK-
VALUE-A-GENERATING KEY
(Kicva)

$I1$

DES
ENCRYPTION

$I2$

DES
ENCRYPTION

$I3$

DES
ENCRYPTION

$IN$

DES
ENCRYPTION

E1

E2

E3

INTEGRITY CHECK
VALUE A: ICVa

MESSAGES M1 TO MN: CONTENT ID AND USAGE POLICY

⊕: EXCLUSIVE OR PROCESS (EVERY 8 BYTES)

FIG. 23

MESSAGE M1 (FIRST 8 BYTES)　　MESSAGE M2 (NEXT 8 BYTES)　　MESSAGE M3 (NEXT 8 BYTES)　------　MESSAGE M$_N$ (LAST 8 BYTES)

INTEGRITY-CHECK-VALUE-B-GENERATING KEY ($K_{icvb}$)

DES ENCRYPTION

INTEGRITY CHECK VALUE B: $ICV_b$

MESSAGES M1 TO MN: BLOCK INFORMATION TABLE KEY $K_{bit}$, CONTENT KEY $K_{con}$, AND BLOCK INFORMATION TABLE
$\oplus$: EXCLUSIVE OR PROCESS (EVERY 8 BYTES)

FIG. 24

EP 1 164 748 A1

ICVa
(CHECK VALUE A)

ICVb
(CHECK VALUE B)

ICV1
(CONTENTS CHECK VALUE)

ICVN
(CONTENTS CHECK VALUE)

INITIAL VALUE
(IV = 0 OR IV = IVt)

TOTAL-INTEGRITY-
CHECK-VALUE-GENERATING
KEY (Kicvt)

I1

DES
ENCRYPTION

I2

DES
ENCRYPTION

I3

DES
ENCRYPTION

IN

DES
ENCRYPTION

E1

E2

E3

INTERMEDIATE INTEGRITY
CHECK VALUE: ICV

RECORDING AND REPRODUCING
DEVICE SIGNATURE KEY (Kdev)

DES
ENCRYPTION

SIGNATURE
KEY (Ksys)

DES
ENCRYPTION

CHECK VALUE UNIQUE TO RECORDING AND
REPRODUCING DEVICE: ICVdev

TOTAL INTEGRITY
CHECK VALUE: ICVt

⊕ : EXCLUSIVE OR PROCESS (EVERY 8 BYTES)

FIG. 25

EP 1 164 748 A1

| CONTENTS ID |
|---|
| USAGE POLICY |
| INTEGRITY CHECK VALUE A (ICVa) |
| BLOCK INFORMATION TABLE KEY (Kbit) |
| CONTENT KEY (Kcon) |
| BLOCK INFORMATION TABLE |
| INTEGRITY CHECK VALUE B (ICVb) |
| TOTAL INTEGRITY CHECK VALUE (ICVt) |
| CONTENTS BLOCK 1 |
| CONTENTS BLOCK 2 |
| ... |
| CONTENTS BLOCK i |
| ... |
| CONTENTS BLOCK N |

Kstr
Kstr
Kbit

Kcon

Kcon

CONTENT STORED IN RECORDING DEVICE
(LOCALIZATION FIELD = 0)

| ENCRYPTED TEXT DATA |
|---|

| PLAIN TEXT DATA |
|---|

| SIGNATURE DATA |
|---|

FIG. 26

EP 1 164 748 A1

| | CONTENTS INFORMATION (CONTENTS ID) |
|---|---|
| | USAGE POLICY (USAGE POLICY) |
| | INTEGRITY CHECK VALUE A (ICVa) |
| Kstr | BLOCK INFORMATION TABLE KEY (Kbit) |
| Kstr | CONTENT KEY (Kcon) |
| Kbit | BLOCK INFORMATION TABLE |
| | INTEGRITY CHECK VALUE B (ICVb) |
| | INTEGRITY CHECK VALUE UNIQUE TO RECORDING AND REPRODUCING DEVICE (ICVdev) |
| | CONTENT BLOCK 1 |
| Kcon | CONTENT BLOCK 2 |
| | ... |
| Kcon | CONTENT BLOCK i |
| | ... |
| | CONTENT BLOCK N |

CONTENT STORED IN RECORDING DEVICE
(LOCALIZATION FIELD = 1)

ENCRYPTED TEXT DATA

PLAIN TEXT DATA

SIGNATURE DATA

FIG. 27

CONTENT REPRODUCTION PROCESS

FIG. 28

FIG. 29

RECEIVE DATA (EX. BLOCK INFORMATION TABLE KEY K$_{bit}$, CONTENT KEY K$_{con}$) ENCRYPTED WITH SESSION KEY K$_{ses}$, FROM RECORDING AND REPRODUCING DEVICE ⟶ S3001

COMMAND NUMBERS p-s

RECORDING DEVICE STORES IN REGISTER, DATA (EX. BLOCK INFORMATION TABLE KEY K$_{bit}$, CONTENT KEY K$_{con}$) RECEIVED FROM RECORDING AND REPRODUCING DEVICE AND ENCRYPTED WITH SESSION KEY K$_{ses}$ ⟶ S3002

TAKE DATA (EX. BLOCK INFORMATION TABLE KEY K$_{bit}$, CONTENT KEY K$_{con}$) ENCRYPTED WITH SESSION KEY K$_{ses}$ OUT FROM REGISTER AND DECRYPT THEM WITH SESSION KEY K$_{ses}$ ⟶ S3003

USE STORAGE KEY K$_{STR}$ TO ENCRYPT DATA (EX. BLOCK INFORMATION TABLE KEY K$_{bit}$, CONTENT KEY K$_{con}$) DECRYPTED WITH SESSION KEY K$_{SES}$ ⟶ S3004

STORE DATA (EX. BLOCK INFORMATION TABLE KEY K$_{bit}$, CONTENT KEY K$_{con}$) ENCRYPTED WITH STORAGE KEY K$_{str}$, IN MEMORY OF RECORDING DEVICE ⟶ S3005

FIG. 30

READ DATA (EX. BLOCK INFORMATION TABLE KEY K$_{bit}$, CONTENT KEY K$_{CON}$) ENCRYPTED WITH STORAGE KEY K$_{str}$, oUT FROM MEMORY OF RECORDING DEVICE　　　　　S3101

COMMAND NUMBERS u−y

STORE IN REGISTER, DATA (EX. BLOCK INFORMATION TABLE KEY K$_{BIT}$, CONTENT KEY K$_{CON}$) READ OUT FROM MEMORY OF RECORDING DEVICE AND ENCRYPTED WITH STORAGE KEY K$_{str}$　　　　　S3102

TAKE DATA (EX. BLOCK INFORMATION TABLE KEY K$_{bit}$, CONTENT KEY K$_{con}$) ENCRYPTED WITH STORAGE KEY K$_{str}$, OUT FROM REGISTER AN DECRYPT THEM WITH STORAGE KEY K$_{str}$　　　　　S3103

USE SESSION KEY K$_{SES}$ TO ENCRYPT DATA (EX. BLOCK INFORMATION TABLE KEY K$_{bit}$, CONTENT KEY K$_{CON}$) DECRYPTED WITH STORAGE KEY K$_{STR}$　　　　　S3104

TRANSMIT DATA (EX. BLOCK INFORMATION TABLE KEY K$_{bit}$, CONTENT KEY K$_{con}$) ENCRYPTED WITH SESSION KEY K$_{ses}$, FROM RECORDING DEVICE TO RECORDING AND REPRODUCING DEVICE　　　　　S3105

FIG. 31

FORMAT TYPE 0

| CONTENTS ID |
| --- |
| USAGE POLICY |
| INTEGRITY CHECK VALUE A (ICVa) |
| BLOCK INFORMATION TABLE KEY (Kbit) |
| CONTENT KEY (Kcon) |
| BLOCK INFORMATION TABLE |
| INTEGRITY CHECK VALUE B (ICVb) |
| TOTAL INTEGRITY CHECK VALUE (ICVt) |
| CONTENTS BLOCK 1 |
| CONTENTS BLOCK 2 |
| ... |
| CONTENTS BLOCK i |
| ... |
| CONTENTS BLOCK N |

Kdis, Kdis, Kbit, Kcon, Kcon

DATA FORMAT ON MEDIUM AND COMMUNICATION PATH

| CONTENTS ID |
| --- |
| USAGE POLICY |
| CHECK VALUE A (ICVa) |
| BLOCK INFORMATION KEY (Kbit) |
| CONTENTS KEY (Kcon) |
| BLOCK INFORMATION TABLE |
| CHECK VALUE B (ICVb) |
| TOTAL INTEGRITY CHECK VALUE (ICVt) OR INTEGRITY CHECK VALUE UNIQUE TO RECORDING AND REPRODUCING DEVICE (ICVdev) |
| CONTENTS BLOCK 1 |
| CONTENTS BLOCK 2 |
| ... |
| CONTENTS BLOCK i |
| ... |
| CONTENTS BLOCK N |

Kstr, Kstr, Kbit, Kcon, Kcon

CONTENT STORED IN RECORDING DEVICE

| ENCRYPTED TEXT DATA | PLAIN TEXT DATA | SIGNATURE DATA |
| --- | --- | --- |

FIG. 32

EP 1 164 748 A1

FORMAT TYPE 1

| CONTENTS ID |
| USAGE POLICY |
| INTEGRITY CHECK VALUE A (ICVa) |
| BLOCK INFORMATION TABLE KEY (Kbit) — Kdis |
| CONTENT KEY (Kcon) — Kdis |
| BLOCK INFORMATION TABLE — Kbit |
| INTEGRITY CHECK VALUE B (ICVb) |
| TOTAL INTEGRITY CHECK VALUE (ICVt) |
| ENCRYPTED CONTENT PART 1 — Kcon | } BLOCK 1 |
| PLAIN CONTENT PART 1 |
| ... |
| ENCRYPTION CONTENTS PART I — Kcon | } BLOCK I |
| ORDINARY CONTENTS PART I |
| ... |
| ENCRYPTION CONTENTS PART N — Kcon | } BLOCK N |
| ORDINARY CONTENTS PART N |

| CONTENTS ID |
| USAGE POLICY |
| CHECK VALUE A (ICVa) |
| BLOCK INFORMATION KEY (Kbit) — Kstr |
| CONTENTS KEY (Kcon) — Kstr |
| BLOCK INFORMATION TABLE — Kbit |
| CHECK VALUE B (ICVb) |
| TOTAL INTEGRITY CHECK VALUE (ICVt) OR INTEGRITY CHECK VALUE UNIQUE TO RECORDING AND REPRODUCING DEVICE (ICVdev) |
| ENCRYPTION CONTENTS PART 1 — Kcon | } BLOCK 1 |
| ORDINARY CONTENTS PART 1 |
| ... |
| ENCRYPTION CONTENTS PART I — Kcon | } BLOCK I |
| ORDINARY CONTENTS PART I |
| ... |
| ENCRYPTION CONTENTS PART N — Kcon | } BLOCK N |
| ORDINARY CONTENTS PART N |

DATA FORMAT ON MEDIUM AND COMMUNICATION PATH     CONTENT STORED IN RECORDING DEVICE

ENCRYPTED TEXT DATA          PLAIN TEXT DATA          SIGNATURE DATA

FIG. 33

FORMAT TYPE 2

FORMAT TYPE 2

**DATA FORMAT ON MEDIUM AND COMMUNICATION PATH**

| CONTENTS ID |
| USAGE POLICY |
| INTEGRITY CHECK VALUE A (ICVa) |
| BLOCK INFORMATION TABLE KEY (Kbit) |  (Kdis)
| CONTENT KEY (Kcon) |  (Kdis)
| (BLOCK INFORMATION TABLE) |  (Kbit)
| INTEGRITY CHECK VALUE B (ICVb) |
| TOTAL INTEGRITY CHECK VALUE (ICVt) |
| BLOCK KEY Kblc |  (Kcon)  BLOCK 1
| CONTENTS DATA |  (Kblc)
| ... |
| BLOCK KEY Kblc |  (Kcon)  BLOCK I
| CONTENTS DATA |  (Kblc)
| ... |
| BLOCK KEY Kblc |  (Kcon)  BLOCK N
| CONTENTS DATA |  (Kblc)

**CONTENT STORED IN RECORDING DEVICE**

| CONTENTS ID |
| USAGE POLICY |
| CHECK VALUE A (ICVa) |
| BLOCK INFORMATION KEY (Kbit) |  (Kstr)
| CONTENTS KEY (Kcon) |  (Kstr)
| BLOCK INFORMATION TABLE |  (Kbit)
| CHECK VALUE B (ICVb) |
| TOTAL INTEGRITY CHECK VALUE (ICVt) OR INTEGRITY CHECK VALUE UNIQUE TO RECORDING AND REPRODUCING DEVICE (ICVdev) |
| BLOCK KEY Kblc |  (Kcon)  BLOCK 1
| CONTENTS DATA |  (Kblc)
| ... |
| BLOCK KEY Kblc |  (Kcon)  BLOCK I
| CONTENTS DATA |  (Kblc)
| ... |
| BLOCK KEY Kblc |  (Kcon)  BLOCK N
| CONTENTS DATA |  (Kblc)

| ENCRYPTED TEXT DATA | PLAIN TEXT DATA | SIGNATURE DATA |

FIG. 34

EP 1 164 748 A1

FORMAT TYPE 3

| CONTENTS ID |
| --- |
| USAGE POLICY |
| INTEGRITY CHECK VALUE A(ICVa) |
| BLOCK INFORMATION TABLE KEY (Kbit) |
| BLOCK INFORMATION TABLE |
| INTEGRITY CHECK VALUE B(ICVb) |
| TOTAL INTEGRITY CHECK VALUE (ICVt) |
| BLOCK KEY Kblc |
| CONTENT DATA |

Kdis
Kbit

Kdis
Kblc } BLOCK 1

...

Kdis
Kblc } BLOCK I

...

Kdis
Kblc } BLOCK N

DATA FORMAT ON MEDIUM AND COMMUNICATION PATH

| CONTENTS ID |
| --- |
| USAGE POLICY |
| CHECK VALUE A (ICVa) |
| BLOCK INFORMATION KEY (Kbit) |
| BLOCK INFORMATION TABLE |
| CHECK VALUE B (ICVb) |
| TOTAL INTEGRITY CHECK VALUE (ICVt) OR INTEGRITY CHECK VALUE UNIQUE TO RECORDING AND REPRODUCING DEVICE (ICVdev) |
| BLOCK KEY Kblc |
| CONTENTS DATA |

Kstr
Kbit

Kstr
Kblc } BLOCK 1

...

Kstr
Kblc } BLOCK I

...

Kstr
Kblc } BLOCK N

CONTENT STORED IN RECORDING DEVICE

| ENCRYPTED TEXT DATA | PLAIN TEXT DATA | SIGNATURE DATA |

FIG. 35

EP 1 164 748 A1

MESSAGE M1
(FIRST 8 BYTES)

MESSAGE M2
(NEXT 8 BYTES)

MESSAGE M3
(NEXT 8 BYTES)

MESSAGE MN
(LAST 8 BYTES)

INITIAL
VALUE: IV

I1

I2

I3

IN

CONTENT-INTEGRITY-
CHECK-VALUE-GENERATING
KEY (Kicvc)

DES
ENCRYPTION

DES
ENCRYPTION

DES
ENCRYPTION

DES
ENCRYPTION

E1

E2

E3

CONTENT INTEGRITY
CHECK VALUE: ICVi

MESSAGES M1 TO MN: CONTENT DATA IN CONTENT i

⊕ :EXCLUSIVE OR PROCESS (EVERY 8 BYTES)

FIG. 36

P-ICVi, K
(PART K INTEGRITY
CHECK VALUE)

P-ICVi, M
(PART M INTEGRITY
CHECK VALUE)

P-ICVi, N
(PART N INTEGRITY
CHECK VALUE)

P-ICVi, R
(PART R INTEGRITY
CHECK VALUE)

INITIAL
VALUE: IV

I1

I2

I3

IN

CONTENT-INTEGRITY-
CHECK-VALUE-GENERATING
KEY (Kicvc)

DES
ENCRYPTION

DES
ENCRYPTION

DES
ENCRYPTION

DES
ENCRYPTION

E1

E2

E3

CONTENT INTEGRITY
CHECK VALUE: ICVi

$\oplus$ : EXCLUSIVE OR PROCESS (EVERY 8 BYTES)

FIG. 37

ICVa
(INTEGRITY
CHECK VALUE A)

ICVb
(INTEGRITY
CHECK VALUE B)

MESSAGE M1
(FIRST 8 BYTES)

------

MESSAGE MN
(LAST 8 BYTES)

INITIAL VALUE
(IV = 0 OR IV = IVt)

⊕          ⊕          ⊕          ⊕

I1         I2         I3         I(N+2)

TOTAL-INTEGRITY-
CHECK-VALUE-GENERATING
KEY (Kicvt)

| DES ENCRYPTION | DES ENCRYPTION | DES ENCRYPTION | DES ENCRYPTION |

E1         E2         E3         INTERMEDIATE INTEGRITY
                                 CHECK VALUE: ICV

RECORDING AND REPRODUCING
DEVICE SIGNATURE KEY (Kdev) →

DES ENCRYPTION

SYSTEM SIGNATURE
KEY (Ksys) →

DES ENCRYPTION

CHECK VALUE UNIQUE TO RECORDING
AND REPRODUCING DEVICE: ICVdev

TOTAL INTEGRITY
CHECK VALUE: ICVt

MESSAGES M1 TO MN: DATA IN CONTENT BLOCKS 1 TO N

⊕: EXCLUSIVE OR PROCESS (EVERY 8 BYTES)

EP 1 164 748 A1

FORMAT TYPE 0 AND 1 DOWNLOAD PROCESS

START

**S101** MUTUAL AUTHENTICATION WITH RECORDING DEVICE AND SHARE SESSION KEY (SEE FIG. 20)

**S102** READ OUT HEADER

**S103** GENERATE ICVa' FROM CONTENT ID AND USAGE POLICY

**S104** ICVa=ICVa'? — NO

YES

**S105** OBTAIN OR GENERATE DISTRIBUTION KEY Kdis

**S106** DECRYPT BLOCK INFORMATION TABLE KEY Kbit AND CONTENT KEY Kcon

**S107** DECRYPT BLOCK INFORMATION TABLE

**S108** GENERATE ICVb' FROM BLOCK INFORMATION TABLE KEY Kbit, CONTENT KEY Kcon, AND BLOCK INFORMATION TABLE

**S109** ICVb=ICVb'? — NO

YES

**S110** GENERATE INTERMEDIATE INTEGRITY CHECK VALUE FROM ICVa, ICVb, ICV1, ... ICVN

**S111** GENERATE TOTAL ICVt' FROM INTERMEDIATE INTEGRITY CHECK VALUE

**S112** ICVt=ICVt'? — NO

YES

**S113** READ OUT BLOCK DATA

**S114** DECRYPT BLOCK DATA AND GENERATE ICVi'

**S115** ICVi=ICVi'? — NO

YES

**S116** ALL BLOCKS READ? — NO

YES

**S117** ENCRYPT BLOCK INFORMATION TABLE KEY Kbit AND CONTENT KEY Kcon WITH SESSION KEY Kses AND TRANSMIT THEM TO RECORDING DEVICE

**S118** RECEIVE BLOCK INFORMATION TABLE KEY Kbit AND CONTENT KEY Kcon ENCRYPTED WITH STORAGE KEY Kses, FROM RECORDING DEVICE

**S119** LOCALIZATION FLAG = 1? — NO

YES

**S120** GENERATE UNIQUE INTEGRITY CHECK VALUE ICVdev FROM INTER-MEDIATE INTEGRITY CHECK VALUE

**S121** FORM DATA FORMAT TO BE STORED IN EXTERNAL MEMORY OF RECORDING DEVICE

**S122** TRANSMIT DATA TO RECORDING DEVICE AND STORE THEM IN EXTERNAL MEMORY IN DEVICE

END

FIG. 39

FORMAT TYPE 2 DOWNLOAD PROCESS

START

S101
MUTUAL AUTHENTICATION WITH RECORDING DEVICE AND SHARE SESSION KEY (SEE FIG. 20)

S102
READ OUT HEADER

S103
GENERATE $ICV_a'$ FROM CONTENT ID AND USAGE POLICY

S104
$ICV_a = ICV_a'$ ?
NO →
YES ↓

S105
OBTAIN OR GENERATE DISTRIBUTION KEY $K_{dis}$

S106
DECRYPT BLOCK INFORMATION TABLE KEY $K_{bit}$ AND CONTENT KEY $K_{con}$

S107
DECRYPT BLOCK INFORMATION TABLE

S108
GENERATE $ICV_b'$ FROM BLOCK INFORMATION TABLE KEY $K_{bit}$, CONTENT KEY $K_{con}$, AND BLOCK INFORMATION TABLE

S109
$ICV_b = ICV_b'$ ?

S151
READ OUT ALL CONTENT DATA

S152
GENERATE INTERMEDIATE INTEGRITY CHECK VALUE FROM $ICV_a$, $ICV_b$, AND CONTENT DATA

S111
GENERATE TOTAL $ICV_t'$ FROM INTERMEDIATE INTEGRITY CHECK VALUE

S112
$ICV_t = ICV_t'$ ?
NO →
YES ↓

S117
ENCRYPT BLOCK INFORMATION TABLE KEY $K_{bit}$ AND CONTENT KEY $K_{con}$ WITH SESSION KEY $K_{ses}$ AND TRANSMIT THEM T RECORDING DEVICE

S118
RECEIVE BLOCK INFORMATION TABLE KEY $K_{bit}$ AND CONTENT KEY $K_{con}$ ENCRYPTED WITH STORAGE KEY $K_{ses}$, FROM RECORDING DEVICE

S119
LOCALIZATION FLAG = 1?
NO →
YES ↓

S120
GENERATE UNIQUE INTEGRITY CHECK VALUE $ICV_{dev}$ FROM INTERMEDIATE INTEGRITY CHECK VALUE

S121
FORM DATA FORMAT TO BE STORED IN EXTERNAL MEMORY OF RECORDING DEVICE

S122
TRANSMIT DATA TO RECORDING DEVICE AND STORE THEM IN EXTERNAL MEMORY IN DEVICE

END

FIG. 40

FORMAT TYPE 3 DOWNLOAD PROCESS

FIG. 41

EP 1 164 748 A1

FORMAT TYPE 0 REPRODUCTION PROCESS

START

S201 MUTUAL AUTHENTICATION WITH RECORDING DEVICE AND SHARE SESSION KEY (SEE FIG. 20)

S202 READ OUT HEADER

S203 GENERATE ICVa' FROM CONTENT ID AND USAGE POLICY

S204 ICVa=ICVa' ? — NO

YES

S205 TRANSMIT BLOCK INFORMATION TABLE KEY Kbit AND CONTENT KEY Kcon ENCRYPTED WITH STORAGE KEY Kstr, TO RECORDING DEVICE

S206 RECEIVE BLOCK INFORMATION TABLE KEY Kbit AND CONTENT KEY Kcon ENCRYPTED WITH SESSION KEY Kstr, FROM RECORDING DEVICE

S207 DECRYPT BLOCK INFORMATION TABLE KEY Kbit AND CONTENT KEY Kcon

S208 DECRYPT BLOCK INFORMATION TABLE

S209 GENERATE ICVb' FROM BLOCK INFORMATION TABLE KEY Kbit, CONTENT KEY Kcon, AND BLOCK INFORMATION TABLE

S210 ICVb=ICVb' ? — NO

YES

S211 GENERATE INTERMEDIATE INTEGRITY CHECK VALUE FROM ICVa, ICVb, ICV1, ... ICVN

S212 LOCALIZATION FLAG SET TO 1? — NO

YES

S213 GENERATE UNIQUE INTEGRITY CHECK VALUE ICVdev' FROM INTERMEDIATE INTEGRITY CHECK VALUE

S214 ICVdev=ICVdev' ? — NO

YES (A)

(B)

(A)

S217 READ OUT BLOCK DATA

S218 ENCRYPTED? — NO

YES

S219 DECRYPT BLOCK DATA

S220 DATA TO BE CHECKED (ICV)? — NO

YES

S221 GENERATE ICVi'

S222 ICVi=ICVi' ? — NO

YES

S223 FORM CONTENT PLAIN TEXT DATA FOR EXECUTION (REPRODUCTION) ON SYSTEM RAM

S224 ALL BLOCKS READ OUT? — NO

YES

S225 EXECUTE AND REPRODUCE CONTENT (PROGRAM OR DATA)

(B)

END

S215 GENERATE TOTAL ICVt' FROM INTERMEDIATE INTEGRITY CHECK VALUE

S216 ICVt=ICVt' ? — NO

YES

(B) (A)

FIG. 42

119

FORMAT TYPE 1 REPRODUCTION PROCESS

START

S201 MUTUAL AUTHENTICATION WITH RECORDING DEVICE AND SHARESESSION KEY (SEE FIG. 20)

S202 READ OUT HEADER

S203 GENERATE ICVa' FROM CONTENT ID AND USAGE POLICY

S204 ICVa=ICVa' ? — NO / YES

S205 TRANSMIT BLOCK INFORMATION TABLE KEY Kbit AND CONTENT KEY Kcon ENCRYPTED WITH STORAGE KEY Kstr, TO RECORDING DEVICE

S206 RECEIVE BLOCK INFORMATION TABLE KEY Kbit AND CONTENT KEY Kcon ENCRYPTED WITH SESSION KEY Kstr, FROM RECORDING DEVICE

S207 DECRYPT BLOCK INFORMATION TABLE KEY Kbit AND CONTENT KEY Kcon

S208 DECRYPT BLOCK INFORMATION TABLE

S209 GENERATE ICVb' FROM BLOCK INFORMATION TABLE KEY Kbit, CONTENT KEY Kcon, AND BLOCK INFORMATION TABLE

S210 ICVb=ICVb' ? — NO / YES

S211 GENERATE INTERMEDIATE INTEGRITY CHECK VALUE FROM ICVa, ICVb, ICV1, ... ICVN

S212 LOCALIZATION FLAG SET TO 1? — NO / YES

S213 GENERATE UNIQUE INTEGRITY CHECK VALUE ICVdev' FROM INTERMEDIATE INTEGRITY CHECK VALUE

S214 ICVdev=ICVdev' ? — NO / YES

(B)

(A)

(A)

S217 READ OUT BLOCK DATA

S231 DECRYPT ENCRYPTED PARTS AND GENERATE PARTS ICV

YES

S232 CREATE BLOCK ICVi'

S222 ICVi=ICVi' ? — NO / YES

S223 FORM CONTENT PLAIN TEXT DATA FOR EXECUTION (REPRODUCTION) ON SYSTEM RAM

S224 ALL BLOCKS READ OUT? — NO / YES

S225 EXECUTE AND REPRODUCE CONTENT (PROGRAM OR DATA)

(B)

END

S215 GENERATE TOTAL ICVt' FROM INTERMEDIATE INTEGRITY CHECK VALUE

S216 ICVt=ICVt' ? — NO / YES

(B)

(A)

FIG. 43

120

EP 1 164 748 A1

START

↓

**S201**
MUTUAL AUTHENTICATION WITH RECORDING DEVICE AND SHARE SESSION KEY (SEE FIG. 20)

↓

**S202**
READ OUT HEADER

↓

**S203**
GENERATE ICVa' FROM CONTENT ID AND USAGE POLICY

↓

**S204**
ICVa=ICVa' ?　—NO→ (B)

↓ YES

**S205**
TRANSMIT BLOCK INFORMATION TABLE KEY $K_{bit}$ AND CONTENT KEY $K_{con}$ ENCRYPTED WITH STORAGE KEY $K_{str}$, TO RECORDING DEVICE

↓

**S206**
RECEIVE BLOCK INFORMATION TABLE KEY $K_{bit}$ AND CONTENT KEY $K_{con}$ ENCRYPTED WITH SESSION KEY $K_{str}$, FROM RECORDING DEVICE

↓

**S207**
DECRYPT BLOCK INFORMATION TABLE KEY $K_{bit}$ AND CONTENT KEY $K_{con}$

↓

**S208**
DECRYPT BLOCK INFORMATION TABLE

↓

**S209**
GENERATE ICVb' FROM BLOCK INFORMATION TABLE KEY $K_{bit}$, CONTENT KEY $K_{con}$, AND BLOCK INFORMATION TABLE

↓

**S210**
ICVb=ICVb' ?　—NO→ (B)

↓ YES

(A)

---

(A)

↓

**S217**
READ OUT BLOCK DATA

↓

**S241**
DECRYPT BLOCK KEY $K_{blc}$

↓

**S242**
DECRYPT BLOCK DATA

↓

**S243**
EXECUTE AND REPRODUCE CONTENT (PROGRAM OR DATA)

↓

**S244**
ALL BLOCKS READ OUT?　—NO→ (A)

↓ YES　←(B)

END

FIG. 44

121

## FORMAT TYPE 3 REPRODUCTION PROCESS

START

S201
MUTUAL AUTHENTICATION WITH RECORDING DEVICE AND SHARE SESSION KEY (SEE FIG. 20)

S202
READ OUT HEADER

S203
GENERATE ICVa' FROM CONTENT ID AND USAGE POLICY

S204
ICVa=ICVa'? — NO

YES

S251
TRANSMIT BLOCK INFORMATION TABLE KEY Kbit ENCRYPTED WITH STORAGE KEY Kstr, TO RECORDING DEVICE

S252
RECEIVE BLOCK INFORMATION TABLE KEY Kbit ENCRYPTED WITH SESSION KEY Kstr, FROM RECORDING DEVICE

S253
DECRYPT BLOCK INFORMATION TABLE KEY Kbit

S208
DECRYPT BLOCK INFORMATION TABLE

S254
GENERATE ICVb' FROM BLOCK INFORMATION TABLE KEY Kbit AND BLOCK INFORMATION TABLE

S210
ICVb=ICVb'? — NO

YES

(B)          (A)

(A)

S217
READ OUT BLOCK DATA

S255
TRANSMIT BLOCK KEY Kblc ENCRYPTED WITH STORAGE KEY Kstr, TO RECORDING DEVICE

S256
RECEIVE BLOCK KEY Kblc ENCRYPTED WITH SESSION KEY Kses, FROM RECORDING DEVICE

S257
DECRYPT BLOCK KEY Kblc

S242
DECRYPT BLOCK DATA

S243
EXECUTE AND REPRODUCE CONTENT (PROGRAM OR DATA)

S244
ALL BLOCKS READ OUT? — NO

YES

(B)

END

FIG. 45

122

ICV GENERATOR
(EX. CONTENT PROVIDER)

ICV VERIFIER
(EX. CONTENT USER)

ICV GENERATION
SHARED KEY
Kicv FOR ICV

| DATA TO BE VERIFIED SUCH AS CONTENT | DELIVER → | DATA TO BE VERIFIED SUCH AS CONTENT |
|---|---|---|

ICV COMMON KEY Kicv ↓

| ICV | DISTRIBUTION → | ICV | COMPARISON =? | ICV' |
|---|---|---|---|---|

FIG. 46

ICV GENERATOR
(EX. CONTENT PROVIDER)

ICV VERIFIER
(EX. CONTENT USER)

| DATA TO BE VERIFIED SUCH AS CONTENT | DELIVER → | DATA TO BE VERIFIED SUCH AS CONTENT | CALCULATION → | VERIFIED VALUE |
|---|---|---|---|---|

GENERATOR'S SECRETE KEY ↓ ICV CREATION

GENERATOR'S PUBLIC KEY Kpub

∥ ? COMPARE

| ICV | DELIVER → | ICV | CALCULATE → | VERIFIED VALUE |
|---|---|---|---|---|

FIG. 47

CERTIFICATE CENTER

ICV VERIFIER
(EX. CONTENT USER)

| ICV PUBLIC KEY (Kpub) | → DISTRI-BUTION → | PUBLIC KEY (Kpub) | → CALCU-LATION → | VERIFIED VALUE 1 |

PUBLIC-KEY-CERTIFICATE-
GENERATING CENTER
SECRET KEY SKPri

CENTER PUBLIC KEY
SKpub

||? COMPARISON

| CERTIFICATE (= CENTER SIGNATURE) | → DISTRI-BUTION → | CERTIFICATE (=CENTER SIGNATURE) | → CALCU-LATION → | VERIFIED VALUE 1' |

ICV GENERATOR
(EX. CONTENT PROVIDER)

| DATA FOR VERIFICATION, E.G.., CONTENTS, ETC. | → DISTRI-BUTION → | DATA TO BE VERIFIED SUCH AS CONTENT | → CALCU-LATION → | VERIFIED VALUE 2 |

GENERATOR'S
SECRET KEY    ICV GENERATION
Kpri

GENERATOR'
VERIFIED PUBLIC    ||? COMPARE
KEY Kpub

| ICV | → DISTRI-BUTION → | ICV | → CALCU-LATION → | VERIFIED VALUE 2' |

FIG. 48

EP 1 164 748 A1

RECORDING AND
REPRODUCING DEVICE 　　　/ 300

RECORDING DEVICE 　　　/ 400

/ 500

MEDIUM

DISTRIBUTION·
KEY Kdis

| CONTENT ID | |
|---|---|
| CONTENT KEY Kcon | CONTENT |
| Kcon | CONTENT |
| Kcon | CONTENT |
| Kcon | CONTENT |

RECORDING AND REPRODUCING
DEVICE IDENTIFIER[IDdev]

MASTER KEY FOR
DISTRIBUTION KEY[MKdis]

MASTER KEY FOR RECORDING DEVICE
AUTHENTICATION KEY[MKake]

MASTER KEY FOR RECORDING AND
REPRODUCING DEVICE SIGNATURE KEY[MKdev]

KEY BLOCK 1

RECORDING DEVICE IDENTIFICATION
INFORMATION 1, AUTHENTICATION
KEY 1, INITIAL VALUE 1, STORAGE
KEY 1, RANDOM-NUMBER-GENERATING
KEY 1, KEY 1

KEY BLOCK 2

RECORDING DEVICE IDENTIFICATION
INFORMATION 2, AUTHENTICATION
KEY 2, INITIAL VALUE 2, STORAGE
KEY 2, RANDOM-NUMBER-GENERATING
KEY 2, KEY 2

COMMUNICATION MEANS

600

(RECORDING DEVICE IDENTIFICATION
INFORMATION = IDmem)

DISTRIBUTION KEY : Kdis = DES (MKdis, CONTENT ID)

AUTHENTICATION KEY : Kake = DES (MKake, IDmem)

RECORDING AND REPRODUCING DEVICE SIGNATURE KEY : Kdev = DES (MKdev, IDdev)

FIG. 49

METHOD FOR GENERATING INDIVIDUAL KEY FROM MASTER KEY —(1)

[BASIC FLOW]

CONTENT PRODUCER OR MANAGER                    USER DEVICE

```
(  START PRODUCING CONTENT  )          (   START USING CONTENT   )
            │                                      │
            │ ～S501                               │ ～S504
            ▼                                      ▼
┌─────────────────────────┐          ┌─────────────────────────┐
│  DETERMINE ID FOR CONTENT│          │    READ OUT CONTENT ID  │
│      (CONTENT ID)        │          └─────────────────────────┘
└─────────────────────────┘                        │ ～S505
            │ ～S502                                ▼
            ▼                          ┌─────────────────────────┐
┌─────────────────────────┐          │       GENERATE KEY       │
│       GENERATE KEY       │          │ (EX. DISTRIBUTION Kdis) FROM│
│ (EX. DISTRIBUTION KDIS) FROM│       │  CONTENT ID AND MASTER KEY│
│ MASTER KEY(EX. DISTRIBUTION-│       │   (EX. DISTRIBUTION-KEY- │
│ KEY-GENERATING MASTER KEY:│        │GENERATING MASTER KEY: MKdis)│
│  MKdis) AND CONTENT ID   │          └─────────────────────────┘
└─────────────────────────┘                        │ ～S506
            │ ～S503                                ▼
            ▼                          ┌─────────────────────────┐
┌─────────────────────────┐          │  DECRYPT ENCRYPTED PART OF│
│  ENCRYPT PART OR ALL OF  │          │      CONTENT WITH KEY    │
│   CONTENT WITH KEY (EX.  │          │ (EX. DISTRIBUTION key Kdis)│
│  DISTRIBUTION KEY Kdis)  │          └─────────────────────────┘
└─────────────────────────┘                        │ ～S507
            │                                      ▼
            ▼                          ┌─────────────────────────┐
(  END PRODUCING CONTENT  )           │       USE CONTENT        │
                                       └─────────────────────────┘
                                                   │
                                                   ▼
                                       (   END USING CONTENT   )
```

[KEY OWNER CONFIGURATION]

CONTENT PRODUCER OR MANAGER                    USER DEVICE

```
┌─────────────────────────┐   SHARE   ┌─────────────────────────┐
│       MASTER KEY        │◄────────►│       MASTER KEY         │
│ (EX. DISTRIBUTION-KEY-  │          │  (EX. DISTRIBUTION-KEY   │
│GENERATING MASTER KEY: MKdis)│      │GENERATING MASTER KEY: MKdis)│
└─────────────────────────┘          └─────────────────────────┘
```

```
┌─────────────────┐
│   CONTENT ID    │
└─────────────────┘
┌─────────────────┐
│  ID PROTECTED   │
│    CONTENT      │
└─────────────────┘
```

FIG. 50

METHOD FOR GENERATING INDIVIDUAL KEY FROM MASTER KEY -(2)

[BASIC FLOW]

CONTENT PRODUCER OR MANAGER

( START PRODUCING CONTENT )

S511
DETERMINE ID FOR CONTENT
(CONTENT ID)

S512
SELECT MASTER KEY MASTER KEY(EX.
DISTRIBUTION-KEY-GENERATING
MASTER KEY:MKdis 1, ... N)
DEPENDING ON APPARATUS FOR WHICH
USE OF CONTENT IS PERMITTED

S513
GENERATE KEY(EX. DISTRIBUTION-
KEY-GENERATING MASTER KEY:MKdis
1, ... n) FROM MASTER KEY (EX.
DISTRIBUTION-KEY-GENERATING
MASTER KEY: MKdis 1, ... n)
DEPENDENT ON APPARATUS FOR WHICH
USE OF CONTENT IS PERMITTED
AS WELL AS CONTENT ID

S514
GENERATE ENCRYPTED CONTENTS
C1, ... N FROM PART OR ALL OF
CONTENT WITH KEY(EX.DISTRIB-
UTION KEY Kdis 1, ... n)

S515
GROUP CONTENT ID, IDENTIFICATION
INFORMATION FOR MASTER KEY
USED, AND ENCRYPTED CONTENT INTO
ONE DISTRIBUTED UNIT

( END PRODUCING CONTENT )

USER DEVICE

( START USING CONTENT )

S516
DISTRIBUTED MASTER KEY
IDENTIFICATION INFORMATION → END
MATCH WITH OWNED MASTER KEY?

S517
READ OUT CONTENT ID

S518
GENERATE KEY (EX. DISTRIBUTION
Kdis) FROM CONTENT ID AND
MASTER KEY (EX. DISTRIBUTION-
KEY-GENERATING MASTER KEY: MKdis)

S519
DECRYPT ENCRYPTED PART OF
CONTENT WITH KEY (EX. DISTRIBU-
TION KEY Kdis)

S520
USE CONTENT

( END USING CONTENT )

[KEY OWNER CONFIGURATION]

CONTENT PRODUCER OR MANAGER

MASTER KEY
(EX. DISTRIBUTION-KEY-
GENERATING MASTER KEY: MKdis)

← SHARE →

USER DEVICE

MASTER KEY
(EX. DISTRIBUTION-KEY-
GENERATING MASTER KEY: MKdis)

CONTENT ID

ID PROTECTED
CONTENT

FIG. 51

CONTENT PROVIDER OR MANAGER

| MASTER KEY | TERRITORY | ENCRYPTION KEY | ENCRYPTION (CONTENT) |
|---|---|---|---|
| MK1 | JAPAN | (MK1, CONTENT ID) →K1 | K1 (CONTENT) |
| MK2 | U. S. | (MK2, CONTENT ID) →K2 | K2 (CONTENT) |
| MK3 | EU | (MK3, CONTENT ID) →K3 | K3 (CONTENT) |
| MK4 | : | : | : |
| : | : | : | : |

DECRYPTION PERMITTED

DECRYPTION REJECTED

DECRYPTION REJECTED

DECRYPTION PERMITTED

DECRYPTION PERMITTED

USER DEVICE FOR JAPAN

INTERNAL MEMORY

MK1

USER DEVICE FOR U. S.

INTERNAL MEMORY

MK2

USER DEVICE FOR EU

INTERNAL MEMORY

MK3

EP 1 164 748 A1

FIG. 52

METHOD FOR GENERATING INDIVIDUAL KEY FROM MASTER KEY -(3)

[BASIC FLOW]

MEDIUM PRODUCER OR MANAGER

START PRODUCING MEDIUM

~S521
DETERMINE ID FOR MEDIUM
(MEDIUM ID)

~S522
GENERATE KEY (EX.
DISTRIBUTION-KEY-GENERATING
MASTER KEY: MKdis) FROM
MASTER KEY (EX. DISTRIBUTION-
KEY-GENERATING MASTER KEY:
MKdis) AND MEDIUM ID

~S523
ENCRYPT PART OR ALL OF
CONTENT WITH KEY (EX.
DISTRIBUTION KEY Kdis)

END PRODUCING MEDIUM

USER DEVICE

START USING MEDIUM

~S524
READ OUT MEDIUM ID

~S525
GENERATE KEY (EX.
DISTRIBUTION KDIS) FROM
MEDIUM ID AND MASTER KEY
(EX. DISTRIBUTION-KEY-
GENERATING MASTER KEY: MKdis)

~S526
DECRYPT ENCRYPTED PART OF
CONTENT WITH KEY (EX.
DISTRIBUTION KEY Kdis)

~S527
USE CONTENT

END USING MEDIUM

[KEY OWNER CONFIGURATION]

MEDIA CREATION OR ADMINISTRATOR

MASTER KEY (EX.
DISTRIBUTION-KEY-
GENERATING MASTER KEY: MKdis)

← SHARE →

USER DEVICE

MASTER KEY (EX.
DISTRIBUTION-KEY-
GENERATING MASTER KEY: MKdis)

MEDIUM ID

ENCRYPTED
CONTENT

FIG. 53

METHOD FOR GENERATING INDIVIDUAL KEY FROM MASTER KEY -(4)

[BASIC FLOW]

RECORDING AND REPRODUCING DEVICE USER          SYSTEM MANAGER

( START CONTENT STORAGE PROCESS )

↓ ~S531

GENERATE KEY (EX. CONTENT KEY: Kcon) FROM MASTER KEY (EX. CONTENT-KEY-GENERATING MASTER KEY: MKcon) AND RECORDING AND REPRODUCING DEVICE ID

↓ ~S532

ENCRYPT PART OR ALL OF CONTENT WITH KEY (EX. CONTENT KEY Kcon)

↓ ~S533

STORE ENCRYPTED CONTENT IN STORAGE MEDIUM

↓

( END CONTENT STORAGE )

( START STORED DATA RECOVERY PROCESS )

↓ ~S534

READ OUT CONTENT ID

↓ ~S535

GENERATE KEY (EX. CONTENT Kcon) FROM RECORDING AND REPRODUCING DEVICE ID AND MASTER KEY (EX. CONTENT-KEY-GENERATING MASTER KEY: MKcon)

↓ ~S536

DECRYPT ENCRYPTED PART OF CONTENT WITH KEY (EX. CONTENT KEY Kcon)

↓

( END STORED DATA RECOVERY PROCESS )

[KEY OWNER CONFIGURATION]

RECORDING AND REPRODUCING DEVICE USER          SYSTEM MANAGER

| MASTER KEY (EX. CONTENT-KEY-GENERATING MASTER KEY: MKcon) | ← SHARE → | MASTER KEY (EX. CONTENT-KEY-GENERATING MASTER KEY: MKcon) |

RECORDING AND REPRODUCING DEVICE ID

ENCRYPTED CONTENT

FIG. 54

METHOD FOR GENERATING INDIVIDUAL KEY FROM MASTER KEY – (5)
[BASIC FLOW]

SLAVE DEVICE
(EX. RECORDING DEVICE)

HOST DEVICE
(EX. RECORDING AND REPRODUCING DEVICE)

START SLAVE DEVICE
INITIALIZATION PROCESS

START MUTUAL
AUTHENTICATION PROCESS

S541

GENERATE KEY
(EX. AUTHENTICATION KEY: Kake)
FROM MASTER KEY (EX.
AUTHENTICATION-KEY-
GENERATING MASTER KEY: MKake)
AND SLAVE DEVICE ID

S543

READ OUT SLAVE DEVICE ID

S544

GENERATE KEY (EX.
AUTHENTICATION KAKE) FROM
SLAVE DEVICE ID AND MASTER
KEY (EX. AUTHENTICATION-KEY-
GENERATING MASTER KEY: MKake)

S542

STORE AUTHENTICATION KEY IN
INTERNAL MEMORY OF SLAVE
DEVICE (EX. CONTENT KEY Kcon)

S545

EXECUTE AUTHENTICATION
PROCESS WITH KEY (EX.
AUTHENTICATION KEY Kake)
(SEE FIG. 20)

END SLAVE DEVICE
INITIALIZATION PROCESS

END MUTUAL
AUTHENTICATION PROCESS

[KEY OWNER CONFIGURATION]

SLAVE DEVICE
(EX. RECORDING DEVICE)

HOST DEVICE
(EX. RECORDING AND REPRODUCING DEVICE)

MASTER KEY
(EX. AUTHENTICATION-KEY-
GENERATING MASTER KEY: MKake)

← SHARE →

MASTER KEY
(EX. AUTHENTICATION-KEY-
GENERATING MASTER KEY: MKake)

SLAVE
DEVICE ID

AUTHENTICATION
KEY

FIG. 55

METHOD FOR GENERATING INDIVIDUAL KEY FROM MASTER KEY - (5)

| RECORDING AND REPRODUCING DEVICE 300 SIDE PROCESS | RECORDING DEVICE 400 SIDE PROCESS |
|---|---|
| EXECUTE AUTHENTICATION AND GENERATE SESSION KEY Kses | AUTHENTICATION PROCESS & CREATION OF SESSION KEY Kses |

S302

GENERATE AND COLLATE EACH INTEGRITY CHECK VALUE ICV

S301

S303

DECRYPT CONTENT KEY Kc1, Kc2, (Kc3) ENCRYPTED WITH DISTRIBUTION KEY Kdis

S304

ENCRYPT CONTENT KEY Kc1 WITH SESSION KEY Kses AND TRANSMIT IT TO STORAGE DEVICE

S305

DECRYPT CONTENT KEY Kc1 WITH SESSION KEY Kses

S306

ENCRYPT CONTENT KEY Kc1 WITH STORAGE KEY Kstr AND TRANSMIT IT TO RECORDING DEVICE

S307

ENCRYPT CONTENT KEY Kc2 WITH SESSION KEY Kses AND TRANSMIT IT TO STORAGE DEVICE

S308

DECRYPT CONTENT KEY Kc2 WITH SESSION KEY Kses

S309

ENCRYPT CONTENT KEY Kc2 WITH STORAGE KEY KSTR AND TRANSMIT IT TO RECORDING DEVICE

S310

ENCRYPT CONTENT KEY Kc3 WITH SESSION KEY Kses AND TRANSMIT IT TO STORAGE DEVICE

S311

DECRYPT CONTENT KEY Kc3 WITH SESSION KEY Kses

S312

ENCRYPT CONTENT KEY Kc3 WITH STORAGE KEY Kstr AND TRANSMIT IT TO RECORDING DEVICE

S313

FORM AND TRANSMIT DATA FORMAT TO RECORDING DEVICE

S314

STORE CONTENT KEY: Kc1, Kc2 (Kc3) ENCRYPTED WITH STORAGE KEY KSTR IN EXTERNAL MEMORY OF RECORDING DEVICE

FIG. 56

START

S611

AUTHENTICATE EACH INSTALLED
RECORDING DEVICE (SEE FIG. 20)

S612

EXTRACT ACTIVE PROGRAMS (WHOSE CONTENT
TYPE IS PROGRAM) FROM STORAGE MEDIUM OF
AUTHENTICATED RECORDING DEVICE

S613

SELECT ONE OF EXTRACTED ACTIVE PROGRAMS
WHICH HAS HIGHEST PRIORITY INFORMATION

S614

ACTIVATE SELECTED PROGRAM

END

FIG. 57

START

S621

AUTHENTICATE INSTALLED RECORDING
DEVICE (i) (SEE FIG. 20)

S622

AUTHENTICATION
SUCCESSFUL? — NO

YES

S623

RETRIEVE ACTIVE PROGRAMS (WHOSE
CONTENT TYPE IS PROGRAM) FROM
STORAGE MEDIUM OF AUTHENTICATED
RECORDING DEVICE

S624

ANY ACTIVE PROGRAM (WHOSE CONTENT
TYPE IS PROGRAM) IN STORAGE MEDIUM
OF AUTHENTICATED RECORDING
DEVICE? — NO

YES

S625

SELECT ONE OF EXTRACTED ACTIVE
PROGRAMS WHICH HAS HIGHEST PRIORITY
INFORMATION

S626

ACTIVATE SELECTED PROGRAM

END

S628

I=i+1

S627

RETRIEVAL OF CONTENT
FROM INSTALLED RECORDING
DEVICE COMPLETED? — NO

YES

FIG. 58

134

```
                    ┌─────────┐
                    │  START  │
                    └────┬────┘
                         │                    ～S651
         ┌───────────────▼───────────────┐
         │   AUTHENTICATE EACH INSTALLED  │
         │  RECORDING DEVICE (SEE FIG. 20)│
         └───────────────┬───────────────┘
                         │                    ～S652
         ┌───────────────▼───────────────┐
         │ EXTRACT ACTIVE PROGRAMS (WHOSE CONTENT │
         │ TYPE IS PROGRAM)FROM STORAGE MEDIUM OF │
         │   AUTHENTICATED RECORDING DEVICE       │
         └───────────────┬───────────────┘
                         │                    ～S653
         ┌───────────────▼───────────────┐
         │  DISPLAY EXTRACTED ACTIVE PROGRAMS │
         │        ON DISPLAY MEANS            │
         └───────────────┬───────────────┘
                         │                    ～S654
         ┌───────────────▼───────────────┐
         │     RECEIVE SELECTION INPUT    │
         │          FROM USER             │
         └───────────────┬───────────────┘
                         │                    ～S655
         ┌───────────────▼───────────────┐
         │  ACTIVATE USER SELECTED PROGRAM │
         └───────────────┬───────────────┘
                         │
                    ┌────▼────┐
                    │   END   │
                    └─────────┘
```

FIG. 59

FIG. 60

EP 1 164 748 A1

EXAMPLE OF CONTENT CONFIGURATION (1)

~6101          ~6102

| SOUND DATA DECRYPTED (DECOMPRESSED) PROGRAM EX. MP3 DECODER | COMPRESSED SOUND DATA EX. MP3 |
|---|---|

⋮              ⋮

| SOUND DATA DECRYPTED (DECOMPRESSED) PROGRAM EX. MP3 DECODER | COMPRESSED SOUND DATA EX. MP3 |
|---|---|

FIG. 61

EP 1 164 748 A1

EP 1 164 748 A1

START DATA
REPRODUCTION PROCESS

↓ S671

DISPLAY ON MONITOR,
REPRODUCED DATA INFORMATION PRESENT
IN MEMORY (EX. TITLES)

↓ S672

RECEIVE DATA SELECTED BY USER
FROM REPRODUCED DATA INFORMATION
DISPLAYED ON MONITOR

↓ S673

SELECT DATA FROM MEMORY IN ACCORDANCE
WITH USER'S SELECTION AND EXECUTE
REPRODUCTION (DECOMPRESSION) PROCESS

↓

END DATA
REPRODUCTION PROCESS

FIG. 62

138

EXAMPLE OF CONTENT CONFIGURATION (2)

6201   6202

| HEADER | SOUND DATA DECRYPTED (DECOMPRESSED) PROGRAM EX. MP3 DECODER |
|--------|-------------------------------------------------------------|

CONTENT ID
(PROGRAM)
(MP3 DECODER)

6203   6204

| HEADER | COMPRESSED SOUND DATA EX. MP3 DECODER |
|--------|----------------------------------------|

CONTENTS ID
(VOICE DATA)
(MP3 COMPRESSION)

| HEADER | COMPRESSED SOUND DATA EX. MP3 |
|--------|-------------------------------|

FIG. 63

EP 1 164 748 A1

139

START DATA
REPRODUCTION PROCESS

S675

DISPLAY ON MONITOR,
REPRODUCED DATA INFORMATION PRESENT
IN MEMORY (EX. TITLES)

S676

RECEIVE DATA SELECTED BY USER
FROM REPRODUCED DATA INFORMATION
DISPLAYED ON MONITOR

S677

RETRIEVE REPRODUCED PROGRAM
DEPENDENT ON DATA SELECTED BY USER,
FROM MEMORY OR PROGRAM PROVIDING MEANS
ACCESSIBLE TO REPRODUCTION APPARATUS

S678

PROGRAM DETECTED? — NO → ABORT PROCESS

S679

EXTRACT DATA FROM MEMORY IN ACCORDANCE
WITH USER'S SELECTION AND EXECUTE
REPRODUCTION (DECOMPRESSION) PROCESS

END DATA
REPRODUCTION PROCESS

EXAMPLE OF CONTENT CONFIGURATION (3)

| HEADER | SOUND DATA DECRYPTED (DECOMPRESSED) PROGRAM EX. PM3 DECODER | COMPRESSED SOUND DATA EX. MP3 |

6301  6302  6303

CONTENT ID
CONFIGURATION
REPRODUCTION PRIORITY

FIG. 65

EP 1 164 748 A1

START DATA
REPRODUCTION PROCESS

$\sim$S681

SET AS RETRIEVAL LIST,
REPRODUCED DATA INFORMATION PRESENT
IN MEMORY (EX. TITLES)

$\sim$S682

SELECT HIGH PRIORITY DATA
FROM RETRIEVAL LIST

$\sim$S683

SELECT DATA FROM MEMORY IN ACCORDANCE
WITH USER'S SELECTIONAND EXECUTE
REPRODUCTION (DECOMPRESSION) PROCESS

END DATA
REPRODUCTION PROCESS

FIG. 66

EXAMPLE OF CONTENT CONFIGURATION (4)

6401

| HEADER | SOUND DATA DECRYPTED (DECOMPRESSED) PROGRAM EX. MP3 DECODER |

6402

CONTENT ID (PROGRAM) (MP3 DECODER)

6403

| HEADER | COMPRESSED SOUND DATA EX. PM3 |

6404

CONTENT ID (SOUND DATA) (MP3 COMPRESSION) REPRODUCTION PRIORITY

| HEADER | COMPRESSED SOUND DATA EX. PM3 |

FIG. 67

143

```
        ┌─────────────────────────┐
        │      START DATA         │
        │  REPRODUCTION PROCESS   │
        └─────────────────────────┘
                    │
                    ▼                          ~S691
        ┌─────────────────────────────────────┐
        │ SET AS RETRIEVAL LIST, REPRODUCED   │
        │ DATA INFORMATION PRESENT IN MEMORY  │
        │ (EX. TITLES)                        │
        └─────────────────────────────────────┘
                    │
                    ▼                          ~S692
        ┌─────────────────────────────────────┐
        │  SELECT HIGH PRIORITY DATA FROM     │◄──────────┐
        │         RETRIEVAL LIST              │           │
        └─────────────────────────────────────┘           │
                    │                                      │
                    ▼                          ~S693       │
        ┌─────────────────────────────────────┐           │
        │ RETRIEVE REPRODUCED PROGRAM         │           │
        │ DEPENDENT ON DATA SELECTED BY USER, │           │
        │ FROM MEMORY OR PROGRAM PROVIDING    │           │
        │ MEANS ACCESSIBLE TO REPRODUCTION    │           │
        │ APPARATUS                           │           │
        └─────────────────────────────────────┘           │
                    │                                      │
                    ▼        ~S694                         │
              ◇─────────────────◇    NO     ┌──────────────────────┐ ~S696
              PROGRAM DETECTED? ──────────► │ DELETE FROM RETRIEVAL│
              ◇─────────────────◇           │ LIST DATA TO WHICH   │
                    │ YES                    │ SAME PROGRAM IS      │
                    ▼        ~S695           │ APPLIED              │
        ┌─────────────────────────────┐      └──────────────────────┘
        │ EXTRACT DATA FROM MEMORY IN │              │
        │ ACCORDANCE WITH USER'S      │              ▼         ~S697
        │ SELECTION AND EXECUTE       │        ◇──────────────◇  NO
        │ REPRODUCTION (DECOMPRESSION)│        RETRIEVAL       ──────┘
        │ PROCESS                     │        LIST EMPTY?
        └─────────────────────────────┘        ◇──────────────◇
                    │                               │ YES
                    ▼◄──────────────────────────────┘
        ┌─────────────────────────┐
        │  END DATA REPRODUCTION  │
        │        PROCESS          │
        └─────────────────────────┘
```

FIG. 68

RECORDING AND REPRODUCING DEVICE 300 3001

MEDIUM 500

RECORDING DEVICE A 400A

DISTRIBUTION KEY Kdis

CONTENT ID

CONTENT KEY Kcon
Kcon CONTENT
Kcon CONTENT
Kcon CONTENT

RECORDING AND REPRODUCING DEVICE IDENTIFIER[IDdev]

SYSTEM SIGNATURE KEY[Ksys]

RECORDING AND REPRODUCING DEVICE SIGNATURE KEY[Kdev]

MASTER KEY MKx

CONTENT

SAVE DATA

RECORDING DEVICE B 400B

RECORDING DEVICE C

MEMORY

SAVE DATA 400C

SAVE DATA

COMMUNICATION MEANS 600

3002

SAVE DATA CRYPTOGRAPHY KEY:$K_{sav}=K_{con}$
SAVE DATA CRYPTOGRAPHY KEY:$K_{sav}=K_{sys}$
SAVE DATA CRYPTOGRAPHY KEY:$K_{sav}=K_{dev}$
SAVE DATA CRYPTOGRAPHY KEY:$K_{sav}=$CONTENT ID OR DES (MKx, CONTENT ID)
SAVE DATA CRYPTOGRAPHY KEY:$K_{sav}=$RECORDING AND REPRODUCING DEVICE ID($ID_{dev}$) or DES (MKx, RECORDING AND REPRODUCING DEVICE ID($ID_{dev}$))
SAVE DATA CRYPTOGRAPHY KEY:$K_{sav}=(K_{con}\char`^K_{dev})$ or DES(MKx, $K_{con}\char`^K_{dev}$)
SAVE DATA CRYPTOGRAPHY KEY:$K_{sav}=$(CONTENT ID$\char`^K_{dev}$) or DES(MKx, CONTENT ID$\char`^K_{dev}$)
SAVE DATA CRYPTOGRAPHY KEY:$K_{sav}=$(KCON$\char`^$RECORDING AND REPRODUCING DEVICE ID) OR DES (MKx, KCON$\char`^$RECORDING AND REPRODUCING DEVICE ID)
SAVE DATA CRYPTOGRAPHY KEY:$K_{sav}=$(CONTENT ID$\char`^$RECORDING AND REPRODUCING DEVICE ID) OR DES (MKX, CONTENT ID$\char`^$RECORDING AND REPRODUCING DEVICE ID)
SAVE DATA CRYPTOGRAPHY KEY:$K_{sav}=$PASSWORD OR DES(MKX, PASSWORD) ETC.

FIG. 69

EP 1 164 748 A1

(1) EXAMPLE OF SAVE DATA STORAGE PROCESS USING CONTENT UNIQUE KEY CONTENT OR SYSTEM COMMON KEY

FIG. 70

DATA MANAGING FILE(1)

| DATA NUMBER | CONTENT ID (GAME ID) | RECORDING AND REPRODUCING DEVICE ID (IDDEV) | PROGRAM LOCALIZATION |
|---|---|---|---|
| 1 | 12345678... | 56789012... | YES |
| 2 | ABCDEF12... | 09876543... | YES |
| 3 | 12245678... | 58834762... | NO |
| : | : | : | : |

FIG. 71

EP 1 164 748 A1

(2) EXAMPLE OF SAVE DATA REPRODUCTION PROCESS USING CONTENT UNIQUE KEY
OR SYSTEM COMMON KEY

START SAVE DATA
REPRODUCTION PROCESS

S711
READ OUT CONTENT ID (EX. GAME ID)

S712
READ CONTENT ID (ID) AND PROGRAM
LOCALIZATION (YES/NO) OUT FROM
DATA MANAGING FILE

S713
PROGRAM
LOCALIZATION TO BE
EXECUTED?

NO

YES

S714
READ KEY UNIQUE TO CONTENT (EX. CONTENT
KEY Kcon) OUT FROM CONTENT DATA AND
GENERATE SAVE DATA DECRYPTION KEY Ksave
BASED ON KEY UNIQUE TO CONTENT
(EX. CONTENT KEY)

S717
READ SYSTEM COMMON KEY
(EX. SYSTEM SIGNATURE KEY
Ksys) OUT FROM RECORDING
AND REPRODUCING DEVICE AND
GENERATE SAVE DATA
DECRYPTION KEY KSAVE BASED
ON SYSTEM COMMON KEY
(EX. SYSTEM SIGNATURE KEY)

S715
DECRYPT SAVE DATA WITH SAVE DATA
DECRYPTION KEY Ksav

S716
REPRODUCE AND EXECUTE DECRYPTED SAVE DATA
IN RECORDING DEVICE

END SAVE DATA
REPRODUCTION PROCESS

FIG. 72

(3) EXAMPLE OF SAVE DATA STORAGE PROCESS USING CONTENT ID OR
SYSTEM COMMON KEY

```
        ( START SAVE DATA
          STORAGE PROCESS )
                 |
                 v                              S721
   +------------------------------------+
   | READ OUT CONTENT ID (EX. GAME ID)  |
   +------------------------------------+
                 |
                 v                              S722
            / PROGRAM LOCALIZATION \  NO
           <    TO BE EXECUTED?     >--------------+
            \                      /               |
                 | YES                             |
                 v                S723             v                      S727
   +---------------------------------+   +-----------------------------------+
   | READ CONTENT ID (EX. GAME ID)   |   | READ SYSTEM COMMON KEY            |
   | OUT FROM CONTENT DATA AND       |   | (EX. SYSTEM SIGNATURE KEY Ksys)  |
   | GENERATE SAVE DATA ENCRYPTION   |   | OUT FROM RECORDING AND           |
   | KEY KSAVE BASED ON CONTENT ID   |   | REPRODUCING DEVICE AND           |
   | (EX. GAME ID)                   |   | GENERATE SAVE DATA               |
   +---------------------------------+   | ENCRYPTION KEY KSAVE BASED       |
                 |                        | ON SYSTEM COMMON KEY             |
                 |                        | (EX. SYSTEM SIGNATURE KEY)      |
                 v                S724    +-----------------------------------+
   +---------------------------------+              |
   | ENCRYPT SAVE DATA WITH SAVE     |<-------------+
   | DATA ENCRYPTION KEY Ksav        |
   +---------------------------------+
                 |
                 v                S725
   +---------------------------------+
   | STORE ENCRYPTED SAVE DATA IN    |
   | RECORDING DEVICE                |
   +---------------------------------+
                 |
                 v                S726
   +---------------------------------+
   | WRITE CONTENT ID (GAME ID) AND  |
   | PROGRAM LOCALIZATION (YES/NO)   |
   | TO DATA MANAGING FILE           |
   +---------------------------------+
                 |
                 v
        ( END SAVE DATA
          STORAGE PROCESS )
```

FIG. 73

(4) EXAMPLE OF SAVE DATA REPRODUCTION PROCESS USING CONTENT ID OR SYSTEM COMMON KEY

START SAVE DATA REPRODUCTION PROCESS

S731
READ OUT CONTENT ID (EX. GAME ID)

S732
READ CONTENT ID (GAME ID) AND PROGRAM LOCALIZATION (YES/NO) OUT FROM DATA MANAGING FILE

S733
PROGRAM LOCALIZATION TO BE EXECUTED?

NO

YES

S734
READ KEY CONTENT ID (EX. GAME ID) OUT FROM CONTENT DATA AND GENERATE SAVE DATA DECRYPTION KEY Ksav BASED ON CONTENT ID (EX. GAME ID)

S737
READ SYSTEM COMMON KEY (EX. SYSTEM SIGNATURE KEY Ksys) OUT FROM RECORDING AND REPRODUCING DEVICE AND GENERATE SAVE DATA DECRYPTION KEY KSAVE BASED ON SYSTEM COMMON KEY (EX. SYSTEM SIGNATURE KEY)

S735
DECRYPT SAVE DATA WITH SAVE DATA ENCRYPTION KEY Ksav

S736
REPRODUCE AND EXECUTE DECRYPTED SAVE DATA FROM RECORDING AND REPRODUCING DEVICE

END SAVE DATA REPRODUCTION PROCESS

FIG. 74

(5) EXAMPLE OF SAVE DATA STORAGE PROCESS USING RECORDING AND
REPRODUCING DEVICE UNIQUE KEY OR SYSTEM COMMON KEY

```
                  ┌─────────────────────────┐
                  │    END SAVE DATA        │
                  │   STORAGE PROCESS       │
                  └─────────────────────────┘
                              │
                              ▼                    ～S741
        ┌──────────────────────────────────────────┐
        │    READ OUT CONTENT ID (EX. GAME ID)      │
        └──────────────────────────────────────────┘
                              │
                              ▼        ～S742
                      ◇──────────────◇         NO
                     ╱ PROGRAM LOCALIZATION ╲──────────────┐
                     ╲  TO BE EXECUTED?     ╱               │
                      ◇──────────────◇                     │
                              │ YES                         │
                              ▼          ～S743             ▼            ～S747
```

| READ RECORDING AND REPRODUCING DEVICE UNIQUE KEY (EX. RECORDING AND REPRODUCING DEVICE SIGNATURE KEY K_DEV) OUT FROM RECORDING AND REPRODUCING DEVICE AND GENERATE SAVE DATA ENCRYPTION KEY K_SAVE BASED ON RECORDING AND REPRODUCING DEVICE UNIQUE KEY (EX. RECORDING AND REPRODUCING DEVICE SIGNATURE KEY) | READ SYSTEM COMMON KEY (EX. SYSTEM SIGNATURE KEY K_SYS) OUT FROM RECORDING AND REPRODUCING DEVICE AND GENERATE SAVE DATA ENCRYPTION KEY K_SAVE BASED ON SYSTEM COMMON KEY (EX. SYSTEM SIGNATURE KEY) |
|---|---|

```
                              │                   ～S744         │
                              ▼                                  │
        ┌──────────────────────────────────────────┐◄───────────┘
        │    ENCRYPT SAVE DATA WITH SAVE            │
        │    DATA ENCRYPTION KEY K_sav              │
        └──────────────────────────────────────────┘
                              │                   ～S745
                              ▼
        ┌──────────────────────────────────────────┐
        │    STORE ENCRYPTED SAVE DATA              │
        │    IN RECORDING DEVICE                    │
        └──────────────────────────────────────────┘
                              │                   ～S746
                              ▼
        ┌──────────────────────────────────────────┐
        │  WRITE CONTENT IDENTIFIER (GAME ID),      │
        │  RECORDING AND REPRODUCING DEVICE ID,     │
        │  AND RECORDING AND REPRODUCING DEVICE     │
        │  LOCALIZATION (YES/NO) TO DATA            │
        │  MANAGING FILE                            │
        └──────────────────────────────────────────┘
                              │
                              ▼
                  ┌─────────────────────────┐
                  │    START SAVE DATA      │
                  │   STORAGE PROCESS       │
                  └─────────────────────────┘
```

DATA MANAGING FILE(2)

| DATA NUMBER | CONTENT ID (GAME ID) | RECORDING AND REPRODUCING DEVICE ID (IDdev) | PROGRAM LOCALIZATION |
|---|---|---|---|
| 1 | 12345678... | 56789012... | NO |
| 2 | ABCDEF12... | 09876543... | YES |
| 3 | 12245678... | 58834762... | YES |
| : | : | : | : |

FIG. 76

EP 1 164 748 A1

(6) EXAMPLE OF SAVE DATA REPRODUCTION PROCESS USING RECORDING AND REPRODUCING DEVICE UNIQUE KEY OR SYSTEM COMMON KEY

START SAVE DATA REPRODUCTION PROCESS

S751
END SAVE DATA REPRODUCTION PROCESS

S752
READ OUT RECORDING AND REPRODUCING DEVICE ID (ID$_{dev}$)

S753
READ CONTENT ID (GAME ID), RECORDING AND REPRODUCING DEVICE ID, AND RECORDING AND REPRODUCING DEVICE LOCALIZATION (YES/NO) OUT FROM DATA MANAGING FILE (PROCESS, HOWEVER, IS ENDED IF RECORDING AND REPRODUCING DEVICE ID DOES NOT MATCH IN SETTINGS FOR RECORDING AND REPRODUCING DEVICE LOCALIZATION)

S754
PROGRAM LOCALIZATION TO BE EXECUTED?  — NO

YES

S755
READ RECORDING AND REPRODUCING DEVICE UNIQUE KEY (EX. RECORDING AND REPRODUCING DEVICE SIGNATURE KEY KDEV) OUT FROM RECORDING AND REPRODUCING DEVICE AND GENERATE SAVE DATA DECRYPTION KEY K$_{SAVE}$ BASED ON RECORDING AND REPRODUCING DEVICE UNIQUE KEY (EX. RECORDING AND REPRODUCING DEVICE SIGNATURE KEY)

S758
READ SYSTEM COMMON KEY (EX. SYSTEM SIGNATURE KEY K$_{sys}$) OUT FROM RECORDING AND REPRODUCING DEVICE AND GENERATE SAVE DATA ENCRYPTION KEY KSAVE BASED ON SYSTEM COMMON KEY (EX. SYSTEM SIGNATURE KEY)

S756
DECRYPT SAVE DATA WITH SAVE DATA DECRYPTION KEY K$_{sav}$

S757
REPRODUCE AND EXECUTE DECRYPTED SAVE DATA IN RECORDING AND REPRODUCING DEVICE

END SAVE DATA REPRODUCTION PROCESS

FIG. 77

153

(7) EXAMPLE OF SAVE DATA STORAGE PROCESS USING RECORDING AND REPRODUCING
DEVICE ID OR SYSTEM COMMON KEY

```
        ┌──────────────────────┐
        │    START SAVE DATA    │
        │   STORAGE PROCESS     │
        └──────────────────────┘
                   │
                   ▼                        ～S761
        ┌──────────────────────────────────┐
        │  READ OUT CONTENT ID (EX. GAME ID)│
        └──────────────────────────────────┘
                   │
                   ▼                        ～S762
        ┌──────────────────────────────────┐
        │     READ OUT RECORDING AND        │
        │   REPRODUCING DEVICE ID (IDDEV)   │
        └──────────────────────────────────┘
                   │
                   ▼                ～S763
             ╱──────────────────╲       NO
        ────╱   RECORDING AND     ╲──────────────┐
        ╲   REPRODUCING DEVICE LOCALIZATION ╱     │
         ╲     TO BE EXECUTED?   ╱                │
             ╲──────────────╱                     │
                   │ YES                          │
                   ▼          ～S764              ▼          ～S768
  ┌───────────────────────────────┐  ┌───────────────────────────────┐
  │ GENERATE SAVE DATA ENCRYPTION  │  │   READ SYSTEM COMMON KEY       │
  │ KEY KSAVE BASED ON READ-OUT    │  │  (EX. SYSTEM SIGNATURE KEY     │
  │ RECORDING AND REPRODUCING      │  │  Ksys) OUT FROM RECORDING      │
  │ DEVICE ID (IDdev) READ OUT     │  │ AND REPRODUCING DEVICE AND     │
  │ FROM RECORDING AND             │  │   GENERATE SAVE DATA           │
  │ REPRODUCING DEVICE             │  │ ENCRYPTION KEY Ksave BASED     │
  └───────────────────────────────┘  │ ON SYSTEM COMMON KEY (EX.      │
                   │                  │   SYSTEM SIGNATURE KEY)        │
                   │                  └───────────────────────────────┘
                   ▼          ～S765              │
  ┌───────────────────────────────┐              │
  │   ENCRYPT SAVE DATA WITH SAVE  │◄─────────────┘
  │    DATA ENCRYPTION KEY Ksav    │
  └───────────────────────────────┘
                   │
                   ▼          ～S766
  ┌───────────────────────────────┐
  │   STORE ENCRYPTED SAVE DATA IN │
  │        RECORDING DEVICE        │
  └───────────────────────────────┘
                   │
                   ▼          ～S767
  ┌───────────────────────────────┐
  │ WRITE CONTENT ID (GAME ID),    │
  │ RECORDING AND REPRODUCING      │
  │ DEVICE ID, AND RECORDING AND   │
  │ REPRODUCING DEVICE LOCALIZATION│
  │ (YES/NO) TO DATA MANAGING FILE │
  └───────────────────────────────┘
                   │
                   ▼
        ┌──────────────────────┐
        │    END SAVE DATA      │
        │   STORAGE PROCESS     │
        └──────────────────────┘
```

FIG. 78

(8) EXAMPLE OF SAVE DATA REPRODUCTION PROCESS USING RECORDING AND REPRODUCING DEVICE ID OR SYSTEM COMMON KEY

START SAVE DATA
REPRODUCTION PROCESS

S771
READ OUT CONTENT ID (EX. GAME ID)

S772
READ OUT RECORDING AND
REPRODUCING DEVICE ID (IDdev)

S773
READ CONTENT ID (GAME ID), RECORDING AND
REPRODUCING DEVICE ID, AND RECORDING AND
REPRODUCING DEVICE LOCALIZATION (YES/NO)
OUT FROM DATA MANAGING FILE
(PROCESS, HOWEVER, IS ENDED IF RECORDING
AND REPRODUCING DEVICE ID DOES NOT MATCH
IN SETTINGS FOR RECORDING AND REPRODUCING
DEVICE LOCALIZATION)

YES

S774
PROGRAM LOCALIZATION
TO BE EXECUTED?  NO

S775
GENERATE SAVE DATA DECRYPTION KEY KSAVE
BASED ON RECORDING AND REPRODUCING DEVICE
(IDdev) READ-OUT FROM RECORDING AND
REPRODUCING DEVICE ID (IDdev)

S778
READ SYSTEM COMMON KEY
(EX. SYSTEM SIGNATURE KEY
Ksys) OUT FROM RECORDING
AND REPRODUCING DEVICE AND
GENERATE SAVE DATA
DECRYPTION KEY KSAVE BASED
ON SYSTEM COMMON KEY (EX.
SYSTEM SIGNATURE KEY)

S776
DECRYPT SAVE DATA WITH SAVE DATA
ENCRYPTION KEY Ksav

S777
REPRODUCE AND EXECUTE DECRYPTED SAVE DATA
IN RECORDING AND REPRODUCING DEVICE

END SAVE DATA
REPRODUCTION PROCESS

FIG. 79

(9) EXAMPLE OF SAVE DATA STORAGE PROCESS USING CONTENT UNIQUE KEY,
RECORDING AND REPRODUCING DEVICE UNIQUE KEY, OR SYSTEM COMMON KEY

( START SAVE DATA STORAGE PROCESS )

READ OUT CONTENT ID (EX. GAME ID) — S781

S782
PROGRAM LOCALIZATION TO BE EXECUTED? — NO

YES

S783
RECORDING AND REPRODUCING DEVICE LOCALIZATION TO BE EXECUTED? — NO

RECORD REPRODUCING PLAYER LIMITED? — NO

YES — S785

**S785** GENERATE SAVE DATA ENCRYPTION KEY Ksave BASED ON CONTENT UNIQUE KEY (EX. Kcon) AND RECORDING AND REPRODUCING DEVICE UNIQUE KEY (EX. RECORDING AND REPRODUCING DEVICE SIGNATURE KEY: Kdev)

**S786** GENERATE SAVE DATA ENCRYPTION KEY Ksave BASED ON CONTENT UNIQUE KEY (EX. Kcon)

**S787** GENERATE SAVE DATA ENCRYPTION KEY Ksave BASED ON CONTENT UNIQUE KEY (EX. Kcon) AND RECORDING AND REPRODUCING DEVICE UNIQUE KEY (EX. RECORDING AND REPRODUCING DEVICE SIGNATURE KEY: Kdev)

**S788** READ SYSTEM COMMON KEY (EX. SYSTEM SIGNATURE KEY Ksys) OUT FROM RECORDING AND REPRODUCING DEVICE AND GENERATE SAVE DATA ENCRYPTION KEY Ksave BASED ON SYSTEM COMMON KEY (EX. SYSTEM SIGNATURE KEY)

ENCRYPT SAVE DATA WITH SAVE DATA ENCRYPTION KEY Ksav AND STORE THEM IN RECORDING DEVICE — S789

WRITE CONTENT ID (GAME ID), RECORDING AND REPRODUCING DEVICE ID, AND RECORDING AND REPRODUCING DEVICE LOCALIZATION (YES/NO) TO DATA MANAGING FILE — S790

( END SAVE DATA STORAGE PROCESS )   FIG. 80

EP 1 164 748 A1

DATA MANAGING FILE(3)

| DATA NUMBER | CONTENT ID (GAME ID) | RECORDING AND REPRODUCING DEVICE ID (IDdev) | PROGRAM LOCALIZATION | RECORDING AND REPRODUCING DEVICE LOCALIZATION |
|---|---|---|---|---|
| 1 | 123455678... | 56789012... | YES | NO |
| 2 | ABCDEF12... | 09876543... | YES | YES |
| 3 | 1122457678 | 58834762... | NO | YES |
| ⋮ | ⋮ | ⋮ | ⋮ | ⋮ |

FIG. 81

EP 1 164 748 A1

EP 1 164 748 A1

(10) EXAMPLE OF SAVE DATA REPRODUCTION PROCESS USING CONTENT UNIQUE KEY,
RECORDING AND REPRODUCING DEVICE UNIQUE KEY, OR SYSTEM COMMON KEY

( START SAVE DATA REPRODUCTION PROCESS )

READ OUT CONTENT ID (EX. GAME ID), AND RECORDING AND REPRODUCING DEVICE (IDdev) — S791

S792

READ CONTENT ID (GAME ID), RECORDING AND REPRODUCING DEVICE ID, PROGRAM LOCALIZATION (YES/NO), AND RECORDING AND REPRODUCING DEVICE LOCALIZATION (YES/NO) OUT FROM DATA MANAGING FILE (PROCESS, HOWEVER, IS ENDED IF CONTENT ID DOES NOT MATCH IN SETTINGS FOR SETTINGS FOR PROGRAM LOCALIZATION (YES), OR IF RECORDING AND REPRODUCING DEVICE ID DOES NOT MATCH IN SETTINGS FOR RECORDING ANDREPRODUCING DEVICE LOCALIZATION (YES))

S793
PROGRAM LOCALIZATION TO BE EXECUTED? — NO

YES

S794
RECORDING AND REPRODUCING DEVICE LOCALIZATION TO BE EXECUTED? — NO

YES

S795
RECORD REPRODUCING PLAYER LIMITED? — NO

YES

S796
GENERATE SAVE DATA ENCRYPTION KEY KSAVE BASED ON CONTENT UNIQUE KEY (EX. Kcon) AND RECORDING AND REPRODUCING DEVICE UNIQUE KEY (EX. RECORDING AND REPRODUCING DEVICE SIGNATURE KEY: Kkev)

S797
GENERATE SAVE DATA DECRYPTION KEY KSAVE BASED ON CONTENT UNIQUE KEY (EX. Kcon)

S798
GENERATE SAVE DATA ENCRYPTION KEY KSAVE BASED ON CONTENT UNIQUE KEY (EX. Kcon) AND RECORDING AND REPRODUCING DEVICE UNIQUE KEY (EX. RECORDING AND REPRODUCING DEVICE SIGNATURE KEY: Kdev)

S799
READ SYSTEM COMMON KEY (EX. SYSTEM SIGNATURE KEY Ksys) OUT FROM RECORDING AND REPRODUCING DEVICE AND GENERATE SAVE DATA DECRYPTION KEY Ksav BASED ON SYSTEM COMMON KEY (EX. SYSTEMSIGNATURE KEY)

S800
DECRYPT SAVE DATA WITH SAVE DATA ENCRYPTION KEY Ksav AND REPRODUCE AND EXECUTE THEM

( END SAVE DATA REPRODUCTION PROCESS )

FIG. 82

(11) EXAMPLE OF SAVE DATA STORAGE PROCESS USING USER PASSWORD OR
SYSTEM COMMON KEY

START SAVE DATA
STORAGE PROCESS

S821
READ OUT CONTENT ID (EX. GAME ID)

S822
USER PROGRAM
LOCALIZATION TO BE
EXECUTED?

NO

YES

S823
INPUT USER PASSWORD

S824
GENERATE SAVE DATA ENCRYPTION KEY $K_{SAV}$
BASED ON USER PASSWORD

S828
READ SYSTEM COMMON KEY
(EX. SYSTEM SIGNATURE KEY
$K_{sys}$) OUT FROM RECORDING
AND REPRODUCING DEVICE AND
GENERATE SAVE DATA
ENCRYPTION KEY $K_{sav}$ BASED
ON SYSTEM COMMON KEY (EX.
SYSTEM SIGNATURE KEY)

S825
ENCRYPT SAVE DATA WITH SAVE DATA
ENCRYPTION KEY $K_{sav}$

S826
STORE ENCRYPTED

S827
WRITE CONTENT ID (GAME ID), RECORDING
AND REPRODUCING DEVICE ID, AND USER
PROGRAM LOCALIZATION (YES/NO) TO DATA
MANAGING FILE

END SAVE DATA
STORAGE PROCESS

FIG. 83

DATA MANAGING FILE(4)

| DATA NUMBER | CONTENT ID (GAME ID) | RECORDING AND REPRODUCING DEVICE ID ($ID_{dev}$) | USER PROGRAM LOCALIZATION |
|:-:|:-:|:-:|:-:|
| 1 | 123455678... | 56789012... | YES |
| 2 | ABCDEF12... | 09876543... | YES |
| 3 | 1122457678 | 58834762... | NO |
| ⋮ | ⋮ | ⋮ | ⋮ |

FIG. 84

EP 1 164 748 A1

EP 1 164 748 A1

(12) EXAMPLE OF SAVE DATA REPRODUCTION PROCESS USING USER PASSWORD OR
SYSTEM COMMON KEY

START SAVE DATA
REPRODUCTION PROCESS

S831
READ OUT CONTENT ID (EX. GAME ID)

S832
READ CONTENT ID (GAME ID) AND USER
PROGRAM LOCALIZATION (YES/NO) OUT FROM
DATA MANAGING FILE

S833
USER PROGRAM LOCALIZATION TO BE EXECUTED? — NO

YES

S834
INPUT USER PASSWORD

S835
GENERATE SAVE DATA DECRYPTION KEY
Ksav BASED ON USER PASSWORD

S837
READ SYSTEM COMMON KEY
(EX. SYSTEM SIGNATURE KEY
Ksys) OUT FROM RECORDING
AND REPRODUCING DEVICE AND
GENERATE SAVE DATA
DECRYPTION KEY Ksav BASED
ON SYSTEM COMMON KEY
(EX. SYSTEM SIGNATURE KEY)

S836
DECRYPT SAVE DATA WITH SAVE DATA
DECRYPTION KEY Ksav

S836
REPRODUCE AND EXECUTE DECRYPTED DATA
FROM RECORDING AND REPRODUCING DEVICE

END SAVE DATA
REPRODUCTION PROCESS

FIG. 85

161

FIG. 86

EP 1 164 748 A1

PROVIDE CONTENT FROM MEDIUM
(DVD, CD, OR THE LIKE)

PROVIDE CONTENT
FROM NETWORK

START

START

S901
REQUEST MEDIUM TO PROVIDE CONTENT

S911
ESTABLISH COMMUNICATION SESSION
WITH DELIVERY SERVICE SIDE

S902
OBTAIN REVOCATION LIST INFORMATION

S903
EXECUTE REVOCATION LIST INTEGRITY
CHECK VALUE ICVrev VERIFYING PROCESS

S904
ICVrev
SUCCESSFULLY
VERIFIED?
NO

YES

S905
GENERATE INTERMEDIATE INTEGRITY
CHECK VALUE ICVt' FROM REVOCATION
LIST INTEGRITY CHECK VALUE ICVrev
AND PARTIAL INTEGRITY CHECK VALUE
IN CONTENT DATA TO EXECUTE
INTERMEDIATE INTEGRITY CHECK VALUE
VERIFYING PROCESS

S906
INTERMEDIATE
INTEGRITY CHECK VALUE
SUCCESSFULLY VERIFIED?
NO

YES

S907
MATCH WITH
ENTRY IN LIST?
YES

S909
ERROR

NO

END

S908
START NORMAL PROCESS
(EX. PROGRAM EXECUTING PROCESS)

FIG. 87

PROVIDE CONTENT FROM RECORDING
DEVICE (MEMORY CARD OR THE LIKE)

START

MUTUAL AUTHENTICATION
PROCESS (SEE FIG. 20) — S921

MUTUAL
AUTHENTICATION
SUCCESSFUL? — S922

OBTAIN REVOCATION LIST INFORMATION — S923

EXECUTE REVOCATION LIST INTEGRITY
CHECK VALUE ICVREV VERIFYING PROCESS — S924

SUCCESSFULLY
VERIFIED? — S925    NO

YES

GENERATE INTERMEDIATE INTEGRITY
CHECK VALUE $ICVt'$ FROM REVOCATION
LIST INTEGRITY CHECK VALUE $ICV_{rev}$
AND PARTIAL INTEGRITY CHECK VALUE
IN CONTENT DATA TO EXECUTE
INTERMEDIATE INTEGRITY CHECK VALUE
VERIFYING PROCESS — S926

INTERMEDIATE
INTEGRITY CHECK VALUE
SUCCESSFULLY VERIFIED? — S927    NO

YES

MATCH WITH
ENTRY IN LIST? — S928    YES

ERROR — S930

END

NO

START NORMAL PROCESS
(EX. PROGRAM EXECUTING PROCESS) — S929

FIG. 88

164

8004 ─── ──── 8003

8001 ─── PROCESS SECTION

8002 ─── STORAGE SECTION (NON-VOLATILE MEMORY)

8000 ─── (A) SECURITY CHIP (MANUFACTURING PROCESS)

──── 8003

EXTERNALLY CONNECTED INTERFACE

SECURITY CHIP

OTHER ELEMENTS

PERIPHERAL EQUIPMENT

(B) PRODUCTS MOUNTED ON SECURITY CHIP (EX. RECORDING AND REPRODUCING DEVICE AND RECORDING DEVICE)

FIG. 89

EP 1 164 748 A1

SECURITY CHIP
MANUFACTURING PROCESS FLOW

START

S951

SET DATA WRITE OR READ MODE

S952

EXECUTE AUTHENTICATION
PROCESS BASED ON CHIP STORAGE
COMPLETION INFORMATION

S953

AUTHENTICATION
SUCCESSFUL? —— NO ——> ABORT PROCESS

YES

S954

DATA WRITE OR —— READ
READ PROCESS?

WRITE

S955

EXECUTE DATA
WRITE PROCESS

S956

EXECUTE DATA
READ PROCESS

END DATA WRITE OR READ PROCESS

FIG. 90

(A) SECURITY CHIP
(MANUFACTURING PROCESS)

(B) PRODUCTS MOUNTED ON SECURITY CHIP
(EX. RECORDING AND REPRODUCING DEVICE AND RECORDING DEVICE)

FIG. 91

EP 1 164 748 A1

START DATA
WRITE PROCESS

↓

S961

SET DATA WRITE MODE

↓

S962

AUTHENTICATION
SUCCESSFUL? ——NO——→ ABORT PROCESS

↓ YES

S963

OUTPUT TO PROCESS SECTION, A COMMAND FOR
WRITE OF SECRET DATA TO WRITE ONLY (WO) AREA
AND OF CHECKING DATA TO READ AND WRITE (RW)
AREA

↓

S964

PROCESS SECTION WRITES SECRET DATA TO WRITE
ONLY (WO) AREA AND CHECKS DATA TO READ AND
WRITE (RW) AREA FOR EXECUTION

↓

END DATA
WRITE PROCESS

FIG. 92

START PROCESS FOR CHECKING
SECRET DATA WRITTEN TO WRITE
ONLY (WO) AREA

~S971

PROCESS SECTION EXECUTES CRYPTOGRAPH
PROCESS USING SECRET DATA WRITTEN
TO WRITE ONLY (WO) AREA

~S972

RECEIVE RESULT OF
CRYPTOGRAPHY PROCESS

~S973

COMPARE RESULT OF CRYPTOGRAPHY
PROCESS USING SECRET DATA (AFTER
AUTHENTICATION) WRITTEN TO WRITE
ONLY (WO) AREA WITH RESULT OF
CRYPTOGRAPH PROCESS EXECUTED
BY PROCESS SECTION

~S974

DATA MATCHED?

NO → ABORT PROCESS

YES

END DATA CHECKING
PROCESS

FIG. 93

Explanation of Reference Numerals

106...main CPU, 107...RAM, 108...ROM, 109...AV process section, 110...Input process section, 111...PIO, 112...SIO, 300...recording and reproducing device, 301...control section, 302...cryptography process section, 303...recording device controller, 304...read section, 305...communication section, 306...control section, 307...internal memory, 308...encryption/decryption section, 400...recording device, 401...cryptography process section, 402...external memory, 403...control section, 404...communication section, 405...internal memory, 406...encryption/decryption section, 407...external memory control section, 500...medium, 600...communication means, 2101, 2102, 2103...recording and reproducing device, 2104, 2105, 2106...recording device, 2901...command number managing section, 2902...command register, 2903, 2904...authentication flag, 3001...speaker, 3002...monitor, 3090...memory, 3091...content analysis section, 3092...data storage section, 3093...program storage section, 3094...compression decompression process section, 7701...content data, 7702...revocation list, 7703...list check value, 8000...security chip, 8001...process section, 8002...storage section, 8003...mode signal line, 8004...command signal line, 8201...read write area, 8202...write only area.

| INTERNATIONAL SEARCH REPORT | International application No. |
|---|---|
| | PCT/JP01/00526 |

**A. CLASSIFICATION OF SUBJECT MATTER**
Int.Cl$^7$  H04L9/32, H04L9/08, G09C1/00, G06F12/14, G06F9/06

According to International Patent Classification (IPC) or to both national classification and IPC

**B. FIELDS SEARCHED**

Minimum documentation searched (classification system followed by classification symbols)
Int.Cl$^7$  H04L9/32, H04L9/08, G09C1/00, G06F12/14, G06F9/06

Documentation searched other than minimum documentation to the extent that such documents are included in the fields searched
Jitsuyo Shinan Koho          1926-1996     Toroku Jitsuyo Shinan Koho  1994-2001
Kokai Jitsuyo Shinan Koho  1971-2001     Jitsuyo Shinan Toroku Koho  1996-2001

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP, 10-65662, A (Sony Corporation), 06 March, 1998 (06.03.98), Par. Nos. [0034] to [0035], [0052]; Par. Nos. [0071] to [0072]; Figs. 1 to 13 & US, 5883958, A | 1-27 |
| Y | JP, 10-327142, A (Sony Corporation), 08 December, 1998 (08.12.98), Par. Nos. [0002] to [0006]; Fig. 20 & EP, 867843, A     & US, 6058477, A | 1-27,37,45 |
| Y | JP, 6-289782, A (Matsushita Electric Ind. Co., Ltd.), 18 October, 1994 (18.10.94), Par. Nos. [0014] to [0015]; Fig. 1 (Family: none) | 6,7,23,24 |
| Y | JP, 11-306088, A (Toppan Printing Co., Ltd.), 05 November, 1999 (05.11.99), Full text; all drawings (Family: none) | 29-52 |

☒ Further documents are listed in the continuation of Box C.   ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 17 April, 2001 (17.04.01) | 01 May, 2001 (01.05.01) |

| Name and mailing address of the ISA/ | Authorized officer |
|---|---|
| Japanese Patent Office | |
| Facsimile No. | Telephone No. |

Form PCT/ISA/210 (second sheet) (July 1992)

## INTERNATIONAL SEARCH REPORT

International application No.

PCT/JP01/00526

C (Continuation).   DOCUMENTS CONSIDERED TO BE RELEVANT

| Category* | Citation of document, with indication, where appropriate, of the relevant passages | Relevant to claim No. |
|---|---|---|
| Y | JP, 9-179951, A (Dainippon Printing Co., Ltd.), 11 July, 1997 (11.07.97), Par. No. [0017]; Fig. 3 (Family: none) | 29~52 |
| Y | JP, 11-355265, A (Matsushita Electric Ind. Co., Ltd.), 24 December, 1999 (24.12.99), Par. No. [0053]; page 8, Column 14, lines 38 to 43; page 8, Column 14, line 48 to page 9, Column 15, line 1 & WO, 99/050992, A   & EP, 994599, A & CN, 1266572, T | 36,44 |
| Y | JP, 11-185006, A (Dainippon Printing Co., Ltd.), 09 July, 1999 (09.07.99) Full text; all drawings (Family: none) | 33,42,50 |

Form PCT/ISA/210 (continuation of second sheet) (July 1992)

EP 1 164 748 A1

## INTERNATIONAL SEARCH REPORT

| International application No. |
|---|
| PCT/JP01/00526 |

**Box I    Observations where certain claims were found unsearchable (Continuation of item 1 of first sheet)**

This international search report has not been established in respect of certain claims under Article 17(2)(a) for the following reasons:

1. ☒ Claims Nos.: 28,53
   because they relate to subject matter not required to be searched by this Authority, namely:

   The inventions of claims 28, 53 relate to a program. However no hardware resources are used for expression, they relate to a program source. Therefore the subject matter relates to mere presentation of information and is not required to be searched by this International Searching Authority according to PCT Article 17(2)(a)(i) and Rule 39.1(v).

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

**Box II    Observations where unity of invention is lacking (Continuation of item 2 of first sheet)**

This International Searching Authority found multiple inventions in this international application, as follows:

   The inventions of claims 1-27 relate to the functional structures of a data processing system for performing authentication between a recording/reproducing device and a recording device by designating a key block out of different items of key data stored in key blocks, a storage device, and a data processing method. The inventions of claims 29-52 relate to the processing by a second device for a command identifier transmitted from a first device. These groups of inventions relate to functional structures of different gists. Therefore the group of inventions 1-27 and the group of inventions 29-52 do not fulfill the requirement of unity of invention.

1. ☒ As all required additional search fees were timely paid by the applicant, this international search report covers all searchable claims.

2. ☐ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**    ☐    The additional search fees were accompanied by the applicant's protest.
                          ☒    No protest accompanied the payment of additional search fees.

Form PCT/ISA/210 (continuation of first sheet (1)) (July 1992)

173